# EUROPEAN PATENT APPLICATION

(11) **EP 4 813 812 A1**
(43) Date of publication of application: **30.09.2026**
(21) Application number: 24893960.5
(22) Date of filing: 30.10.2024
(51) Int. Cl.: B62D 25/02, B62D 25/04, B62D 25/20, C22C 21/00, C22C 21/02, C22C 38/00, C22C 38/60, C23C 2/12

(54) **AUTOMOBILE SIDE-MODULE**

(30) Priority: 21.11.2023 JP 2023197287
(71) Applicant: Nippon Steel Corporation, Tokyo 100-8071 (JP)
(72) Inventor: KUBO, Masahiro, Tokyo 100-8071 (JP); KIMOTO, Naoki, Tokyo 100-8071 (JP); SHIRAKAMI, Satoshi, Tokyo 100-8071 (JP); YOSHIDA, Hiroshi, Tokyo 100-8071 (JP); IKEGAMI, Kenta, Tokyo 100-8071 (JP); FUJITA, Soshi, Tokyo 100-8071 (JP); SUZUKI, Yuki, Tokyo 100-8071 (JP); TABATA, Shinichiro, Tokyo 100-8071 (JP); MAEDA, Daisuke, Tokyo 100-8071 (JP); TODA, Yuri, Tokyo 100-8071 (JP); FUJINAKA, Shingo, Tokyo 100-8071 (JP); MAKI, Jun, Tokyo 100-8071 (JP); IRIKAWA, Hideaki, Tokyo 100-8071 (JP); IGUCHI, Keinosuke, Tokyo 100-8071 (JP)
(74) Representative: Zimmermann & Partner Patentanwälte mbB
(86) International application number: PCT/JP2024/038650
(87) International publication number: WO 2025/109968

(57) **Abstract**

This automobile side module is an automobile side module for reinforcing an automobile side outer panel, in which the automobile side module is a hot-stamped automobile side module comprising a steel sheet in which multiple steel sheets are integrated, in which when a minimum circumscribed rectangular area, as viewed in a vertical direction with respect to a reference plane, is defined as S (m²), a total weight of components of the automobile side module having a weight of 0.200 kg or more is defined as W_{0.2} (kg), and the total weight of the components having a minimum Vickers hardness of HV510 or more is defined as W₅₁₀, then W_{0.2}/S is 7.7 or less, and W₅₁₀/W_{0.2} is larger than 0.10.

## Description

### TECHNICAL FIELD

The present invention relates to an automobile side module for reinforcing a side outer panel of an automobile. Priority is claimed on Japanese Patent Application No. 2023-197287, filed November 21, 2023, the content of which is incorporated herein by reference.

### BACKGROUND ART

In recent years, from the viewpoint of preventing global warming, it has become more important to reduce greenhouse gas (GHG) including carbon dioxide (CO₂) emissions.

Against this backdrop, the emergence of electric vehicles and hybrid vehicles that reduce GHG more than conventional vehicles powered by internal combustion engines is expected to reduce the GHG emissions from vehicles while driving.

In addition, it is expected that the GHG emissions from automobiles will be reduced by adopting materials that are superior in weight reduction, such as aluminum and carbon, as components of automobiles.

Regarding automobile bodies, for example, Patent Document 1 below discloses a vehicle body structure with excellent productivity.

In addition, in relation to the vehicle body structure, Patent Document 2 below discloses a method for manufacturing an automobile body side structural frame from a plurality of blanks.

In addition, Patent Document 3 below discloses an automobile body capable of reducing the total GHG emissions generated during a series of life cycles, from the manufacture, use, and disposal of an automobile.

### Citation List

### Patent Documents

[Patent Document 1] International Publication No. WO/2021/001813
[Patent Document 2] Japanese Unexamined Patent Application, First Publication No. 2021-528248
[Patent Document 3] International Publication No. WO/2022/250091

### SUMMARY OF INVENTION

### Technical Problem

In order to reduce the total GHG emissions into the global environment in light of the life cycle of automobiles, it is not sufficient to reduce the GHG by focusing solely on the use (driving) of vehicles.

In addition, no studies have yet been conducted that focus on automobile side modules and seek to reduce LC-GHG (hereinafter referred to as life-cycle GHG or LC-GHG) generated during a series of life cycles, from the manufacture, use, and disposal of an automobile.

Accordingly, an object of the present invention is to provide an automobile side module that can reduce LC-GHG per unit area.

### Solution to Problem

The gist of the present disclosure is as follows.
(1) A first aspect of the present invention is an automobile side module for reinforcing an automobile side outer panel, in which the automobile side module is a hot-stamped automobile side module comprising a steel sheet in which a plurality of steel sheets are integrated, in which when a minimum circumscribed rectangular area, as viewed in a vertical direction with respect to a reference plane, is defined as S (m²), a total weight of components of the automobile side module having a weight of 0.200 kg or more is defined as W_{0.2} (kg), and the total weight of the components having a minimum Vickers hardness of HV510 or more is defined as W₅₁₀, then W_{0.2}/S is 7.7 or less, and W₅₁₀/W_{0.2} is larger than 0.10.
(2) The automobile side module described in (1) above may include at least one of an Element Technology A1 and an Element Technology A2, and at least one of an Element Technology B1, an Element Technology B2, an Element Technology B3a, an Element Technology B3b, an Element Technology B4, an Element Technology B5a, an Element Technology B5b, and an Element Technology B6,
   in which the Element Technology A1 is a hot-stamp formed body characterized in that the hot-stamp formed body comprises, as a chemical composition, by mass%:
      C: 0.15 to 0.50%;
      Si: 0.0010% to 3.000%;
      Mn: 0.30% to 3.00%;
      Al: 0.0002% to 2.000%;
      P: 0.100% or less;
      S: 0.1000% or less;
      N: 0.0100% or less;
      Nb: 0% to 0.15%;
      Ti: 0% to 0.15%;
      V: 0% to 0.15%;
      Mo: 0% to 1.0%;
      Cr: 0% to 1.0%;
      Cu: 0% to 1.0%;
      Ni: 0% to 1.0%;
      B: 0% to 0.0100%;
      Ca: 0% to 0.010%;
      REM: 0% to 0.30%;
   and a remainder consisting of Fe and an impurity,
   in which the hot-stamp formed body has a metallographic structure containing, by area ratio, a total of 90% or more of martensite, bainite, and tempered martensite,
   in a texture between a surface and a sheet thickness 1/4 position from the surface, a ratio between a pole density of an orientation group consisting of {001} <1-10> to {001} <-1-10> and a pole density of an orientation group consisting of {111} <1-10> to {111} <-1-12> is less than 1.8, and
   and in a texture between the sheet thickness 1/4 position from the surface and a sheet thickness 1/2 position from the surface, a ratio between a pole density of an orientation group consisting of {001} <1-10> to {001} <-1-10> and a pole density of an orientation group consisting of {111} <1-10> to {111} <-1-12> is less than 2.3,
   in which the Element Technology A2 is a hot-stamp formed body characterized in that the hot-stamp formed body comprises, as a chemical composition, by mass%:
      C: 0.15 to 0.50%;
      Si: 0.0010% to 3.000%;
      Mn: 0.30% to 3.00%;
      Al: 0.0002% to 2.000%;
      P: 0.100% or less;
      S: 0.1000% or less;
      N: 0.0100% or less;
      Nb: 0% to 0.15%;
      Ti: 0% to 0.15%;
      V: 0% to 0.15%;
      Mo: 0% to 1.0%;
      Cr: 0% to 1.0%;
      Cu: 0% to 1.0%;
      Ni: 0% to 1.0%;
      B: 0% to 0.0100%;
      Ca: 0% to 0.010%;
      REM: 0% to 0.30%; and
   a remainder consisting of Fe and an impurity,
   in which the hot-stamp formed body has a metallic structure comprising, in terms of area ratio, a total of 10 to 30% of ferrite and granular bainite, and the remaining microstructure consisting of one or more of martensite, bainite, and tempered martensite,
   in a texture between a surface and a sheet thickness 1/4 position from the surface, a ratio between a pole density of an orientation group consisting of {001} <1-10> to {001} <-1-10> and a pole density of an orientation group consisting of {111} <1-10> to {111} <-1-12> is less than 1.8, and
   in a texture between the sheet thickness 1/4 position from the surface and a sheet thickness 1/2 position from the surface, a ratio between a pole density of an orientation group consisting of {001} <1-10> to {001} <-1-10> and a pole density of an orientation group consisting of {111} <1-10> to {111} <-1-12> is less than 2.3,
   in which the Element Technology B1 is an overlapped hot-stamp formed body including:
      a first Al-Fe-based alloy coated steel sheet having a sheet thickness of T1 (mm); and
      a second Al-Fe-based alloy coated steel sheet that is overlapped and welded on the first Al-Fe-based alloy coated steel sheet, has a smaller area than the first Al-Fe-based alloy coated steel sheet, and has a sheet thickness of T2 (mm),
   in which the overlapped hot-stamp formed body satisfies the relationships of Expressions (7) to Expression (9) below, $25 \leq K 1 \leq 60$ $25 \leq K 2 \leq 60$ $0 \leq \left(D1-D2\right) \times {\left(K1/K2\right)}^{2} \leq 5.0$
   here,
   K1: an average value of a coating thickness of an Al-Fe-based alloy coated layer on the side in contact with the second Al-Fe-based alloy coated steel sheet and a coating thickness of an Al-Fe-based alloy coated layer on the side not in contact with the second Al-Fe-based alloy coated steel sheet at a non-overlapped part of the first Al-Fe-based alloy coated steel sheet
   K2: a coating thickness of an Al-Fe-based alloy coated layer on the side not in contact with the first Al-Fe-based alloy coated steel sheet at an overlapped part of the second Al-Fe-based alloy coated steel sheet
   D1: an average value of a thickness of a diffusion layer located to be in contact with a steel sheet base in the Al-Fe-based alloy coated layer on the side in contact with the second Al-Fe-based alloy coated steel sheet and a thickness of a diffusion layer located to be in contact with a steel sheet base in the Al-Fe-based alloy coated layer on the side not in contact with the second Al-Fe-based alloy coated steel sheet in the first Al-Fe-based alloy coated steel sheet
   D2: a thickness of a diffusion layer located to be in contact with a steel sheet base in the Al-Fe-based alloy coated layer on the side not in contact with the first Al-Fe-based alloy coated steel sheet of the second Al-Fe-based alloy coated steel sheet
   the units of the sheet thickness T1 and the sheet thickness T2 are mm, and the units of K1, K2, D1, and D2 are µm,
   in which the Element Technology B2 is a hot-stamp formed body comprising an aluminum-coated steel sheet for hot stamping,
   in which the hot-stamp formed body is a hot-stamp formed body comprising an aluminum-coated steel sheet for hot stamping,
   in which the aluminum-coated steel sheet for hot stamping includes:
      a base steel sheet;
      an aluminum coating layer provided on at least one surface of the base steel sheet and having an A1 content of 80 mass% or more; and
      a surface treatment film provided on the aluminum coating layer,
      in which the surface treatment film includes:
         a compound A containing carbon; and
         a compound B that is an oxide or a fluoride of a metal element M and has a rutile structure,
         a carbon concentration of the compound A is 80 mass% or more, and
         a concentration of the metal element M satisfies the following formula (1) and the following formula (2): $1 \leq {C}_{bM} \leq 40$ $1.5 \leq {C}_{bM} / {C}_{tM} \leq 10.0$
         herein, when the surface treatment film has an average thickness H (µm), C_{tM} in the formula (2) is a concentration (mass%) of the metal element M at a position of 0.05H from the surface of the surface treatment film, and
         C_{bM} in the formula (1) and the formula (2) is a concentration (mass%) of the metal element M at a position of 0.95H from the surface of the surface of the surface treatment film,
         in which the Element Technology B3a is a structural member, including:
            a member main body that is formed of multiple steel sheets joined to each other and has an annular shape in plan view, the multiple steel sheets including a first steel sheet having a smallest sheet thickness and a second steel sheet having a sheet thickness larger than the sheet thickness of the first steel sheet; and
            a film that is provided on the first steel sheet and contains 0.001 g/m² or more of one or more oxides selected from among the group consisting of Zr oxide, Zn oxide, and Ti oxide,
            in which the Element Technology B3b is a structural member, including:
               a member main body that is formed of multiple steel sheets joined to each other and has an annular shape in plan view, the multiple steel sheets including a first steel sheet having a smallest sheet thickness and a second steel sheet having a sheet thickness larger than the sheet thickness of the first steel sheet; and
               a film that is provided on the first steel sheet and contains 0.500 g/m² or less carbon black,
               in which the Elemental Technology B4 is a structural member, including:
                  a member main body that is formed of multiple steel sheets joined to each other and has an annular shape in plan view, the multiple steel sheets including a first steel sheet having a smallest sheet thickness and a second steel sheet having a sheet thickness larger than the sheet thickness of the first steel sheet,
                  in which the first steel sheet and the second steel sheet are each a coated steel sheet that has an aluminum-based coating layer on both surfaces of a base steel sheet, and
                  a thickness of the aluminum-based coating layer of the first steel sheet is smaller than a thickness of the aluminum-based coating layer of the second steel sheet,
                  in which the Element Technology B5a is a structural member, including:
                     a member main body that is formed of multiple steel sheets joined to each other and has an annular shape in plan view, the multiple steel sheets including a first steel sheet and a second steel sheet having an end part that is overlaid on and joined to an end part of the first steel sheet to form an overlap part with the end part of the first steel sheet; and
                     a film that is provided on a surface of each of the first steel sheet and the second steel sheet that is located on an outer side of the overlap part and contains 0.001 g/m² or more of one or more oxides selected from among the group consisting of Zr oxide, Zn oxide, and Ti oxide,
                     in which the Element Technology B5b is a structural member, including:
                        a member main body that is formed of multiple steel sheets joined to each other and has an annular shape in plan view, the multiple steel sheets including a first steel sheet and a second steel sheet having an end part that is overlaid on and joined to an end part of the first steel sheet to form an overlap part with the end part of the first steel sheet; and
                        a film that is provided on a surface of each of the first steel sheet and the second steel sheet that is located on an outer side of the overlap part and contains 0.500 g/m² or less carbon black,
                        in which the Element Technology B6 is a structural member, including:
                           a member main body that is formed of multiple steel sheets joined to each other and has an annular shape in plan view,
                           in which the multiple steel sheets include a first steel sheet, a second steel sheet, and a third steel sheet,
                           an end part of the first steel sheet is overlaid on and joined to an end part of the second steel sheet, thereby forming an overlap part having the largest sheet thickness in the member main body with the end part of the second steel sheet,
                           at least one of the first steel sheet and the second steel sheet, and the third steel sheet are each a coated steel sheet having an aluminum-based coating layer on both surfaces of a base steel sheet, and
                           a thickness of the aluminum-based coating layer of at least one of the first steel sheet and the second steel sheet is less than a thickness of the aluminum-based coating layer of the third steel sheet.
(3) The automobile side module described in the above (2) may include at least one of the Element Technology A1 and the Element Technology A2, and at least one of the Element Technology B1 and the Element Technology B2.
(4) The automobile side module described in the above (2) may include at least one of the Element Technology A1 and the Element Technology A2, and at least one of the Element Technology B3a, the Element Technology B3b, the Element Technology B4, the Element Technology B5a, the Element Technology B5b, and the Element Technology B6.
(5) The automobile side module described in the above (2) may include at least one of the Element Technology A1 and the Element Technology A2, at least one of the Element Technology B1 and the Element Technology B2, and at least one of the Element Technology B3a, the Element Technology B3b, the Element Technology B4, the Element Technology B5a, the Element Technology B5b, and the Element Technology B6. Advantageous Effects of Invention

According to the present disclosure, it is possible to provide an automobile side module that can reduce LC-GHG per unit area.

### BRIEF DESCRIPTION OF THE DRAWINGS

[FIG. 1] FIG. 1 is a characteristic diagram showing the environmental impact (the GHG emissions) of each automobile side module material during manufacture.
[FIG. 2] FIG. 2 is a perspective view showing an example of a frame having a monocoque structure of an automobile body to which the automobile side module of the present embodiment is applied, the frame being equipped with an impact absorbing framework member.
[FIG. 3] FIG. 3 is a plan view showing an automobile side module in accordance with the present embodiment.
[FIG. 4] FIG. 4 is a plan view of an automobile side module according to a modified example.
[FIG. 5] FIG. 5 is a graph, for the embodiment, in which W₅₁₀/W_{0.2} is plotted on the horizontal axis and W_{0.2}/S (kg/m²) is plotted on the vertical axis.
[FIG. 6] FIG. 6 is a graph showing, for the embodiment, a plot with W₅₁₀/W_{0.2} on the horizontal axis and LC-GHG/S (kg, CO₂-eq/m²) on the vertical axis.
[FIG. 7] FIG. 7 is an explanatory view schematically illustrating examples of an overlapped blank for hot stamping, a method of manufacturing an overlapped hot-stamp formed body, and an overlapped hot-stamp formed body according to an embodiment of the present invention.
[FIG. 8] FIG. 8 is an explanatory view schematically illustrating a structure of an Al-based coated steel sheet including an Al-based coating layer on a surface of a base material steel sheet of the overlapped blank for hot stamping according to the embodiment.
[FIG. 9] FIG. 9 is an explanatory view schematically illustrating a structure of the Al-based coated steel sheet including the Al-based coating layer on the surface of the base steel sheet, and including a carbon-based black coating or a carbon-based black coating selectively containing Zn, Ti, Cu, or V at an upper layer of the Al-based coating layer of the overlapped blank for hot stamping according to the embodiment.
[FIG. 10] FIG. 10 is a view illustrating a result obtained by observing a cross section of the Al-based coated steel sheet including the Al-based coating layer on the surface of the base steel sheet of the overlapped blank for hot stamping according to the embodiment using an optical microscope after nital etching.
[FIG. 11] FIG. 11 is an explanatory view schematically illustrating a structure of an Al-Fe-based alloy coated steel sheet including an Al-Fe-based alloy coated layer on a surface of a base steel sheet and including a diffusion layer that is included in the Al-Fe-based alloy coated layer and is in contact with a steel sheet base of the overlapped hot-stamp formed body according to the embodiment.
[FIG. 12] FIG. 12 is a view illustrating a result obtained by observing a cross section of the Al-Fe-based alloy coated steel sheet including the Al-Fe-based alloy coated layer on the surface of the base steel sheet of the hot-stamp formed body according to the embodiment using an optical microscope after nital etching.
[FIG. 13] FIG. 13 is an explanatory view schematically illustrating a structure of the Al-Fe-based alloy coated steel sheet that includes the Al-Fe-based alloy coated layer (including the diffusion layer) on the surface of the base steel sheet and includes Zn, Ti, Cu, or V at an upper layer of the Al-Fe-based alloy coated layer of the overlapped hot-stamp formed body according to the embodiment.
[FIG. 14] FIG. 14 is a schematic cross-sectional view of an aluminum-coated steel sheet for hot stamping according to an embodiment of the present invention.
[FIG. 15] FIG. 15 is a schematic cross-sectional view of an aluminum-coated steel sheet for hot stamping according to an embodiment of the present invention.
[FIG. 16] FIG. 16 is a plan view of a structural member according to a first embodiment of the Element Technologies B3a and B3b.
[FIG. 17] FIG. 17 is a cross-sectional view taken along line II-II in FIG. 16.
[FIG. 18A] FIG. 18A is a schematic diagram for illustrating a production method for the structural member according to the first embodiment of the Element Technologies B3a and B3b, showing a blank according to the first embodiment.
[FIG. 18B] FIG. 18B is a schematic diagram for illustrating the production method for the structural member according to the first embodiment of the Element Technologies B3a and B3b, showing the blank according to the first embodiment.
[FIG. 18C] FIG. 18C is a schematic diagram for illustrating the production method for the structural member according to the first embodiment of the Element Technologies B3a and B3b, showing the blank according to the first embodiment.
[FIG. 18D] FIG. 18D is a schematic diagram for illustrating the production method for the structural member according to the first embodiment of the Element Technologies B3a and B3b, showing the blank according to the first embodiment.
[FIG. 18E] FIG. 18E is a schematic diagram for illustrating the production method for the structural member according to the first embodiment of the Element Technologies B3a and B3b.
[FIG. 18F] FIG. 18F is a schematic diagram for illustrating the production method for the structural member according to the first embodiment of the Element Technologies B3a and B3b.
[FIG. 18G] FIG. 18G is a schematic diagram for illustrating the production method for the structural member according to the first embodiment of the Element Technologies B3a and B3b.
[FIG. 19] FIG. 19 is a cross-sectional view of the structural member produced in the production method according to the first embodiment of the Element Technologies B3a and B3b.
[FIG. 20] FIG. 20 is a plan view of a blank according to a second embodiment of the Element Technologies B3a and B3b.
[FIG. 21] FIG. 21 is a cross-sectional view taken along line VI-VI in FIG. 20.
[FIG. 22] FIG. 22 is a plan view of a structural member according to the second embodiment of the Element Technologies B3a and B3b.
[FIG. 23] FIG. 23 is a plan view of a structural member according to a variation of each embodiment of the Element Technologies B3a and B3b.
[FIG. 24A] FIG. 24A is a diagram showing a division pattern of a structural member in a first example of the Element Technologies B3a and B3b.
[FIG. 24B] FIG. 24B is a diagram showing another division pattern of the structural member in the first example of the Element Technologies B3a and B3b.
[FIG. 24C] FIG. 24C is a diagram showing another division pattern of the structural member in the first example of the Element Technologies B3a and B3b.
[FIG. 24D] FIG. 24D is a diagram showing another division pattern of the structural member in the first example of the Element Technologies B3a and B3b.
[FIG. 24E] FIG. 24E is a diagram showing another division pattern of the structural member in the first example of the Element Technologies B3a and B3b.
[FIG. 24F] FIG. 24F is a diagram showing another division pattern of the structural member in the first example of the Element Technologies B3a and B3b.
[FIG. 24G] FIG. 24G is a diagram showing another division pattern of the structural member in the first example of the Element Technologies B3a and B3b.
[FIG. 25A] FIG. 25A is a diagram showing a division pattern of a structural member in a second example of the Element Technologies B3a and B3b.
[FIG. 25B] FIG. 25B is a diagram showing another division pattern of the structural member in the second example of the Element Technologies B3a and B3b.
[FIG. 25C] FIG. 25C is a diagram showing another division pattern of the structural member in the second example of the Element Technologies B3a and B3b.
[FIG. 25D] FIG. 25D is a diagram showing another division pattern of the structural member in the second example of the Element Technologies B3a and B3b.
[FIG. 26] FIG. 26 is a plan view of a structural member according to a first embodiment of an Element Technology B4.
[FIG. 27] FIG. 27 is a cross-sectional view taken along line II-II in FIG. 26.
[FIG. 28A] FIG. 28A is a schematic diagram for illustrating a production method for the structural member according to the first embodiment of the Element Technology B4, showing a blank according to the first embodiment.
[FIG. 28B] FIG. 28B is a schematic diagram for illustrating the production method for the structural member according to the first embodiment of the Element Technology B4, showing the blank according to the first embodiment.
[FIG. 28C] FIG. 28C is a schematic diagram for illustrating the production method for the structural member according to the first embodiment of the Element Technology B4, showing the blank according to the first embodiment.
[FIG. 28D] FIG. 28D is a schematic diagram for illustrating the production method for the structural member according to the first embodiment of the Element Technology B4, showing the blank according to the first embodiment.
[FIG. 28E] FIG. 28E is a schematic diagram for illustrating the production method for the structural member according to the first embodiment of the Element Technology B4.
[FIG. 28F] FIG. 28F is a schematic diagram for illustrating the production method for the structural member according to the first embodiment of the Element Technology B4.
[FIG. 28G] FIG. 28G is a schematic diagram for illustrating the production method for the structural member according to the first embodiment of the Element Technology B4.
[FIG. 29A] FIG. 29A is a cross-sectional view of the structural member produced in the production method according to the first embodiment of the Element Technology B4.
[FIG. 29B] FIG. 29B is another cross-sectional view of the structural member produced in the production method according to the first embodiment of the Element Technology B4.
[FIG. 29C] FIG. 29C is another cross-sectional view of the structural member produced in the production method according to the first embodiment of the Element Technology B4.
[FIG. 30] FIG. 30 is a plan view of a blank according to a second embodiment of the Element Technology B4.
[FIG. 31] FIG. 31 is a cross-sectional view taken along line VI-VI in FIG. 30.
[FIG. 32] FIG. 32 is a plan view of a structural member according to the second embodiment of the Element Technology B4.
[FIG. 33] FIG. 33 is a cross-sectional view of a blank according to a third embodiment of the Element Technology B4.
[FIG. 34] FIG. 34 is a cross-sectional view of a blank according to a fourth embodiment of the Element Technology B4.
[FIG. 35] FIG. 35 is a plan view of a structural member according to a variation of each embodiment of the Element Technology B4.
[FIG. 36A] FIG. 36A is a diagram showing a division pattern of a structural member in a first example of the Element Technology B4.
[FIG. 36B] FIG. 36B is a diagram showing another division pattern of the structural member in the first example of the Element Technology B4.
[FIG. 36C] FIG. 36C is a diagram showing another division pattern of the structural member in the first example of the Element Technology B4.
[FIG. 36D] FIG. 36D is a diagram showing another division pattern of the structural member in the first example of the Element Technology B4.
[FIG. 36E] FIG. 36E is a diagram showing another division pattern of the structural member in the first example of the Element Technology B4.
[FIG. 36F] FIG. 36F is a diagram showing another division pattern of the structural member in the first example of the Element Technology B4.
[FIG. 36G] FIG. 36G is a diagram showing another division pattern of the structural member in the first example of the Element Technology B4.
[FIG. 37A] FIG. 37A is a diagram showing a division pattern of a structural member in a second example of the Element Technology B4.
[FIG. 37B] FIG. 37B is a diagram showing another division pattern of the structural member in the second example of the Element Technology B4.
[FIG. 37C] FIG. 37C is a diagram showing another division pattern of the structural member in the second example of the Element Technology B4.
[FIG. 37D] FIG. 37D is a diagram showing another division pattern of the structural member in the second example of the Element Technology B4.
[FIG. 38] FIG. 38 is a plan view of a structural member according to an embodiment of Element Technologies B5a and B5b.
[FIG. 39] FIG. 39 is a cross-sectional view taken along line II-II in FIG. 38.
[FIG. 40A] FIG. 40A is a schematic diagram for illustrating a production method for the structural member according to the embodiment of the Element Technologies B5a and B5b, showing a blank according to the embodiment.
[FIG. 40B] FIG. 40B is a schematic diagram for illustrating the production method for the structural member according to the embodiment of the Element Technologies B5a and B5b, showing the blank according to the embodiment.
[FIG. 40C] FIG. 40C is a schematic diagram for illustrating the production method for the structural member according to the embodiment of the Element Technologies B5a and B5b, showing the blank according to the embodiment.
[FIG. 40D] FIG. 40D is a schematic diagram for illustrating the production method for the structural member according to the embodiment of the Element Technologies B5a and B5b, showing the blank according to the embodiment.
[FIG. 40E] FIG. 40E is a schematic diagram for illustrating the production method for the structural member according to the embodiment of the Element Technologies B5a and B5b.
[FIG. 40F] FIG. 40F is a schematic diagram for illustrating the production method for the structural member according to the embodiment of the Element Technologies B5a and B5b.
[FIG. 40G] FIG. 40G is a schematic diagram for illustrating the production method for the structural member according to the embodiment of the Element Technologies B5a and B5b.
[FIG. 41] FIG. 41 is a cross-sectional view of the structural member produced in the production method according to the embodiment of the Element Technologies B5a and B5b.
[FIG. 42] FIG. 42 is a plan view of a structural member according to a variation of the embodiment of the Element Technologies B5a and B5b described above.
[FIG. 43A] FIG. 43A is a diagram showing a division pattern of a structural member in a first example of the Element Technologies B5a and B5b.
[FIG. 43B] FIG. 43B is a diagram showing another division pattern of the structural member in the first example of the Element Technologies B5a and B5b.
[FIG. 43C] FIG. 43C is a diagram showing another division pattern of the structural member in the first example of the Element Technologies B5a and B5b.
[FIG. 43D] FIG. 43D is a diagram showing another division pattern of the structural member in the first example of the Element Technologies B5a and B5b.
[FIG. 43E] FIG. 43E is a diagram showing another division pattern of the structural member in the first example of the Element Technologies B5a and B5b.
[FIG. 43F] FIG. 43F is a diagram showing another division pattern of the structural member in the first example of the Element Technologies B5a and B5b.
[FIG. 43G] FIG. 43G is a diagram showing another division pattern of the structural member in the first example of the Element Technologies B5a and B5b.
[FIG. 44A] FIG. 44A is a diagram showing a division pattern of a structural member in a second example of the Element Technologies B5a and B5b.
[FIG. 44B] FIG. 44B is a diagram showing another division pattern of the structural member in the second example of the Element Technologies B5a and B5b.
[FIG. 44C] FIG. 44C is a diagram showing another division pattern of the structural member in the second example of the Element Technologies B5a and B5b.
[FIG. 44D] FIG. 44D is a diagram showing another division pattern of the structural member in the second example of the Element Technologies B5a and B5b.
[FIG. 45] FIG. 45 is a plan view of a structural member according to a first embodiment of an Element Technology B6.
[FIG. 46] FIG. 46 is a cross-sectional view taken along line II-II in FIG. 45.
[FIG. 47A] FIG. 47A is a schematic diagram for illustrating a production method for the structural member according to the first embodiment of the Element Technology B6, showing a blank according to the first embodiment.
[FIG. 47B] FIG. 47B is a schematic diagram for illustrating the production method for the structural member according to the first embodiment of the Element Technology B6, showing the blank according to the first embodiment.
[FIG. 47C] FIG. 47C is a schematic diagram for illustrating the production method for the structural member according to the first embodiment of the Element Technology B6, showing the blank according to the first embodiment.
[FIG. 47D] FIG. 47D is a schematic diagram for illustrating the production method for the structural member according to the first embodiment of the Element Technology B6, showing the blank according to the first embodiment.
[FIG. 47E] FIG. 47E is a schematic diagram for illustrating the production method for the structural member according to the first embodiment of the Element Technology B6.
[FIG. 47F] FIG. 47F is a schematic diagram for illustrating the production method for the structural member according to the first embodiment of the Element Technology B6.
[FIG. 47G] FIG. 47G is a schematic diagram for illustrating the production method for the structural member according to the first embodiment of the Element Technology B6.
[FIG. 48A] FIG. 48A is a cross-sectional view of the structural member produced in the production method according to the first embodiment of the Element Technology B6.
[FIG. 48B] FIG. 48B is a cross-sectional view of the structural member produced in the production method according to the first embodiment of the Element Technology B6.
[FIG. 48C] FIG. 48C is a cross-sectional view of the structural member produced in the production method according to the first embodiment of the Element Technology B6.
[FIG. 49] FIG. 49 is a cross-sectional view of a blank according to a second embodiment of the Element Technology B6.
[FIG. 50] FIG. 50 is a plan view of a structural member according to a variation of the embodiments of the Element Technology B6 described above.
[FIG. 51A] FIG. 51A is a diagram showing a division pattern of a structural member in a first example of the Element Technology B6.
[FIG. 51B] FIG. 51B is a diagram showing another division pattern of the structural member in the first example of the Element Technology B6.
[FIG. 51C] FIG. 51C is a diagram showing another division pattern of the structural member in the first example of the Element Technology B6.
[FIG. 51D] FIG. 51D is a diagram showing another division pattern of the structural member in the first example of the Element Technology B6.
[FIG. 51E] FIG. 51E is a diagram showing another division pattern of the structural member in the first example of the Element Technology B6.
[FIG. 51F] FIG. 51F is a diagram showing another division pattern of the structural member in the first example of the Element Technology B6.
[FIG. 51G] FIG. 51G is a diagram showing another division pattern of the structural member in the first example of the Element Technology B6.
[FIG. 52A] FIG. 52A is a diagram showing a division pattern of a structural member in a second example of the Element Technology B6.
[FIG. 52B] FIG. 52B is a diagram showing another division pattern of the structural member in the second example of the Element Technology B6.
[FIG. 52C] FIG. 52C is a diagram showing another division pattern of the structural member in the second example of the Element Technology B6.
[FIG. 52D] FIG. 52D is a diagram showing another division pattern of the structural member in the second example of the Element Technology B6.

### DESCRIPTION OF EMBODIMENTS

As described above, in order to reduce the total GHG emissions into the global environment in light of the life cycle of automobiles, it is not sufficient to reduce GHG by focusing solely on the use (driving) of vehicles as described above.

In addition, since automobile side modules account for approximately 5 to 10% of the total vehicle weight, reducing the GHG associated with these automobile side modules makes a significant contribution to overall reductions.

The current focus is on reducing the weight of automobiles by using multi-material such as aluminum and carbon.

The present inventors focused on the following four types of GHGs and examined reducing their total amount:
1. GHG generated in the manufacture of materials for automobile side modules (hereinafter referred to as "material manufacturing GHG");
2. GHG generated in the manufacture of automobile side modules (hereinafter referred to as "process GHG");
3. GHG generated in driving of automobile side modules (hereinafter referred to as "driving GHG"); and
4. GHG generated in the disposal of automobile side modules (hereinafter referred to as "disposal-stage GHG").

In the specification, the side module is a framework structural member provided inside the side outer panel in order to reinforce the side outer panel. The side module includes an A-pillar (a front pillar), an A-pillar (front pillar) lower, a B-pillar (a center pillar), a C-pillar (a rear pillar), a side sill (a rocker), and a roof rail. The doors are not included in the side module.

Furthermore, in the specification, GHGs, including CO₂, generated during a life cycle are referred to as LC-GHGs, and the amount of CO₂ is defined as the total amount of GHGs other than CO₂ converted into equivalent mass.

GHG other than CO₂ includes substances that deplete the ozone layer, such as methane, dinitrogen oxide, and freon compounds. CO₂ equivalent mass is calculated by the conversion factor listed in Table 1, which is set for each category of material, process, use, and recycling.

"CO₂ equivalent" is also referred to as "CO₂ equivalent mass" and herein "CO₂ equivalent", "CO₂ equivalent mass" and "CO₂ converted amount" are used in the same meaning.

"CO₂ equivalent mass" is a mass calculated by weighting the CO₂ (global warming potential: 1) and gases other than the CO₂, such as CH₄ (greenhouse effect per unit mass: 25 times the CO₂; global warming potential: 25) and N₂O (greenhouse effect per unit mass: 298 times the CO₂; global warming potential: 298) by the global warming coefficient, and then calculating the CO₂ equivalent mass.

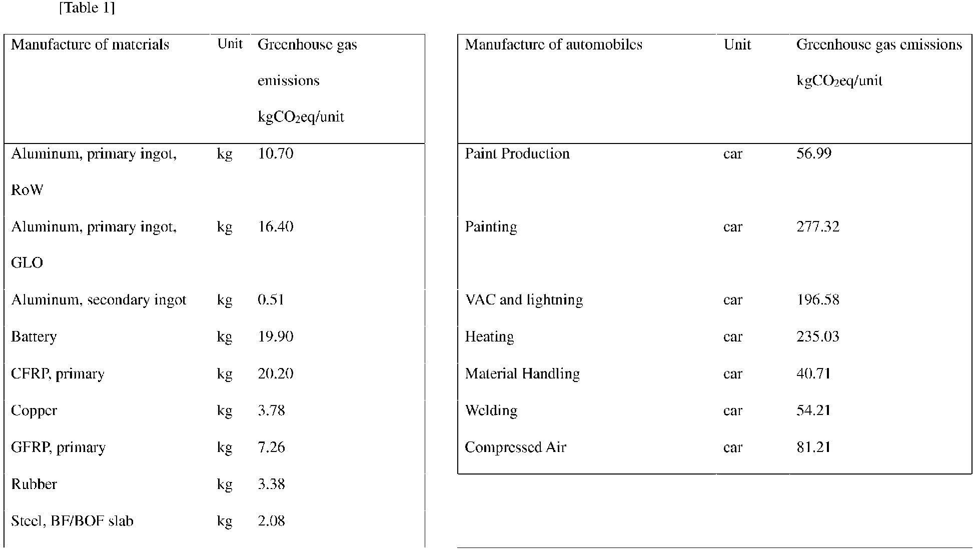

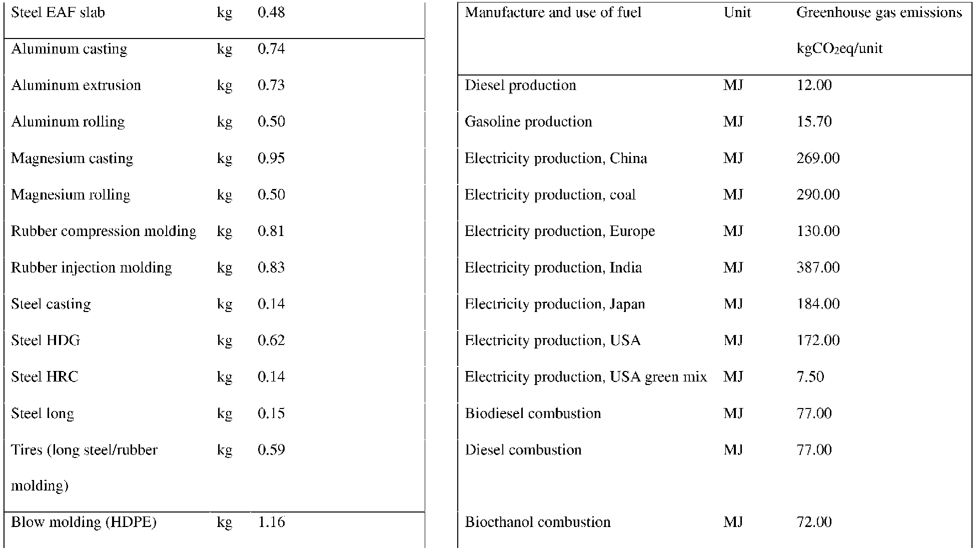

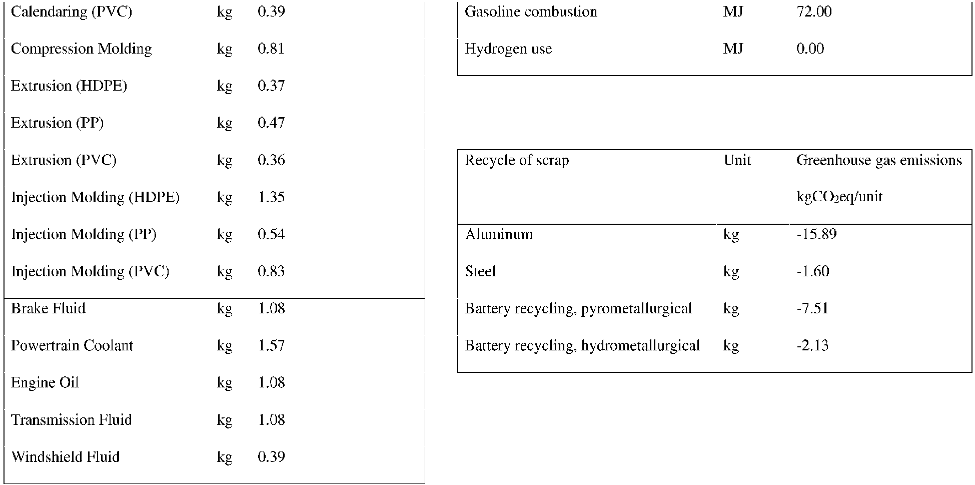

### (Material Manufacturing GHG)

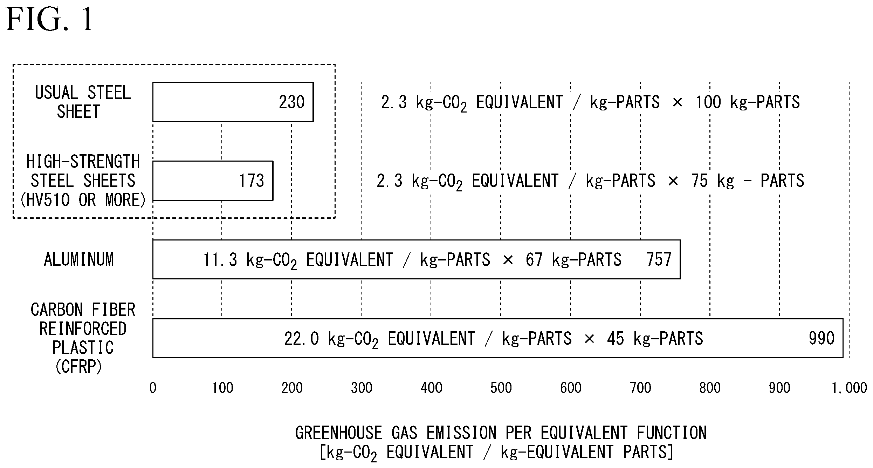

GHG emissions per vehicle is the smallest for steel materials compared to other materials. FIG. 1 is a characteristic diagram showing the environmental impact (GHG emission) of each automobile side module material. The vertical axis shows usual steel sheets, high-strength steel sheets (steel sheets with HV510 or higher), aluminum, and carbon fiber reinforced plastics (CFRP) as materials for automobile side modules. The horizontal axis shows GHG emission per equivalent function [kg-CO₂ equivalent/kg-equivalent parts].

As shown in FIG. 1, the GHG emission by steel materials (usual steel sheets and high-strength steel sheets) is significantly lower than that of other materials (aluminum and carbon fiber reinforced plastics), and the main use of steel materials as materials that make up automobile side modules greatly contributes to the reduction of LC-GHG.

### (Process GHG)

In the manufacture of automobile side modules, GHGs are mainly generated during welding, heating, painting, and the like. Therefore, appropriate process design while ensuring the performance required for automobile side modules can contribute to reducing LC-GHGs.

### (Driving GHG)

By reducing the weight of the automobile side module, it is possible to reduce the load on power sources such as internal combustion engines. Therefore, weight reduction of the automobile side module can contribute to the reduction of LC-GHG.

### (Disposal-stage GHG)

Steel can contribute to the reduction of GHG emissions by -1.60 kg-CO₂ eq per kilogram through scrap recycling. Compared with aluminum, the reduction effect per kilogram of emissions is smaller for steel; however, when high-strength steel is used, the required mass to achieve the necessary strength is smaller, so it can be said that the use of high-strength steel contributes to the reduction of LC-GHG. In other words, as with the material manufacturing GHG, the disposal-stage GHG can be reduced, and LC-GHG can be lowered, by primarily using steel materials as the material constituting the automobile side module.

As described above, in order to reduce LC-GHG, it is necessary to reduce the total GHG emissions from the four perspectives. However, for example, "the material manufacturing GHG and the disposal-stage GHG" and "driving GHG" are considered to be in a trade-off relationship. Furthermore, in general, in order to manufacture lightweight and high-performance components, "the process GHG" tends to increase, and there is a trade-off relationship between "the process GHG" and "the driving GHG".

Conventionally, methods for reducing GHG emissions at each life cycle stage have been examined and discussed, but optimal examples of material selection and process design for reducing LC-GHG have not previously been disclosed.

The present inventors focused on reducing LC-GHG by taking into account the four categories of GHG, including those in the trade-off relationships, and discovered that, by controlling the weight of components per unit area and the weight of high-strength components having HV510 or more within appropriate ranges, it is possible to reduce the LC-GHG of an automobile side module while still satisfying the required strength (side impact resistance).

Hereinafter, automobile side modules according to embodiments of the present invention, which have been developed based on the above findings, will be described with reference to the figures. However, these descriptions are intended to be merely illustrative of preferred embodiments of the invention and are not intended to limit the invention to such specific embodiments.

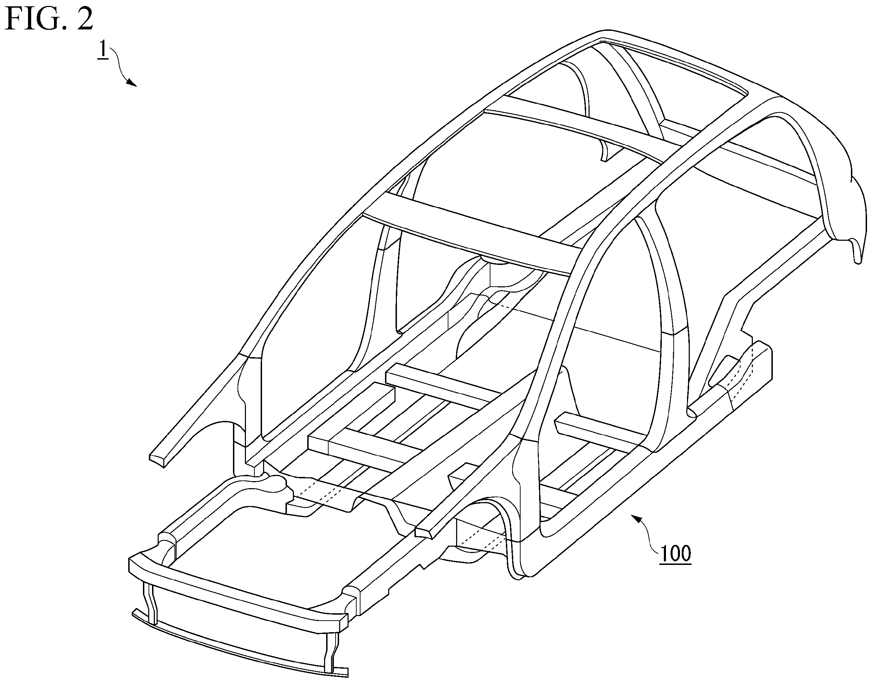

FIG. 2 is a perspective view of an automobile vehicle body 1 to which an automobile side module 100 according to the present embodiment is applied. The automobile vehicle body 1 is constituted by monocoque structure frame provided with a shock absorbing frame member.

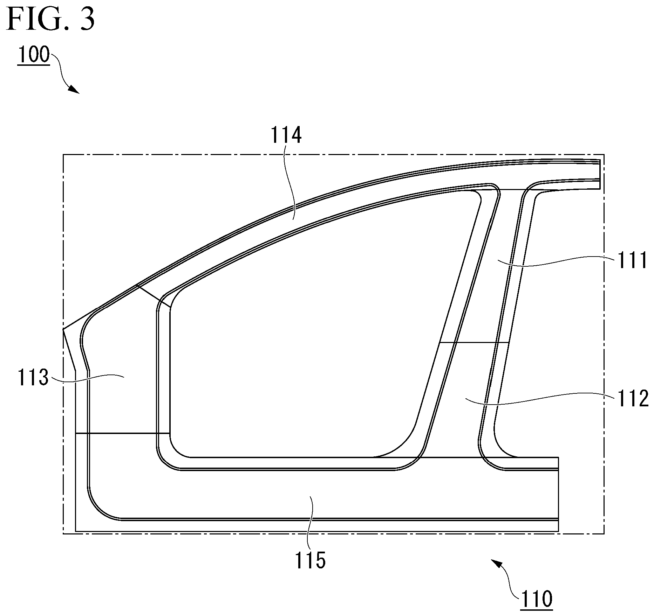

The automobile side module 100 according to the present embodiment has a single-door-ring structure. FIG. 3 shows a plan view of the automobile side module 100. As shown in FIG. 3, the automobile side module 100 is configured such that a main body 110 is integrated as a single unit.

The automobile side module 100 has a structure that is a single ring shape in an overall view (a so-called single door ring structure).

The main body 110 includes a B-pillar upper portion 111, a B-pillar lower portion 112, an A-pillar portion 113, a front roof rail portion 114, and a front side sill portion 115.

Reinforcement members, not shown in the figures, may be attached to the main body 110 for reinforcement. Examples of the reinforcement members include a side sill reinforcement, a B-pillar reinforcement, an A-pillar reinforcement, and a front roof rail reinforcement.

The automobile side module 100 according to the present embodiment is configured as an integrated component by hot-stamping a single tailored blank.

More specifically, a single tailored blank can be obtained, for example, by joining a plurality of hot-stamping steel sheets corresponding to respective portions of the main body 110, and by overlapping and joining (patchwork joining) the hot-stamping steel sheets that are to be formed into the respective reinforcement members.

Then, by hot-stamping this single tailored blank, it is possible to obtain an automobile side module 100 that has different properties (weight, hardness, strength, and thickness) in each region.

In some cases, additional reinforcing parts or brackets may be attached to the automobile side module 100 after hot stamping forming.

As described above, in the automobile side module 100 according to the present embodiment, since it is formed by hot-stamping a plurality of integrated steel sheets, the material manufacturing GHG can be reduced in comparison with a case where each portion is press-formed separately, unnecessary portions are appropriately trimmed, and then the portions are joined by welding. In addition, in a case where hot stamping is performed for each portion and then welding is carried out, multiple heating processes for hot stamping and corresponding time are required. However, in the automobile side module 100 according to the present embodiment, the number of heating processes and the required time can be reduced by welding a plurality of steel sheets together and then performing hot stamping. Therefore, according to the automobile side module 100 of the present embodiment, it is possible to reduce the process GHG emissions while still achieving the performance required of an automobile side module.

Furthermore, in the automobile side module 100 according to the embodiment, by controlling the weight of the constituent components per minimum bounding rectangle area and the weight of high-strength components having HV510 or more to fall within appropriate ranges, it is made possible to reduce the LC-GHG of the automobile side module.

Specifically, by satisfying the conditions that the minimum circumscribed rectangular area S (m²), as viewed from the vertical direction to the reference plane, the total weight W_{0.2} (kg) of those components among the components of the automobile side module that each weigh 0.200 kg or more, and the total weight W₅₁₀ of those components among the components of the automobile side module whose minimum Vickers hardness is HV510 or higher, meet W_{0.2}/S ≤ 7.7 and W₅₁₀/W_{0.2} > 0.10, it becomes possible to reduce the LC-GHG of the automobile side module.

An automobile side module that satisfies the above conditions has not conventionally existed, and these conditions could not easily have been conceived without the aforementioned findings of the present inventors.

Here, the reference plane is a plane parallel to the flange surface on the lower side of the vehicle of the side sill (rocker) in the automobile side module. Substantially, it is a plane that is perpendicular to the vehicle width direction in the automobile side module in a state of being mounted on the vehicle body.

In addition, the minimum circumscribed rectangular area S (m²) is the minimum circumscribed rectangular area when viewed from the direction perpendicular to the reference plane of the automobile side module. In the example shown in Figure 3, it is the area of the rectangle indicated by the chain-dotted line.

The reason for defining the weight of components whose weight is 0.200 kg or more as W_{0.2} (kg) is that components weighing less than 0.200 kg have a relatively small impact on GHG. For example, small components such as bolts and brackets weighing less than 0.200 kg are not taken into account.

The value of W_{0.2} tends to increase as the vehicle body or side door module becomes larger. Therefore, in the application, W_{0.2}/S (m²), which is the value of W_{0.2} corresponding to the minimum circumscribed rectangular area S of the automobile side module, is used as an index.

If the value of W_{0.2}/S is 7.7 or less, weight reduction corresponding to the size of the side door module can be achieved, making it possible to reduce the driving GHG emissions.

From the perspective of reducing the driving GHG emissions, a smaller W_{0.2}/S value is better, preferably 6.9 or less, and more preferably 6.3 or less.

The lower limit value of W_{0.2}/S is set based on the required safety performance. For example, W_{0.2}/S may be 5.0 or larger in order to achieve both sufficient rigidity of the module and the required safety performance.

When the value of W₅₁₀/W_{0.2} is larger than 0.10, it becomes possible to reduce material manufacturing GHG emissions because, among the members used in the side door module, the proportion of high-strength members with an HV510 or higher is greater.

From the standpoint of reducing material manufacturing GHG emissions, it is preferable for the W₅₁₀/W_{0.2} value to be as high as possible, preferably larger than 0.3, and more preferably larger than 0.7.

The method for measuring Vickers hardness is as follows.

A sample having a cross section perpendicular to the sheet surface is taken from the flat portions of each part, the relevant cross section is prepared as the measurement surface, and this measurement surface is subjected to hardness testing. Preparation of the measurement surface is carried out in accordance with JIS Z 2244:2009. After polishing the measurement surface using silicon carbide papers from #600 to #1500, the surface is finished to a mirror finish using a liquid prepared by dispersing diamond powder with a grain size of 1 µm to 6 µm in a diluent such as alcohol or in pure water. The hardness test is conducted by the method described in JIS Z 2244:2009. Using a micro Vickers hardness tester, 30 points are measured at a position 3/8 of the sheet thickness of the sample, under a load of 1000 gf, at intervals at least three times the diagonal length of the indentation, and their average value is taken as the hardness at the center of the sheet thickness.

In the application,
at least one of an Element Technology A1 and an Element Technology A2, and
at least one of an Element Technology B1, an Element Technology B2, an Element Technology B3a, an Element Technology B3b, an Element Technology B4, an Element Technology B5a, an Element Technology B5b, and an Element Technology B6, is applied to increase the weight ratio of steel materials in the vehicle body 1 to reduce the material production GHG, and at the same time to reduce the driving GHG through weight reduction of the vehicle body 1, thereby achieving, as a result, a significant reduction in LC-GHG compared with conventional vehicle bodies.

The above element technologies can be applied mainly to the B-pillar upper portion 111, the B-pillar lower portion 112, the A-pillar portion 113, the front roof rail portion 114, and the front side sill portion 115 among the constituent parts of the automobile side module 100.

It is more preferable to apply at least one of the Element Technology A1 and the Element Technology A2, and at least one of the Element Technology B1 and the Element Technology B2,
it is more preferable to apply at least one of the Element Technology A1 and the Element Technology A2, and at least one of the Element Technology B3a, the Element Technology B3b, the Element Technology B4, the Element Technology B5a, the Element Technology B5b, and the Element Technology B6, and
it is even more preferable to apply at least one of the Element Technology A1 and the Element Technology A2, at least one of the Element Technology B1 and the Element Technology B2, and at least one of the Element Technology B3a, the Element Technology B3b, the Element Technology B4, the Element Technology B5a, the Element Technology B5b, and the Element Technology B6.

In this specification, the term "automobile" refers to a public road vehicle. The vehicle for use on public roads is a vehicle that meets the safety standards of each country's laws and regulations (type approval) and is excellent in collision safety performance evaluation for each collision test of the NCAP (New Car Assessment Program), which is an assessment test of each country. The assessment tests are more stringent than the laws and regulations of each country. If the highest evaluation (5-star safety evaluation) is obtained in the assessment tests, it is possible to run on public roads sufficiently.

In addition, the automobile body of the public road vehicle to which the automobile side module according to the present embodiment is applied is not limited to the body of an engine vehicle or an electric vehicle, and may be the automobile body of a hybrid vehicle that uses an internal combustion engine and an electric motor as drive sources, a fuel cell vehicle, a hydrogen engine vehicle, or the like.

In addition, although FIG. 2 shows an automobile body having a monocoque frame structure, the automobile body 1 is not limited to an automobile body having a monocoque frame structure, and may be an automobile body having a ladder frame structure.

In addition, as categories of the public road vehicle, passenger or commercial vehicles such as sedans, hatchbacks, station wagons, one-box vehicles, pickup trucks, and the like are included.

Furthermore, road-going motor vehicles include carrier vehicles such as trucks.

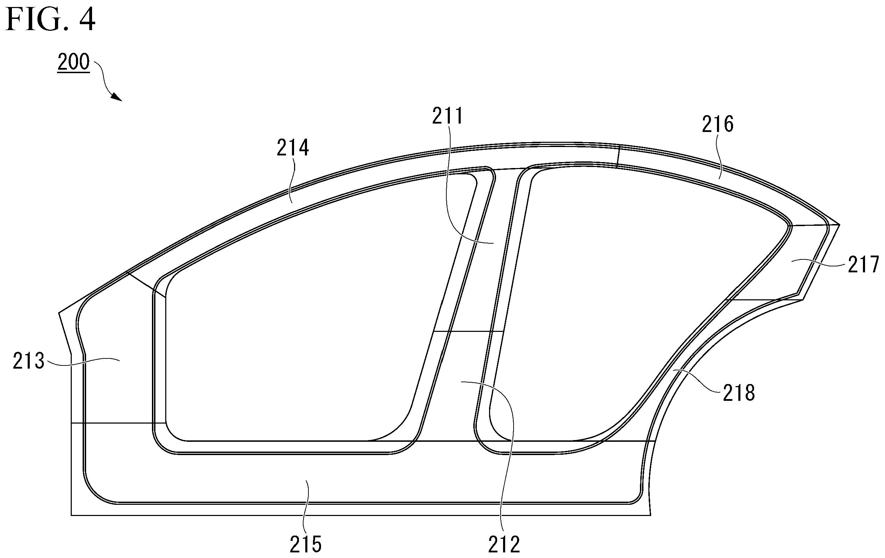

FIG. 4 is a plan view of an automobile side module 200 according to a modified example. The automobile side module 200 has, in an overall view, a structure in which two ring shapes are connected (a so-called double door ring structure).

As shown in FIG. 4, the automobile side module 200 may have a double door ring structure whose main body includes a B-pillar upper portion 211, a B-pillar lower portion 212, an A-pillar portion 213, a front roof rail portion 214, a front side sill portion 215, a rear roof rail portion 216, a C-pillar upper portion 217, and a C-pillar lower portion 218.

Even in the automobile side module 200 having such a double door ring structure, similarly to the automobile side module 100, by satisfying W_{0.2}/S ≤ 7.7 and W₅₁₀/W_{0.2} > 0.10, where S (m²) is the minimum circumscribed rectangular area when viewed in the vertical direction of a reference plane, W_{0.2} (kg) is the total weight of those components among the components of the automobile side module that each weigh 0.200 kg or more, and W₅₁₀ is the total weight of those components among the components of the automobile side module whose minimum Vickers hardness is HV510 or higher, it becomes possible to reduce the LC-GHG of the automobile side module.

### (Examples)

Hereinafter, the present invention will be described in detail with reference to examples. It should be noted that the conditions of the embodiments are an example adopted to confirm the practicability and effectiveness of the present disclosure, and the present disclosure is not limited to the conditions of the embodiments.

This disclosure may adopt various conditions as long as it does not deviate from the gist of it and achieves its purpose.

Tables 2 and 3 show various property values of the automobile side modules according to the inventive examples and comparative examples.

Table 2 shows the weight (kg) and hardness HV for each part of the integrated components that make up the automobile side module.

Table 3 shows the weight (kg) and hardness HV of the separated components that make up the automobile side module (i.e., the parts attached after hot stamping).

The automobile side modules of Inventive Examples 1 to 7 and Comparative Examples 1, 3, and 4 are automobile side modules in which a hot-stamping steel sheet having a shape corresponding to the pre-formed shapes of multiple portions (seven portions in the case of Inventive Example 1) shown in Table 2 is joined together to form a tailored blank, and multiple separated components (five components in the case of Inventive Example 1) shown in Table 3 are joined to a main body obtained by hot-stamping forming.

The automobile side modules of Comparative Examples 2 and 5 to 11 are automobile side modules in which multiple separated components shown in Table 3 are joined together. The separated components are basically steel members; however, aluminum extruded members are used for separated component No. 8 in Comparative Example 8 and separated component No. 10 in Comparative Example 10.

The weights (kg) of the portions shown in Table 2 are the weights obtained when the automobile side module is cut along the weld seam trace of the tailored blank. Each weight in the comparative examples was determined by disassembling the automobile body of a generally distributed public road vehicle and measuring the shape and weight of the vehicle and analyzing the data. Each weight in some examples and comparative examples was determined by measuring and analyzing design and development data with CAD (Computer-Aided Design).

The hardness HV was determined as follows.

A sample having a cross section perpendicular to the sheet surface were taken from the flat portions of each part, the relevant cross section was prepared as the measurement surface, and this measurement surface was subjected to hardness testing. Preparation of the measurement surface was carried out in accordance with JIS Z 2244:2009. After polishing the measurement surface using silicon carbide papers from #600 to #1500, the surface was finished to a mirror finish using a liquid prepared by dispersing diamond powder with a grain size of 1 µm to 6 µm in a diluent such as alcohol or in pure water. The hardness test was conducted by the method described in JIS Z 2244:2009. Using a micro Vickers hardness tester, 30 points were measured at a position 3/8 of the sheet thickness of the sample, under a load of 1000 gf, at intervals at least three times the diagonal length of the indentation, and their average value was taken as the hardness at the center of the sheet thickness.

Table 4 shows the following calculated values for each of the inventive examples and comparative examples;
- Minimum circumscribed rectangle area S (m²),
- Total weight W_{0.2} (kg) of constituent components having a weight of 0.200 kg or more,
- Total weight W₅₁₀ (kg) of constituent components having a minimum Vickers hardness of HV510 or more,
- Total GHG emissions LC-GHG (kg CO₂-eq),
- W₅₁₀/W_{0.2} (-),
- W_{0.2}/S (kg/m²), and
- LC-GHG/S (kg CO₂-eq/m²).

The total GHG emissions were obtained by calculating the CO₂-equivalent mass from the above material production GHG, the process GHG, the driving GHG, and the disposal-stage GHG, and summing them, and the total GHG emissions correspond to the LC-GHG emissions. The total GHG emission was a value calculated using the method described later.

Each characteristic value of Inventive Examples 1 to 7 was obtained by measuring and analyzing the automobile body 1 constituted by the inventors using each of the above-described element technologies.

The inventors obtained the characteristic values of Comparative Examples 1 to 7 by measuring and analyzing the generally distributed public road vehicles. For some comparative examples, the values described as default values on the World Auto Steel (WAS: World Auto Steel, hereinafter referred to as WAS) website were used.

WAS is an automobile subcommittee of the World Steel Association (World Iron and Steel Federation) and consists of 17 steel makers around the world.

The analysis of LC-GHG emissions was conducted based on "Roland Geyer, Parametric Assessment of Climate Change Impacts of Automotive Material Substitution, Environmental Science & Technology 2008 42 (18), 6973-6979, DOI: 10.1021/es800314w."

### (Calculation of Material Manufacturing GHG)

The default setting of the GHG analysis software was used as a basic condition. In this default setting, the percentage of scrap charged into blast furnaces is 11.9%, and the use rate of recycled materials using scrap is set as 5% for sheet materials, 85% for bars and wire materials, and 100% for cast iron, based on statistical data. Based on these assumptions, numerical values were entered and calculated to be used for the various material configurations shown in Table 1.

### (Calculation of Process GHG)

The default setting of the GHG analysis software was used as a basic condition. It is assumed that the material yield in the manufacture of automobile parts was 55% for steel sheets, 52% for aluminum alloy sheets, 75% for sheet bars and wires, and 80% for cast iron, aluminum extruders, and aluminum castings, and values are input so that configuration of various materials is as shown in Table 1 and calculated.

### (Calculation of Driving GHG)

An electric vehicle was selected as the powertrain type for the target vehicle. Based on the size and weight of each vehicle under analysis, an equivalent medium-sized electric vehicle was defined. The following WLTP (Class 3b) mode was selected as the driving pattern of the vehicle.

### WLTP mode

- Average speed: 36.57km/h
- Maximum speed: 97.4 km/h
- Running time: 1477 seconds
- Traveling distance: 15.01 km
- Idling ratio: 15.4%
- Cold start ratio: 100%

Assuming a driving distance of 110,000 km, the resize of the power train was considered while considering reducing the automobile body weight.

In addition, for the power consumption of the electric vehicle during driving, it was assumed that electricity generated in Japan is used, and the calculation was performed by inputting the numerical value of the power consumption attributable to the side module, as obtained by the inventors through their analysis.

### (Calculation of Disposal-stage GHG)

The default setting of the Disposal-stage GHG analysis software was used as a basic condition. The recycling rate of steel materials was assumed to be 90.3%, and the recycling rate of aluminum alloy materials was assumed to be 78.6%, and energy recovery from recycling to non-automobiles was also considered as the CO₂ absorption amount.

The CO₂ equivalent mass was calculated using a coefficient to calculate GHG in the material manufacturing process shown in table 1, vehicle manufacturing process, fuel manufacturing and use process, and material and vehicle recycling process as CO₂ equivalent mass, and using weight or energy amount. These values are the default values for GHG analysis software and are based on statistical data on GHG emissions for each substance and process.

In the above procedure, the CO₂ equivalent mass was calculated based on the material manufacturing GHG, the process GHG, the driving GHG, and disposal-stage GHG, and they were then summed to obtain the LC-GHG values shown in Table 4.

**[Table 2]**

| Integrated component | | 1 | 2 | 3 | 4 | 5 | 6 | 7 | 8 | 9 |
|---|---|---|---|---|---|---|---|---|---|---|
| Inventive Example 1 | Weight (kg) | 2.05 | 2.33 | 2.33 | 3.68 | 2.51 | 0.23 | 1.33 | | |
| | HV | 589 | 305 | 503 | 540 | 411 | 509 | 425 | | |
| Inventive Example 2 | Weight (kg) | 3.38 | 2.33 | 2.33 | 3.08 | 1.81 | 0.23 | | | |
| | HV | 474 | 328 | 403 | 552 | 495 | 416 | | | |
| Inventive Example 3 | Weight (kg) | 2.90 | 2.33 | 2.00 | 3.68 | 2.19 | | | | |
| | HV | 603 | 318 | 603 | 547 | 578 | | | | |
| Inventive Example 4 | Weight (kg) | 2.90 | 1.67 | 1.83 | 2.98 | 1.78 | 0.32 | | | |
| | HV | 585 | 560 | 555 | 588 | 599 | 486 | | | |
| Inventive Example 5 | Weight (kg) | 2.45 | 1.05 | 2.33 | 2.33 | 3.68 | 0.60 | 2.51 | 0.32 | |
| | HV | 546 | 472 | 344 | 412 | 429 | 398 | 467 | 451 | |
| Inventive Example 6 | Weight (kg) | 2.05 | 2.33 | 2.43 | 3.79 | 0.60 | 2.91 | 0.23 | 2.90 | 2.20 |
| | HV | 543 | 345 | 619 | 402 | 422 | 406 | 462 | 503 | 437 |
| Inventive Example 7 | Weight (kg) | 2.90 | 1.90 | 2.33 | 3.08 | 0.60 | 1.81 | 0.23 | 2.10 | 1.60 |
| | HV | 430 | 391 | 402 | 622 | 476 | 477 | 411 | 500 | 433 |
| Comparative Example 1 | Weight (kg) | 4.00 | 5.19 | 1.57 | 5.13 | | | | | |
| | HV | 447 | 403 | 421 | 488 | | | | | |
| Comparative Example 2 | Weight (kg) | | | | | | | | | |
| | HV | | | | | | | | | |
| Comparative Example 3 | Weight (kg) | 4.00 | 5.19 | 1.57 | 5.96 | | | | | |
| | HV | 490 | 476 | 487 | 342 | | | | | |
| Comparative Example 4 | Weight (kg) | 3.24 | 3.84 | 3.21 | 4.98 | | | | | |
| | HV | 448 | 503 | 485 | 476 | | | | | |
| Comparative Example 5 | Weight (kg) | | | | | | | | | |
| | HV | | | | | | | | | |
| Comparative Example 6 | Weight (kg) | | | | | | | | | |
| | HV | | | | | | | | | |
| Comparative Example 7 | Weight (kg) | | | | | | | | | |
| | HV | | | | | | | | | |
| Comparative Example 8 | Weight (kg) | | | | | | | | | |
| | HV | | | | | | | | | |
| Comparative Example 9 | Weight (kg) | | | | | | | | | |
| | HV | | | | | | | | | |
| Comparative Example 10 | Weight (kg) | | | | | | | | | |
| | HV | | | | | | | | | |
| Comparative Example 11 | Weight (kg) | | | | | | | | | |
| | HV | | | | | | | | | |

**[Table 3]**

| Separated component | | 1 | 2 | 3 | 4 | 5 | 6 | 7 | 8 | 9 | 10 | 11 | 12 | 13 |
|---|---|---|---|---|---|---|---|---|---|---|---|---|---|---|
| Inventive Example 1 | Weight (kg) | 0.47 | 0.34 | 0.42 | 0.41 | 0.60 | | | | | | | | |
| | HV | 180 | 334 | 179 | 210 | 454 | | | | | | | | |
| Inventive Example 2 | Weight (kg) | 0.47 | 0.34 | 0.42 | 0.41 | 0.60 | | | | | | | | |
| | HV | 193 | 627 | 197 | 176 | 503 | | | | | | | | |
| Inventive Example 3 | Weight (kg) | 0.31 | 0.34 | 0.42 | 0.41 | 0.54 | | | | | | | | |
| | HV | 325 | 588 | 187 | 174 | 571 | | | | | | | | |
| Inventive Example 4 | Weight (kg) | 0.31 | 0.34 | 0.42 | 0.41 | 0.54 | | | | | | | | |
| | HV | 355 | 619 | 199 | 203 | 591 | | | | | | | | |
| Inventive Example 5 | Weight (kg) | 0.80 | 0.42 | 0.41 | | | | | | | | | | |
| | HV | 460 | 193 | 179 | | | | | | | | | | |
| Inventive Example 6 | Weight (kg) | 0.47 | 0.34 | 0.42 | 0.41 | | | | | | | | | |
| | HV | 173 | 342 | 186 | 170 | | | | | | | | | |
| Inventive Example 7 | Weight (kg) | 0.47 | 0.32 | 0.42 | 0.41 | | | | | | | | | |
| | HV | 198 | 581 | 185 | 200 | | | | | | | | | |
| Comparative Example 1 | Weight (kg) | 0.32 | 0.47 | 0.60 | 0.63 | | | | | | | | | |
| | HV | 462 | 322 | 209 | 197 | | | | | | | | | |
| Comparative Example 2 | Weight (kg) | 3.02 | 0.34 | 0.22 | 0.35 | 1.89 | 0.60 | 0.41 | 3.71 | 0.60 | 1.33 | 5.13 | 0.55 | 0.22 |
| | HV | 461 | 197 | 332 | 208 | 342 | 183 | 195 | 502 | 196 | 173 | 408 | 498 | 183 |
| Comparative Example 3 | Weight (kg) | 0.32 | 0.47 | 0.60 | 0.63 | | | | | | | | | |
| | HV | 469 | 352 | 188 | 214 | | | | | | | | | |
| Comparative Example 4 | Weight (kg) | 0.44 | 0.89 | 0.64 | 0.25 | 0.30 | | | | | | | | |
| | HV | 475 | 469 | 209 | 467 | 484 | | | | | | | | |
| Comparative Example 5 | Weight (kg) | 3.57 | 0.30 | 1.29 | 3.06 | 0.77 | 0.56 | 2.35 | 1.40 | 0.27 | 3.51 | 0.52 | | |
| | HV | 507 | 293 | 334 | 506 | 201 | 295 | 489 | 451 | 334 | 308 | 353 | | |
| Comparative Example 6 | Weight (kg) | 2.08 | 1.20 | 0.60 | 2.88 | 0.29 | 0.46 | 1.29 | 1.82 | 5.68 | | | | |
| | HV | 541 | 212 | 314 | 332 | 210 | 186 | 311 | 314 | 338 | | | | |
| Comparative Example 7 | Weight (kg) | 3.37 | 1.08 | 0.57 | 0.36 | 3.06 | 0.65 | 0.72 | 2.72 | 1.29 | 3.72 | | | |
| | HV | 537 | 352 | 207 | 352 | 545 | 368 | 294 | 529 | 494 | 313 | | | |
| Comparative Example 8 | Weight (kg) | 4.58 | 0.20 | 1.23 | 2.02 | 0.57 | 1.15 | 4.03 | 12.31 | | | | | |
| | HV | 503 | 100 | 509 | 211 | 204 | 250 | 484 | 101(^{*}1) | | | | | |
| Comparative Example 9 | Weight (kg) | 4.00 | 0.32 | 0.50 | 4.96 | 0.42 | 0.41 | 1.57 | 0.25 | 5.13 | | | | |
| | HV | 508 | 195 | 605 | 504 | 593 | 587 | 456 | 183 | 495 | | | | |
| Comparative Example 10 | Weight (kg) | 5.11 | 0.82 | 2.43 | 4.48 | 1.67 | 0.95 | 1.95 | 4.30 | 1.32 | 8.44 | | | |
| | HV | 506 | 482 | 532 | 158 | 152 | 159 | 503 | 526 | 506 | 103 (*1) | | | |
| Comparative Example 11 | Weight (kg) | 6.10 | 0.22 | 0.37 | 0.25 | 3.00 | 0.22 | 0.23 | 2.52 | 0.22 | 0.30 | 3.45 | 0.25 | 0.22 |
| | HV | 558 | 204 | 357 | 196 | 486 | 207 | 197 | 501 | 181 | 356 | 431 | 328 | 180 |

| | | | | | | | | | | | | | | |
|---|---|---|---|---|---|---|---|---|---|---|---|---|---|---|
| (*1) shows the weight of the aluminum extruded member. | | | | | | | | | | | | | | |

**[Table 4]**

| | S (m²) | W_{0.2} (kg) | W₅₁₀ (kg) | W₅₁₀/W_{0.2} ( - ) | W_{0.2}/S (kg/m²) | LC-GHG (kg, CO₂-eq) | LC-GHG/S (kg, CO₂-eq/m²) |
|---|---|---|---|---|---|---|---|
| Inventive Example 1 | 2.228 | 16.70 | 5.73 | 0.34 | 7.50 | 173.77 | 78.01 |
| Inventive Example 2 | 2.228 | 15.40 | 3.42 | 0.22 | 6.91 | 161.77 | 72.62 |
| Inventive Example 3 | 2.228 | 15.11 | 11.64 | 0.77 | 6.78 | 157.85 | 70.86 |
| Inventive Example 4 | 2.228 | 13.50 | 12.04 | 0.89 | 6.06 | 142.78 | 64.10 |
| Inventive Example 5 | 2.261 | 16.90 | 2.45 | 0.14 | 7.48 | 176.77 | 78.20 |
| Inventive Example 6 | 2.877 | 21.08 | 4.48 | 0.21 | 7.33 | 213.63 | 74.25 |
| Inventive Example 7 | 2.877 | 18.17 | 3.40 | 0.19 | 6.32 | 188.46 | 65.51 |
| Comparative Example 1 | 2.261 | 17.91 | 0.00 | 0.00 | 7.92 | 177.92 | 78.71 |
| Comparative Example 2 | 2.228 | 18.37 | 0.00 | 0.00 | 8.25 | 191.69 | 86.06 |
| Comparative Example 3 | 2.228 | 18.74 | 0.00 | 0.00 | 8.41 | 195.16 | 87.61 |
| Comparative Example 4 | 2.310 | 17.80 | 0.00 | 0.00 | 7.71 | 185.76 | 80.42 |
| Comparative Example 5 | 2.246 | 17.59 | 0.00 | 0.00 | 7.83 | 178.63 | 79.54 |
| Comparative Example 6 | 2.094 | 16.30 | 2.08 | 0.13 | 7.78 | 171.02 | 81.65 |
| Comparative Example 7 | 2.221 | 17.54 | 9.15 | 0.52 | 7.90 | 184.72 | 83.17 |
| Comparative Example 8 | 2.186 | 26.07 | 0.00 | 0.00 | 11.93 | 442.84 | 202.63 |
| Comparative Example 9 | 2.228 | 17.50 | 1.33 | 0.08 | 7.86 | 181.76 | 81.60 |
| Comparative Example 10 | 2.525 | 31.47 | 6.73 | 0.21 | 12.46 | 322.69 | 127.78 |
| Comparative Example 11 | 2.228 | 17.35 | 6.10 | 0.35 | 7.79 | 181.53 | 81.49 |

In Inventive Examples 1 to 7, by increasing the usage ratio of steel in the automobile side module and applying in combination the above-described element technologies to obtain an integrated component, it was possible to achieve W_{0.2}/S of 7.7 or less and W₅₁₀/W_{0.2} of greater than 0.10. As a result, the LC-GHG of the automobile side module could be reduced.

On the other hand, in Comparative Examples 1 to 5 and 8, W₅₁₀/W_{0.2} was 0.00, so it was necessary to increase W_{0.2}/S in order to ensure crash performance, and the reduction effects on the material manufacturing GHG and the driving GHG could not be sufficiently obtained.

In addition, in Comparative Examples 2 and 5 to 11, which did not employ the integrated structure, each section was press-formed, and the unnecessary portions were trimmed and removed before being joined by welding; therefore, sufficient effects in reducing the material manufacturing GHG and the driving GHG could not be achieved.

In particular, in Comparative Examples 7, 9, and 10, although there are two or more portions having a hardness of HV510 or higher by hot stamping, because an integrated structure was not adopted, the effect of reducing the material manufacturing GHG could not be sufficiently obtained, and the effect of reducing LC-GHG could not be sufficiently achieved.

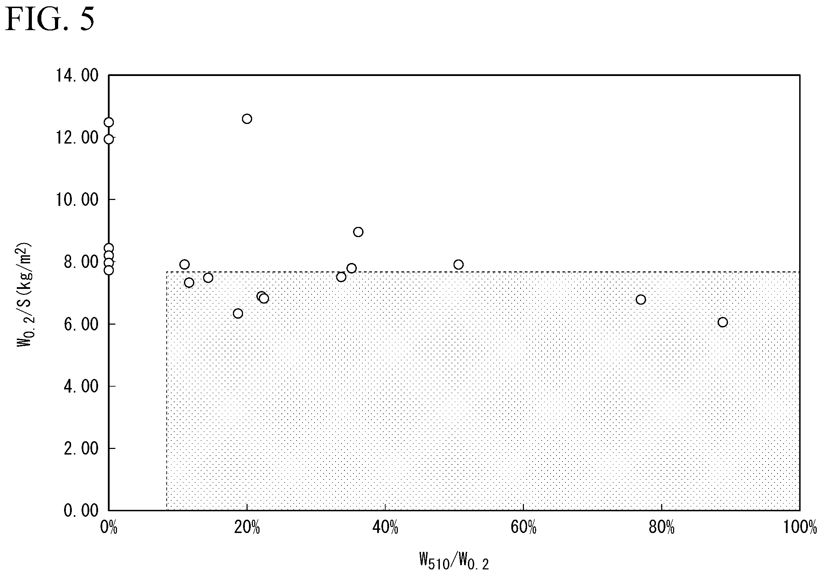

Fig. 5 is a graph, for the embodiment, in which W₅₁₀/W_{0.2} is plotted on the horizontal axis and W_{0.2}/S (kg/m²) is plotted on the vertical axis.

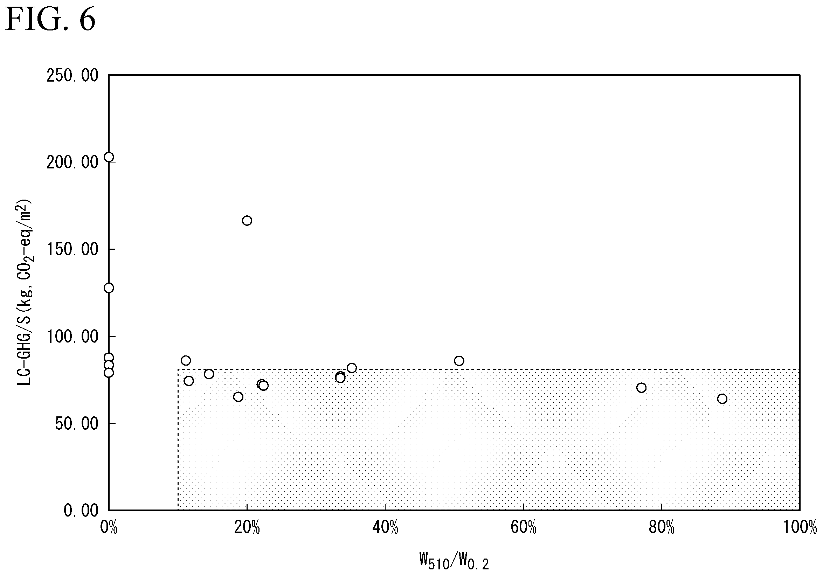

FIG. 6 is a graph showing, for the embodiment, a plot with W₅₁₀/W_{0.2} on the horizontal axis and LC-GHG/S (kg, CO₂-eq/m²) on the vertical axis.

From these graphs, it can be confirmed that, according to the embodiment of the present invention, the LC-GHG is reduced by about 5 to 30% compared with the conventional structure.

Thus, according to the present invention, by satisfying the conditions W_{0.2}/S ≤ 7.7 and W₅₁₀/W_{0.2} > 0.10, where S (m²) is the minimum circumscribed rectangular area when viewed in the vertical direction of a reference plane, W_{0.2} (kg) is the total weight of those components among the components of the automobile side module that each weigh 0.200 kg or more, and W₅₁₀ is the total weight of those components among the components of the automobile side module whose minimum Vickers hardness is HV510 or higher, it becomes possible to reduce the LC-GHG of the automobile side module.

### (Examples 2)

Table 5 shows the results of side impact tests conducted on the inventive examples and comparative examples. In Table 5, the side impact test results are shown using evaluation values A to C. In this evaluation, first, the test results of the IIHS side impact test are disclosed, and for the vehicle body of Comparative Example 2, which has a collision safety performance rated as "good", numerical analysis of the side impact test is performed using the IIHS side impact analysis model, and the obtained intrusion amount is used as the reference value (evaluation B).

The vehicle bodies of Comparative Examples 1 and 3 to 11 have been certified (type approval) in each country's laws and regulation. In comparison with Comparative Example 2, the safety performance evaluation results for some of the vehicle bodies are described.

For Inventive Examples 1 to 7, a numerical analysis of side impact tests was conducted in which only the front side and outer R/F module were replaced, and the safety performance was evaluated based on the amount of the relative intrusion of the center pillar into the cabin.

Vehicles whose test result was superior to that of the 5-star rated vehicle (Comparative Example 2) in the IIHS side impact test was rated as Evaluation A. In addition, vehicles whose test result was inferior to that of Comparative Example 2 but whose components did not break down were rated as Evaluation C.

**[Table 5]**

| | Side impact evaluation |
|---|---|
| Inventive Example 1 | A |
| Inventive Example 2 | B |
| Inventive Example 3 | B |
| Inventive Example 4 | B |
| Inventive Example 5 | B |
| Inventive Example 6 | A |
| Inventive Example 7 | B |
| Comparative Example 1 | B |
| Comparative Example 2 | B |
| Comparative Example 3 | B |
| Comparative Example 4 | B |
| Comparative Example 5 | C |
| Comparative Example 6 | B |
| Comparative Example 7 | B |
| Comparative Example 8 | B |
| Comparative Example 9 | B |
| Comparative Example 10 | B |
| Comparative Example 11 | B |

As shown in Table 5, in Inventive Examples 1 to 7, with respect to side collisions, results equivalent to or better than the safety test results of vehicles rated "good" in the IIHS side impact test (rating A or rating B) were obtained.

Accordingly, according to Inventive Examples 1 to 7, it is possible to reduce LC-GHG while satisfying the vehicle safety test results required for a good rating in the IIHS side impact test.

The outline of the element technologies applied to the automobile side module 100 according to the present embodiment is as follows.

The reference numerals for the components, formulas, embodiments, and the like in the descriptions of each Element Technology are assigned for each Element Technology in order to simplify the explanation. Accordingly, the same reference numeral may be used in the descriptions of different element technologies. In addition, the term "invention" used in the descriptions of the element technologies may be read as "Element Technology".

### <<Element Technology A1>>

Element Technology A1 is a hot-stamp formed body including,
as a chemical composition, by mass%:
   C: 0.15 to 0.50%;
   Si: 0.0010% to 3.000%;
   Mn: 0.30% to 3.00%;
   Al: 0.0002% to 2.000%;
   P: 0.100% or less;
   S: 0.1000% or less;
   N: 0.0100% or less;
   Nb: 0% to 0.15%;
   Ti: 0% to 0.15%;
   V: 0% to 0.15%;
   Mo: 0% to 1.0%;
   Cr: 0% to 1.0%;
   Cu: 0% to 1.0%;
   Ni: 0% to 1.0%;
   B: 0% to 0.0100%;
   Ca: 0% to 0.010%;
   REM: 0% to 0.30%; and
a remainder consisting of Fe and an impurity,
in which the hot-stamp formed body has a metallographic structure containing, by area ratio, a total of 90% or more of martensite, bainite, and tempered martensite,
in a texture between a surface and a sheet thickness 1/4 position from the surface, a ratio between a pole density of an orientation group consisting of {001} <1-10> to {001} <-1-10> and a pole density of an orientation group consisting of {111} <1-10> to {111} <-1-12> is less than 1.8, and
in a texture between the sheet thickness 1/4 position from the surface and a sheet thickness 1/2 position from the surface, a ratio between a pole density of an orientation group consisting of {001} <1-10> to {001} <-1-10> and a pole density of an orientation group consisting of {111} <1-10> to {111} <-1-12> is less than 2.3.

The Element Technology A1 is a technique disclosed in International Publication No. WO/2021/230150. According to the Element Technology A1, it is possible to provide a hot-stamp formed body having excellent strength and bendability and having high load capacity.

### <<Element Technology A2>>

The Element Technology A2 is a hot-stamp formed body including,
as a chemical composition, by mass%:
   C: 0.15 to 0.50%;
   Si: 0.0010% to 3.000%;
   Mn: 0.30% to 3.00%;
   Al: 0.0002% to 2.000%;
   P: 0.100% or less;
   S: 0.1000% or less;
   N: 0.0100% or less;
   Nb: 0% to 0.15%;
   Ti: 0% to 0.15%;
   V: 0% to 0.15%;
   Mo: 0% to 1.0%;
   Cr: 0% to 1.0%;
   Cu: 0% to 1.0%;
   Ni: 0% to 1.0%;
   B: 0% to 0.0100%;
   Ca: 0% to 0.010%;
   REM: 0% to 0.30%; and
a remainder consisting of Fe and an impurity,
in which the hot-stamp formed body has a metallic structure comprising, in terms of area ratio, a total of 10 to 30% of ferrite and granular bainite, and the remaining microstructure consisting of one or more of martensite, bainite, and tempered martensite,
in a texture between a surface and a sheet thickness 1/4 position from the surface, a ratio between a pole density of an orientation group consisting of {001 } <1-10> to {001} <-1-10> and a pole density of an orientation group consisting of {111} <1-10> to {111} <-1-12> is less than 1.8, and
in a texture between the sheet thickness 1/4 position from the surface and a sheet thickness 1/2 position from the surface, a ratio between a pole density of an orientation group consisting of {001} <1-10> to {001} <-1-10> and a pole density of an orientation group consisting of {111} <1-10> to {111} <-1-12> is less than 2.3.

The Element Technology A2 is a technique disclosed in International Publication No. WO/2021/230149. According to the Element Technology A2, it is possible to provide a hot-stamp formed body having excellent strength, bendability, and ductility.

### <<Element Technology B1>>

The Element Technology B1 is an overlapped hot-stamp formed body comprising:
a first Al-Fe-based alloy coated steel sheet having a sheet thickness of T1 (mm); and
a second Al-Fe-based alloy coated steel sheet that is overlapped and welded on the first Al-Fe-based alloy coated steel sheet, has a smaller area than the first Al-Fe-based alloy coated steel sheet, and has a sheet thickness of T2 (mm), in which the overlapped hot-stamp formed body satisfies the relationships of Expressions (7) to Expression (9) below; $25 \leq K 1 \leq 60$ $25 \leq K 2 \leq 60$ $0 \leq \left(D1-D2\right) \times {\left(K1/K2\right)}^{2} \leq 5.0$
here,
K1: an average value of a coating thickness of an Al-Fe-based alloy coated layer on the side in contact with the second Al-Fe-based alloy coated steel sheet and a coating thickness of an Al-Fe-based alloy coated layer on the side not in contact with the second Al-Fe-based alloy coated steel sheet at a non-overlapped part of the first Al-Fe-based alloy coated steel sheet
K2: a coating thickness of an Al-Fe-based alloy coated layer on the side not in contact with the first Al-Fe-based alloy coated steel sheet at an overlapped part of the second Al-Fe-based alloy coated steel sheet
D1: an average value of a thickness of a diffusion layer located to be in contact with a steel sheet base in the Al-Fe-based alloy coated layer on the side in contact with the second Al-Fe-based alloy coated steel sheet and a thickness of a diffusion layer located to be in contact with a steel sheet base in the Al-Fe-based alloy coated layer on the side not in contact with the second Al-Fe-based alloy coated steel sheet in the first Al-Fe-based alloy coated steel sheet
D2: a thickness of a diffusion layer located to be in contact with a steel sheet base in the Al-Fe-based alloy coated layer on the side not in contact with the first Al-Fe-based alloy coated steel sheet of the second Al-Fe-based alloy coated steel sheet.
The units of the sheet thickness T1 and the sheet thickness T2 are mm, and the units of K1, K2, D1, and D2 are µm.

According to Elemental Technology B1, when an Al-based coated steel sheet is used as the material, it is possible to provide an overlapped blank for hot stamping and an overlapped hot-stamp formed body that can improve both the slow temperature increasing rate of an overlapped part and the difference in temperature increasing rate between an overlapped part and a one-sheet part when an Al-based coated steel sheet is used as a raw material.

The present inventors conducted a diligent study repeatedly to solve the above problems and focused on lightness L* defined in JIS Z 8781-4 for the surface of an Al-based coated steel sheet, and consequently, confirmed that lower lightness increases the temperature increasing rate of hot stamping heating of the Al-based coated steel sheet. This is thought to be because a lower value of the lightness suggests that the surface of the Al-based coated steel sheet is blackened, and thus characteristics that easily absorb heat are obtained. In particular, they found that in order to improve the slow temperature increasing rate of the overlapped part of a patch work, it is important to relatively reduce the lightness of the overlapped part relative to the sheet thickness of the overlapped part (namely, the total of the thicknesses of the two steel sheets). Further, they found that in order to improve the difference in temperature increasing rate between the overlapped part and the one-sheet part, it is important to make a difference in lightness between the overlapped part and the one-sheet part (namely, the lightness of the surface should be lower at a thicker overlapped part, and conversely, the lightness of the surface should be higher at the one-sheet part).

Further, they found that using the Al-based coated steel sheet makes it possible to obtain high lightness due to the surface having a silver-gray metallic luster, and furthermore, increasing the thickness of an Al-based coating layer makes it possible to suppress the blackening of the coated surface caused by alloying of the coating reaching the surface, resulting in high lightness being maintained even during the hot stamping heating.

Further, they found that using a carbon-based black coating for the upper layer of the Al-based coated steel sheet makes it possible to reduce the lightness. In particular, they found that the carbon-based black coating is burned off by combustion by the oxidation reaction during the hot stamping heating, thus making it possible to suppress the decrease in spot weldability of the overlapped hot stamp molded part caused by the remaining carbon-based black coating.

Preferred embodiments of the present invention will be explained below in detail referring to the accompanying drawings. In the description and the drawings, the same codes are given to components having substantially the same functional configurations to omit duplicated explanation.

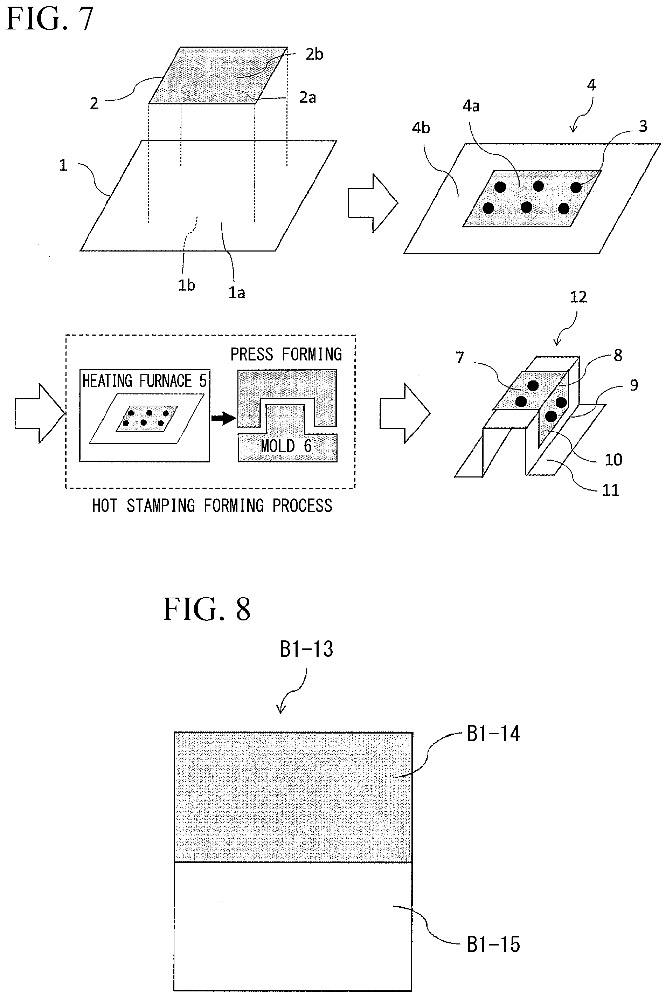

FIG. 7 is an explanatory view schematically illustrating examples of an overlapped blank for hot stamping and an overlapped hot-stamp formed body according to an embodiment of the present Element Technology.

The overlapped blank for hot stamping according to this embodiment is a type of tailored blank, and is also called a patch work blank. The overlapped blank for hot stamping according to this embodiment is used as a raw material of the overlapped hot-stamp formed body.

As schematically illustrated in FIG. 7, an overlapped blank for hot stamping 4 according to this embodiment is composed of a first Al-based coated steel sheet 1 and a second Al-based coated steel sheet 2 smaller in area than the first Al-based coated steel sheet 1 by welding 3 them. In this event, a portion of the overlapped blank for hot stamping 4 where the second Al-based coated steel sheet 2 is overlapped is called an overlapped part 4a, and a non-overlapped portion is called a one-sheet part 4b. The second Al-based coated steel sheet 2 of the overlapped blank for hot stamping 4 according to this embodiment is preferably arranged inside relative to an outer edge portion of the first Al-based coated steel sheet 1 so as to prevent a portion of the second Al-based coated steel sheet 2 protruding from the first Al-based coated steel sheet 1 from existing as schematically illustrated in FIG. 7.

Further, on the surface of the first Al-based coated steel sheet 1, an Al-based coating layer is applied to both faces of a face 1a on the side in contact with the second Al-based coated steel sheet 2 and a face 1b on the side not in contact with the second Al-based coated steel sheet 2, and also on the second Al-based coated steel sheet 2, an Al-based coating layer is applied to both faces of a face 2a on the side in contact with the first Al-based coated steel sheet 1 and a face 2b on the side not in contact with the first Al-based coated steel sheet 1. Further, at the face 2b on the side not in contact with the first Al-based coated steel sheet 1 of the second Al-based coated steel sheet 2, a carbon-based black coating (not illustrated) is provided at an upper layer of the Al-based coating layer.

Regarding the overlapped blank for hot stamping 4, as the method of manufacturing the overlapped hot-stamp formed body according to this embodiment, the steel sheets are heated up to an Ac3 point or higher in a heating furnace 5, to thereby be made into austenite, and are press-molded and quenched by a mold 6 immediately after taken out of the furnace, and thereby the steel sheets are transformed into martensite. Thus, the overlapped blank for hot stamping 4 becomes an overlapped hot-stamp formed body 12 according to this embodiment excellent in collision resistant property. In this event, in at least a portion of the overlapped part 4a, there exists a portion that becomes a bent part 8 when the overlapped blank for hot stamping 4 becomes the overlapped hot-stamp formed body 12.

In FIG. 7, a formed product using a hat-shaped metal mold is illustrated as an example of the overlapped hot-stamp formed body 12. Here, names of sites of the hot-stamp formed body 12 are a head top part 7, the bent part 8 of the head top part, a vertical wall part 10, a flange part 11, and a bent part 9 of the flange part.

Although the second Al-based coated steel sheet 2 according to this embodiment is arranged on the outer side of the head top part 7 side in FIG. 7, the object of the present Element Technology can be achieved even by arranging the second Al-based coated steel sheet 2 on the inner side of the head top part 7.

### (1. Overlapped Blank for Hot Stamping)

The overlapped blank for hot stamping 4 according to this embodiment will be explained in detail below.

As described above, the overlapped blank for hot stamping 4 according to this embodiment includes the first Al-based coated steel sheet 1 and the second Al-based coated steel sheet 2 welded to the first Al-based coated steel sheet 1 and smaller in area than the first Al-based coated steel sheet 1, in which Al-based coating is applied to both faces of each of the first Al-based coated steel sheet 1 and the second Al-based coated steel sheet 2. In other words, the first Al-based coated steel sheet 1 and the second Al-based coated steel sheet 2 according to this embodiment are aluminum coated steel sheets each including Al-based coating layers on both surfaces of a base steel sheet.

### <Base steel sheet>

In the overlapped blank for hot stamping 4 according to this embodiment, the chemical composition of the base steel sheet in each of the first Al-based coated steel sheet 1 and the second Al-based coated steel sheet 2 is not particularly limited. However, in order to obtain, for example, a tensile strength of 1500 MPa or more (about 400 or more in Vickers hardness (namely, HV1 in JIS Z2244-1:2020) when a test force is set to 9.8107 N), it is preferable to use a base steel sheet having a chemical composition composed of, by mass%, C: 0.19 to 0.50%, Si: 0.01 to 1.50%, Mn: 0.4 to 2.0%, Cr: 0.01 to 1.00%, Ti: 0.001 to 0.100%, B: 0.0005 to 0.0100%, P: 0.100% or less, S: 0.100% or less, Al: 0 to 1.000%, N: 0.0100% or less, Nb: 0 to 0.100%, Mo, Ni, Cu, Co, W, Sn, V, Sb: each 0 to 0.500%, Mg, Ca, Zr, REM, O: each 0 to 0.0100% or less, and the balance Fe and impurities. Further, the chemical composition of the base steel sheet of the first Al-based coated steel sheet 1 and the chemical composition of the base steel sheet of the second Al-based coated steel sheet 2 may be the same or different within the range of the above-described chemical composition.

The method of manufacturing the Al-based coated steel sheet using the above-described chemical composition for the base steel sheet is not limited in particular. For example, the one manufactured through a conventional pig iron-making process and steel-making process and by processes of hot rolling, pickling, cold rolling, and Sendzimir hot-dip aluminum coating can be used as the above-described aluminum coated steel sheet.

In this embodiment, a sheet thickness t1 (mm) of the first Al-based coated steel sheet 1 and a sheet thickness t2 (mm) of the second Al-based coated steel sheet 2 are each preferably 0.5 mm or more and 3.2 mm or less selectively. Setting the sheet thickness to 0.5 mm or more makes it possible to maintain the productivity in the processes of hot rolling and cold rolling at a desired state. Further, setting the sheet thickness to 3.2 mm or less makes it possible to prevent a phenomenon in which the cooling rate decreases during metal mold quenching of hot stamping and hardenability becomes insufficient, which leads to a failure in obtaining a desired tensile strength.

The sheet thickness t1 of the first Al-based coated steel sheet 1 and the sheet thickness t2 of the second Al-based coated steel sheet 2 can be measured using, for example, a micrometer based on JIS B7502: 2016. Further, the above-described sheet thicknesses t1 and t2 are each set to a sheet thickness including the thicknesses of the Al-based coating layers provided on both faces of the base steel sheet, in addition to the sheet thickness of the base steel sheet.

### <Al-based coating layer>

The coating weight of the Al-based coating layer applied to both faces of the first Al-based coated steel sheet 1 is W1a (g/m²) on the surface 1a of the side in contact with the second Al-based coated steel sheet 2, and is W1b (g/m²) on the surface 1b of the side not in contact with the second Al-based coated steel sheet 2. Further, the coating weight of the Al-based coating layer applied to both faces of the second Al-based coated steel sheet 2 is W2a (g/m²) on the surface 2b of the side not in contact with the first Al-based coated steel sheet 1. Here, the values of W1a, W1b, and W2b described above are each independently within a range of 20 g/m² or more and 120 g/m² or less per face.

That is, W1a, W1b, and W2b satisfy Expression (3), Expression (4), and Expression (5) below, respectively; $20 \leq W 1 a \leq 120$ $20 \leq W 1 b \leq 120$ $20 \leq W 2 b \leq 120$

Here, the average coating weight of the Al-based coating layer at the non-overlapped part (one-sheet part 4b) in the overlapped blank for hot stamping 4 is set to W1 (g/m²) per face. In the first Al-based coated steel sheet 1, when the coating weight of the Al-based coating layer on one face of the surface on the side in contact with the second Al-based coated steel sheet 2 is W1a (g/m²) and the coating weight of the Al-based coating layer on one face of the surface on the side not in contact with the second Al-based coated steel sheet 2 is W1b (g/m²), W1 = 0.5 × (W1a+W1b) is established. Further, the average coating weight of the Al-based coating layer at the overlapped part 4a in the overlapped blank for hot stamping 4 is set to W2 (g/m²) per face. When the coating weight of the Al-based coating layer on one face of the surface 1b on the side not in contact with the second Al-based coated steel sheet 2 in the first Al-based coated steel sheet 1 is W1b (g/m²) and the coating weight of the Al-based coating layer on one face of the surface on the side not in contact with the first Al-based coated steel sheet 1 in the second Al-based coated steel sheet 2 is W2b (g/m²), W2=0.5 × (W1b+W2b) is established.

In the first Al-based coated steel sheet 1, the surface 1a on the side in contact with the second Al-based coated steel sheet 2 and the surface 1b on the side not in contact with the second Al-based coated steel sheet 2, and in the second Al-based coated steel sheet 2, the surface 2b on the side not in contact with the first Al-based coated steel sheet 1 are faces exposed to a heat source when the manufactured overlapped blank is subjected to hot stamping heating, and become surfaces important for controlling the temperature increasing rate during the heating in the hot stamping.

Examples of the characteristics required for the Al-based coating layer according to this embodiment include (a) suppression of generation of Fe scales during hot stamping heating and (b) suppression of chip or pressing flaw of coating caused by slipping (also called powdering) of coating during hot stamping.

The powdering occurs due to a compressive stress applied on the coating on the inner face of the bent part made during forming, a shear stress applied on the coating by the sliding from the metal mold during forming, or another cause. When the coating weight W1 or W2 of the Al-based coating layer on each of the steel sheets is less than 20 g/m², the thickness of the coating is thin, thus causing a problem of insufficient suppression of the Fe scales. Therefore, the coating weight W1 or W2 of the Al-based coating layer on each of the Al-based coated steel sheets is set to 20 g/m² or more independently. The coating weight W1 or W2 of the Al-based coating layer on each of the Al-based coated steel sheets is preferably 30 g/m² or more independently, and more preferably, in order of increasing preference, 35 g/m² or more, 40 g/m² or more, 45 g/m² or more, or 50 g/m² or more.

On the other hand, when the coating weight W1 or W2 of the coating per face on each of the Al-based coated steel sheets is greater than 120 g/m², a problem of insufficient suppression of the powdering occurs. Therefore, in this embodiment, the coating weight W1 or W2 of the coating per face on each of the Al-based coated steel sheets is set to 120 g/m² or less independently. The coating weight W1 or W2 of the coating per face on each of the Al-based coated steel sheets is preferably 110 g/m² or less independently, and more preferably, in order of increasing preference, 100 g/m² or less, 95 g/m² or less, or 90 g/m² or less. In the second Al-based coated steel sheet 2, the coating weight of the Al-based coating layer on the surface of the side in contact with the first Al-based coated steel sheet 1 is not particularly defined.

The thickness (µm) of the Al-based coating layer on each of the Al-based coated steel sheets can be approximated from the coating weight (g/m²). The thickness (µm) of the Al-based coating layer on each of the Al-based coated steel sheets can be roughly found by Equation (10) below, depending on the chemical composition of the Al-based coating layer. $\left(Coating thickness\right) = \left(Coating weight\right) / 3$

FIG. 8 schematically illustrates a layer structure of a coated steel sheet B1-13 on one face side in which the Al-based coating layer according to this embodiment is provided on the surface of the base steel sheet. When the Al-based coating layer according to this embodiment is manufactured by the hot-dip coating method, an aluminum-iron-based (Al-Fe-based) alloy layer (not illustrated) is formed near the boundary of an Al-based coating layer B1-14 with a base steel sheet B1-15.

According to the general hot-dip coating method as a method of performing the Al-based coating on the base steel sheet, the base steel sheet is dipped in a hot-dip aluminum coating bath and subjected to gas wiping in nitrogen or atmosphere, and thereby the Al-based coated steel sheet whose coating weight is adjusted can be manufactured. As a result, the aluminum-iron-based alloy layer is necessarily formed by elution of Fe during hot-dip coating at the interface between the Al-based coating layer B1-14 and the base steel sheet B1-15 in FIG. 8. In this description, it is assumed that the Al-based coating layer B1-14 in FIG. 8 also includes the aluminum-iron-based alloy layer.

The chemical composition of the hot-dip aluminum coating bath for forming the above-described Al-based coating layer is not particularly limited (that is, the chemical composition is substantially the same as that of the Al-based coating layer B1-14 except for Fe). However, the content of Al in the hot-dip aluminum coating bath is preferably 80 mass% or more in terms of being excellent in heat resistance required during hot stamping heating. Further, the content of Si in the hot-dip aluminum coating bath is preferably 2 mass% or more in terms of easy control of the thickness of the aluminum-iron-based alloy layer. Setting the content of Si to 2 mass% or more makes it possible to prevent the aluminum-iron-based alloy layer from becoming too thick and reducing formability. On the other hand, setting the content of Si in the hot-dip aluminum coating bath to 15 mass% or less makes it possible to prevent the alloying reaction during hot stamping heating from slowing down and reducing the productivity of hot stamping.

When the hot-dip aluminum coating bath contains 2 mass% or more and 15 mass% or less of Si, a eutectic structure of Al and Si is formed in the Al-based coating layer B1-14 formed by using such a coating bath based on a constitution diagram. In the case of the hot-dip coating method, 1 mass% or more and 5 mass% or less of Fe is inevitably contained in some cases as an eluted component from the base steel sheet. Examples of other inevitable impurities include eluted components in a hot-dip coating facility and elements such as Cr, Mn, Zn, V, Ti, Sn, Ni, Cu, W, Bi, Mg, and Ca due to impurities in an ingot of the hot-dip aluminum coating bath, and these elements are contained by less than 1 mass% in some cases.

That is, the Al-based coating layer B1-14 according to this embodiment may be a coated layer having a chemical composition (average chemical composition) composed of by mass%, Al: 80 to 97%, Si: 2 to 15%, Fe: 1 to 15%, Cr: 0% or more and less than 1%, Mo: 0% or more and less than 1%, Zn: 0% or more and less than 1%, V: 0% or more and less than 1%, Ti: 0% or more and less than 1%, Sn: 0% or more and less than 1%, Ni: 0% or more and less than 1%, Cu: 0% or more and less than 1%, W: 0% or more and less than 1%, Bi: 0% or more and less than 1%, Mg: 0% or more and less than 1%, Ca: 0% or more and less than 1%, and the balance of impurities. Here, as described previously, the hot-dip aluminum coating bath inevitably contains 1 mass% or more and 5 mass% or less of Fe, whereas the aluminum-iron-based alloy layer is formed in the Al-based coating layer, and thus the proportion of Fe increases. Therefore, the chemical composition of the Al-based coating layer B1-14 may be Fe: 1 to 15%.

Examples of the metal structure of the above-described aluminum-iron-based alloy layer include a θ phase (FeAl₃), a η phase (Fe₂Al₅), a ζ phase (FeAl₂), Fe₃Al, and FeAl, which are binary alloys of Al and Fe, an Al solid-solution-based BCC phase (α2, α), and so on, and the aluminum-iron-based alloy layer is composed of a combination of those coating phases. Examples of the metal structure of the aluminum-iron-based alloy layer in the case of containing Si include a τ1 phase (Al₂Fe₃Si₃), a τ2 phase (Al₃FeSi), a τ3 phase (Al₂FeSi), a τ4 phase (Al₃FeSi₂), a τ5 phase (Al₈Fe₂Si), a τ6 phase (Al₉Fe₂Si₂), a τ7 phase (Al₃Fe₂Si₃), a τ8 phase (Al₂Fe₃Si₄), a τ10 phase (Al₄Fe_{1.7}Si), a τ11 phase (Al₅Fe₂Si), and so on, (where each phase does not have a stoichiometric composition in some cases), and the metal structure of the aluminum-iron-based alloy layer is often composed of the τ5 phase or θ phase mainly.

Further, the coating weight of the above-described Al-based coating layer per face is measured using the method of JIS G 3314:2019 JB. 3 (a sodium hydroxide-hexamethylenetetramine hydrochloric acid peeling gravimetric method) after the Al-based coating layer on one face is protected with a seal beforehand.

### <Lightness>

The lightness, which is important in the present Element Technology, will be explained below with reference to FIG. 7. This lightness is the CIE 1976 lightness index L* (CIE 1976 lightness) defined in 3.3 of JIS Z 8781-4:2013, and is simply referred to as "lightness" or "lightness L*" below.

The lightness L* of the surface of the first Al-based coated steel sheet 1 is described as L*1a on the surface 1a on the side in contact with the second Al-based coated steel sheet 2, and is described as L*1b on the surface 1b on the side not in contact with the second Al-based coated steel sheet 2. Further, the lightness L* of the surface of the second Al-based coated steel sheet 2 is described as L*2b on the surface 2b on the side not in contact with the first Al-based coated steel sheet 1. Then, L*1=0.5 × (L*1a+L*1b) and L*2=0.5 × (L*1b+L*2b) are defined. In this case, the overlapped blank for hot stamping 4 satisfies Expression (1) and Expression (2) below. In the second Al-based coated steel sheet 2, the lightness of the surface of the Al-based coating layer on the surface 2*a* of the side in contact with the first Al-based coated steel sheet 1 is not particularly defined.$14.0 \leq \left(L*1-L*2\right) \times {\left(W1/W2\right)}^{2} \leq 32.0$ $0.86 \leq \left\{t1/\left(t1+t2\right)\right\} \times {\left(L*1/L*2\right)}^{2}$

Here, L*1 means the average lightness of the surface of the Al-based coating layer at the non-overlapped part (one-sheet part 4b) in the overlapped blank for hot stamping 4. Further, L*2 means the average lightness of the surface of the Al-based coating layer at the overlapped part 4a in the overlapped blank for hot stamping 4.

$\left[\left(L*1-L*2\right)\times {\left(W1/W2\right)}^{2}: 14.0 or more and 32.0 or less\right]$

A lower value of the lightness increases the temperature increasing rate in heating during hot stamping of the aluminum coated steel sheet. This is thought to be because a lower value of the lightness suggests that the surface of the aluminum coated steel sheet is blackened, and thus characteristics that easily absorb heat are obtained. That is, in this embodiment, the lightness is used as an index for evaluating the temperature increasing rate in heating during hot stamping. In particular, they found that in order to improve the difference in temperature increasing rate between the overlapped part and the one-sheet part, it is important to make a difference between the lightness of the overlapped part and the lightness of the one-sheet part to increase (L*1 - L*2) (namely, it is important to lower the lightness of the surface at the overlapped part having a thick sheet thickness, and conversely, to increase the lightness of the surface at the one-sheet part).

Further, they found that using the Al-based coated steel sheet makes it possible to obtain high lightness due to the surface having a silver-gray metallic luster, and increasing the thickness of the Al-based coating layer, (which can be thought as the coating weight of the Al-based coating layer), makes it possible to suppress the blackening of the coated surface caused by alloying of the coating reaching the surface, resulting in high lightness being maintained even during the hot stamping heating. That is, it is important to increase the ratio (W1/W2) of the coating weight W1 of the Al-based coating layer at the one-sheet part 4b to the coating weight W2 of the Al-based coating layer at the overlapped part 4a. Further, using the carbon-based black coating for the upper layer of the Al-based coated steel sheet makes it possible to reduce the lightness. Thus, by appropriately controlling the Al-based coating layer and the carbon-based black coating used in the Al-based coated steel sheet, the lightness can be adjusted to a desired value.

As above, in order to improve the difference in temperature increasing rate between the overlapped part and the one-sheet part, it is important to control the product of (L*1-L*2) and (W1/W2)² to a certain range because the lightness and the coating weight are related to each other.

When the value of (L*1-L*2) × (W1/W2)² is less than 14.0, the temperature increasing rate in the heating during hot stamping is not sufficiently improved, and further, the difference in temperature increasing rate between the overlapped part and the one-sheet part is not sufficiently improved, resulting in the spot weldability of the overlapped hot-stamp formed body decreasing. Therefore, the value of (L*1-L*2) × (W1/W2)² is set to 14.0 or more. The value of (L*1-L*2) × (W1/W2)² is preferably 16.0 or more and more preferably 18.0 or more.

Further, when the value of (L*1-L*2) × (W1/W2)² exceeds 32.0, the improvement in temperature increasing rate in the heating during hot stamping is saturated, and further, the coating weight W1 of the Al-based coating layer on the first Al-based coated steel sheet 1 having a large area increases and the powdering property of the coating during hot stamping decreases. Therefore, the value of (L*1-L*2) × (W1/W2)² is set to 32.0 or less. The value of (L*1-L*2) × (W1/W2)² is preferably 31.0 or less, and more preferably 30.0 or less, 29.0 or less, 28.0 or less, 27.0 or less, or 26.0 or less.

$\left[\left\{t1/\left(t1+t2\right)\right\}\times \left(L*1/L*2\right)2: 0.86 or more\right]$

A lower value of the lightness increases the temperature increasing rate in heating during hot stamping of the aluminum coated steel sheet. This is thought to be because a lower value of the lightness suggests that the surface of the aluminum coated steel sheet is blackened, and thus characteristics that easily absorb heat are obtained. In particular, in order to improve the slow temperature increasing rate at the overlapped part of the patch work, it is important to relatively reduce the lightness of the overlapped part relative to the sheet thickness of the overlapped part (namely, the total t1+t2 of the sheet thickness t1 of the first Al-based coated steel sheet 1 and the sheet thickness t2 of the second Al-based coated steel sheet 2). In Expression (2) above, the power number of the sheet thickness ratio t1/(t1+t2) is 1, whereas the power number of the lightness ratio (L*1/L*2) is 2. This reveals that the lightness ratio (L*1/L*2) is more important than the sheet thickness ratio t1/(t1+t2) in the present Element Technology.

Further, in order to improve the difference in temperature increasing rate between the overlapped part and the one-sheet part, it is important to reduce the lightness of the surface at the overlapped part having a thick sheet thickness, and conversely, to increase the lightness of the surface at the one-sheet part.

That is, the square of the ratio (L*1/L*2) of the lightness L*1 of the one-sheet part to the lightness L*2 of the overlapped part becomes 0.86 or more relative to the ratio t1/(t1+t2) of the sheet thickness t1 of the one-sheet part to the sheet thickness (t1+t2) of the overlapped part that is found from the sheet thickness t1 of the first Al-based coated steel sheet 1 and the sheet thickness t2 of the second Al-based coated steel sheet 2, which is important for improving the difference in temperature increasing rate between the overlapped part and the one-sheet part of the patch work. When the value of {t1/(t1+t2)} × (L*1/L*2)² is less than 0.86, a difference in the temperature increasing rate at the overlapped part is made, resulting in the spot weldability decreasing. A higher value of {t1/(t1+t2)} × (L*1/L*2)² is better. Therefore, the lower limit of the above value may be set to 0.90 or more, 0.94 or more, 0.98 or more, or 1.02 or more as necessary. However, the upper limit of the value of {t1/(t1+t2)} × (L*1/L*2)² is not set in particular, but when the value exceeds 3.00, it becomes economically difficult to make a difference in the lightness. Therefore, the upper limit value of the value of {t1/(t1+t2)} × (L*1/L*2)² is 3.00 practically. The value of {t1/(t1+t2)} × (L*1/L*2)² is preferably 2.50 or less, more preferably 2.00 or less, and further preferably 1.50 or less.

As a method of measuring the lightness, for example, with a 50 × 50 mm test piece cut out, the lightness can be measured using a spectrophotometric colorimeter (SC-T-GV5 manufactured by Suga Test Instruments Co., Ltd., including specular reflection light) with a measurement beam diameter ϕ of 15 mm.

Expression (1) and Expression (2) above were obtained through a series of verifications in which overlapped blanks were fabricated by varying the sheet thickness of the Al-based coated steel sheet, the coating weight of the Al-based coating layer, and other factors, and then were subjected to hot stamping actually, and obtained overlapped hot stamp molded bodies were evaluated. In such verification, each of the obtained overlapped hot stamp molded bodies was evaluated in terms of the temperature increasing rate of the overlapped part or the spot weldability, and the relationships satisfied by those exhibiting good evaluation results were experimentally formulated.

### <Carbon-Based Black Coating>

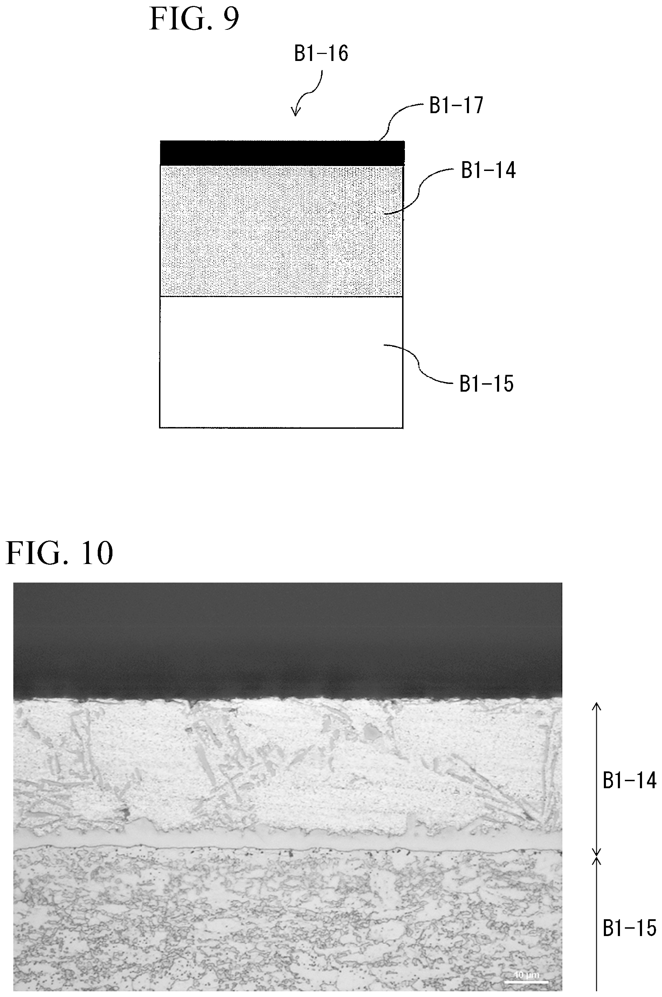

FIG. 9 schematically illustrates a layer structure of an Al-based coated steel sheet B1-16 on one face side in which the Al-based coating layer B1-14 is provided on the surface of the base steel sheet B1-15 according to the this embodiment, and a carbon-based black coating B1-17 is further provided at an upper layer of the Al-based coating layer B1-14, or a layer structure of an Al-based coated steel sheet B1-16 on one face side in which the Al-based coating layer B1-14 is provided on the surface of the base steel sheet B1-15 according to the this embodiment, and a carbon-based black coating B1-17 further containing Zn, Ti, Cu, or V selectively is provided at an upper layer of the Al-based coating layer B1-14.

In the second Al-based coated steel sheet 2, the carbon-based black coating B1-17 is provided at the upper layer of the Al-based coating layer located on the surface 2b of the side not in contact with the first Al-based coated steel sheet 1. The Al-based coated steel sheet has a silver-gray metallic luster surface, and thus the lightness is high. Here, providing the carbon-based black coating at the upper layer of the Al-based coated steel sheet makes it possible to reduce the lightness. In particular, the carbon-based black coating B1-17 is burned off by combustion by the oxidation reaction during heating in hot stamping and then is discharged as CO₂ or the like. As a result, it is possible to suppress the decrease in spot weldability of the overlapped hot-stamp formed body caused by the remaining carbon-based black coating B1-17.

Further, examples of the means to further increase the lightness of the Al-based coated steel sheet having a silver-gray metallic luster include heating the Al-based coated steel sheet to about 600 °C and oxidizing its surface, thereby whitening the surface. This makes it possible to further increase the lightness of the surface of the Al-based coated steel sheet.

### [Film Thickness of the Carbon-Based Black Coating B1-17]

The film thickness of the carbon-based black coating B1-17 is preferably 0.3 µm or more and 10 µm or less. The film thickness of the carbon-based black coating B1-17 is set to 0.3 µm or more, thereby making it possible to suppress the increase in lightness and increase the temperature increasing rate of the overlapped part. The film thickness of the carbon-based black coating B1-17 is more preferably 0.3 µm or more, further preferably 0.4 µm or more, and still further preferably, in order of increasing preference, 0.5 µm or more, 0.6 µm or more, or 0.7 µm or more. On the other hand, the film thickness of the carbon-based black coating B1-17 is set to 10 µm or less, thereby making it possible to reduce the lightness while ensuring economic efficiency, and to ensure spot weldability without leaving the coating after the hot stamping heating. The film thickness of the carbon-based black coating B1-17 is more preferably 8 µm or less, and further preferably, in order of increasing preference, 6 µm or less, 5 µm or less, or 4 µm or less.

The film thickness of the carbon-based black coating B1-17 can be found as an average value of the thicknesses of the coatings measured in three fields of view by performing observation of the cross section of the coating under an optical microscope (for example, area: 100 µm × 100 µm) (without etching) and performing measurement of the thickness of the coating at the upper layer of the aluminum coated layer in the three fields of view, as illustrated in FIG. 9. At this time, the coating is analyzed from the cross section with an electron probe micro analyzer (EPMA) and the coating with a carbon content of 30 mass% or more is determined to be the carbon-based black coating. The coating being a black coating is determined from the fact that the value of the lightness L* from the surface is 60 or less.

### [Binder]

The carbon-based black coating B1-17 can selectively contain resin as a binder to improve the adhesiveness to the Al-based coating layer. The type of resin is not particularly limited, and examples thereof include a polyethylene resin, a polyolefin resin, a polyacrylic resin, a polymethacrylic acid resin, a polyepoxy resin, a polyurethane resin, a polycarbonate resin, and so on.

### [Nitrogen Content of the Carbon-Based Black Coating]

The nitrogen content of the carbon-based black coating B1-17 is preferably 2 mass% or more and 18 mass% or less. In general, when a carbon-based coating is applied on Al coating, the adhesiveness between the coating and the coating decreases. However, for example, a polyurethane resin containing nitrogen is used as a binder component or ammonia is mixed to increase the content of nitrogen, and thereby the adhesiveness to the Al-based coating layer can be further improved. This makes it possible to further increase the temperature increasing rate of the overlapped part.

Such an effect of improving the adhesiveness to the Al-based coating layer can be achieved by setting the nitrogen content to 2 mass% or more, and therefore, the nitrogen content of the carbon-based black coating B1-17 is preferably 2 mass% or more. Further, the nitrogen content of the carbon-based black coating B1-17 is set to 18 mass% or less, thereby making it possible to suppress the decomposition reaction of the resin and prevent the coating from peeling off. The nitrogen content can be found by analyzing the coating from the cross section with an electron probe micro analyzer

(EPMA).

### [At least one or more of Zn, Ti, Cu, and V are contained in the carbon-based black coating]

It is preferable to selectively contain at least one of Zn, Ti, Cu, and V in the carbon-based black coating B1-17 further located at the upper layer of the Al-based coating layer applied to the surface of the second steel sheet 2 by 0.2 g/m² or more and 3.0 g/m² or less in total. The coating weight described here indicates the coating weight of Zn, Ti, Cu, or V per unit area. Zn, Ti, Cu, and V are elements that form oxides having good infrared absorption in addition to improving emissivity. Therefore, the carbon-based black coating layer 17 containing such an element is provided, thereby making it possible to suppress the difference in temperature increasing rate between the overlapped part having a slow temperature increasing rate and the one-sheet part having a fast temperature increasing rate, which is a problem caused when used as an overlapped blank. In particular, the carbon-based black coating layer 17 described above is burned off during the hot stamping heating, whereas Zn, Ti, Cu, or V remains even during the hot stamping heating. Therefore, the carbon-based black coating layer 17 containing such an element can further contribute to improving the temperature increasing rate at high temperatures. Further, Zn, Ti, Cu, and V may be contained in either a metal state or an oxide state. This is because they become oxides during the temperature increasing process and contribute to improving emissivity.

Such an effect of suppressing the difference in temperature increasing rate as described above can be exhibited by setting the total coating weight of such elements to 0.2 g/m² or more. Therefore, the total coating weight of such elements in the carbon-based black coating layer 17 is preferably 0.2 g/m² or more. The total coating weight of such elements in the carbon-based black coating 17 is more preferably 0.4 g/m² or more and further preferably 0.6 g/m² or more.

On the other hand, the total coating weight of such elements in the carbon-based black coating layer 17 is set to 3.0 g/m² or less, thereby making it possible to exhibit such an effect of suppressing the difference in temperature increasing rate as described above without saturation. Further, Zn, Ti, Cu, and V remain even after the hot stamping heating and the total coating weight of such elements in the carbon-based black coating layer 17 is set to 3.0 g/m² or less, thereby making it possible to maintain the spot weldability of the hot-stamp formed body. The total coating weight of such elements in the carbon-based black coating layer 17 is more preferably 2.8 g/m² or less and further preferably 2.6 g/m² or less.

As a method of specifying the coating weights (contents) of Zn, Ti, Cu, and V, they can be found by performing elemental analyses from the surface using, for example, a fluorescent X-ray analysis apparatus (ZSX Primus manufactured by Rigaku Corporation) and quantifying the coating weights of Zn, Ti, Cu, and V.

The method of treating the above-described carbon-based black coating layer 17 is not particularly limited, but the carbon-based black coating layer 17 can be manufactured, for example, by preparing an aqueous coating solution in which aqueous dispersion type carbon black (for example, RCF #52 manufactured by Mitsubishi Chemical Corporation), zinc oxide (for example, Nano Tek manufactured by C.I. Kasei Co., Ltd.) or titanium oxide (for example, Nano Tek manufactured by C.I. Kasei Co., Ltd.), copper oxide (for example, Nano Tek manufactured by C.I. Kasei Co., Ltd.), and vanadium oxide (manufactured by Hongwu International Group Ltd) are dispersed in water, applying it with a roll coater after performing the above-described hot-dip aluminum coating treatment, and performing a dry baking treatment. Alternatively, the carbon-based black coating layer 17 can be manufactured by using a method of vacuum deposition of metal of Zn, Ti, Cu, or V on the aluminum coated steel sheet.

As another aspect according to this embodiment, on the Al-based coating layer, both of the above-described carbon-based black coating layer 17 and a coating layer 17' containing at least one of Zn, Ti, Cu, and V (more specifically, these elements in a metal state or oxides of these elements) may be provided. In this case, the arrangement order of the carbon-based black coating layer 17 and the coating layer 17' containing at least one of Zn, Ti, Cu, and V is not particularly limited, but the carbon-based black coating layer 17 may be located at the upper layer of the coating layer 17' containing at least one of Zn, Ti, Cu, and V, or the coating layer 17' containing at least one of Zn, Ti, Cu, and V may be located at the upper layer of the carbon-based black coating layer 17.

Even when the coating layer 17' containing at least one of Zn, Ti, Cu, and V is located at a lower layer of the carbon-based black coating layer 17, fluorescent X-rays easily penetrate the carbon-based black coating layer 17 as long as the film thickness of the carbon-based black coating layer 17 according this embodiment is employed. Therefore, even when the coating layer 17' containing at least one of Zn, Ti, Cu, and V is located at a lower layer of the carbon-based black coating layer 17, it is possible to measure the coating weights of Zn, Ti, Cu, and V by a fluorescent X-ray analysis method.

Further, such a carbon-based black coating layer 17 or coating layer 17' containing at least one of Zn, Ti, Cu, and V may be provided on both faces of the base steel sheet, and is more preferably provided only on a face of the side exposed to the heat source during the hot stamping heating in the base steel sheet.

Further, the first Al-based coated steel sheet 1 may include such a carbon-based black coating as described above as an upper layer of the Al-based coating layer on the side not in contact with the second Al-based coated steel sheet 2.

### <Welding>

In the overlapped blank for hot stamping 4 in which the first Al-based coated steel sheet 1 and the second Al-based coated steel sheet 2 are overlapped and welded, as the type of the welding, spot welding, seam welding, braze welding, laser welding, plasma welding, arc welding, or the like can be selected. Here, in terms of establishing good contact of the overlapped part, the spot welding that can establish contact even at the inside of the overlapped part at a plurality of points and establish a direct bond by applying pressure between the steel sheets is preferable.

### (2. Overlapped Hot-stamp Formed Body)

In the method of manufacturing the hot-stamp formed body according to this embodiment, as illustrated in FIG. 7, the above-described overlapped blank for hot stamping 4 is heated, and when forming it immediately after such heating, the bent part obtained by bending at least a portion of the overlapped part is provided, thereby manufacturing the overlapped hot-stamp formed body 12 in this embodiment.

The temperature of the above-described heating is not particularly limited but is generally set to a temperature range of the Ac3 point (for example, 800 °C) or higher and 1000 °C or lower. Cooling is performed using a metal mold or a coolant such as water during forming immediately after the heating, and thereby the overlapped hot-stamp formed body 12 excellent in collision resistant property can be obtained. The time period for which the overlapped blank for hot stamping 4 is made to stay at the temperature of the above-described heating is not particularly limited, but may be set to 4 minutes or more and 20 minutes or less, for example.

For example, a preliminary test may be performed to measure the heating time or the temperature increasing rate to a temperature of the Ac3 point or higher and 1000 °C or lower for the overlapped blank for hot stamping 4 to be focused on, and the results of the preliminary test obtained may be used to determine the above-described holding time. In this way, for example, conditions such as "maintaining temperatures of 910 to 920 °C for 250 to 1200 seconds" can be determined.

The temperature of the above-described heating means the maximum ultimate temperature of the steel sheets of the overlapped part. Further, examples of the heating method include heating by an electric furnace, a gas furnace, a far-infrared furnace, a near-infrared furnace, and so on, energization heating, high-frequency heating, induction heating, and so on.

The overlapped hot-stamp formed body 12 according to this embodiment manufactured as above includes a first Al-Fe-based alloy coated steel sheet having a sheet thickness of T1 (mm) and at least one second Al-Fe-based alloy coated steel sheet that is overlapped and welded on the first Al-Fe-based alloy coated steel sheet, has a smaller area than the first Al-Fe-based alloy coated steel sheet, and has a sheet thickness of T2 (mm).

As described above, the hot-stamp formed body 12 is manufactured by heating the overlapped blank for hot stamping 4 in which the first Al-based coated steel sheet 1 and the second Al-based coated steel sheet 2 are overlapped and welded, and then further subjecting the overlapped blank for hot stamping 4 to bending or the like. Therefore, the first Al-Fe-based alloy coated steel sheet and the second Al-Fe-based alloy coated steel sheet forming the hot-stamp formed body 12 do not necessarily have a flat shape. For example, as illustrated in FIG. 7, the first Al-Fe-based alloy coated steel sheet includes the bent part 8 of the head top part, and the like, and the second Al-Fe-based alloy coated steel sheet includes the bent part 8 of the head top part, the bent part 9 of the flange part, and the like. Although the name "steel sheet" is used, the shape is not necessarily flat. In this embodiment, in order to distinguish between the steel sheet forming the hot-stamp formed body 12 and the steel sheet forming the overlapped blank 4, as a matter of convenience, the former is referred to as an alloy coated steel sheet (for example, an Al-Fe-based alloy coated steel sheet), and the latter is referred to as a coated steel sheet (for example, an Al-based coated steel sheet) ("alloy" is not added).

The first Al-Fe-based alloy coated steel sheet in the overlapped hot-stamp formed body 12 is a coated steel sheet including Al-Fe-based alloy coated layers having an average coating thickness of K1 (µm) on both faces of the first Al-Fe-based alloy coated steel sheet. Here, K1 is the average value of the coating thickness of the Al-Fe-based alloy coated layer on the side in contact with the second Al-Fe-based alloy coated steel sheet and the coating thickness of the Al-Fe-based alloy coated layer on the side not in contact with the second Al-Fe-based alloy coated steel sheet at the non-overlapped part of the first Al-Fe-based alloy coated steel sheet.

The second Al-Fe-based alloy coated steel sheet in the overlapped hot-stamp formed body 12 is a coated steel sheet including an Al-Fe-based alloy coated layer having a coating thickness of K2 (µm) on a surface of the side not in contact with the first Al-Fe-based alloy coated steel sheet. Here, K2 is the coating thickness of the Al-Fe-based alloy coated layer on the side not in contact with the first Al-Fe-based alloy-coated steel sheet at the overlapped part of the second Al-Fe-based alloy coated steel sheet.

In the second Al-Fe-based alloy coated steel sheet, the coating thickness of the Al-Fe-based alloy coated layer on the surface of the side in contact with the first Al-Fe-based alloy coated steel sheet is not particularly defined.

Here, the average coating thickness K1 or K2 of the Al-Fe-based alloy coated layer on each of the Al-Fe-based alloy coated steel sheets of the overlapped hot-stamp formed body 12 is 25 µm or more independently. Further, the average coating thickness K1 or K2 of the Al-Fe-based alloy coated layer on each of the Al-Fe-based alloy coated steel sheets is 60 µm or less independently. That is, K1 and K2 satisfy Expression (7) and Expression (8) below; $25 \leq K 1 \leq 60$ $25 \leq K 2 \leq 60$

Further, the average coating thickness K1 or K2 of the Al-Fe-based alloy coated layer on each of the Al-Fe-based alloy coated steel sheets is preferably 30 µm or more and further preferably 35 µm or more independently.

The average coating thickness K1 or K2 of the Al-Fe-based alloy coated layer on each of the Al-Fe-based alloy coated steel sheets is preferably 58 µm or less, and further preferably 56 µm or less, 52 µm or less, or 48 µm or less independently.

The coating thicknesses of the Al-Fe-based alloy coated layers of the first Al-Fe-based alloy coated steel sheet and the second Al-Fe-based alloy coated steel sheet each fall within the above-described range, thereby making it possible to maintain the spot weldability of the overlapped hot-stamp formed body 12 in a good state.

The above-described coating thickness can be found as an average value of the coating thicknesses measured in three fields of view by performing observation of the cross section of the coating under an optical microscope (area: 100 µm × 100 µm) after nital etching and performing measurement of the coating thickness in the three fields of view. Regarding the coating thickness of the first Al-Fe-based alloy coated steel sheet, there are the position of the one-sheet part 4b and the position of the overlapped part 4a in contact with the second Al-Fe-based alloy coated steel sheet, and the coating thickness of the first Al-Fe-based alloy coated steel sheet is measured at the one-sheet part from the point that the temperature increasing rate is fast, the heating time in the hot stamping is the longest, and the spot weldability is likely to deteriorate.

The Al-Fe-based alloy coated layer is a layer formed when Fe diffuses to the surface of the Al-based coating layer due to the heating during hot stamping (in other words, an alloy coated layer containing at least Al and Fe). The Al-Fe-based alloy coated layer is composed of a combination of phases such as a θ phase (FeAl₃), a η phase (Fe₂Al₅), ζ phase (FeAl₂), Fe₃Al, FeAl, and Al solid-solution Fe each being a compound layer of Al and Fe. Further, the Al-Fe-based alloy coated layer in the case of containing Si in the coating also contains a τ1 phase (Al₂Fe₃Si₃), a τ2 phase (Al₃FeSi), a τ3 phase (Al₂FeSi), a τ4 phase (Al₃FeSi₂), a τ5 phase (Al₈Fe₂Si), a τ6 phase (Al₉Fe₂Si₂), a τ7 phase (Al₃Fe₂Si₃), a τ8 phase (Al₂Fe₃Si₄), a τ10 phase (Al₄Fe_{1.7}Si), and a τ11 phase (Al₅Fe₂Si), (where each phase does not have a stoichiometric composition in some cases), and the Al-Fe-based alloy coated layer is often composed of any of the τ1 phase (Al₂Fe₃Si₃), the η phase (Fe₂Al₅), the FeAl phase, and the BCC phase of Al solid-solution Fe, or a plurality of phases thereof mainly.

By the heating during hot stamping, in particular, Al in the Al-based coating and Fe in the base steel sheet diffuse to each other. Therefore, as a phase formed through the diffusion of Al into the base steel sheet, a layer containing a BCC phase of Al solid-solution Fe and a FeAl phase in order from the base steel sheet side is formed. The layer containing these phases is also called a diffusion layer (Diffusion Layer). Here, such a diffusion layer can be identified by observing the cross section after nital etching with an optical microscope, as explained below. Further, when it is impossible to identify the diffusion layer by the observation with an optical microscope, the diffusion layer can be identified by analyzing the cross section with an electron probe micro analyzer (EPMA). In this event, in EPMA analysis results, a layer containing Al: 30 mass% or less and Fe: 70 mass% or more may be set as a diffusion layer 20.

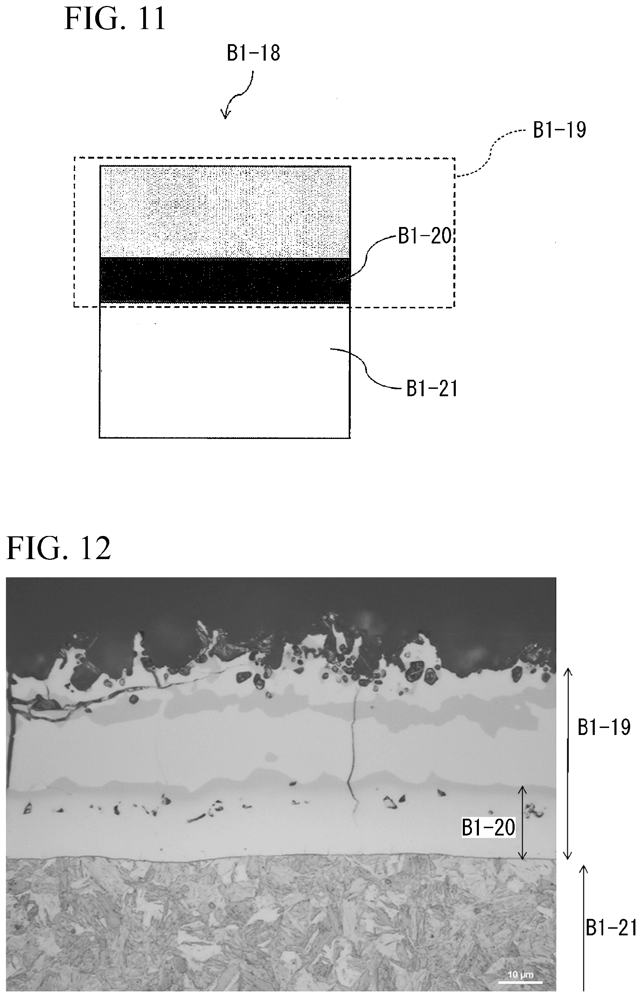

Specifically, as illustrated in FIG. 11 and FIG. 12, in the overlapped hot-stamp formed body B1-18, a layer B1-19 is the Al-Fe-based alloy coated layer, and includes the diffusion layer B1-20. The thickness of the Al-Fe-based alloy layer is measured as the thickness of the layer B1-19, and the thickness of the diffusion layer is measured as the thickness of the layer 20. For example, an example where a cross section was observed with an optical microscope after nital etching is illustrated in FIG. 12.

The thickness of the diffusion layer included in the Al-Fe-based alloy coated layer at the portion of the first Al-Fe-based alloy coated steel sheet that is not overlapped with the second Al-Fe-based alloy coated steel sheet is described as D1 (µm), and the thickness of the diffusion layer included in the Al-Fe-based alloy coated layer of the second Al-Fe-based alloy coated steel sheet is described as D2 (µm). At this time, the product (D1-D2) × (K1/K2)² of the difference (D1-D2) between D1 (µm) and D2 (µm) and the ratio (K1/K2)² of the coating thickness K1 at the non-overlapped part of the first Al-Fe-based alloy coated steel sheet to the coating thickness K2 at the overlapped part of the second Al-Fe-based alloy coated steel sheet is 5.0 µm or less.

Here, D1 is the average value of the thickness of the diffusion layer located to be in contact with the steel sheet base in the Al-Fe-based alloy coated layer on the side in contact with the second Al-Fe-based alloy coated steel sheet and the thickness of the diffusion layer located to be in contact with the steel sheet base in the Al-Fe-based alloy coated layer on the side not in contact with the second Al-Fe-based alloy coated steel sheet in the first Al-Fe-based alloy coated steel sheet. D2 is the thickness of the diffusion layer located to be in contact with the steel sheet base in the Al-Fe-based alloy coated layer on the side not in contact with the first Al-Fe-based alloy coated steel sheet of the second Al-Fe-based alloy coated steel sheet.

In the Al-Fe-based coated layer, binary alloys (FeAl₃, Fe₂Al₅, FeAl₂) of Al-Fe contain a phase having a relatively low melting point of Al: greater than 30 mass% and Fe: less than 70 mass% and a phase having a relatively high melting point of Al: 30 mass% or less and Fe: 70 mass% or more. When the heating time of hot stamping is long or the heating temperature is high, there is a relationship in which the diffusion layer increases, while the binary alloys (FeAl₃, Fe₂Al₅, FeAl₂) decrease. Regarding the spot weldability, it has been known that the presence of a coated layer having a low melting point promotes sufficient fusion between materials, and thus the binary alloys (FeAl₃, Fe₂Al₅, FeAl₂) decrease in the case of the diffusion layer being thick, resulting in the spot weldability decreasing.

When the value of (D1-D2) × (K1/K2)² is greater than 5.0 µm, the aforementioned diffusion layer of the first Al-Fe-based alloy coated steel sheet increases, and conversely, the binary alloys of Al-Fe become thinner, and the spot weldability decreases. Therefore, it is important for the spot weldability at the overlapped part to suppress (D1-D2) × (K1/K2)² to 5.0 µm or less. The value of (D1-D2) × (K1/K2)² is preferably 4.5 µm or less and more preferably 4.0 µm or less.

On the other hand, the lower limit of (D1-D2) × (K1/K2)² is 0 µm. However, when the value of (D1-D2) × (K1/K2)² is less than 0.5 µm, the effect is saturated.

As a method of specifying the coating thickness K1, K2 of the Al-Fe-based alloy coated layer and the thickness D1, D2 of the diffusion layer, the cross section of the coating is subjected to nital etching in a field of view of 100 µm × 100 µm, and is observed with an optical microscope. As illustrated in FIG. 12, the coating thickness and the thickness of the diffusion layer are measured with an optical microscope. More specifically, the cross section of the coating is observed through the above-described method at least three locations, and the coating thickness and the thickness of the diffusion layer at each observation location are specified. After that, average values of the obtained thicknesses are calculated, and the obtained average values may be set to the coating thickness and the thickness of the diffusion layer. However, when the observation with an optical microscope fails to identify the diffusion layer, an analysis is performed using an electron probe micro analyzer (EPMA), and the thickness of the layer containing Al: 30 mass% or less and Fe: 70 mass% or more is measured at least three locations, and the average value of the measured thicknesses is set to the thickness of the diffusion layer B1-20.

Such a diffusion layer as described above is a layer formed by inward diffusion within the Al-based coating layer, and thus, the thicknesses D1 and D2 of the diffusion layers are strongly affected almost exclusively by the heating conditions of hot stamping and are not affected by the initial coating thickness. Further, even if the coating weight on the second Al-based coated steel sheet is increased, it is impossible to make the thickness D2 of the diffusion layer of the second Al-Fe-based alloy coated steel sheet, which has a slower heating rate, substantially the same value as the thickness D1 of the diffusion layer of the first Al-Fe-based alloy coated steel sheet. When the overlapped blank for hot stamping satisfying Expressions (1) to (5) is subjected to a normal hot stamping process, the overlapped hot-stamp formed body satisfying Expressions (7) to (9) is easily obtained.

Further, the coating thicknesses K1 and K2 of the Al-Fe-based alloy coated layers are affected not only by the coating adhesion before hot stamping but also by the heating conditions (heating temperature, holding time) of hot stamping. Further, the coating thicknesses K1 and K2 of the Al-Fe-based alloy coated layers are affected not only by these factors, but also by the sheet thickness, which affects the heating time at high temperatures, and the lightness, and thus are not affected only by the initial coating thickness.

The above-described relational expressions were designed through a series of verifications in which overlapped blanks were fabricated by varying the sheet thickness of the Al-based coated steel sheet, the coating weight of the Al-based coating layer, and other factors, and then were subjected to hot stamping actually, and obtained overlapped hot stamp molded bodies were evaluated. **In** such verification, each of the obtained overlapped hot stamp molded bodies was evaluated in terms of the temperature increasing rate of the overlapped part or the spot weldability, and the relationships satisfied by those exhibiting good evaluation results were experimentally formulated.

Further, a layer containing at least one of Zn, Ti, Cu, and V may be selectively provided at a further upper layer of the Al-Fe-based alloy coated layer applied to the surface of the second Al-Fe-based alloy coated steel sheet. In this event, the coating weight (content) of at least one of Zn, Ti, Cu, and V is preferably set to greater than 0 g/m². The coating weight (content) of at least one of Zn, Ti, Cu, and V is more preferably 0.2 g/m² or more and 3.0 g/m² or less. The layer containing Zn, Ti, Cu, and V can be obtained by providing a layer containing them in a metal state or an oxide state before hot stamping heating. Most of them become oxides during the temperature increasing process, but the metal state may remain partially.

The coating weight (content) described here refers to a coating weight per unit area as Zn, Ti, Cu, or V.

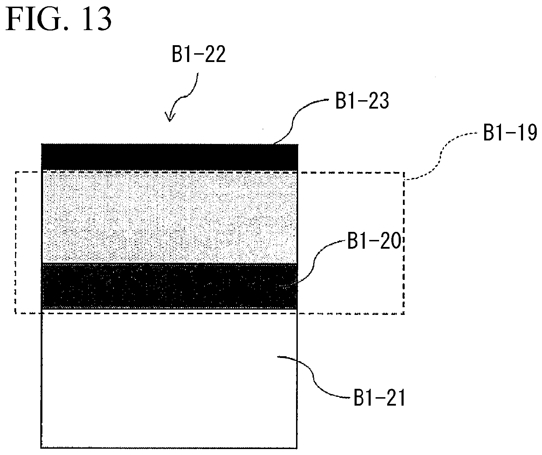

FIG. 13 schematically illustrates a structure of an Al-Fe-based alloy coated steel sheet in the case where a layer containing at least one of Zn, Ti, Cu, and V is provided at a further upper layer of the Al-Fe-based alloy coated layer applied to the surface of the second Al-Fe-based alloy coated steel sheet in the overlapped hot-stamp formed body B1-22. Such an Al-Fe-based alloy coated steel sheet includes the Al-Fe-based alloy coated layer B1-19 (including the diffusion layer B1-20) on the surface of the base steel sheet B1-21 and a coating layer B1-23 containing at least one of Zn, Ti, Cu, and V. Such a coating layer B1-23 is preferably provided on the Al-Fe-based alloy coated layer B1-19 on the face of the side not in contact with the first Al-Fe-based alloy coated steel sheet in the second Al-Fe-based alloy coated steel sheet.

Zn, Ti, Cu, and V have good infrared absorption in the case of oxides, in addition to improving emissivity. Therefore, providing such a layer makes it possible to suppress the difference in temperature increasing rate between the overlapped part (whose temperature increasing rate is slow) and the one-sheet part (whose temperature increasing rate is fast), which is a problem caused when used as an overlapped blank. As a result, it is possible to suppress excessive heating of the one-sheet part and improve the spot weldability at the one-sheet part of the hot-stamp formed body.

In particular, the oxide of Zn, Ti, Cu, or V remains even during the heating in the hot stamping. Therefore, such a coating layer B1-23 can further contribute to improving the temperature increasing rate at high temperatures. When the coating layer B1-23 is provided on the surface of the Al-Fe-based alloy coated layer B1-19 applied to the surface of the second Al-Fe-based alloy coated steel sheet, the coating weight of the coating layer B1-23 is set to 0.2 g/m² or more, thereby making it possible to sufficiently exhibit the effect of suppressing the difference in temperature increasing rate. The coating weight of the coating layer B1-23 is more preferably 0.4 g/m² or more and further preferably 0.6 g/m² or more. On the other hand, the coating weight of the coating layer B1-23 is set to 3.0 g/m² or less, thereby making it possible to exhibit such an effect without saturation. Further, although the oxide of Zn, Ti, Cu, or V remains even after the hot stamping heating, the coating weight is set to 3.0 g/m² or less, thereby making it possible to prevent the spot weldability of the hot-stamp formed body from decreasing. The coating weight of the coating layer B1-23 is more preferably 2.8 g/m² or less, and further preferably 2.6 g/m² or less.

When the coating layer B1-23 is not provided on the surface of the Al-Fe-based alloy coated layer B1-19 applied to the surface of the second Al-Fe-based alloy coated steel sheet, the coating weight of Zn, Ti, Cu, or V is 0 g/m².

Further, in the first Al-Fe-based alloy coated steel sheet, a layer containing at least one of Zn, Ti, Cu, and V may be selectively provided also on the Al-Fe-based alloy coated layer on the face of the side not in contact with the second Al-Fe-based alloy coated steel sheet. In this event, the coating weight (content) of at least one of Zn, Ti, Cu, and V is preferably set to greater than 0 g/m². The coating weight (content) of at least one of Zn, Ti, Cu, and V is more preferably 0.2 g/m² or more and 3.0 g/m² or less. When the layer containing at least one of Zn, Ti, Cu, and V is not provided, the coating weight (content) of Zn, Ti, Cu, or V is 0 g/m².

The coating weight of the layer containing Zn, Ti, Cu, or V can be found by performing an elemental analysis from the surface using, for example, a fluorescent X-ray analysis apparatus (ZSX Primus manufactured by Rigaku Corporation) and quantifying Zn, Ti, Cu, V.

As above, in the overlapped hot-stamp formed body according to this embodiment, a layer with a total of the Zn content, the Ti content, the Cu content, and the V content of 0.2 to 3.0 g/m² may be located on the Al-Fe-based alloy coated layer on the face of the side not in contact with the first Al-Fe-based alloy coated steel sheet in the second Al-Fe-based alloy coated steel sheet, and further, a layer with a total of the Zn content, the Ti content, the Cu content, and the V content of 0 to 3.0 g/m² may be located on the Al-Fe-based alloy coated layer on the face of the side not in contact with the second Al-Fe-based alloy coated steel sheet in the first Al-Fe-based alloy coated steel sheet.

The overlapped hot-stamp formed body 12 in this embodiment, when used as an automobile part, is generally used after being subjected to welding, phosphoric acid-based conversion treatment, electrodeposition coating, and so on. Accordingly, for example, a zinc phosphate coating and a phosphoric acid coating by the phosphoric acid-based conversion treatment, an organic coating of 5 µm or more and 50 µm or less by the electrodeposition coating on the surface of such coatings, and so on are formed on the surface of the hot-stamp formed body 12 in some cases. For improving the external quality and corrosion resistance, coatings such as intermediate coating and finish coating are further performed after the electrodeposition coating in some cases.

### (EXAMPLES)

Hereinafter, the present Element Technology will be further specifically explained using examples.

### (Example 1)

A first Al-based coated steel sheet 1 and a second Al-based coated steel sheet 2 listed in Table 6 were fabricated by the method to be described below, and were subjected to spot welding 3 as illustrated in FIG. 7, and thereby an overlapped blank for hot stamping 4 was fabricated. As the first Al-based coated steel sheet 1, a cold-rolled steel sheet through ordinary hot-rolling process and cold-rolling process and having (a chemical composition: by mass%, C: 0.23%, Si: 0.30%, Mn: 1.2%, P: 0.010%, S: 0.002%, Cr: 0.25%, Ti: 0.020%, Al: 0.042%, N: 0.0030%, B: 0.0020%, and the balance: Fe and impurities) was used as a sample material and an aluminum coating treatment was performed on its both faces on a Sendzimir hot-dip aluminum coating treatment line. After the coating, the coating weight was adjusted by the gas wiping method, and then cooling was performed, and the first Al-based coated steel sheet 1 was fabricated. The coating bath composition in this event was 89 mass% Al-9 mass% Si-2 mass% Fe. The second Al-based coated steel sheet 2 was also fabricated in the same manner as the first Al-based coated steel sheet 1, and was coated with a carbon-based black coating.

This blank was subjected to hot stamping heating at 920 °C to investigate the temperature increasing rate of an overlapped part, and immediately subjected to mold cooling after being heated for the time during which the overlapped part was held at a temperature between 910 °C and 920 °C for 300 seconds, and thereby an overlapped hot-stamp formed body 12 was obtained. Two flange parts 11 of a non-overlapped part (one-sheet part) were cut out, and spot weldability was investigated with a pair of steel sheets of the same type.

Regarding each level in Table 6, examples of the invention of this application (to be simply described as "inventive example" below) are listed as A3 to A7, A10, A11, A13, A20, A21, and A23, and comparative examples are listed as A1, A2, A8, A9, A12, A15 to A19, and A22.

The sheet thicknesses t1 and t2 of the steel sheets were measured using a micrometer based on JIS B7502: 2016, as described above. Further, the coating weights W1a, W1b, and W2b per face were measured using the method of JIS G 3314:2019 JB. 3 after a seal was applied to the back-side face of the face to be measured. Further, regarding the lightnesses L*1a, L*1b, and L*2b, a 50 × 50 mm test piece was cut out, and the lightnesses L*1a, L*1b, and L*2b were measured using a spectrophotometric colorimeter (SC-T-GV5 manufactured by Suga Test Instruments Co., Ltd., including specular reflection light) with a measurement beam diameter ϕ=15 mm. The film thickness of the carbon-based black coating was measured through cross-sectional observation as described above.

In order to investigate the temperature increasing rate of the overlapped part of the blank, a K-type thermocouple was welded to the center of the overlapped part of the overlapped blank for hot stamping 4 illustrated in FIG. 7. Then, the temperature increasing time was found to evaluate the temperature increasing rate. The temperature increasing time was found from the time when the temperature reached 910 °C, and the evaluation was performed. The evaluation criteria are that the temperature increasing time is shortened as follows, based on Comparative Example A15 in which the second Al-based coated steel sheet does not include the carbon-based black coating. Evaluation G3 (Good 3) was determined to be good, G2 (Good 2) was determined to be even better, G1 (Good 1) was determined to be particularly good, and Evaluation NG (No Good) was determined to be poor. Regarding the description in the column of "TEMPERATURE INCREASING RATE OF OVERLAPPED PART" in Comparative Example A15, which serves as a standard for evaluation, "-" was listed to indicate that it is a standard.

### <Evaluation Criteria>

G1: Shortening of the temperature increasing time by 90 seconds or more
G2: Shortening of the temperature increasing time by 60 seconds or more and less than 90 seconds
G3: Shortening of the temperature increasing time by 30 seconds or more and less than 60 seconds
NG: Shortening of the temperature increasing time by less than 30 seconds or extension of the temperature increasing time

In order to investigate the spot weldability of the overlapped blank for hot stamping after heating, the overlapped blank for hot stamping 4 illustrated in FIG. 7 was subjected to hot stamping heating at 920 °C to then investigate the temperature increasing rate of an overlapped part. In this event, the overlapped blank for hot stamping 4 was immediately subjected to mold cooling after being heated for the time during which the overlapped part was held at a temperature between 910 °C and 920 °C for 300 seconds, and thereby an overlapped hot-stamp formed body 12 was obtained. Two flange parts 11 of a non-overlapped part (one-sheet part) were cut out, and spot weldability was investigated with a pair of steel sheets of the same type under the following welding conditions. In the evaluation criteria, regarding the range of a welding current value at which a weld nugget during spot welding can obtain a diameter of √t (t is a sheet thickness) and a welding current value at which spatters (Splash) are generated (referred to as an appropriate current range), Evaluation G3 (Good 3) was determined to be good, G2 (Good 2) was determined to be even better, G1 (Good 1) was determined to be particularly good, and Evaluation NG (No Good) was determined to be poor.

### <Evaluation Criteria>

G1: Appropriate current range 2.0 kA or more
G2: Appropriate current range 1.5 kA or more and less than 2.0 kA
G3: Appropriate current range 1.0 kA or more and less than 1.5 kA
NG: Appropriate current range less than 1.0 kA

Welding source: Direct-current inverter, Electrode force: 400 kgf
Electrode shape: DR, Tip diameter 6φ (R40) (material: chromium copper)
Initial pressurization time: 60 cycles, Welding time 22 cycles, Holding time 10 cycles
Welding current value: 4 kA to 15 kA, Welding at 0.2 kA pitch

A comprehensive evaluation was performed based on the evaluation results regarding the temperature increasing rate of the overlapped part of the above-described blank and the evaluation results regarding the spot weldability after hot stamping (HS). More specifically, based on the score "Gx" (x is an integer from 1 to 3) for each item, the product of numeric characters x was employed as an evaluation value. Those with an obtained evaluation value of "9" or those with an evaluation result of "NG" regarding at least one item were defined as an overall evaluation of "NG". Further, Comparative Example A15 was set as a standard for evaluation regarding the temperature increasing rate, and thus, such an overall evaluation as described above was not considered, and "-" was listed in the column of overall evaluation.

In Table 6, the evaluation results obtained by investigating the temperature increasing rate of the overlapped part of the blank and the spot weldability after hot stamping (HS) were summarized.

**[Table 6]**

| | Level | First Al-based coated steel sheet | | | | | Second Al-based coated steel sheet | | | | W1 | W2 | L*1 | L*2 | (L*1-L*2) × (W1/W2)² Expression (1) | t1/(t1+t2) × (L*1/L*2)² Expression (2) | Evaluation result | | |
|---|---|---|---|---|---|---|---|---|---|---|---|---|---|---|---|---|---|---|---|
| | | Sheet thickness t1 (mm) | Coating weight (g/m²) | | Lightness | | Sheet thickness t2 (mm) | Coating weight (g/m²) | Lightness | Carbon-based black coating | | | | | | | Spot weldability after HS | Temperature increasing rate of an overlapped part | Overall evaluation |
| | | | W1a | W1b | L*1a | L*1b | | W2b | L*2b | Film thickness (µm) | | | | | | | | | |
| Comparative Example | A1 | 1.6 | 80 | 80 | 75 | 75 | 1.6 | 80 | 50 | 0.4 | 80.0 | 80.0 | 75.0 | 62.5 | 12.5 | 0.72 | NG | NG | NG |
| Comparative Example | A2 | 1.6 | 80 | 80 | 75 | 75 | 1.6 | 80 | 42 | 0.7 | 80.0 | 80.0 | 75.0 | 58.5 | 16.5 | 0.82 | G3 | G3 | NG |
| Inventive Example | A3 | 1.6 | 80 | 80 | 75 | 75 | 1.6 | 80 | 30 | 1.0 | 80.0 | 80.0 | 75.0 | 52.5 | 22.5 | 1.02 | G2 | G2 | 4 |
| Inventive Example | A4 | 1.6 | 80 | 80 | 75 | 75 | 1.6 | 80 | 25 | 3.0 | 80.0 | 80.0 | 75.0 | 50.0 | 25.0 | 1.13 | G2 | G1 | 2 |
| Inventive Example | A5 | 1.6 | 80 | 80 | 75 | 75 | 1.6 | 80 | 20 | 4.0 | 80.0 | 80.0 | 75.0 | 47.5 | 27.5 | 1.25 | G1 | G1 | 1 |
| Inventive Example | A6 | 1.6 | 80 | 80 | 75 | 75 | 1.6 | 80 | 18 | 9.0 | 80.0 | 80.0 | 75.0 | 46.5 | 28.5 | 1.30 | G1 | G1 | 1 |
| Inventive Example | A7 | 1.6 | 110 | 110 | 75 | 75 | 1.6 | 80 | 30 | 1.0 | 110.0 | 95.0 | 75.0 | 52.5 | 30.2 | 1.02 | G1 | G3 | 3 |
| Comparative Example | A8 | 1.6 | 50 | 50 | 75 | 75 | 1.6 | 80 | 30 | 1.0 | 50.0 | 65.0 | 75.0 | 52.5 | 13.3 | 1.02 | NG | G1 | NG |
| Comparative Example | A9 | 1.6 | 30 | 30 | 75 | 75 | 1.6 | 80 | 30 | 1.0 | 30.0 | 55.0 | 75.0 | 52.5 | 6.7 | 1.02 | NG | G1 | NG |
| Inventive Example | A10 | 1.6 | 85 | 85 | 75 | 75 | 1.6 | 110 | 30 | 1.0 | 85.0 | 97.5 | 75.0 | 52.5 | 17.1 | 1.02 | G2 | G3 | 6 |
| Inventive Example | A11 | 1.6 | 50 | 50 | 75 | 75 | 1.6 | 50 | 30 | 1.0 | 50.0 | 50.0 | 75.0 | 52.5 | 22.5 | 1.02 | G2 | G2 | 4 |
| Comparative Example | A12 | 1.6 | 80 | 80 | 75 | 75 | 1.6 | 30 | 30 | 1.0 | 80.0 | 55.0 | 75.0 | 52.5 | 47.6 | 1.02 | NG | G2 | NG |
| Inventive Example | A13 | 1.6 | 25 | 25 | 75 | 75 | 1.6 | 25 | 30 | 1.0 | 25.0 | 25.0 | 75.0 | 52.5 | 22.5 | 1.02 | G2 | G1 | 2 |
| Comparative Example | A15 | 1.6 | 80 | 80 | 75 | 75 | 1.6 | 80 | 75 | 0.0 | 80.0 | 80.0 | 75.0 | 75.0 | 0.0 | 0.50 | NG | - | - |
| Comparative Example | A16 | 1.6 | 5 | 5 | 75 | 75 | 1.6 | 80 | 30 | 1.0 | 5.0 | 42.5 | 75.0 | 52.5 | 0.3 | 1.02 | NG | G2 | NG |
| Comparative Example | A17 | 1.6 | 150 | 150 | 75 | 75 | 1.6 | 80 | 30 | 1.0 | 150.0 | 115. 0 | 75.0 | 52.5 | 38.3 | 1.02 | NG | G3 | NG |
| Comparative Example | A18 | 1.6 | 80 | 80 | 75 | 75 | 1.6 | 5 | 30 | 1.0 | 80.0 | 42.5 | 75.0 | 52.5 | 79.7 | 1.02 | NG | G2 | NG |
| Comparative Example | A19 | 1.6 | 80 | 80 | 75 | 75 | 1.6 | 150 | 30 | 1.0 | 80.0 | 115. 0 | 75.0 | 52.5 | 10.9 | 1.02 | NG | G3 | NG |
| Inventive Example | A20 | 1.6 | 80 | 80 | 65 | 65 | 1.6 | 80 | 30 | 1.0 | 80.0 | 80.0 | 65.0 | 47.5 | 17.5 | 0.94 | G3 | G2 | 6 |
| Inventive Example | A21 | 1.6 | 80 | 80 | 85 | 85 | 1.6 | 80 | 30 | 1.0 | 80.0 | 80.0 | 85.0 | 57.5 | 27.5 | 1.09 | G3 | G2 | 6 |
| Comparative Example | A22 | 1.6 | 80 | 80 | 75 | 75 | 1.6 | 80 | 40 | 0.8 | 80.0 | 80.0 | 75.0 | 57.5 | 17.5 | 0.85 | G3 | G3 | NG |
| Inventive Example | A23 | 1.6 | 40 | 40 | 75 | 75 | 1.6 | 30 | 28 | 3.0 | 40.0 | 35.0 | 75.0 | 51.5 | 30.7 | 1.06 | G3 | G1 | 3 |

A3 to A7, A10, A11, A13, A20, A21, and A23 each being the inventive example had the coating weight within the range of this application, included the carbon-based black coating, and had the relationships of the sheet thickness, the coating weight, and the lightness satisfying Expression (1) and Expression (2), and thus the temperature increasing rate of the overlapped part and the spot weldability after hot stamping were good. A1 being the comparative example included the carbon-based black coating, but did not satisfy Expression (1) or Expression (2), and thus, the temperature increasing rate of the overlapped part and the spot weldability after hot stamping were both poor. A8, A9, and A12 each being the comparative example did not satisfy Expression (1), and thus, the spot weldability after hot stamping was poor. Further, A2 and A22 each being the comparative example included the carbon-based black coating, but did not satisfy Expression (2), and thus had an overall evaluation of NG (No Good). Further, in Comparative Examples A16 and A18, in which the coating weight is less than 20 g/m², scales were formed, and in Comparative Examples A17 and A19, in which the coating weight is greater than 120 g/m², powdering occurred during pressing, resulting in the spot weldability decreasing. A15 being the comparative example did not include the carbon-based black coating and did not satisfy Expression (1) or Expression (2), and thus, the spot weldability after hot stamping was poor.

### (Example 2)

First Al-based coated steel sheets and second Al-based coated steel sheets having sheet thicknesses of 1.0 mm, 1.6 mm, and 2.0 mm were fabricated under the same manufacturing conditions as in Example 1 listed in Table 7, and overlapped blanks for hot stamping were fabricated. A first Al-based coated steel sheet 1 and a second Al-based coated steel sheet 2 were fabricated by the method to be described below, and were subjected to the spot welding 3 as illustrated in FIG. 7, and thereby an overlapped blank for hot stamping 4 was fabricated.

As in Example 1, this blank was subjected to hot stamping heating at 920 °C to investigate the temperature increasing rate of an overlapped part, and immediately subjected to mold cooling after being heated for the time during which the overlapped part was held at a temperature between 910 and 920 °C for 300 seconds, and thereby an overlapped hot-stamp formed body 12 was obtained. Two flange parts 11 of a non-overlapped part (one-sheet part) were cut out, and spot weldability was investigated with a pair of steel sheets of the same type. Regarding each level in Table 7, the inventive example was listed as B1, B5, and B6 and the comparative example was listed as B2, B3, B4, and B7.

In the investigation of the temperature increasing rate of the overlapped part of the blank, the temperature increasing time was found to be evaluated as in Example 1. In B1, the evaluation criteria are that the temperature increasing time is shortened as follows, based on Comparative Example B2 in which the first Al-based coated steel sheet and the second Al-based coated steel sheet have the same sheet thickness, but the carbon-based black coating is not included in the second Al-based coated steel sheet. Similarly, in B3, the evaluation criteria are that the temperature increasing time is shortened as follows, based on Comparative Example B4 in which the first Al-based coated steel sheet and the second Al-based coated steel sheet have the same sheet thickness but the carbon-based black coating is not included in the second Al-based coated steel sheet. Further, in B5 and B6, the evaluation criteria are that the temperature increasing time is shortened as follows, based on Comparative Example B7 in which the first Al-based coated steel sheet and the second Al-based coated steel sheet have the same sheet thickness but the carbon-based black coating is not included in the second Al-based coated steel sheet. Evaluation G3 (Good 3) was determined to be good, G2 (Good 2) was determined to be even better, G1 (Good 1) was determined to be particularly good, and Evaluation NG (No Good) was determined to be poor. For each of the comparative examples, which serves as a standard for evaluation, regarding the description in the column of "TEMPERATURE INCREASING RATE OF OVERLAPPED PART", "-" was listed to indicate that it is a standard.

### <Evaluation Criteria>

G1: Shortening of the temperature increasing time by 90 seconds or more
G2: Shortening of the temperature increasing time by 60 seconds or more and less than 90 seconds
G3: Shortening of the temperature increasing time by 30 seconds or more and less than 60 seconds
NG: Shortening of the temperature increasing time by less than 30 seconds or extension of the temperature increasing time

The spot weldability of the overlapped blank for hot stamping after heating was evaluated using the same investigation method and evaluation criteria as in Example 1.

A comprehensive evaluation was performed based on the evaluation results regarding the temperature increasing rate of the overlapped part of the above-described blank and the evaluation results regarding the spot weldability after hot stamping (HS). More specifically, based on the score "Gx" (x is an integer from 1 to 3) for each item, the product of numeric characters x was employed as an evaluation value. Those with an obtained evaluation value of "9" or those with an evaluation result of "NG" regarding at least one item were defined as an overall evaluation of "NG". Further, for each of the comparative examples, which serve as a standard for evaluation regarding the temperature increasing rate, such an overall evaluation as described above was not considered, and "-" was listed in the column of overall evaluation.

**[Table 7]**

| | Level | First Al-based coated steel sheet | | | | | Second Al-based coated steel sheet | | | | W1 | W2 | L*1 | L*2 | (L*1-L*2) × (W1/W2)² Expression (1) | t1/(t1+t2) × (L*1/L*2)² Expression (2) | Evaluation result | | |
|---|---|---|---|---|---|---|---|---|---|---|---|---|---|---|---|---|---|---|---|
| | | Sheet thickness t1 (mm) | Coating weight (g/m²) | | Lightness | | Sheet thickness t2 (mm) | Coating weight (g/m²) | Lightness | Carbon-based black coating | | | | | | | Spot weldability after HS | Temperature increasing rate of an overlapped part | Overall evaluation |
| | | | Wla | W1b | L*1a | L*1b | | W2b | L*2b | Film thickness (µm) | | | | | | | | | |
| Inventive Example | B1 | 1.6 | 80 | 80 | 75 | 75 | 2.0 | 80 | 30 | 1.0 | 80.0 | 80.0 | 75.0 | 52.5 | 22.5 | 0.91 | G3 | G2 | 6 |
| Comparative Example | B2 | 1.6 | 80 | 80 | 75 | 75 | 2.0 | 80 | 75 | 0.0 | 80.0 | 80.0 | 75.0 | 75.0 | 0.0 | 0.44 | NG | - | - |
| Comparative Example | B3 | 1.0 | 80 | 80 | 75 | 75 | 2.0 | 80 | 30 | 1.0 | 80.0 | 80.0 | 75.0 | 52.5 | 22.5 | 0.68 | G2 | NG | NG |
| Comparative Example | B4 | 1.0 | 80 | 80 | 75 | 75 | 2.0 | 80 | 75 | 0.0 | 80.0 | 80.0 | 75.0 | 75.0 | 0.0 | 0.33 | NG | - | - |
| Inventive Example | B5 | 2.0 | 80 | 80 | 75 | 75 | 1.0 | 80 | 30 | 1.0 | 80.0 | 80.0 | 75.0 | 52.5 | 22.5 | 1.36 | G2 | G2 | 4 |
| Inventive Example | B6 | 2.0 | 80 | 80 | 85 | 85 | 1.0 | 40 | 60 | 0.2 | 80.0 | 60.0 | 85.0 | 72.5 | 22.2 | 0.92 | G2 | G2 | 4 |
| Comparative Example | B7 | 2.0 | 80 | 80 | 75 | 75 | 1.0 | 80 | 75 | 0.0 | 80.0 | 80.0 | 75.0 | 75.0 | 0.0 | 0.67 | NG | - | - |

B1, B5, and B6 each being the inventive example had the coating weight within the range of this application, included the carbon-based black coating, and had the relationships of the sheet thickness, the coating weight, and the lightness satisfying Expression (1) and Expression (2), and thus the temperature increasing rate of the overlapped part and the spot weldability after hot stamping were good. Further, B3 being the comparative example included the carbon-based black coating but did not satisfy Expression (2), and thus, the temperature increasing rate of the overlapped part was poor compared to B4. B2, B4, and B7 each being the comparative example did not include the carbon-based black coating and did not satisfy Expression (1) or Expression (2), and thus the spot weldability after hot stamping was evaluated to be poor.

### (Example 3)

First Al-based coated steel sheets and second Al-based coated steel sheets were fabricated under the same manufacturing conditions as Level A3 in Example 1. Those in which Zn, V, Ti, or Cu (vacuum deposition method) was formed on Al-based coated steel sheet the second Al-based coated steel sheet, and a carbon-based black coating was further formed thereon were fabricated as Inventive Examples C1 to C4. Further, Inventive Examples C5 to C10 were fabricated by containing water-dispersed sol of a Zn oxide, a V oxide, a Ti oxide, or a Cu oxide in the carbon-based black coating. These were subjected to the spot welding 3 as illustrated in FIG. 7, and thereby overlapped blanks for hot stamping 4 were fabricated. Details of Inventive Examples C1 to C10 are as listed in Table 8.

As in Example 1, this blank was subjected to hot stamping heating at 920 °C to investigate the temperature increasing rate of an overlapped part (the evaluation criteria were the same as in Example 1, and based on Comparative Example A15 in which the carbon-based black coating is not included in the second Al-based coated steel sheet, evaluation was performed), and immediately subjected to mold cooling after being heated for the time during which the overlapped part was held at a temperature between 910 °C and 920 °C for 300 seconds, and thereby an overlapped hot-stamp formed body 12 was obtained. Two flange parts 11 of a non-overlapped part (one-sheet part) were cut out, and spot weldability was investigated with a pair of steel sheets of the same type (the evaluation criteria were the same as in Example 1). The results obtained are listed in Table 8.

**[Table 8]**

| | Level | Carbon-based black coating | | | Evaluation result | | |
|---|---|---|---|---|---|---|---|
| | | Contained metallic substance | | Film thickness (µm) | Spot weldability after HS | Temperature increasing rate of an overlapped part | Overall evaluation |
| | | Contained substance | Adhesion amount of metal substance (g/m²) | | | | |
| Inventive Example (relist) | A3 | None | None | 1.0 | G2 | G2 | 4 |
| Inventive Example | C1 | Zn | 0.3 | 1.0 | G1 | G1 | 1 |
| Inventive Example | C2 | V | 0.3 | 1.0 | G1 | G1 | 1 |
| Inventive Example | C3 | Ti | 0.3 | 1.0 | G1 | G1 | 1 |
| Inventive Example | C4 | Cu | 0.3 | 1.0 | G1 | G1 | 1 |
| Inventive Example | C5 | Zn oxide | 0.3 | 1.0 | G1 | G1 | 1 |
| Inventive Example | C6 | V oxide | 0.3 | 1.0 | G1 | G1 | 1 |
| Inventive Example | C7 | Ti oxide | 0.3 | 1.0 | G1 | G1 | 1 |
| Inventive Example | C8 | Cu oxide | 0.3 | 1.0 | G1 | G1 | 1 |
| Inventive Example | C9 | Ti oxide | 1.0 | 3.0 | G1 | G1 | 1 |
| Inventive Example | C10 | Cu oxide | 2.5 | 3.0 | G1 | G1 | 1 |

C1 to C10 each being the inventive example included a preferable coating containing Zn, V, Ti, or Cu in the carbon-based black coating, and thus exhibited better results than A3 in terms of the temperature increasing rate of the overlapped part and the spot weldability after HS.

### (Example 4)

Under the same manufacturing conditions as Level A3 in Example 1, first Al-based coated steel sheets and second Al-based coated steel sheets were fabricated, and a carbon-based black coating was formed on Al-based coated steel sheet each of the second Al-based coated steel sheets, and one in which the nitrogen content was set to 1% by the above-described method was set to D1, those in which the nitrogen contents were set to 2%, 5%, 8%, 18%, and 20% were set to D2, D3, D4, D5, and D6, respectively, and a tape peel test was performed (tape: CT405AP-24 manufactured by Nichiban Co., Ltd.). As a result, in D1 with the nitrogen content of 1% and D6 with the nitrogen content of 20%, peeling of the coating was observed, and in the others of D2, D3, D4, and D5, peeling was not observed.

### (Example 5)

Under the same manufacturing conditions as Levels A3, A7, A10, A12, A13, A15, and A16 in Example 1 and Levels C5, C6, C9, and C10 in Example 3 listed in Table 9, overlapped hot stamp molded bodies were fabricated and levels of the fabricated overlapped hot stamp molded bodies were set to E1, E6, E7, E8, E9, E10, E11, E2, E3, E4, and E5. Further, Al-based coated steel sheets each including a carbon-based black coating containing a Zn oxide, a V oxide, a Ti oxide, or a Cu oxide, which were used in the second Al-based coated steel sheets in E2, E3, E4, and E5, were used for both the second Al-based coated steel sheet and the first Al-based coated steel sheet, and overlapped hot stamp molded bodies were fabricated under the same manufacturing conditions as in Example 3. Levels of the fabricated overlapped hot stamp molded bodies were set to E12, E13, E14, and E15 respectively. Such manufacturing conditions in Example 1 and Example 3 as described above, which were applied to obtain the overlapped hot stamp molded bodies in Levels E1 to E15, are listed in Table 9 with an item of "APPLIED MANUFACTURING CONDITION" provided. Two non-overlapped parts (one-sheet parts) were cut out to investigate spot weldability with a pair of steel sheets of the same type. Regarding each of the levels in Table 9, inventive examples were listed as E1 to E5, E7, E9, and E12 to E15, and comparative examples were listed as E6, E8, E10, and E11. The evaluation method and the evaluation criteria for spot weldability after hot stamping are the same as those in Example 1.

The coating thickness K1 of the Al-Fe-based alloy coated layer of the first Al-Fe-based alloy coated steel sheet, the thickness D1 of the diffusion layer, the coating thickness K2 of the Al-Fe-based alloy coated layer of the second Al-Fe-based alloy coated steel sheet, and the thickness D2 of the diffusion layer were measured by observing a cross section using an optical microscope as described above (each was measured at three locations and the average value of the measured values was found).

**[Table 9]**

| | Level | Applied manufacturing condition | First Al-Fe-based alloy coated steel sheet | | | Second Al-Fe-based alloy coated steel sheet | | | (D1-D2) × (K1/K2)² Expression | Evaluation result |
|---|---|---|---|---|---|---|---|---|---|---|
| | | | coating | | Adhesion amount of oxide | coating | | Adhesion amount of oxide | | Spot weldability after HS |
| | | | Coating thickness K1 (µm) | Thickness of the diffusion layer D1 (µm) | (g/m²) | Coating thickness K2 (µm) | Thickness of the diffusion layer D2 (µm) | (g/m²) | | |
| Inventive Example | E1 | A3 | 45 | 18 | 0.0 | 42 | 15 | 0.0 | 3.4 | G2 |
| Inventive Example | E2 | C5 | 44 | 17 | 0.0 | 42 | 15 | Zn oxide : 0.3 | 2.2 | G1 |
| Inventive Example | E3 | C6 | 43 | 16 | 0.0 | 42 | 15 | V oxide : 0.3 | 1.0 | G1 |
| Inventive Example | E4 | C9 | 44 | 17 | 0.0 | 42 | 15 | Ti oxide : 1.0 | 2.2 | G1 |
| Inventive Example | E5 | C10 | 43 | 16 | 0.0 | 42 | 15 | Cu oxide : 2.5 | 1.0 | G1 |
| Comparative Example | E6 | A7 | 58 | 18 | 0.0 | 42 | 15 | 0.0 | 5.7 | NG |
| Inventive Example | E7 | A10 | 46 | 18 | 0.0 | 55 | 15 | 0.0 | 2.1 | G2 |
| Comparative Example | E8 | A12 | 49 | 22 | 0.0 | 25 | 15 | 0.0 | 26.9 | NG |
| Inventive Example | E9 | A13 | 28 | 18 | 0.0 | 25 | 15 | 0.0 | 3.8 | G2 |
| Comparative Example | E10 | A15 | 49 | 22 | 0.0 | 42 | 15 | 0.0 | 9.5 | NG |
| Comparative Example | E11 | A16 | 23 | 21 | 0.0 | 17 | 15 | 0.0 | 11.0 | NG |
| Inventive Example | E12 | C5 | 44 | 17 | Zn oxide : 0.3 | 41 | 14 | Zn oxide : 0.3 | 3.5 | G1 |
| Inventive Example | E13 | C6 | 44 | 16 | V oxide : 0.3 | 41 | 14 | V oxide : 0.3 | 2.3 | G1 |
| Inventive Example | E14 | C9 | 44 | 17 | Ti oxide : 1.0 | 42 | 15 | Ti oxide : 1.0 | 2.2 | G1 |
| Inventive Example | E15 | C10 | 43 | 17 | Cu oxide : 2.5 | 42 | 15 | Cu oxide : 2.5 | 2.1 | G1 |

E1 to E5, E7, E9, and E12 to E15 each being the inventive example had the coating thicknesses K1 and K2 of the Al-Fe-based alloy coated layers falling within the range of the invention of this application and had the coating thickness of the Al-Fe-based alloy coated layer and the thickness of the diffusion layer satisfying Expression (9), and thus, the spot weldability after hot stamping was good. E6, E8, and E10 each being the comparative example did not satisfy Expression (9), and thus the spot weldability after hot stamping was poor. E11 being the comparative example had less than 25 µm of the coating thickness of the Al-Fe-based alloy coated layer and did not satisfy Expression (9), and thus spot weldability after hot stamping was poor.

Further, E2, E3, E4, and E5 each being the inventive example had a Zn, V, Ti, or Cu oxide on the Al-Fe-based alloy coated layer of the second Al-Fe-based alloy coated steel sheet, and thus exhibited a better result than E1 in terms of the spot weldability after HS.

Further, E12, E13, E14, and E15 each being the inventive example had a Zn, V, Ti, or Cu oxide on each of the Al-Fe-based alloy coated layer of the first Al-Fe-based alloy coated steel sheet and the Al-Fe-based alloy coated layer of the second Al-Fe-based alloy coated steel sheet, and thus exhibited a better result than E1 in terms of the spot weldability after HS.

### (Example 6)

Focusing again on Levels A2, A3, A5, and A15 in Example 1 listed in Table 6, first Al-based coated steel sheets and second Al-based coated steel sheets were further manufactured under the same manufacturing conditions except that a carbon-based black coating was further provided on the first Al-based coating layer with respect to these levels, and were subjected to the spot welding 3 as illustrated in FIG. 7, and thereby overlapped blanks for hot stamping 4 were fabricated.

As in Example 1, this blank was subjected to hot stamping heating at 920 °C to investigate the temperature increasing rate of an overlapped part (the evaluation criteria were the same as in Example 1, and based on Comparative Example A15 in which the carbon-based black coating is not included in the second Al-based coated steel sheet, evaluation was performed), and immediately subjected to mold cooling after being heated for the time during which the overlapped part was held at a temperature between 910 and 920 °C for 300 seconds, and thereby an overlapped hot-stamp formed body 12 was obtained. Two flange parts 11 of a non-overlapped part (one-sheet part) were cut out, and spot weldability was investigated with a pair of steel sheets of the same type (the evaluation criteria were the same as in Example 1).

Levels in Table 10 were listed as F1 to F4. Level F1 means that the carbon-based black coating was further provided in the first Al-based coated steel sheet in Level A2, Level F2 means that the carbon-based black coating was further provided in the first Al-based coated steel sheet in Level A3, and Level F3 means that the carbon-based black coating was further provided in the first Al-based coated steel sheet in Level A5. Further, Level F4 means that the carbon-based black coating was further provided in the first Al-based coated steel sheet in Level A15.

**[Table 10]**

| | Level | First Al-based coated steel sheet | | | | | | Second Al-based coated steel sheet | | | | W1 | W2 | L*1 | L*2 | (L*1-L*2) × (W1/W2)² ... Expression (1) | t1/(t1+t2) × (L*1/L*2)² ... Expression (2) | Evaluation result | | |
|---|---|---|---|---|---|---|---|---|---|---|---|---|---|---|---|---|---|---|---|---|
| | | Sheet thickness t1 (mm) | Coating weight (g/m²) | | Lightness | | Carbon-based black coating | Sheet thickness t2 (mm) | Coating weight (g/m²) | Lightness | Carbon-based black coating | | | | | | | Spot weldability after HS | Temperature increasing rate of an overlapped part | Overall evaluation |
| | | | W1a | W1b | L*1a | L*1b | Film thickness (µm) | | W2b | L*2b | Film thickness (µm) | | | | | | | | | |
| Comparative Example (relist) | A2 | 1.6 | 80 | 80 | 75 | 75 | 0.0 | 1.6 | 80 | 42 | 0.7 | 80.0 | 80.0 | 75.0 | 58.5 | 16.5 | 0.82 | G3 | G3 | NG |
| Inventive Example (relist) | A3 | 1.6 | 80 | 80 | 75 | 75 | 0.0 | 1.6 | 80 | 30 | 1.0 | 80.0 | 80.0 | 75.0 | 52.5 | 22.5 | 1.02 | G2 | G2 | 4 |
| Inventive Example (relist) | A5 | 1.6 | 80 | 80 | 75 | 75 | 0.0 | 1.6 | 80 | 20 | 4.0 | 80.0 | 80.0 | 75.0 | 47.5 | 27.5 | 1.25 | G1 | G1 | 1 |
| Comparative Example (relist) | A15 | 1.6 | 80 | 80 | 75 | 75 | 0.0 | 1.6 | 80 | 75 | 0.0 | 80.0 | 80.0 | 75.0 | 75.0 | 0.0 | 0.50 | NG | NG | NG |
| Inventive Example | F1 | 1.6 | 80 | 80 | 75 | 42 | 0.7 | 1.6 | 80 | 42 | 0.7 | 80.0 | 80.0 | 58.5 | 42.0 | 16.5 | 0.97 | G3 | G2 | 6 |
| Inventive Example | F2 | 1.6 | 80 | 80 | 75 | 30 | 1.0 | 1.6 | 80 | 30 | 1.0 | 80.0 | 80.0 | 52.5 | 30.0 | 22.5 | 1.53 | G2 | G1 | 2 |
| Inventive Example | F3 | 1.6 | 80 | 80 | 75 | 20 | 4.0 | 1.6 | 80 | 20 | 4.0 | 80.0 | 80.0 | 47.5 | 20.0 | 27.5 | 2.82 | G1 | G1 | 1 |
| Comparative Example | F4 | 1.6 | 80 | 80 | 75 | 20 | 4.0 | 1.6 | 80 | 75 | 0.0 | 80.0 | 80.0 | 47.5 | 47.5 | 0.0 | 0.50 | NG | G1 | NG |

It is clear from Table 10 above that F1 to F4 have a further increase in the temperature increasing rate at the overlapped part and obtain more excellent evaluation results compared to A2, A3, A5, and A15 corresponding thereto respectively.

### <<Element Technology B2>>

The Element Technology B2 is a hot-stamp formed body by an aluminum-coated steel sheet for hot stamping including
a base steel sheet;
an aluminum coating layer provided on at least one surface of the base steel sheet and having an Al content of 80 mass% or more; and
a surface treatment film provided on the aluminum coating layer,
in which the surface treatment film includes:
   a compound A containing carbon; and
   a compound B that is an oxide or a fluoride of a metal element M and has a rutile structure,
   a carbon concentration of the compound A is 80 mass% or more, and
   a concentration of the metal element M satisfies the following formula (1) and the following formula (2): $1 \leq {C}_{bM} \leq 40$ $1.5 \leq {C}_{bM} / {C}_{tM} \leq 10.0$
   herein, when the surface treatment film has an average thickness H (µm), C_{tM} in the formula (2) is a concentration (mass%) of the metal element M at a position of 0.05H from the surface of the surface treatment film, and
   C_{bM} in the formula (1) and the formula (2) is a concentration (mass%) of the metal element M at a position of 0.95H from the surface of the surface treatment film.

An object of the Element Technology B2 is to provide a steel sheet for hot stamping that can further improve productivity of a hot stamping member.

In order to solve the above-described problems, the present inventors have intensively studied. As a result, it has been found that, when a hot stamping member is manufactured using a steel sheet for hot stamping and the steel sheet can be heated to a desired temperature (for example, Ac3 point or higher) with an increased temperature rising rate, the heating time can be shortened to contribute to improvement in productivity. Specifically, the present inventors have found that a surface treatment film is provided on the coating layer, the surface treatment film containing a compound A having a carbon concentration of 80 mass% or more, and a compound B that is an oxide or a fluoride of a metal element M and has a rutile structure, and the concentration range of the metal element M is controlled within a predetermined range, thereby the temperature rising rate can be greatly increased.

### (Aluminum-coated steel sheet for hot stamping)

The aluminum-coated steel sheet for hot stamping (hereinafter, also referred to as "aluminum-coated steel sheet for HS") according to an embodiment of the present Element Technology makes it possible to increase the temperature rising rate during heating the aluminum-coated steel sheet for HS in manufacturing a hot stamping member using the aluminum-coated steel sheet for HS. That is, it is possible to improve productivity of a hot stamping member by using the aluminum-coated steel sheet for HS of the embodiment capable of increasing the temperature rising rate during heating.

In order to improve the temperature rising rate during heating the aluminum-coated steel sheet for HS, the aluminum-coated steel sheet for hot stamping of the embodiment has a surface treatment film containing a predetermined compound on at least one surface of the coated steel sheet on which an aluminum coating layer is formed. As described above, a surface treatment film containing a predetermined compound is provided on at least one surface of the coated steel sheet on which an aluminum coating layer is provided, which makes it possible to increase the temperature rising rate during heating the obtained aluminum-coated steel sheet for HS. Note that the surface treatment film may be provided on both surfaces of the coated steel sheet on which the aluminum coating layer is provided or may be provided only on one surface. The surface treatment film may be provided on the entire surface of the coated steel sheet on which the aluminum coating layer is provided or may be provided only on part of the surface. From the viewpoint of further improving the productivity of a hot stamping member, the surface treatment film is preferably provided on the entire surface of the coated steel sheet on which the aluminum coating layer is provided.

In the aluminum-coated steel sheet for hot stamping according to the embodiment, the type of the steel sheet as a base metal (base steel sheet) is not particularly limited. Examples of the base steel sheet include various hot-rolled steel sheets and cold-rolled steel sheets. The coated steel sheet constituting the aluminum-coated steel sheet for hot stamping of the embodiment includes a coating layer on at least one surface of such a base steel sheet. Examples of the coated steel sheet include a steel sheet subjected to melt aluminum coating or the like. However, the coating layer of the embodiment is not limited to melt aluminum coating as long as the coating layer can be applied to hot stamping.

Conventionally, many steel sheets used as a frame component for an automobile and the like are a hot-rolled steel sheet, a cold-rolled steel sheet, or a coated steel sheet coated with aluminum, zinc, or the like. Since the conventional steel sheets have low emissivity, the temperature rising rate with respect to radiation heating is low.

In the aluminum-coated steel sheet for hot stamping of the embodiment, the predetermined surface treatment film to be described later is provided to at least one entire surface of the coating layer, so that the temperature rising rate during hot stamping heating can be increased. Specifically, the aluminum-coated steel sheet for HS having a predetermined surface treatment film is heated, and the heated aluminum-coated steel sheet for hot stamping is hot-stamped. Thereby, the productivity of a hot stamping member can be further improved.

### <Surface treatment film>

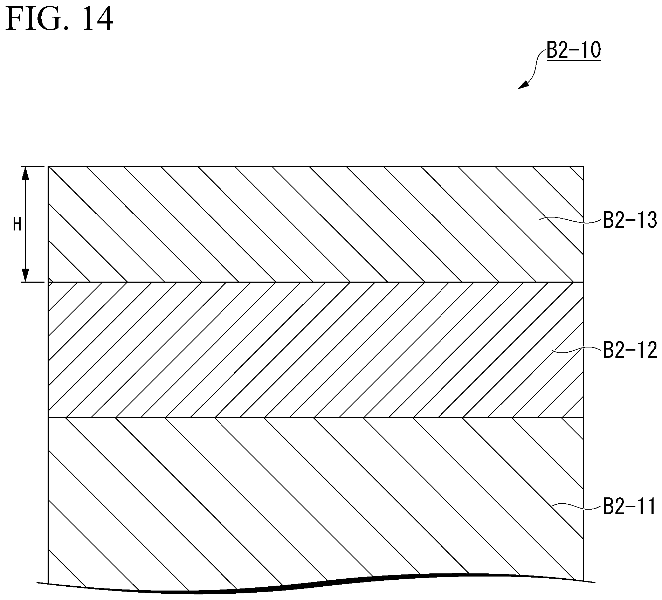

FIG. 14 is a schematic cross-sectional view of the surface portion of one surface of the aluminum-coated steel sheet for hot stamping according to the embodiment.

As illustrated in FIG. 14, an aluminum-coated steel sheet B2-10 for hot stamping according to the embodiment includes, for example, a base steel sheet B2-11, an aluminum coating layer (Al-coating layer) B2-12 provided on at least one surface of the base steel sheet B2-11, and a surface treatment film B2-13 provided on the aluminum coating layer B2-12. In the aluminum-coated steel sheet B2-10 for hot stamping according to the embodiment, the surface to which the surface treatment film B2-13 is provided (that is, the surface of the surface treatment film B2-13) has high emissivity. Therefore, the temperature rising rate during hot stamping heating is high, and as a result, productivity of a hot stamping member can be further improved. FIG. 14 is a schematic view for illustration, and the dimensions of the surface treatment film B2-13, the aluminum coating layer B2-12, and the like do not necessarily indicate a preferred embodiment and are not necessarily limited to the dimensions and the like in FIG. 14.

The surface treatment film B2-13 according to the embodiment includes: a compound A containing carbon; and a compound B that is an oxide or a fluoride of a metal element M and has a rutile structure.

The surface treatment film B2-13 according to the embodiment may further contain a binder component as necessary. The surface treatment film B2-13 according to the embodiment may contain silica. Furthermore, in the embodiment, the content of the compound A and the compound B in the surface treatment film B2-13, the concentration distribution of the metal element M, the method for applying and drying the surface treatment film B2-13, the film thickness, and the like are adjusted. Thereby, the temperature rising rate (heating efficiency) can be improved during hot stamping heating.

In the surface treatment film B2-13 according to the embodiment, the compound B has a predetermined concentration distribution. Specifically, in the concentration distribution (concentration gradient), the concentration of the metal element M constituting the compound B with respect to the film is larger on the coating layer side of the film than on the surface side of the film in the film thickness direction. The presence of the metal element M in such a predetermined concentration distribution makes it possible to further increase heating efficiency by the surface treatment film 13. When the steel sheet for hot stamping according to the embodiment is subjected to hot stamping heating, radiation heat from the heating atmosphere can be efficiently absorbed. In addition, heat can be efficiently absorbed also by heat conduction due to contact with the heated atmosphere gas. As a result, the entire surface treatment film can be quickly heated.

Hereinafter, the constituent requirements of the surface treatment film B2-13 will be described in detail.

### [Compound A]

The carbon concentration of the compound A included in the surface treatment film B2-13 is 80 mass% or more. When the carbon concentration of the compound A is less than 80 mass%, the compound A is decomposed and oxidized even at a relatively low temperature when the aluminum-coated steel sheet for HS is heated in a hot stamping step, so that the compound A may disappear from the film. When the compound A disappears from the film, the effect of enhancing the temperature rising characteristics cannot be maintained at high temperatures. Therefore, the carbon concentration of the compound A is 80 mass% or more. The carbon concentration of the compound A is preferably 82 mass% or more, and preferably 85 mass% or more. The carbon concentration of the compound A may be 100 mass%.

Examples of the compound A include carbon black (CB), graphite, and soot.

Here, the carbon concentration of the compound A can be measured by cross-sectional analysis of the surface treatment film using a transmission electron microscope (TEM), energy dispersive X-ray spectroscopy (EDS), and electron beam diffraction.

Specifically, the spectrum of the characteristic X-ray at the time of electron beam irradiation is measured, the detection intensity for each energy is calculated, and the element constituting the compound to be measured can be specified from the value of the energy. Then, from the detection intensity of each element constituting the compound to be measured, the concentration of each element in the compound is calculated using a calibration curve prepared in advance from the relationship between a substance whose element concentration is known and the detection intensity data for the substance. The measurement is performed at 10 points in the same compound, and when all the elements fall within the range in which the absolute maximum value of the concentration of each element is 1.0 times to 1.3 times the absolute minimum value, it is regarded as the same compound. That is, the measurement is performed at 10 points in one compound observed by TEM-EDS, and when all the elements constituting the compound fall within the range in which the absolute maximum value of the concentration is 1.0 times to 1.3 times the absolute minimum value, it is regarded as the same compound.

The TEM observation sample is prepared by an FIB sampling method using a focused ion beam (FIB) machining observation device (for example, "NB 5000", manufactured by Hitachi High-Tech Corporation). The acceleration voltage during processing is set to 40 kV.

The carbon concentration of the compound A is defined as follows. In the cross-sectional analysis for the surface treatment film, measurement is performed at 10 points in the same compound within a range surrounded by the film thickness and the length of 5 µm in the direction orthogonal to the film thickness. Then the intermediate value between the absolute maximum value and the absolute minimum value of the carbon concentration is defined as the carbon concentration of the compound A. When a plurality of the compounds A is present within the above range, the intermediate value is calculated for each compound A, and the average value of the obtained intermediate values is defined as the carbon concentration of the compound A. By such a method, the concentration of an element such as carbon constituting the compound A can be analyzed. Note that the compound A containing carbon as a main component and the compound B that is an oxide or a fluoride of the metal element M can be distinguished by the difference in carbon concentration.

In the embodiment, when the average thickness of the surface treatment film is defined as H (µm), the content of the compound A having a carbon concentration of 80 mass% or more is preferably 10 to 90% or 20 to 90%, and more preferably 30 to 80% at 0.90H from the surface of the surface treatment film (hereinafter, the position is also referred to as "interface side position P"; the interface side position P can be referred to as the position of 0.10H from the interface between the surface treatment film and the Al-coating layer).

The compound A having a carbon concentration of 80 mass% or more has an increased radiation heat-absorbing effect. In addition, the compound A, having a high carbon concentration, is less likely to decompose due to heating or disappear from the surface treatment film due to volatilization. Therefore, even when the temperature of the outermost surface of the aluminum-coated steel sheet for HS is increased by hot stamping heating, radiation heat absorption can be enhanced at high temperature ranges. In order to obtain such an effect, it is effective to increase the content of the compound A. In the embodiment, the content of the compound A is preferably 10% or more, 20% or more, and more preferably 30% or more at the interface side position P. Thereby, the temperature rising rate can be further improved during hot stamping heating. On the other hand, in the surface treatment film, the compound A itself does not have an action of enhancing film adhesion. Therefore, in the surface treatment film, the content of the compound A is preferably suppressed to a predetermined amount or less particularly at the interface side position P, which is the Al-coating layer side. Specifically, the content of the compound A is preferably 90% or less, and more preferably 80% or less, at the interface side position P. Thereby, adhesion between the surface treatment film and the Al-coating layer is improved. As the mechanism for improved film adhesion when the content of the compound A is preferably 90% or less and more preferably 80% or less at the interface side position P, it is considered that chemical and physical bonding can be secured between the high polarity rutile compound and the binder resin contained in the surface treatment film and the aluminum coating layer, and as a result, an effect of enhancing film adhesion is exhibited.

The content of the compound A at the interface side position P is determined by the following method.

First, the compound A having a carbon concentration of 80% or more is detected by EDS at the interface side position P by TEM observation. For example, when the average thickness H of the surface treatment film is 5 µm, the "0.90H position" is the position of 4.5 µm depth (thickness) from the surface of the surface treatment film (that is, the position of 0.5 µm depth (thickness) from the interface between the surface treatment film and the Al-coating layer to the film side).

Next, when the TEM image of the sample to be described later is observed at 10 points at intervals of 30 nm in the direction perpendicular to the thickness direction of the surface treatment film layer (the direction parallel to the interface between the aluminum coating layer and the surface treatment film, and perpendicular to the thickness direction of the sample) and the presence of the compound A is observed at 3 points, the content of the compound A at the interface side position P is defined as 30%. Similarly, when the presence of the compound A is observed at 4 points, the content of the compound A is defined as 40%, and the same applies hereinafter. Therefore, when the compound A having a carbon concentration of 80% or more is observed at 3 points or more and 8 points or less, it means that the content of the compound A is 30 to 80%.

The TEM observation sample used to calculate the content of the compound A is prepared by an FIB sampling method using a focused ion beam (FIB) machining observation device (for example, "NB 5000", manufactured by Hitachi High-Tech Corporation). The acceleration voltage during processing is set to 40 kV. The thickness of the sample is 100 nm ± 10 nm.

As described above, the content of the compound A is a ratio (%) calculated from the ratio of the number of points at which the compound A is observed (present) among 10 points (= the number of points at which the compound A is present/10) in a specific direction in the TEM image of the sample having a thickness of 100 ± 10 nm (the direction parallel to the surface of the surface treatment film and the direction perpendicular to the thickness direction of the sample). Thus, the unit of the content is not volume% or area%, but dimensionless%.

### [Compound B]

The compound B is an oxide or fluoride of a metal element M and has a rutile structure. Examples of the metal element M include Ti, V, Mn, Ru, Cs, Ir, Ge, Cu, Ag, and Ni. If necessary, only any one or more of the above-mentioned elements may be used as the metal element M. Examples of the compound B include TiO₂, VO₂, β-MnO₂, RuO₂, CsO₂, IrO₂, GeO₂, CuO₂, AgO₂, and NiF₂. If necessary, any one or more of the above-mentioned compounds may be used as the compound B.

When the compound B having a rutile compound structure is contained in the film, the temperature rising rate can be increased during hot stamping. The reason for this is not clear but is presumed as follows.

The rutile structure is a structure in which anions have distorted hexagonal closest packing and cations are arranged in the six-coordination space (six-coordination gap). It is presumed that, when the compound B having such a rutile compound structure is contained in the film, an interionic distance that is active to radiation due to electromagnetic waves in the infrared or near-infrared region, which is a main heating factor, is obtained during hot stamping heating, and thereby the temperature rising rate can be increased during hot stamping.

The crystal structure of the compound B and the type of the compound (oxide or fluoride) can be determined by cross-sectional analysis of the surface treatment film using TEM, EDS, and electron beam diffraction. Specifically, an electron beam diffraction image at the time of electron beam irradiation is compared with a database provided in advance. When the compound is classified into a rutile structure, it can be determined that the compound has a rutile structure. In addition, the compound can be specified from the ratio of the element concentration by EDS, and when the ratio of oxygen or fluorine is 10 mass% or more, it can be determined that the compound is an oxide or a fluoride.

In the embodiment, the concentration of the metal element M in the compound B satisfies the following formulas (1) and (2).$1 \leq {C}_{bM} \leq 40$ $1.5 \leq {C}_{bM} / {C}_{tM} \leq 10.0$

Herein, when the surface treatment film has an average thickness H (µm), C_{tM} in the formula (2) is a concentration (mass%) of the metal element M at a position of 0.05H from the surface of the surface treatment film B2-13, and C_{bM} in the formula (1) and the formula (2) is a concentration (mass%) of the metal element M at a position of 0.95H from the surface of the surface treatment film B2-13.

As shown in FIG. 14, when the thickness of the surface treatment film B2-13 is H (µm), the concentration C_{bM} of the metal element M at 0.95H from the surface of the surface treatment film B2-13 is 1% or more and 40% or less in terms of mass%.

When C_{bM} is less than 1%, it is difficult to enhance the temperature rising characteristics particularly in high temperature ranges during heating in hot stamping. Therefore, C_{bM} is 1% or more. C_{bM} is preferably 5% or more, more preferably 8% or more. When the concentration C_{bM} of the metal element M is 8% or more, the temperature rising rate can be further increased during hot stamping. On the other hand, when C_{bM} is more than 40%, the temperature rising rate during heating in hot stamping is saturated, whereas adhesion between the surface treatment film B2-13 and the Al-coating layer B2-12 is deteriorated. This is because the compound B is relatively hard, and when the concentration C_{bM} increases in the surface treatment film B2-13 close to the Al-coating layer B2-12, the followability of the surface treatment film B2-13 to fine irregularities on the surface of the Al-coating layer B2-12 decreases. Therefore, C_{bM} B2-is 40% or less. As a result, the temperature rising rate can be increased during hot stamping, and film adhesion can also be improved. C_{bM} is preferably 35% or less, more preferably 30% or less, and still more preferably 20% or less. When the concentration C_{bM} of the metal element M is 20% or less, adhesion of the surface treatment film B2-13 to the aluminum coating layer B2-12 can be further enhanced.

As shown in the above formula (2), C_{bM}/C_{tM} is 1.5 to 10.0.

When the concentration of the metal element M in the vicinity of the interface between the Al-coating layer B2-12 and the surface treatment film B2-13 is high and C_{bM}/C_{tM} is 1.5 or more, the metallic gloss of the surface of the Al-coating layer B2-12 can be hidden, and reflection of radiation heat can be suppressed. C_{bM}/C_{tM} is preferably 2.0 or more, and more preferably 3.0 or more. On the other hand, when C_{bM}/C_{tM} exceeds 10.0, heat absorption is insufficient on the surface side of the surface treatment film B2-13, and as a result, the temperature rising rate cannot be increased during hot stamping. Therefore, C_{bM}/C_{tM} is 10.0 or less. As a result, reflection of radiation heat on the surface of the Al-coating layer B2-12 and the endothermic state on the surface side of the surface treatment film B2-13 can be controlled in an appropriate state, and the temperature rising rate can be increased. C_{bM}/C_{tM} is preferably 8.0 or less, and more preferably 6.0 or less.

The concentration (mass%) C_{tM} of the metal element M at 0.05H from the surface of the surface treatment film B2-13 and the concentration C_{bM} of the metal element M at 0.95H from the surface of the surface treatment film B2-13 can be measured by fluorescent X-ray analysis and glow discharge optical emission spectroscopy (GDS) when the thickness of the surface treatment film B2-13 is H (µm) as shown in FIG. 14.

Hereinafter, how to determine C_{bM} and C_{tM} will be described in detail.

First, the average concentration (mass%) of the metal element M is determined as follows.

The detection intensity (kcps, 10³ count per second) of the metal element M is determined by fluorescent X-ray analysis using the aluminum-coated steel sheet provided with the surface treatment film including the compound A and the compound B (oxide or fluoride of the metal element M). Note that a calibration curve is prepared in advance by fluorescent X-rays in accordance with JIS K 0119 (2008) between the adhesion amount (g/m²) of the metal element M and the detection intensity (kcps) of the metal element M in the surface treatment film.

Using this calibration curve, the adhesion amount P (g/m²) of the metal element M in the surface treatment film is determined from the detection intensity (kcps) of the metal element M obtained by fluorescent X-ray analysis. When the detection intensity of the metal element M in the surface treatment film is determined by fluorescent X-ray analysis, the concentration of the metal element M in the base steel material does not affect, that is, may be ignored. That is, since fluorescent X-rays are greatly attenuated by the metal element or the like in the aluminum coating layer and the surface treatment film, it may be considered that the elements in the base steel material at a position deeper than the aluminum coating layer and the surface treatment film does not affect the detection intensity of the metal element M in the surface treatment film.

Subsequently, the metal element M is measured in the depth direction of the surface treatment film B2-13 by GDS, and the position where the strength of the metal element M is less than 1/2 on the base steel sheet side from the depth (thickness) position showing the absolute maximum value of the strength is defined as the interface between the surface treatment film and the Al-coating layer, and the thickness of the surface treatment film B2-13 is determined. The thickness is measured at 5 points, and the average value of the obtained thicknesses is defined as the thickness H (µm) of the surface treatment film B2-13. The value obtained by dividing the adhesion amount P of the metal element M by H and multiplying the result by 100 "P × 100/H" is regarded as the average concentration (mass%) of the metal element M in the surface treatment film in the entire depth direction.

On the other hand, the concentration of the metal element M at an arbitrary position in the depth direction of the surface treatment film can be determined using the fact that the relationship between the average value of the strength of the metal element M from the surface of the surface treatment film to the interface with the Al-coating layer measured by GDS and the average concentration P × 100/H is a proportional relationship of 1 : 1. That is, P × 100/H, which is the average concentration (mass%) of the metal element M in the entire film thickness, and the average value α of the strength of the metal element M from the surface to the interface with the Al-coating layer are obtained, respectively.

On the other hand, when the intensity (kcps) of the metal element M at an arbitrary position X in the depth direction is β, the concentration C_{XM} (mass%) of the metal element M at the position X is determined by the following formula (3) using a proportional relationship.${C}_{XM} = P / H \times 100 \times β / α$

The average concentration (mass%) of the metal element M at 0.05H determined using the formula (3) is defined as C_{tM}, and the concentration (mass%) of the metal element M at the position 0.95H from the surface is defined as C_{bM}.

In the embodiment, the compound B is preferably rutile TiO₂. When the compound B is rutile TiO₂, the temperature rising rate can be further increased during hot stamping. The reason for this is not clear but is presumed as follows.

The rutile TiO₂ can maintain high emissivity even in high temperature ranges from 300°C to 900°C as compared with a compound such as Al₂O₃ usually generated on the surface of the aluminum coating layer in the heating process of hot stamping. Therefore, it is presumed that the amount of heat input by radiation can be increased. When the temperature is raised to further high temperature ranges, there is a possibility that a composite oxide of rutile TiO₂ and Al₂O₃ is formed. It is also presumed that the fact that the emissivity of the composite oxide of rutile TiO₂ and Al₂O₃ is higher than that of other oxides is a factor to further increase the temperature rising rate during hot stamping.

The compound B is an oxide or fluoride of the metal element M, and the compound B may be made of two or more kinds of compounds. For example, TiO₂ and VO₂ may be included as the compound B in the surface treatment film. When two or more kinds of compounds are included as the compound B in the surface treatment film, the compound having the largest content has a desired concentration or distribution that satisfies the above (1) and (2).

When a treatment liquid containing the compound A and the compound B that is an oxide or fluoride of the metal element M and has a rutile structure, and a treatment liquid containing an organic substance such as a resin serving as a binder component or an inorganic substance are separately prepared, and these treatment liquids are separately applied onto the aluminum coating layer to form a laminated film, the compound B does not have a predetermined concentration distribution as described above. In addition, when an attempt is made to form a surface treatment film having a multilayer structure using a plurality of treatment liquids as described above, it is necessary to form the second film after the first film is formed, and thus the manufacturing equipment is increased in size and the manufacturing cost is also increased. Therefore, the surface treatment film B2-13 of the embodiment needs to have a single layer structure instead of a multilayer structure.

The aluminum-coated steel sheet B2-10 for hot stamping according to the embodiment includes the surface treatment film B2-13 having the above characteristics, so that the temperature rising rate can be improved during hot stamping. Therefore, by using the aluminum-coated steel sheet B2-10 for hot stamping according to the embodiment as a material, the productivity of hot stamped materials can be improved.

The reason why the temperature rising rate of the steel sheet is improved during hot stamping by the provided surface treatment film B2-13 according to the embodiment is not clear, but it is considered that one of the reasons is that there are many bonds that are active to infrared light having a wavelength of 1 to 10 µm, which is particularly effective for absorption of radiation heat.

The surface treatment film B2-13 according to the embodiment can contain resins as various binder components and additives in addition to the compound A and the compound B. When the resin is contained, adhesion between the surface treatment film B2-13 and the Al-coating layer B2-12 can be enhanced. Examples of the additive contained in the surface treatment film B2-13 include a leveling agent, an antifoaming agent, a coloring agent, a viscosity modifier, and an ultraviolet absorber. The coating solution for forming the surface treatment film B2-13 is preferably obtained by dispersing or dissolving the above-mentioned components in water or a solvent.

In the embodiment, specific methods to provide the surface treatment film B2-13 include methods such as coating and lamination, but the present invention is not limited to such methods. The surface treatment film B2-13 may be provided only to one surface of the aluminum-coated steel sheet or to both surfaces of the aluminum-coated steel sheet.

When the surface treatment film B2-13 is provided to the entire surface of the aluminum coating layer B2-12 by coating, first, for example, a treatment liquid containing the compound A having a carbon concentration of 80 wt% or more and the compound B that is an oxide or a fluoride of the metal element M and has a rutile structure is prepared. Thereafter, the entire surface of the aluminum coating layer B2-12 is coated with the treatment liquid with a roll coater, a curtain coater, an inkjet, or the like, and then the volatile component in the treatment liquid is dried. Thereby, the surface treatment film B2-13 is provided. In particular, inkjet coating is preferable because the film thickness can be continuously changed.

Herein, conventionally (for example, in Japanese Unexamined Patent Application No. 2011-149084 and the like), when an organic substance such as a carbon pigment is contained in the surface treatment film, there is a problem that, when the coated steel sheet is heated to a high temperature range (for example, 750°C or higher), all of the organic substances are eliminated, and the temperature rising characteristics (temperature rising rate) are deteriorated. However, the present inventors have found that the surface treatment film B2-13 according to the embodiment can be efficiently heated at high temperature ranges even when the organic substance disappears. The mechanism for heating successfully at high temperature ranges even when the organic substance disappears as described above is not clear, but it is presumed that the compound B (oxide or fluoride of the metal element M) included in the film has increased heat input due to radiation at high temperatures.

### [Binder Component (Resin)]

The content of the binder component (resin) that can be contained in the surface treatment film B2-13 according to the embodiment is preferably 40 volume% or more with respect to the total volume of the surface treatment film B2-13. Various known resins can be used as the binder component.

The resin as the binder component is not particularly limited. Examples thereof include a polyurethane resin, a polyester resin, an acrylic resin, an epoxy resin, a fluororesin, a polyamide resin, a polyolefin resin, and a polymer compound obtained by hydrolysis and condensation polymerization of a silane coupling agent. Examples of the resin include a resin obtained by crosslinking such resins with a crosslinking agent component such as a butylated melamine resin, a methylated melamine resin, a butylmethyl-mixed melamine resin, a urea resin, an isocyanate resin, or a mixture thereof. In addition, examples also include an electron beam curable resin and an ultraviolet curable resin. Among them, the resin as the binder component is preferably any one or more of a polyester resin, an epoxy resin, an acrylic resin, and a polyurethane resin. These resins as the binder component may be used alone or in combination of two or more thereof.

For example, when a polyurethane resin is used as the binder component, the polyurethane resin is preferably a polyether-based polyurethane resin. This is because the use of the polyether-based polyurethane resin can prevent the occurrence of hydrolysis due to acid or alkali as compared with a polyester-based polyurethane resin, and adhesion during processing and corrosion resistance of the processed portion can be secured by suppressing formation of a hard and brittle film as compared with a polycarbonate-based polyurethane resin.

Whether the polyurethane resin is contained can be determined based on whether characteristic absorption at 3330 cm⁻¹ (N-H stretching), 1730 cm⁻¹ (C=O stretching), 1530 cm⁻¹ (C-N), and 1250 cm⁻¹ (C-O) is observed in an infrared absorption spectrum obtained by infrared spectroscopy. As for the content of the polyurethane resin, a calibration curve showing a relationship between the content and a strength of characteristic absorption is prepared using a sample in which the content is known in advance, so that the content can be specified from the obtained strength of characteristic absorption.

In addition, it is possible to determine the presence and the content of resins other than the polyurethane resin similarly to the polyurethane resin by focusing on characteristic absorption derived from functional groups specific to each resin. As the component in the treatment liquid for dispersing or dissolving the resin, water or a solvent can be used.

### [Additive]

The surface treatment film B2-13 according to the embodiment can contain various additives such as a leveling agent, a water-soluble solvent, a metal stabilizer, and an etching inhibitor as an additive during preparation of a treatment liquid before film formation as long as the effects of the present Element Technology are not impaired.

Examples of the leveling agent include polyethylene oxide adduct or a polypropylene oxide adduct and an acetylene glycol compound, as nonionic or cationic surfactants.

Examples of the water-soluble solvent include alcohols such as ethanol, isopropyl alcohol, t-butyl alcohol, and propylene glycol, cellosolves such as ethylene glycol monobutyl ether and ethylene glycol monoethyl ether, esters such as ethyl acetate and butyl acetate, and ketones such as acetone, methyl ethyl ketone, and methyl isobutyl ketone.

Examples of the metal stabilizer include chelate compounds such as ethylenediaminetetraacetic acid (EDTA) and diethylenetriaminepentaacetic acid (DTPA).

Examples of the etching inhibitor include amine compounds such as ethylenediamine, triethylenepentamine, guanidine, and pyrimidine.

The content of the binder component and the additive can also be measured in the same manner as in the case of the compounds A and B.

### [Silica]

The surface treatment film B2-13 according to the embodiment may contain silica. When silica is contained, the content of silica is preferably 0.01 to 0.3 g/m². When silica is contained in an amount of 0.01 g/m² or more, it is possible to prevent the film from being defected due to contact with another steel sheet, equipment, or the like. When silica is contained in an amount exceeding 0.3 g/m², the effect of increasing temperature cannot be expected and the cost becomes high, which is not preferable from the viewpoint of economic efficiency. As silica is a substance having low electrical conductivity, when silica is contained in an amount exceeding 0.3 g/m², it is not preferable in terms of weldability after hot stamping. The content of silica in the surface treatment film B2-13 when silica is contained is preferably as small as possible. The content of silica in the surface treatment film is more preferably 0.10 g/m² or less, and still more preferably 0.05 g/m² or less.

### [Film Thickness of Surface Treatment Film]

The average film thickness H of the surface treatment film B2-13 containing the above components is preferably, for example, 0.5 to 15.0 µm.

When the average film thickness of the surface treatment film B2-13 is less than 0.5 µm, the temperature rising rate cannot be sufficiently increased during hot stamping due to insufficient radiation heat absorption. On the other hand, when the average film thickness of the surface treatment film B2-13 is more than 15.0 µm, the heat capacity of the surface treatment film B2-13 itself increases, and becomes a barrier when heat is transferred to the aluminum coating layer B2-12. As a result, the temperature rising rate cannot be sufficiently improved, and the cost is increased, which is not preferable in terms of economy. When the average film thickness of the surface treatment film B2-13 is within the range of 0.5 to 15.0 µm, the temperature rising rate can be improved. The average film thickness of the surface treatment film B2-13 is more preferably 1.0 to 7.0 µm.

### <Base Treatment Film>

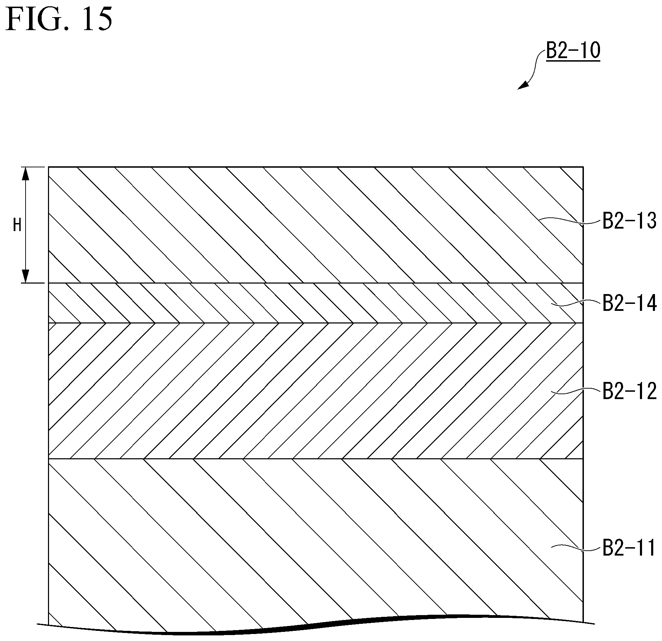

As described in FIG. 15, a base treatment film (chemical conversion treatment layer) B2-14 may be provided between the surface treatment film B2-13 and the aluminum coating layer 12 in order to improve adhesion of the surface treatment film B2-13. FIG. 15 is a schematic view for illustration, and dimensions of the surface treatment film B2-13, the aluminum coating layer B2-12, the base treatment film B2-14, and the like do not necessarily indicate a preferred embodiment and are not necessarily limited to the dimensions and the like in FIG. 15.

The base treatment film B2-14 may contain any one or more selected from a resin, a silane coupling agent, a zirconium compound, silica, phosphoric acid and a salt thereof, fluoride, and a vanadium compound. When such substances are contained, film formability after the chemical conversion treatment agent is applied, a barrier property (denseness) of the film against corrosion factors such as moisture and a corrosive ion, film adhesion to the coated surface, and the like are further improved, which contributes to raising the corrosion resistance of the film. In particular, when the chemical conversion treatment layer contains any one or more of a silane coupling agent and a zirconium compound, a crosslinked structure is formed in the film, and bonding with the coated surface is further strengthened, so that the adhesion and the barrier property of the film can be enhanced.

When the base treatment film B2-14 contains any one or more of silica, phosphoric acid and a salt thereof, fluoride, and a vanadium compound, corrosion resistance can be improved by forming a precipitated film or a passive film as an inhibitor on a coated surface or a surface of the base steel sheet.

### [Adhesion Amount of Base Treatment Film B2-14]

The adhesion amount of the base treatment film B2-14 per one surface of the coating layer is preferably 10 to 1000 mg/m² in terms of solid content. When the adhesion amount of the base treatment film B2-14 is less than 10 mg/m², sufficient working adhesion and corrosion resistance are not secured. When the adhesion amount of the base treatment film 14 exceeds 1000 mg/m², working adhesion may be deteriorated.

The adhesion amount of the base treatment film B2-14 per one surface of the coating layer is more preferably 20 to 800 mg/m², and still more preferably 50 to 600 mg/m².

### <Aluminum Coating Layer>

The aluminum-coated steel sheet B2-10 for hot stamping according to the embodiment preferably includes an aluminum coating layer B2-12 on the base steel sheet B2-11 on at least one surface of the base steel sheet B2-11. When the aluminum coating layer B2-12 is included, corrosion resistance after coating can be further improved after hot stamping. In addition, the presence of the aluminum coating layer B2-12 between the base steel sheet B2-11 and the surface treatment film B2-13 can prevent iron scales from being generated by heating during hot stamping. Iron scales become a manufacturing load because iron scales contaminate a heating furnace or adheres to a roll used for conveyance. Therefore, when iron scales are generated, a step such as shot blasting is required to remove the iron scales, which is not economically preferable.

The type of the aluminum coating layer is not particularly limited. Examples of the composition of the aluminum coating layer include aluminum coating, Al-Si coating, Al-Si-Mg, and Al-Si-Ca coating.

For example, the chemical composition (average chemical composition) of the aluminum coating layer may be a coating layer containing, in terms of mass%, Al: 80.0 to 95.0%, Si: 2.0 to 15.0%, Fe: 1 to 15.0%, Cr: 0% or more and less than 1.0%, Mo: 0% or more and less than 1.0%, Zn: 0% or more and less than 1.0%, V: 0% or more and less than 1.0%, Ti: 0% or more and less than 1.0%, Sn: 0% or more and less than 1.0%, Ni: 0% or more and less than 1.0%, Cu: 0% or more and less than 1.0%, W: 0% or more and less than 1.0%, Bi: 0% or more and less than 1.0%, Mg: 0% or more and less than 1.0%, Ca: 0% or more and less than 1.0%, and remainder: impurities.

When the Al content in the aluminum coating layer is less than 80.0%, corrosion resistance after hot stamping (corrosion resistance in a hot-stamp formed body) deteriorates. Therefore, the Al content is preferably 85.0% or more. The Al content is more preferably 88.0% or more. Meanwhile, when the Al content in the aluminum coating layer is more than 95.0%, coating adhesion may deteriorate. Therefore, the Al content is preferably 95.0% or less. The Al content is more preferably 92.0% or less.

When the Si content in the aluminum coating layer is less than 2.0%, coating adhesion may deteriorate. Therefore, the Si content is preferably 2.0% or more. The Si content is more preferably 3.0% or more, and still more preferably 4.0% or more. Meanwhile, when the Si content in the aluminum coating layer is more than 15.0%, coating adhesion may deteriorate. Therefore, the Si content is preferably 15.0% or less. The Si content is more preferably 13.0% or less.

The Fe content is preferably 1.0% or more and 15.0% or less.

The chemical composition of the aluminum coating layer can be measured by a fluorescent X-ray method based on JIS G K 0119:2008. That is, the relationship between the X-ray intensity and the content is obtained in advance using a sample in which the content of the target element is known. From a calibration curve created based on the obtained relationship, the content of each element, that is, the chemical composition, of an unknown sample can be determined.

### [Adhesion Amount of Aluminum Coating Layer]

The aluminum coating layer B2-12 is provided to one surface or both surfaces of the base steel sheet B2-11. The adhesion amount is preferably 5 to 140 g/m² per one surface.

When the adhesion amount per one surface is less than 5 g/m², iron scales are generated on the surface of the base steel sheet in the heating step of hot stamping, and a step of removing the scales is required. On the other hand, when the adhesion amount per one surface is more than 140 g/m², it takes time to progress the alloying reaction between Al and Fe in the hot stamping heating step necessary for enhancing the corrosion resistance after coating, which is not preferable from the viewpoint of productivity. Therefore, the adhesion amount of the aluminum coating layer 12 is preferably 5 to 140 g/m² per one surface.

### <Base Steel Sheet>

Next, the base steel sheet B2-11 of the aluminum-coated steel sheet B2-10 for hot stamping according to the embodiment will be described. The base steel sheet B2-11 is not particularly limited as long as it is a steel sheet that can be suitably used for a hot stamping method. The chemical composition of the base steel sheet B2-11 applicable to the aluminum-coated steel sheet B2-10 for hot stamping according to the embodiment may be, for example, in terms of mass%:
C: 0.03 to 0.60%,
Si: 0.01 to 0.60%,
Mn: 0.50 to 3.00%,
P: 0.050% or less,
S: 0.020% or less,
Al: 0.100% or less,
Ti: 0.01 to 0.10%,
B: 0.0001 to 0.0100%,
N: 0.010% or less,
Cr: 0 to 1.00%,
Ni: 0 to 2.00%,
Cu: 0 to 1.000%,
Mo: 0 to 1.00%,
V: 0 to 1.00%,
Nb: 0 to 1.00%,
Sn: 0 to 1.00%,
W: 0 to 1.00%,
Ca: 0 to 0.010%,
REM: 0 to 0.30%, and
remainder: Fe and impurities.

Examples of the form of the base steel sheet B2-11 include a steel sheet such as a hot-rolled steel sheet or a cold-rolled steel sheet.

Hereinafter, the preferred range of each element of the base steel sheet B2-11 of the aluminum-coated steel sheet B2-10 for hot stamping and the reason therefor will be described in detail. In the following description of the chemical composition of the base steel sheet B2-11, the expression "%" means "mass%" unless otherwise specified.

### [C: 0.03 to 0.60%]

C is contained to ensure the intended mechanical strength. When the C content is 0.03% or more, sufficient improvement in mechanical strength is obtained, and the effect of containing C is sufficiently obtained. Therefore, the C content is preferably 0.03% or more. The C content is more preferably 0.20% or more. Meanwhile, when the C content is 0.60% or less, it is possible to suppress deterioration in elongation and drawing while improving the strength of the steel sheet. Therefore, the C content is preferably 0.60% or less. The C content is more preferably 0.40% or less.

### [Si: 0.01 to 0.60%]

Si is one of the strength improving elements for improving mechanical strength, and is contained in order to secure the intended mechanical strength, similarly to C. When the Si content is 0.01% or more, the strength improving effect is sufficiently exhibited, and the mechanical strength is sufficiently improved. Therefore, the Si content is preferably 0.01% or more. The Si content is more preferably 0.10% or more. Meanwhile, since Si is also an easily oxidized element, when the Si content is 0.60% or less, deterioration in wettability at the time of melt Al coating due to the influence of an oxide of Si formed on the surface layer of the steel sheet is suppressed, and occurrence of bare spots can be suppressed. Therefore, the Si content is preferably 0.60% or less. The Si content is more preferably 0.40% or less.

### [Mn: 0.50 to 3.00%]

Mn is one of the strengthening elements that strengthen steel and is also one of the elements that enhances hardenability. Furthermore, Mn is an element effective for preventing hot embrittlement due to S, which is an impurity. When the Mn content is 0.50% or more, such effects can be sufficiently obtained. Therefore, in order to reliably exhibit the above effects, the Mn content is preferably 0.50% or more. The Mn content is more preferably 0.80% or more. Meanwhile, since Mn is an austenite forming element, when the Mn content is 3.00% or less, the residual austenite phase does not excessively increase, and deterioration in strength is suppressed. Therefore, the Mn content is preferably 3.00% or less. The Mn content is more preferably 1.50% or less.

### [P: 0.050% or less]

P is an impurity contained in steel. When the P content is 0.050% or less, it is possible to prevent P contained in a steel sheet from segregating at a grain boundary of the steel sheet and reducing toughness of the base metal of a hot-stamped formed body, and it is possible to suppress deterioration in delayed fracture resistance of the steel sheet. Therefore, the P content is preferably 0.050% or less, and the P content is preferably as small as possible. If necessary, the P content may be 0.045% or less or 0.040% or less. The lower limit of the P content is 0%, but the lower limit may be 0.001% or 0.005%.

### [S: 0.020% or less]

S is an impurity contained in steel. When the S content is 0.020% or less, it is possible to prevent S contained in the steel sheet from forming sulfide and reducing toughness of the steel sheet, and it is possible to suppress deterioration in delayed fracture resistance of the steel sheet. Therefore, the S content is preferably 0.020% or less, and the S content is preferably as small as possible. If necessary, the S content may be 0.015% or less or 0.010% or less. The lower limit of the S content is 0%, but the lower limit may be 0.001% or 0.002%.

### [Al: 0.100% or less]

Al is generally used for deoxidizing steel. Meanwhile, when the Al content is 0.100% or less, an increase in the Ac3 point of the steel sheet is suppressed, so that the heating temperature required for ensuring hardenability of the steel during hot stamping can be reduced, which is desirable in terms of hot stamping manufacture. Therefore, the Al content in the steel sheet is preferably 0.100% or less, more preferably 0.050% or less, and still more preferably 0.030% or less. The lower limit of the Al content is 0%, but the lower limit may be 0.001%, 0.003%, or 0.007%.

### [Ti: 0.01 to 0.10%]

Ti is one of the strengthening elements. When the Ti content is 0.01% or more, a strength improving effect and an oxidation resistance improving effect can be sufficiently obtained. Therefore, in order to reliably exhibit the above effects, the Ti content is preferably 0.01% or more. The Ti content is more preferably 0.03% or more. Meanwhile, when the Ti content is 0.10% or less, for example, formation of carbides and nitrides is suppressed, softening of steel can be suppressed, and the intended mechanical strength can be sufficiently obtained. Therefore, the Ti content is preferably 0.10% or less. The Ti content is more preferably 0.08% or less.

### [B: 0.0001 to 0.0100%]

B acts during quenching and has an effect of improving strength. When the B content is 0.0001 % or less, such strength improving effect can be sufficiently obtained. Therefore, the B content is preferably 0.0001% or more. The B content is more preferably 0.0010% or more. Meanwhile, when the B content is 0.0100% or less, formation of inclusions is reduced, embrittlement of the steel sheet is suppressed, and deterioration in fatigue strength can be suppressed. Therefore, the B content is preferably 0.0100% or less. The B content is more preferably 0.0040% or less.

### [N: 0.010% or less]

N is an impurity contained in steel. When the N content is 0.010% or less, formation of nitrides due to N contained in the steel sheet is suppressed, and deterioration in toughness of the steel sheet can be suppressed. Further, when B is contained in the steel sheet, N contained in the steel sheet is prevented from bonding with B and reducing the amount of B in solid solution, and deterioration in hardenability improving effect of B can be suppressed. Therefore, the N content is preferably 0.010% or less, and the N content is more preferably as small as possible.

The base steel sheet of the steel sheet for hot stamping according to the embodiment may further contain, as an optional element, one or more elements selected from the group consisting of Cr, Mo, Ni, Cu, V, Nb, Sn, W, Ca, and REM. The lower limit of the content of such elements is 0%.

### [Cr: 0 to 1.00%]

Cr is an element that improves hardenability of the steel sheet. In order to sufficiently obtain such effect, the Cr content is preferably 0.01% or more. Meanwhile, when the Cr content is 1.00% or less, it is possible to suppress an increase in cost while sufficiently obtaining the effect. Therefore, the Cr content when contained is preferably 1.00% or less. If necessary, the Cr content may be 0.70% or less or 0.50% or less.

### [Ni: 0 to 2.00%]

Ni is an element capable of enhancing hardenability of steel and stably securing strength of a steel sheet member after quenching. In order to sufficiently exhibit such effect, the Ni content is preferably 0.10% or more. Meanwhile, when the Ni content is 2.00% or less, economic efficiency is enhanced while the above effect is sufficiently obtained. Therefore, the Ni content when contained is preferably 2.00% or less. If necessary, the Ni content may be 1.20% or less, 0.80% or less, or 0.50% or less.

### [Cu: 0 to 1.000%]

Cu is an element capable of enhancing hardenability of steel and stably securing strength of a steel sheet member after quenching. Cu also improves pitting corrosion resistance in a corrosive environment. In order to sufficiently exhibit such effects, the Cu content is preferably 0.100% or more. Meanwhile, when the Cu content is 1.000% or less, economic efficiency is enhanced while the above effects are sufficiently obtained. Therefore, the Cu content when contained is preferably 1.000% or less. If necessary, the Cu content may be 0.600% or less, 0.400% or less, or 0.200% or less.

### [Mo: 0 to 1.00%]

Mo is an element capable of enhancing hardenability of steel and stably securing strength of a steel sheet member after quenching. In order to sufficiently exhibit such effect, the Mo content is preferably 0.10% or more. Meanwhile, when the Mo content is 1.00% or less, economic efficiency is enhanced while the above effect is sufficiently obtained. Therefore, the Mo content when contained is preferably 1.00% or less. If necessary, the Mo content may be 0.60% or less, 0.40% or less, or 0.20% or less.

### [V: 0 to 1.00%]

V is an element capable of enhancing hardenability of steel and stably securing strength of a steel sheet member after quenching. In order to sufficiently exhibit such effect, the V content is preferably 0.10% or more. Meanwhile, when the V content is 1.00% or less, economic efficiency is enhanced while the above effect is sufficiently obtained. Therefore, the V content when contained is preferably 1.00% or less. If necessary, the V content may be 0.60% or less, 0.40% or less, or 0.20% or less.

### [Nb: 0 to 1.00%]

Nb is an element capable of enhancing hardenability of steel and stably securing strength of a steel sheet member after quenching. In order to sufficiently exhibit such effect, the Nb content is preferably 0.01% or more. Meanwhile, when the Nb content is 1.00% or less, economic efficiency is enhanced while the above effect is sufficiently obtained. Therefore, the Nb content when contained is preferably 1.00% or less. If necessary, the Nb content may be 0.50% or less, 0.20% or less, or 0.10% or less.

### [Sn: 0 to 1.00%]

Sn is an element that improves pitting corrosion resistance in a corrosive environment. In order to sufficiently exhibit such effect, the Sn content is preferably 0.01% or more. Meanwhile, when the Sn content is 1.00% or less, deterioration in grain boundary strength is suppressed, and deterioration in toughness can be suppressed. Therefore, the Sn content when contained is preferably 1.00% or less. If necessary, the Sn content may be 0.40% or less, 0.10% or less, or 0.05% or less.

### [W: 0 to 1.00%]

W is an element capable of enhancing hardenability of steel and stably securing strength of a steel sheet member after quenching. W also improves pitting corrosion resistance in a corrosive environment. In order to sufficiently exhibit such effects, the W content is preferably 0.01% or more. Meanwhile, when the W content is 1.00% or less, economic efficiency is enhanced while the above effects are sufficiently obtained. Therefore, the W content when contained is preferably 1.00% or less. If necessary, the W content may be 0.60% or less, 0.40% or less, or 0.20% or less.

### [Ca: 0 to 0.010%]

Ca is an element having an effect of refining inclusions in steel and improving toughness and ductility after quenching. In order to sufficiently exhibit such effects, the Ca content is preferably 0.001% or more, and more preferably 0.002% or more. Meanwhile, when the Ca content is 0.010% or less, the increase in cost can be suppressed while the effects are sufficiently obtained. Therefore, the Ca content when contained is preferably 0.010% or less, and more preferably 0.004% or less. If necessary, the Ca content may be 0.008% or less, 0.006% or less, or 0.0004% or less.

### [REM: 0 to 0.30%]

Similarly to Ca, REM is an element having an effect of refining inclusions in steel and improving toughness and ductility after quenching. In order to sufficiently exhibit such effects, the REM content is preferably 0.001 % or more, and more preferably 0.002% or more. Meanwhile, when the REM content is 0.30% or less, the increase in cost can be suppressed while the effects are sufficiently obtained. Therefore, the REM content when contained is preferably 0.30% or less, and more preferably 0.20% or less. If necessary, the REMs content may be 0.10% or less, 0.05% or less, or 0.02% or less.

Here, REM refers to 17 elements in total of Sc, Y, and lanthanoids, and the REM content means the total amount of the elements. REM is added to molten steel using, for example, an Fe-Si-REM alloy, which contains, for example, Ce, La, Nd, and Pr.

The remainder other than the above components are Fe and impurities. In addition to the above components, the base steel sheet B2-11 may contain impurities mixed in a manufacturing step or the like as long as the effects of the present Element Technology are not impaired. Examples of such impurities include Zn (zinc) and Co (cobalt).

The chemical composition of the base steel sheet B2-11 of the aluminum-coated steel sheet B2-10 for hot stamping described above may be measured by a general analysis method. Measurement is performed by, for example, inductively coupled plasma-atomic emission spectrometry (ICP-AES). C and S may be measured by a combustion-infrared absorption method, N may be measured by an inert gas fusion-thermal conductivity method, and O may be measured by an inert gas fusion-non-dispersive infrared absorption method. When the steel sheet for hot stamping includes a coating layer on the surface, the chemical composition may be analyzed after the coating layer on the surface is removed by mechanical grinding.

In the surface of the coated steel sheet including the base steel sheet B2-11 having the chemical composition described above and the aluminum coating layer B2-12, the portion to which the surface treatment film B2-13 is provided can be formed into a hot stamping member having high tensile strength by heating and quenching using a hot stamping method. In addition, the hot stamping method enables press working in a softened state at high temperatures, so that the steel sheet can be easily formed.

### (Manufacturing Method of Aluminum-coated Steel sheet for Hot Stamping)

Hereinafter, an example of the manufacturing method of the aluminum-coated steel sheet for hot stamping according to the embodiment will be described. The manufacturing method of the aluminum-coated steel sheet for hot stamping according to the embodiment is not particularly limited as long as the aluminum-coated steel sheet has the above-described configuration. The following manufacturing method is one example for manufacturing the aluminum-coated steel sheet for hot stamping according to the embodiment and is a preferred example of the manufacturing method of the aluminum-coated steel sheet for hot stamping according to the embodiment.

<Base Steel Sheet>

The base steel sheet to be subjected to aluminum coating is not particularly limited as long as it is a steel sheet that can be suitably used for a hot stamping method. Examples of the form of the base steel sheet include a steel sheet such as a hot-rolled steel sheet or a cold-rolled steel sheet.

### <Formation of Aluminum Coating Layer>

In addition, examples of the method of forming the aluminum coating layer include a hot-dip coating method, an electro coating method, physical vapor deposition, chemical vapor deposition, and the like, but the present invention is not particularly limited thereto. The aluminum coating layer is formed on the surface of the base steel sheet by a known method.

### <Method for Producing Surface Treatment Film>

The method for producing the surface treatment film is not particularly limited. Examples thereof include a method in which each film-forming component is mixed and stirred with a disperser, and the dissolved or dispersed mixed treatment liquid is applied on the coating layer and then dried. The mixed treatment liquid is prepared, for example, by preparing a treatment liquid of the compound A and a treatment liquid of the compound B, adjusting the pH, and then mixing each treatment liquid with another optional component such as a resin.

Hereinafter, the method will be specifically described.

Examples of the compound A contained in the surface treatment film include carbon black, graphite, and soot. In the method for producing the surface treatment film, it is preferable to use a treatment liquid in which these powders are dispersed in water or the like.

The compound A is pulverized with a machine or the like so that the powder diameter (particle size) is between 30 to 300 nm, and then the compound A is charged into a sodium hydroxide-containing treatment liquid that is adjusted to pH 9.0 to 13.0. Thereafter, the treatment liquid that has been charged with the compound A is subjected to a pretreatment by stirring at 50 to 80°C for 1 to 4 days. Thereby, the compound A having a particle size of 30 to 300 nm can be more stably dispersed in the treatment liquid. **In** addition, when the surface treatment film is formed, the compound A can be uniformly present in the film layer, so that the temperature rising characteristics can be improved.

Furthermore, when the treatment liquid charged with the compound A and having a pH of 9.0 to 13.0 is heated at 50 to 80°C for 1 to 4 days (that is, satisfying the above pretreatment conditions), the carbon concentration of the compound A in the film can also be increased. When the treatment liquid is subjected to the pretreatment, the outside area of the compound A particle having a low carbon concentration (for example, a portion having a high ratio of oxygen (O), nitrogen (N), sulfur (S), or the like) is dissolved by the sodium hydroxide-containing treatment liquid, and the inside area of the particle having a high carbon concentration remains. This also makes it possible to increase the carbon concentration of the compound A in the film.

On the other hand, when the above-described pretreatment conditions are not satisfied (for example, when the stirring time is less than one day, etc.), the dissolution amount of the outside area of the compound A particle having a low carbon concentration is reduced, and the carbon concentration of the compound A in the film relatively decreases. Therefore, in order to sufficiently increase the carbon concentration of the compound A in the film, it is necessary to control the conditions of the pretreatment before applying the treatment liquid.

Similarly, for the compound B that is an oxide or a fluoride of the metal element M and has a rutile structure, it is preferable to use a treatment liquid in which the powder is dispersed in water or a solvent.

The compound B is pulverized with a machine or the like so that the powder diameter (particle size) is between 10 to 300 nm, then charged into a sodium fluoride-containing treatment liquid that is adjusted to pH 3 to 7 and subjected to a pretreatment of stirring at 50 to 80°C for 4 to 24 hours. Thus, the compound B having a particle size of 10 to 300 nm can be more stably dispersed in the treatment liquid. As a result, when the surface treatment film is formed, the compound B can be present in the film in the form described below, thereby improving the temperature rising characteristics.

Using a mixed treatment liquid in which a binder component (resin) is appropriately added to the raw materials and the treatment liquid screened as described above, the surface treatment film of the embodiment can be obtained.

The method for producing the mixed treatment liquid obtained by combining the treatment liquid of the compound A and the treatment liquid of the compound B is not particularly limited. Examples thereof include a method in which the treatment liquid containing the compound A and the treatment liquid containing the compound B obtained by the above method are mixed, stirred with a disperser, dissolved or dispersed, and then added with a binder (resin) or silica as necessary. In order to improve solubility or dispersibility of each of the film-forming components, a known hydrophilic solvent or the like may be added as necessary. Acid, alkali, or the like may be added to the treatment liquid to adjust pH as long as the performance thereof is not impaired.

Hereinafter, the method for producing the mixed treatment liquid will be specifically described.

In order to realize the surface treatment film satisfying the above formulas (1) and (2), first, each of the compound A and the compound B is dispersed in water or a liquid mixture of water and a solvent such as ethanol, and each treatment liquid is prepared by the above preparation method. Thereafter, the binder component (resin or the like) and the treatment liquid of the compound A are mixed, and subsequently the treatment liquid of the compound B is mixed to prepare a mixed treatment liquid. The treatment liquid of the compound B is adjusted to pH 8 or higher using ammonia water or the like after the treatment liquid of the compound B having a pH of 3 to 7 is stirred at 30 to 50°C for 4 to 25 hours and just before mixed with the treatment liquid of the compound A. When silica is included in the surface treatment film, silica is preferably added after the treatment liquid of the compound B is mixed with the liquid mixture.

In order that the content of the compound A is 30% or more at the interface side position P in the surface treatment film, the concentration (content) of the compound A in the mixed treatment liquid is 15 mass% or more in terms of dry weight (mass) ratio. In order that the content of the compound A is 80% or less at the interface side position P in the surface treatment film, the concentration (content) of the compound A in the mixed treatment liquid is 50 mass% or less in terms of dry weight (mass) ratio.

In order to satisfy the formulas (1) and (2) relating to the concentration of the metal element M, the concentration (content) of the compound B in the mixed treatment liquid is 3 to 50 mass% in terms of dry weight (mass) ratio.

In the mixed treatment liquid, the concentration (content) of the compound A and the concentration (content) of the compound B is 18 to 90% in total in terms of dry weight (mass) ratio.

Next, preferably, the obtained mixed treatment liquid is stirred at 150 rpm or more and 300 rpm just before application, and the mixed treatment liquid after stirring is applied within 5 seconds.

In addition, in order to realize the surface treatment film satisfying the above formulas (1) and (2), the mixed treatment liquid has a dynamic viscosity of 3 to 16 mPa·s at a shear rate of 10⁻³/s and a surface tension of 20 to 60 mN/m.

When the dynamic viscosity is less than 3 mPa·s, C_{bM}/C_{tM} exceeds 10.0 in the formula (2), and there is a possibility that a desired temperature rising rate cannot be obtained. Therefore, the dynamic viscosity of the mixed treatment liquid is 3 mPa·s or more, and preferably 6 mPa·s or more. On the other hand, when the dynamic viscosity is more than 16 mPa·s, C_{bM}/C_{tM} is less than 1.5 in the formula (2), and there is a possibility that a desired temperature rising rate cannot be obtained. Therefore, the dynamic viscosity of the mixed treatment liquid is 16 mPa·s or less, and preferably 12 mPa·s or less.

When the surface tension of the mixed treatment liquid is less than 20 mN/m, C_{bM} is less than 1 mass%, and a desired temperature rising rate cannot be obtained. Therefore, the surface tension of the mixed treatment liquid is 20 mN/m or more, and preferably 30 mN/m or more. On the other hand, when the surface tension exceeds 60 mN/m, a desired temperature rising rate cannot be obtained, either. Therefore, the surface tension of the mixed treatment liquid is 60 mN/m or less, and preferably 40 mN/m or less.

In order to form the surface treatment film layer, the treatment liquid is applied onto the aluminum coating layer (or the chemical conversion treatment layer), and the coating film is heated and dried. The method for applying the treatment liquid is not particularly limited, and generally known application methods such as roll coating and immersion can be used.

In order to control the compound B in a predetermined concentration distribution as in the formulas (1) and (2), the heating and drying temperature after application is 55 to 120°C as an achieving temperature. The "achieving temperature" as used herein means the temperature of the surface of the base steel sheet. When the achieving temperature is less than 55°C, the moisture evaporation rate is low, and sufficient film formability cannot be obtained, so that film adhesion may be insufficient. Furthermore, when the achieving temperature is too low, the evaporation rate of the treatment liquid is low, so that the metal element M in the compound B is concentrated on the Al-coating layer side, and C_{bM}/C_{tM} becomes excessively high. As a result, heat absorption is insufficient on the surface side of the surface treatment film B2-13, and the temperature rising characteristics may be deteriorated during hot stamping. On the other hand, when the achieving temperature is higher than 120°C, the binder component may be modified due to thermal decomposition or the like, and adhesion or corrosion resistance may be deteriorated. The achieving temperature is more preferably 65 to 100°C.

In addition, when the time during which the temperature of the surface of the base steel sheet reaches 65°C from 25°C is t1 (when the temperature does not reach 65°C, the final achieving temperature of the base metal), and the time during which the temperature decreases from 65°C (or the final achieving temperature of the base metal) to 40°C by cooling is t2, **t1** is 1.5 to 14.0 seconds, t2 is 0.5 to 8.6 seconds, and tl/t2 is 0.35 to 10.0. This makes it easy to control the concentration distribution C_{bM}/C_{tM} of the compound B in the surface treatment film, and the temperature rising rate is further improved.

Further, when the time during which the temperature of the surface of the base steel sheet reaches 55°C from 25°C is t3, t3 is 5.0 to 12.0 seconds. As a result, the content of the compound A can be 30 to 80% at the interface side position P.

The heating and drying method for the applied treatment liquid is not particularly limited. Examples thereof include a method in which hot blast, induction heating, near infrared light, direct flame, or the like is used alone or in combination. As the component in the treatment liquid for dispersing or dissolving the resin, water or a solvent can be used.

### (Manufacturing Method of Hot Stamping Member)

Various hot stamping members exemplified as frame components for automobiles can be manufactured using the aluminum-coated steel sheet for hot stamping in which the surface treatment film as described above is provided to at least one entire surface.

First, for example, the aluminum-coated steel sheet provided with the surface treatment film is subjected to various processing such as cutting and punching by a press to obtain the aluminum-coated steel sheet for hot stamping according to the embodiment.

In addition, the aluminum-coated steel sheet for hot stamping according to the embodiment can also be obtained by providing the surface treatment film to an aluminum-coated steel sheet that has been cut or press-punched. When the film thickness of the surface treatment film is partially reduced, energization is facilitated and spot weldability can be improved, for example, in the application of welding a plurality of steel sheets before hot stamping.

The aluminum-coated steel sheet for hot stamping to which the surface treatment film is provided as described above is hot-stamped. Examples of the heating device include an electric heating furnace, a gas heating furnace, a far-infrared furnace, or a normal heating device including an infrared light heater. The surface on the side on which the surface treatment film is provided to increase emissivity has high heat transfer effect by radiation, and thus the temperature rising rate is high. Therefore, the temperature is rapidly raised to a temperature equal to or higher than an Ac3 point at which the metallographic structure is transformed into an austenite phase. Accordingly, in the manufacturing method of a hot stamping member according to the embodiment, it is possible to further improve the productivity of the hot stamping member by reducing the heating time. In the embodiment, specific heating conditions are not particularly limited, and the heating device or the like to be used may be appropriately controlled.

Next, the heated steel sheet is formed and cooled. A portion heated to a temperature equal to or higher than the Ac3 point temperature at which the metallographic structure of the steel material is transformed into an austenite phase is quenched to increase strength simultaneously with forming. Accordingly, it is possible to obtain a hot stamping member having improved strength.

### (Examples)

Hereinafter, examples of the present Element Technology will be described, but the conditions in the examples are merely one condition example adopted to confirm the enablement and effects of the present Element Technology, and the present Element Technology is not limited to the condition example. The present Element Technology can adopt various conditions as long as the object of the present invention is achieved without departing from the gist of the present Element Technology.

As the base steel sheet, a steel sheet having high mechanical strength (various properties related to mechanical deformation and fracture such as tensile strength, yield point, elongation, drawing, hardness, impact value, and fatigue strength) is preferably used.

The chemical composition of the base steel sheet before coating used for the steel sheet for hot stamping shown in the following Examples are shown in Table 11 below.

**[Table 11]**

| Steel No. | Chemical composition (mass%) | | | | | | | | | Remainder :Fe and an impurity | | | | | | | | | |
|---|---|---|---|---|---|---|---|---|---|---|---|---|---|---|---|---|---|---|---|
| | C | Si | Mn | P | S | A1 | Ti | B | N | Cr | Cu | Ni | Nb | V | Mo | W | Sn | Ca | REM |
| S1 | 0.34 | 0.60 | 1.01 | 0.014 | 0.004 | 0.104 | 0.02 | 0.0025 | 0.004 | 0.23 | - | - | - | - | - | - | - | - | - |
| S2 | 0.25 | 0.21 | 2.01 | 0.023 | 0.004 | 0.011 | 0.03 | 0.0087 | 0.005 | 0.21 | 0.004 | 0.07 | - | - | - | - | - | - | - |
| S3 | 0.17 | 0.25 | 0.95 | 0.034 | 0.004 | 0.042 | 0.02 | 0.0002 | 0.003 | - | - | - | - | - | - | 0.02 | - | - | - |
| S4 | 0.25 | 0.21 | 2.01 | 0.041 | 0.004 | 0.011 | 0.03 | 0.0100 | 0.004 | - | - | 0.02 | - | 0.04 | - | - | - | - | - |
| S5 | 0.27 | 0.03 | 0.90 | 0.023 | 0.008 | 0.010 | 0.02 | 0.0048 | 0.010 | - | - | - | - | - | 0.10 | - | - | - | - |
| S6 | 0.37 | 0.01 | 0.95 | 0.022 | 0.010 | 0.032 | 0.02 | 0.0022 | 0.005 | - | - | - | 0.03 | - | - | - | - | - | - |
| S7 | 0.25 | 0.21 | 0.90 | 0.040 | 0.010 | 0.032 | 0.02 | 0.0029 | 0.008 | - | - | - | - | - | - | - | 0.05 | - | - |
| S8 | 0.33 | 0.12 | 0.50 | 0.022 | 0.008 | 0.036 | 0.04 | 0.0022 | 0.003 | - | - | - | - | - | - | - | - | - | 0.07 |
| S9 | 0.32 | 0.13 | 0.51 | 0.037 | 0.008 | 0.010 | 0.04 | 0.0022 | 0.008 | 0.17 | - | - | - | - | - | - | - | 0.002 | - |
| S10 | 0.10 | 0.14 | 0.53 | 0.019 | 0.009 | 0.041 | 0.04 | 0.0022 | 0.003 | - | - | - | - | - | - | - | - | - | - |

For the base steel sheet (Steel No. S1 to S10) having the chemical composition shown in Table 11, a steel sheet (base steel sheet) having width 100 mm × length 200 mm and a sheet thickness of 2.3 mm was prepared, and an aluminum coating layer and a surface treatment film were provided to both of the entire surfaces of the base steel sheet by the method described later. Here, the notation "-" in Table 11 means that a corresponding element content is 0% in the significant digits (numerical value up to the minimum digit) defined in the embodiment.

First, an aqueous treatment liquid (solvent: water) to which at least one of carbon black (CB), graphite, and soot pulverized so that the powder diameter (particle size) was 30 to 300 nm was added as the compound A, and an aqueous treatment liquid (solvent: water) to which a metal oxide or a metal fluoride pulverized so that the powder diameter (particle size) was 30 to 300 nm was added as the compound B were separately prepared. Then, the treatment liquids were mixed, and the treatment liquid to which a polyurethane resin was further added was applied onto the aluminum coating layer and dried to form a surface treatment film. The film thickness of the surface treatment film was within a range of 1.0 to 2.5 µm, and the same type of film was provided to both surfaces.

In Tables 12A and 12B, the method for producing the surface treatment film such as the types of compounds and additives used are described. The polyurethane resin was added so that the ratio in solid content in the treatment liquid was 10 to 92 mass% in all the production methods in Tables 12A and 12B. In all the production methods of Tables 12A and 12B, sodium fluoride was used as an additive when the compound B was adjusted. When the treatment liquids of the compound A and the compound B were mixed, the dry weight ratios were adjusted as shown in Tables 12A and 12B. The underlines in Tables 12A and 12B indicate that the preferred conditions of the production method of the present Element Technology are not met.

The dynamic viscosity (mPa·s) shown in Tables 12A and 12B is a dynamic viscosity at a shear rate of 10⁻³/s. "Time t1", "Time t2", and "Time t3" shown in Tables 12A and 12B each indicate "time during which the temperature of the surface of the base steel sheet reaches from 25°C to 65°C", "time during which the temperature of the surface of the base steel sheet decreases from 65°C to 40°C", and "time during which the temperature of the surface of the base steel sheet reaches from 25°C to 55°C".

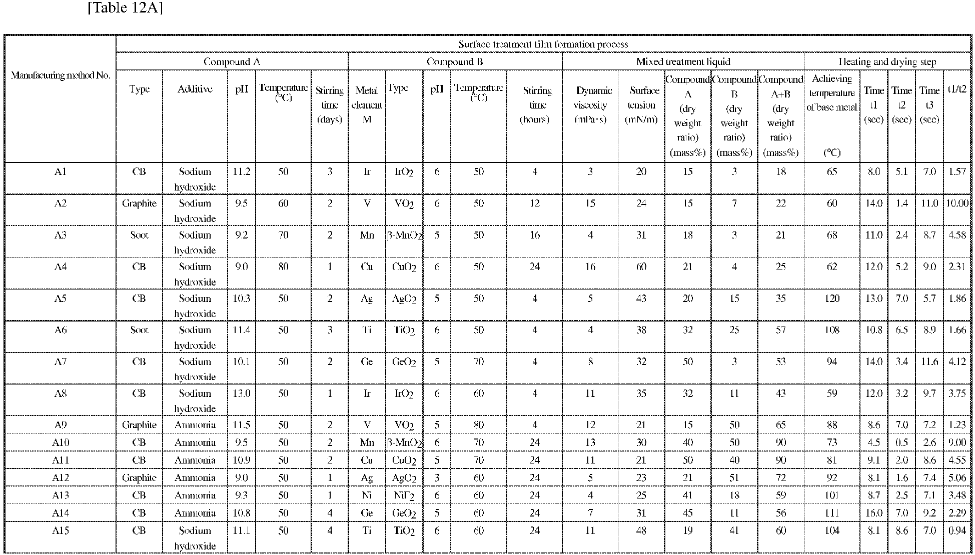

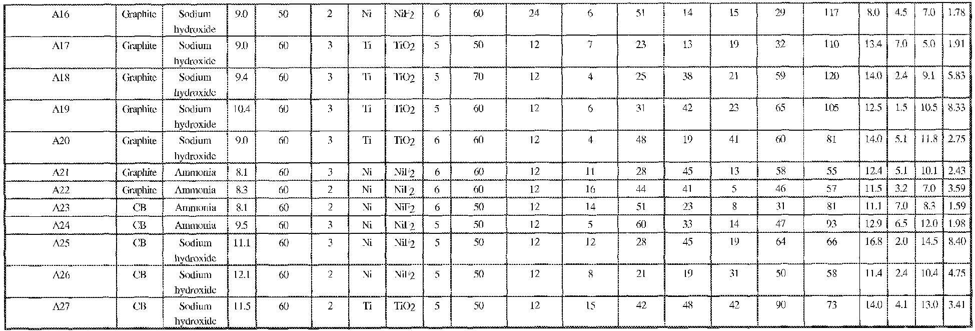

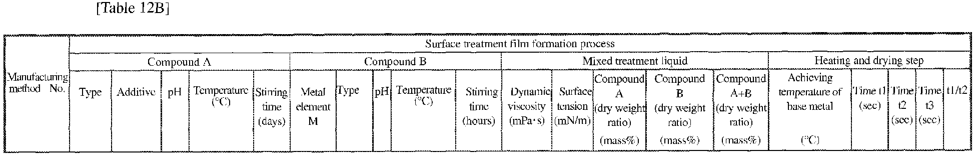

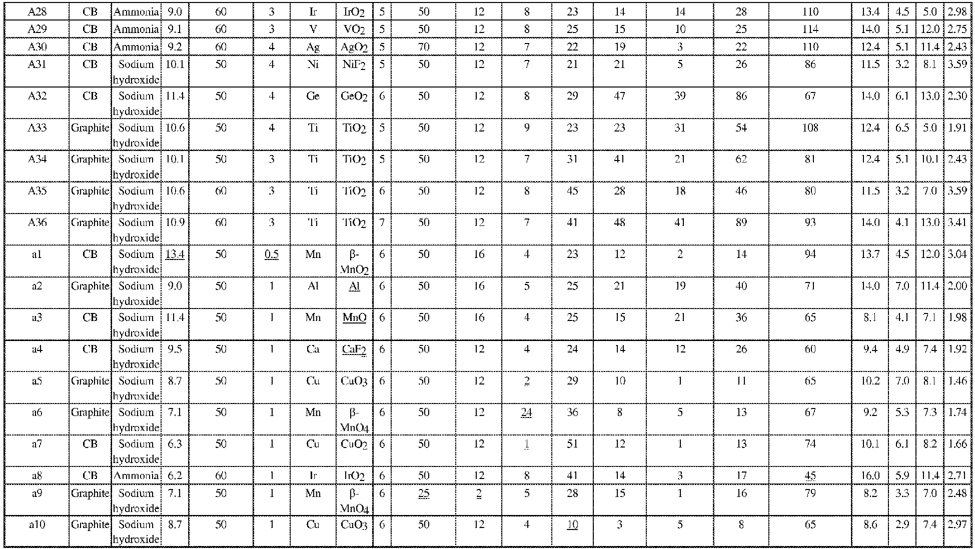

Thereafter, a thermocouple was connected to the surface of the aluminum-coated steel sheet (aluminum-coated steel sheet for HS) provided with the surface treatment film so that the temperature at each position could be measured. Then, the aluminum-coated steel sheet for HS was heated in an electric heating furnace at a set temperature of 940°C, and when the surface temperature reached 930°C, the aluminum-coated steel sheet for HS was taken out from the heating furnace. Thereafter, the aluminum-coated steel sheet for HS was rapidly cooled with a flat mold to obtain a hot stamping member.

In this example, Al-10 mass% Si coating was applied to the base steel sheet by a hot-dip coating method, and then the surface treatment film was provided. In the case of the hot-dip coating method, the base steel sheet was immersed in a coating bath, and then the adhesion amount was adjusted to 100 g/m² per one surface by a gas wiping method.

The film composition, temperature rising rate (temperature rising characteristics), and film adhesion of the surface treatment film were investigated. Note that the hot stamping member is not necessarily used as a member that receives sliding or the like. Therefore, in the example, film adhesion is not an essential characteristic to be provided as a hot stamping member and is a preferable characteristic to be provided.

The evaluation method of each evaluation item is described as follows.

### (1) Temperature Rising Rate (Temperature Rising Characteristics)

### (Rating)

The temperature rising rate in each aluminum-coated steel sheet for HS was calculated from the temperature change obtained from the thermocouple provided in each aluminum-coated steel sheet for HS and the heating time in the electric heating furnace, and evaluation was performed. Specifically, the temperature rising rate from room temperature to 910°C was calculated, and evaluation was performed based on the following evaluation criteria. Rating "2" or higher was regarded as pass.

### (Rating)

4: Temperature rising rate of 5.7 °C/s or more
3: Temperature rising rate of 4.3 °C/s or more and less than 5.7 °C/s
2: Temperature rising rate of 3.5 °C/s or more and less than 4.3 °C/s
1: Temperature rising rate of less than 2.5 °C/s

### (2) Film adhesion

The obtained hot-stamp formed body was placed in a rubbing tester ("Rubbing tester 1509", manufactured by Imoto machinery Co., LTD), and then absorbent cotton impregnated with ethanol was slid (reciprocated) 10 times at stroke distance: 100 mm, speed: 30 reciprocations per minute, and load: 0.5 kgf/cm², and then the film state was evaluated according to the following evaluation criteria.

### (Rating)

3: There is no trace over the entire sliding portion.
2: There is a slight trace in part of the sliding portion.
1: The film disappears from the sliding part.

### <Example 1>

In Table 13, B1 to B16 are inventive examples, and b1 to b10 are comparative examples.

In the examples, a powder and an aqueous dispersion of carbon black (CB), graphite, and soot were used as a compound other than the binder component when the aqueous treatment liquid was prepared.

In Comparative Example b1, the carbon concentration of the compound A was as low as 71%. In Comparative Examples b2 to b4, the compound B did not have a rutile structure. In Comparative Examples b5, b8, and b10, the formula (1) was not satisfied. In Comparative Examples b5, b6, b7, b8, and b9, the formula (2) was not satisfied. In Comparative Examples b1 to b10, the temperature rising rate was rated as 1, whereas in Inventive Examples B1 to B16, the temperature rising rate was rated as 2 or 3.

**[Table 13]**

| Symbol | Manufacturing method No. | Steel No. | Surface treatment film | | | | | | | | | Characteristic evaluation | | Note |
|---|---|---|---|---|---|---|---|---|---|---|---|---|---|---|
| | | | Film thickness (µm) | Compound A | | Compound B | | | | | | Temrperature rising characteristics | Film adhesion | |
| | | | | Carbon concentration (mass%) | Content of compound A (%) | Metal element M | Type of compound | Type | Crystal structure | C_{bM} (mass%) | C_{bM} /C_{tM} | | | |
| B1 | A1 | S2 | 1.0 | 80 | 20 | Ir | IrO₂ | Oxide | Rutile structure | 1 | 3.1 | 3 | 2 | Inventive Example |
| B2 | A2 | S10 | 2.0 | 82 | 20 | V | VO₂ | Oxide | Rutile structure | 7 | 5.2 | 3 | 2 | |
| B3 | A3 | S7 | 2.5 | 83 | 20 | Mn | β-MnO₂ | Oxide | Rutile structure | 14 | 6.7 | 3 | 2 | |
| B4 | A4 | S3 | 1.0 | 81 | 20 | Cu | CuO₂ | Oxide | Rutile structure | 24 | 8.2 | 3 | 2 | |
| B5 | A5 | S2 | 1.3 | 85 | 20 | Ag | AgO₂ | Oxide | Rutile structure | 40 | 8.6 | 3 | 2 | |
| B6 | A6 | S1 | 1.5 | 83 | 30 | Ti | TiO₂ | Oxide | Rutile structure | 22 | 2.0 | 3 | 2 | |
| B7 | A7 | S5 | 2.3 | 91 | 50 | Ge | GeO₂ | Oxide | Rutile structure | 24 | 3.4 | 3 | 2 | |
| B8 | A8 | S1 | 2.1 | 92 | 30 | Ir | IrO₂ | Oxide | Rutile structure | 28 | 6.9 | 3 | 2 | |
| B9 | A9 | S8 | 1.7 | 96 | 20 | v | VO₂ | Oxide | Rutile structure | 29 | 8.0 | 3 | 2 | |
| B10 | A10 | S8 | 1.9 | 86 | 40 | Mn | β-MnO₂ | Oxide | Rutile structure | 24 | 8.1 | 3 | 2 | |
| B11 | A11 | S3 | 1.6 | 86 | 50 | Cu | CuO₂ | Oxide | Rutile structure | 31 | 1.9 | 3 | 2 | |
| B12 | A12 | S1 | 1.5 | 86 | 20 | Ag | AgO₂ | Oxide | Rutile structure | 35 | 2.9 | 3 | 2 | |
| B13 | A13 | S7 | 1.4 | 92 | 40 | Ni | NiF₂ | Fluoride | Rutile structure | 24 | 4.3 | 3 | 2 | |
| B14 | A14 | S6 | 1.3 | 85 | 50 | Ge | GeO₂ | Oxide | Rutile structure | 15 | 1.5 | 2 | 2 | |
| B15 | A15 | S8 | 1.9 | 89 | 20 | Ti | TiO₂ | Oxide | Rutile structure | 19 | 10.0 | 2 | 2 | |
| B16 | A16 | S9 | 2.5 | 91 | 10 | Ni | NiF₂ | Fluoride | Rutile structure | 24 | 9.0 | 2 | 2 | |
| b1 | a1 | S5 | 2.4 | 71 | 10 | Mn | β-MnO₂ | Oxide | Rutile structure | 3 | 4.7 | 1 | 2 | Comparative Example |
| b2 | a2 | S2 | 2.1 | 82 | 20 | Al | Al | Pure metal | Face-centered cubic lattice structure | 11 | 5.2 | 1 | 2 | |
| b3 | a3 | S1 | 1.7 | 83 | 20 | Mn | MnO | Oxide | Sodium chloride type structure | 5 | 6.2 | 1 | 2 | |
| b4 | a4 | S8 | 1.4 | 80 | 10 | Ca | CaF₂ | Fluoride | Fluorite type structure | 6 | 6.8 | 1 | 2 | |
| b5 | a5 | S1 | 1.9 | 84 | 10 | Cu | CuO3 | Oxide | Rutile structure | 0.6 | 10.5 | 1 | 2 | |
| b6 | a6 | S1 | 2.3 | 83 | 10 | Mn | β-MnO₄ | Oxide | Rutile structure | 6 | 1.2 | 1 | 2 | |
| b7 | a7 | S9 | 2.5 | 82 | 10 | Cu | CuO2 | Oxide | Rutile structure | 5 | 13.0 | 1 | 2 | |
| b8 | a8 | S4 | 2.1 | 81 | 10 | Ir | IrO₂ | Oxide | Rutile structure | 45 | 19.0 | 1 | 1 | |
| b9 | a9 | S3 | 2.4 | 80 | 20 | Mn | β-MnO₄ | Oxide | Rutile structure | 5 | 1.0 | 1 | 2 | |
| b10 | a10 | S2 | 2.3 | 85 | 10 | Cu | CuO3 | Oxide | Rutile structure | 0.4 | 1.5 | 1 | 2 | |

### <Example 2>

As shown in Table 14, Inventive Examples C2 to C11, in which the content of the compound A at the position of 0.90H from the surface of the surface treatment film (that is, the interface side position P) was 30 to 90%, were more excellent in temperature rising rate than C1, in which the content of the compound A was 20% at the position.

**[Table 14]**

| Symbol | Manufacturing method No. | Steel No. | Surface treatment film | | | | | | | | | Characteristic evaluation | | Note |
|---|---|---|---|---|---|---|---|---|---|---|---|---|---|---|
| | | | Film thickness H (µm) | Compound A | | Compound B | | | | | | Temperature rising characteristics | Film adhesion | |
| | | | | Carbon concentration (mass%) | Content of compound A (%) | Metal element M | Type of compound | Type | Crystal structure | C_{bM} (mass%) | C_{bM}/C_{tM} | | | |
| C1 | A17 | S2 | 1.4 | 87 | 20 | Ti | TiO₂ | Oxide | Rutile structure | 23 | 4.1 | 2 | 2 | |
| C2 | A18 | S5 | 1.2 | 82 | 30 | Ti | TiO₂ | Oxide | Rutile structure | 32 | 4.4 | 3 | 2 | |
| C3 | A19 | S9 | 1.0 | 83 | 40 | Ti | TiO₂ | Oxide | Rutile structure | 33 | 3.1 | 3 | 2 | |
| C4 | A20 | S10 | 2.1 | 81 | 50 | Ti | TiO₂ | Oxide | Rutile structure | 33 | 3.5 | 3 | 2 | Inventive Example |
| C5 | A21 | S7 | 2.5 | 85 | 50 | Ni | NiF₂ | Fluoride | Rutile structure | 40 | 2.8 | 3 | 2 | |
| C6 | A22 | S2 | 1.3 | 83 | 60 | Ni | NiF₂ | Fluoride | Rutile structure | 34 | 4.1 | 3 | 2 | |
| C7 | A23 | S8 | 1.8 | 91 | 60 | Ni | NiF₂ | Fluoride | Rutile structure | 33 | 2.9 | 3 | 2 | |
| C8 | A24 | S10 | 1.4 | 92 | 80 | Ni | NiF₂ | Fluoride | Rutile structure | 38 | 3.4 | 3 | 2 | |
| C9 | A25 | S9 | 1.3 | 82 | 90 | Ni | NiF₂ | Fluoride | Rutile structure | 29 | 4.2 | 3 | 1 | |
| C10 | A26 | S5 | 1.6 | 82 | 40 | Ni | NiF₂ | Fluoride | Rutile structure | 20 | 1.7 | 3 | 3 | |
| C11 | A27 | S4 | 1.5 | 83 | 90 | Ti | TiO₂ | Oxide | Rutile structure | 18 | 1.6 | 3 | 1 | |

### <Example 3>

As shown in Table 15, Inventive Examples D6 to D9, in which the compound B was TiO₂, were more excellent in temperature rising rate than Inventive Example D1 in which the compound B was IrO₂ and Example D5 in which the compound B was GeO₂.

**[Table 15]**

| | Symbol | Manufacturing method No. | Steel No. | Surface treatment film | | | | | | | | | Characteristic evaluation | |
|---|---|---|---|---|---|---|---|---|---|---|---|---|---|---|
| | | | | Film thickness H (µm) | Compound A | | Compound B | | | | | | Temperature rising characteristic s | Film adhesion |
| | | | | | Carbon concentration (mass%) | Content of compound A (%) | Metal element M | Type of compound | Type | Crystal structure | C_{bM} (mass%) | C_{bM} /C_{tM} | | |
| | D1 | A28 | S2 | 1.0 | 81 | 20 | Ir | IrO₂ | Oxide | Rutile structure | 23 | 4.1 | 2 | 2 |
| | D2 | A29 | S8 | 1.2 | 97 | 30 | V | VO₂ | Oxide | Rutile structure | 32 | 4.4 | 3 | 2 |
| Inventive Example | D3 | A30 | S8 | 1.5 | 85 | 70 | Ag | AgO₂ | Oxide | Rutile structure | 38 | 3.4 | 3 | 2 |
| | D4 | A31 | S1 | 1.9 | 92 | 80 | Ni | NiF₂ | Fluoride | Rutile structure | 38 | 3.4 | 3 | 2 |
| | D5 | A32 | S8 | 2.5 | 82 | 90 | Ge | GeO₂ | Oxide | Rutile structure | 29 | 4.2 | 2 | 1 |
| | D6 | A33 | S2 | 2.4 | 85 | 20 | Ti | TiO₂ | Oxide | Rutile structure | 23 | 4.1 | 3 | 2 |
| | D7 | A34 | S4 | 1.3 | 82 | 50 | Ti | TiO₂ | Oxide | Rutile structure | 29 | 4.2 | 4 | 2 |
| | D8 | A35 | S2 | 1.6 | 87 | 60 | Ti | TiO₂ | Oxide | Rutile structure | 23 | 4.1 | 4 | 2 |
| | D9 | A36 | S8 | 1.3 | 82 | 90 | Ti | TiO₂ | Oxide | Rutile structure | 29 | 4.2 | 3 | 1 |

### <<Element Technologies B3a and B3b>>

Element Technology B3a is a structural member, including:
a member main body that is formed of multiple steel sheets joined to each other and has an annular shape in plan view, the multiple steel sheets including a first steel sheet having a smallest sheet thickness and a second steel sheet having a sheet thickness larger than the sheet thickness of the first steel sheet; and
a film that is provided on the first steel sheet and contains 0.001 g/m² or more of one or more oxides selected from among the group consisting of Zr oxide, Zn oxide, and Ti oxide.

Element Technology B3b is a structural member, including:
a member main body that is formed of multiple steel sheets joined to each other and has an annular shape in plan view, the multiple steel sheets including a first steel sheet having a smallest sheet thickness and a second steel sheet having a sheet thickness larger than the sheet thickness of the first steel sheet; and
a film that is provided on the first steel sheet and contains 0.500 g/m² or less carbon black.

An object of the Element Technologies B3a and B3b is to provide a blank for hot stamping that can improve the performance of a structural member having an annular shape produced from the blank, in particular, a large structural member having an annular shape produced from the blank, that includes a steel sheet having a smaller sheet thickness than other steel sheets.

A blank for hot stamping according to an embodiment includes multiple steel sheets. The multiple steel sheets are disposed to form an annular shape in plan view of the blank and joined to each other. The multiple steel sheets include a first steel sheet and a second steel sheet. The first steel sheet has a smallest sheet thickness among the multiple steel sheets. The second steel sheet has a sheet thickness larger than the sheet thickness of the first steel sheet. The first steel sheet is configured so that an emissivity of at least one of both surfaces of the first steel sheet is higher than an emissivity of both surfaces of the second steel sheet (a first configuration).

The blank according to the first configuration includes the first steel sheet having the smallest sheet thickness and the second steel sheet having a sheet thickness larger than the sheet thickness of the first steel sheet. The emissivity of at least one surface of the first steel sheet is higher than the emissivity of both surfaces of the second steel sheet. In this way, when the blank is heated for hot stamping, the heating rate of the first steel sheet, which is a thin part, can be increased. Therefore, the first steel sheet can be more quickly heated to a temperature in the austenite zone, and a longer retention time of the first steel sheet at the temperature can be ensured. Thus, the austenite grain in the first steel sheet can be coarsened. As a result, the ferrite transformation region (ferrite nose) in the CCT diagram shifts to longer times, and therefore, the transformation to ferrite in the first steel sheet after the end of heating of the blank can be delayed, and shaping of the blank can be started while the microstructure of the first steel sheet is kept in the austenite phase. That is, the hardenability of the first steel sheet having the small sheet thickness can be improved.

With the blank according to the first configuration, since the hardenability of the first steel sheet having the small sheet thickness is improved, the first steel sheet can be quenched well when shaping the blank into the structural member by hot stamping. Therefore, the hardness of the structural member is likely to be made uniform, and a local decrease in strength of the structural member can be prevented. In addition, unevenness of stress in the structural member is less likely to occur, so that even when the produced structural member has an annular shape, torsion is less likely to occur, and high dimensional accuracy can be ensured in the structural member. Therefore, when an annular structural member, in particular, a large annular structural member, that includes the first steel sheet having a smaller sheet thickness than the second steel sheet is produced from the blank, the failure in strength and the failure in dimensional accuracy of the structural member can be reduced, and the shock absorption performance (collision resistance performance) of the structural member can be improved.

With the blank according to the first configuration, the emissivity of the first steel sheet having the smallest sheet thickness is higher than the emissivity of the second steel sheet having a relatively large sheet thickness. In this case, the first steel sheet is more quickly heated than the second steel sheet, and the high temperature retention time of the first steel sheet, that is, the time from when the first steel sheet reaches a temperature in the austenite zone to when the second steel sheet and the whole of the blank reach the temperature in the austenite zone, is longer than when the first steel sheet has the same emissivity as that of the second steel sheet. Therefore, after the heating of the blank ends, unevenness of the phase transformation due to the difference in cooling rate between the steel sheets can be reduced. Specifically, the start of the phase transformation from austenite to ferrite of the first steel sheet having the smallest sheet thickness can be delayed, so that the difference in start time of phase transformation between the first steel sheet having the smallest sheet thickness and the other steel sheets is reduced. As a result, the hardenability of the first steel sheet having the smallest sheet thickness and the other steel sheets can be made uniform.

In the first configuration, the first steel sheet may have a sheet thickness of less than 1.4 mm (a second configuration).

When the sheet thickness of the first steel sheet is less than 1.4 mm as in the second configuration, the first steel sheet particularly easily dissipates heat after heating of the blank is ended, and the hardenability of the first steel sheet is likely to deteriorate. However, even when the sheet thickness of the first steel sheet is less than 1.4 mm, if the emissivity of at least one surface of the first steel sheet is higher than the emissivity of the second steel sheet having a relatively large sheet thickness, heating of the first steel sheet can be promoted and a long high temperature retention time of the first steel sheet can be ensured when the blank is heated for hot stamping. Therefore, the hardenability of the first steel sheet can be improved.

In the first or second configuration, the first steel sheet may be a coated steel sheet. In this case, the first steel sheet may have a base steel sheet, and an aluminum-based coating layer provided on the base steel sheet (a third configuration).

When the first steel sheet is a coated steel sheet having an aluminum-based coating layer as in the third configuration, when the blank is heated for hot stamping, the heating rate of the first steel sheet tends to be low. The color of the aluminum-based coating layer is close to white, so that the aluminum-based coating layer tends to reflect thermal energy, which inhibits heating of the first steel sheet. However, even when the first steel sheet is a coated steel sheet having an aluminum-based coating layer, if the emissivity of at least one surface of the first steel sheet is higher than the emissivity of the second steel sheet having a relatively large sheet thickness, heating of the first steel sheet can be promoted when the blank is heated for hot stamping. Therefore, a long high temperature retention time of the first steel sheet can be ensured, and the hardenability of the first steel sheet can be improved.

In any of the first to third configurations, the at least one surface of the first steel sheet may be coated with a film having an emissivity of 60% or more at a temperature of 25 °C and a wavelength of 8.0 µm (a fourth configuration).

In any of the first to third configurations, the at least one surface of the first steel sheet may be coated with a film. The film may contain carbon black, one or more oxides selected from among the group consisting of Zr oxide, Zn oxide, and Ti oxide, and 0 to 0.30 g/m² silica. Provided that a content of the carbon black in the film is X_{CB} (g/m²), and a content of the oxide is X_{Oxidc} (g/m²), X_{CB} and X_{Oxide} preferably satisfy the following Formula (1) (see International Publication No. WO/2022/215229) (a fifth configuration): $\begin{matrix}118.9 \leq 24280 / \left\{6700/\left(100+76\times {X}_{CB}\right)+18000/\left(130+65\times {X}_{Oxide}\right)\right\} \leq \\ 332.0\end{matrix}$

In any of the first to fifth configurations, the first steel sheet may be a coated steel sheet having a base steel sheet and a coating layer provided on the base steel sheet. In this case, provided that a sheet thickness of the first steel sheet is tₘᵢₙ, and a sheet thickness of a steel sheet having a largest sheet thickness among the multiple steel sheets is tₘₐₓ, it is preferable that 1.0 < tₘₐₓ/tₘᵢₙ ≤ 3.2 (a sixth configuration).

Among the multiple steel sheets included in the blank, when the difference in sheet thickness between the first steel sheet having the smallest sheet thickness tₘᵢₙ and another steel sheet having the largest sheet thickness tₘₐₓ is large, it is difficult to ensure a process window in production of the structural member. For example, when the difference between the smallest sheet thickness tₘᵢₙ and the largest sheet thickness tₘₐₓ is large, when the blank is heated for hot stamping, alloying of the coating layer of the first steel sheet having been heated earlier to a temperature in the austenite zone may proceed and the diffusion layer may become thicker while waiting for the steel sheet having the largest sheet thickness tₘₐₓ to reach the temperature in the austenite zone, and thus, the corrosion resistance or the weldability of the coating layer of the first steel sheet may be unable to be ensured. In view of this, according to the sixth configuration, the ratio of the largest sheet thickness tₘₐₓ to the smallest sheet thickness tₘᵢₙ is set to be 3.2 or less. In this way, the heating rate of the steel sheet having the largest sheet thickness tₘₐₓ and the heating rate of the first steel sheet having the smallest sheet thickness tₘᵢₙ are not excessively different, so that the heating of the other steel sheets can be ended before alloying of the coating layer of the first steel sheet excessively proceeds. Therefore, the structural member can be produced while maintaining the corrosion resistance or the weldability of the first steel sheet, and a process window can be ensured in the production of the structural member.

**In** any of the first to sixth configurations, the first steel sheet may be a coated steel sheet having a base steel sheet and a coating layer provided on the base steel sheet. The blank may further include an overlap part. The overlap part is formed by end parts of adjacent two steel sheets other than the second steel sheet among the multiple steel sheets overlaid on one another. The overlap part may have a total sheet thickness of 2.5 mm or more and 4.0 mm or less. In this case, each of the two steel sheets is preferably configured so that an emissivity of a surface located on an outer side of the overlap part is higher than the emissivity of both surfaces of the second steel sheet (a seventh configuration).

When the blank includes an overlap part formed by end parts of two steel sheets overlaid on one another, the process window may be unable to be ensured in the production of the structural member. Specifically, in the case where the multiple steel sheets included in the blank have different sheet thicknesses, and the total sheet thickness of the overlap part is more than 2.5 mm, when the blank is heated for hot stamping, alloying of the coating layer of the first steel sheet having the smallest sheet thickness may proceed and the diffusion layer may become thicker while waiting for the overlap part to reach a temperature in the austenite zone, and thus, the corrosion resistance or the weldability of the first steel sheet may be unable to be ensured due to the coating layer. In view of this, according to the seventh configuration, in each of the two steel sheets forming the overlap part, the emissivity of the surface located on the outer side of the overlap part is increased. In this way, heating of the overlap part can be promoted, so that the heating of the overlap part can be ended before alloying of the coating layer of the first steel sheet excessively proceeds, and the structural member can be produced while the corrosion resistance or the weldability of the first steel sheet is maintained. That is, a process window is more likely to be ensured in the production of the structural member. However, even if the emissivity of the overlap part is increased, it is difficult to ensure the process window if the total sheet thickness of the overlap part is too large. Therefore, the total sheet thickness of the overlap part is preferably 4.0 mm or less.

A production method for a structural member according to an embodiment includes a step of preparing the blank according to any one of the first to seventh configurations, a step of heating the multiple steel sheets included in the blank to an austenite transformation completion temperature or higher, and a step of shaping and quenching the heated blank into a structural member having an annular shape in plan view with press tooling (an eighth configuration).

A structural member according to an embodiment includes a member main body and a film. The member main body is formed of multiple steel sheets joined to each other and has an annular shape in plan view. The multiple steel sheets include a first steel sheet having a smallest sheet thickness and a second steel sheet having a sheet thickness larger than the sheet thickness of the first steel sheet. The film is provided on the first steel sheet. The film contains 0.001 g/m² or more of one or more oxides selected from among the group consisting of Zr oxide, Zn oxide, and Ti oxide (a ninth configuration).

A structural member according to an embodiment includes a member main body and a film. The member main body is formed of multiple steel sheets joined to each other and has an annular shape in plan view. The multiple steel sheets include a first steel sheet having a smallest sheet thickness and a second steel sheet having a sheet thickness larger than the sheet thickness of the first steel sheet. The film is provided on the first steel sheet. The film contains 0.500 g/m² or less carbon black (a tenth configuration).

In the ninth or tenth configuration, the structural member may be a door ring part of an automobile. In this case, the member main body may include a front pillar, a center pillar, and a rocker that connects the front pillar and the center pillar to each other (an eleventh configuration).

In the following, embodiments of the present disclosure will be described with reference to the drawings. In the drawings, the same or corresponding components are denoted by the same reference numerals, and redundant descriptions will be omitted.

### <First Embodiment>

### [Structural Member]

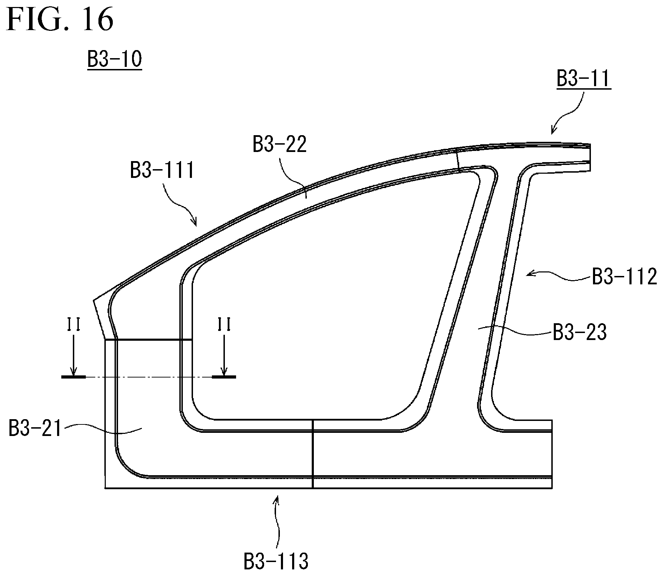

FIG. 16 is a diagram (plan view) showing a structural member B3-10 according to a first embodiment placed on a horizontal surface viewed from above. The structural member B3-10 is used for a body of an automobile, for example. The structural member B3-10 is typically a door ring part of an automobile. This embodiment will be described with reference to an example in which the structural member B3-10 is a door ring part.

The structural member B3-10 is a hot-stamped member. That is, the structural member B3-10 is produced by performing hot stamping (hot press working) on a blank formed of multiple steel sheets. The structural member B3-10 includes a member main body B3-11. The member main body B3-11 has an annular shape in plan view of the structural member B3-10. The member main body B3-11 includes a front pillar B3-111, a center pillar B3-112, and a rocker B3-113. When the structural member B3-10 is assembled to the body of the automobile, the center pillar B3-112 is disposed rearward of the front pillar B3-111. The center pillar B3-112 generally extends in the up-and-down direction of the body. The front pillar B3-111 extends toward the center pillar B3-112. When the structural member B3-10 is assembled to the body of the automobile, the rocker B3-113 is disposed below the front pillar B3-111 and the center pillar B3-112. The rocker B3-113 connects the front pillar B3-111 and the center pillar B3-112 to each other.

In this embodiment, the member main body B3-11 is formed of multiple steel sheets B3-21, B3-22, and B3-23 joined to each other. In the example in FIG. 16, the front pillar B3-111 is mainly formed of the steel sheets B3-21 and B3-22. The center pillar B3-112 is mainly formed of the steel sheet B3-23. The rocker B3-113 is formed of the steel sheets B3-21 and B3-23.

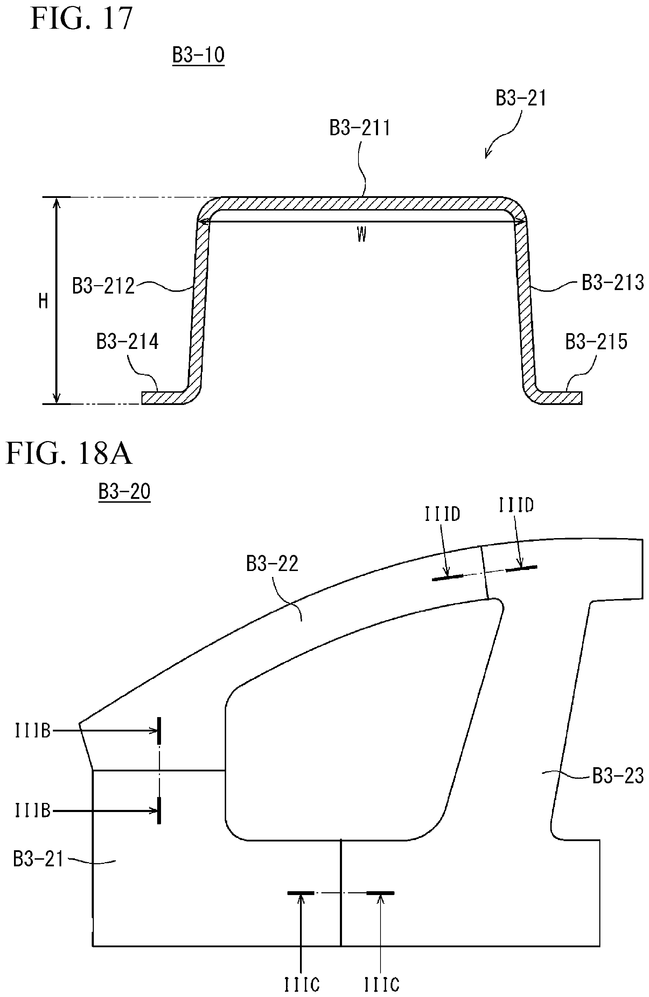

FIG. 17 is a cross-sectional view taken along line II-II in FIG. 16. FIG. 17 shows a cross section of the structural member B3-10 taken at the position of the steel sheet B3-21 along the sheet thickness direction thereof. As shown in FIG. 17, the steel sheet B3-21 has an open cross section. The steel sheet B3-21 has a generally hat-like shape in cross-sectional view of the structural member B3-10, for example. More specifically, the steel sheet B3-21 includes a top plate B3-211, vertical walls B3-212 and B3-213, and flanges B3-214 and B3-215. The vertical wall B3-212 is disposed on the opposite side of the top plate B3-211 to the vertical wall B3-213. In the cross-sectional view of the structural member B3-10, one ends of the vertical walls B3-212 and B3-213 are connected to the top plate B3-211. In the cross-sectional view of the structural member B3-10, the other ends of the vertical walls B3-212 and B3-213 are connected to the flanges B3-214 and B3-215, respectively. The flanges B3-214 and B3-215 project outward from the vertical walls B3-212 and B3-213 of the structural member B3-10, respectively.

In the structural member B3-10, a width W of the steel sheet B3-21 may be 30 mm or more and 750 mm or less. A height H of the steel sheet B3-21 may be 25 mm or more and 150 mm or less. The width W is the distance from the R-end on the vertical wall B3-212 side of the corner part between the top plate B3-211 and the vertical wall B3-212 to the R-end on the vertical wall B3-213 side of the corner part between the top plate B3-211 and the vertical wall B3-213, in the cross section of the structural member B3-10. The height H is the distance from the top plate B3-211 to the flange B3-214 or B3-215 in the sheet thickness direction of the top plate B3-211.

Although not shown, the other steel sheets B3-22 and B3-23 have an open cross section, as with the steel sheet B3-21. The steel sheets B3-22 and B3-23 can also have a generally hat-like shape in cross-sectional view of the structural member B3-10. The width of each of the steel sheets B3-22 and B3-23 may be 15 mm or more and 300 mm or less. The height of each of the steel sheets B3-22 and B3-23 may be 10 mm or more and 150 mm or less.

The size of the structural member B3-10 having an annular shape in plan view is 1.0 m or more, for example. The size of the structural member B3-10 may be 4.0 m or less, for example. The size of the structural member B3-10 means the length of the line segment connecting two points that are the most distant from each other among any two points on the outer circumference of the structural member B3-10 when the structural member B3-10 placed on a horizontal surface is viewed in the vertical direction.

### [Production Method for Structural Member]

In the following, a production method for the structural member B3-10 will be described with reference to FIGS. 18A to 18G. The production method for the structural member B3-10 according to this embodiment includes a step of preparing a blank B3-20, a step of heating the blank B3-20, and a step of shaping the heated blank B3-20 into the structural member B3-10.

### (Preparation Step)

As shown in FIG. 18A, in the preparation step, a blank B3-20 having the expanded shape of the structural member B3-10 is prepared. The blank B3-20 includes multiple steel sheets B3-21, B3-22, and B3-23. The steel sheets B3-21, B3-22, and B3-23 are disposed to form an annular shape in plan view of the blank B3-20 and joined to each other.

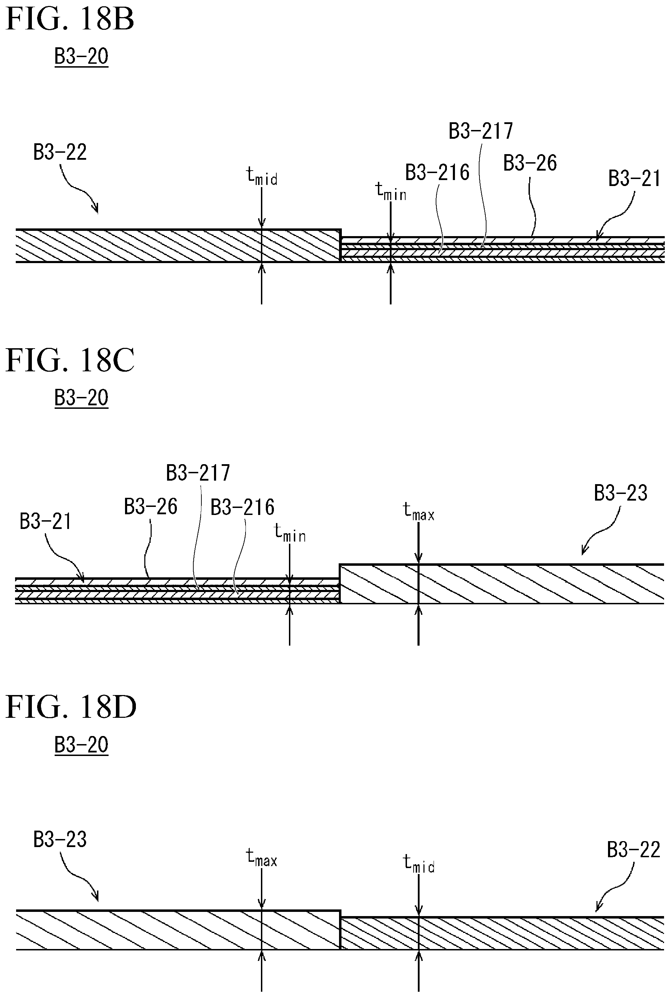

FIGS. 18B, 18C, and 18D are cross-sectional views of the blank B3-20, showing junctures between the steel sheets B3-21, B3-22, and B3-23. FIGS. 18B, 18C, and 18D are cross-sectional views taken along lines IIIB-IIIB, IIIC-IIIC, and IIID-IIID in FIG. 18A, respectively. With reference to FIGS. 18B and 18C, the steel sheet B3-21 is butt-joined to each of the steel sheets B3-22 and B3-23. That is, an end face of the steel sheet B3-21 abuts on and is joined to an end face of the steel sheet B3-22, and another end face of the steel sheet B3-21 abuts on and is joined to an end face of the steel sheet B3-23. With reference to FIG. 18D, the steel sheet B3-22 is butt-joined not only to the steel sheet B3-21 but also to the steel sheet B3-23. An end face of the steel sheet B3-22 abuts on and is joined to an end face of the steel sheet B3-23. The steel sheets B3-21, B3-22, and B3-23 are joined to each other by laser welding, for example. In this embodiment, the blank B3-20 is a so-called tailor welded blank.

With reference to FIGS. 18B and 18C, among the steel sheets B3-21, B3-22, and B3-23, the steel sheet B3-21 has the smallest sheet thickness tₘᵢₙ. The steel sheet B3-22 has a sheet thickness larger than the sheet thickness tₘᵢₙ of the steel sheet B3-21. The steel sheet B3-23 has a sheet thickness equal to or larger than the sheet thickness tₘᵢₙ of the steel sheet B3-21. In the example of this embodiment, the steel sheets B3-22 and B3-23 each have a sheet thickness larger than the sheet thickness tₘᵢₙ of the steel sheet B3-21. In this embodiment, the steel sheet B3-23 has the largest sheet thickness tₘₐₓ among the steel sheets B3-21, B3-22, and B3-23. The steel sheet B3-22 has a sheet thickness t_{mid} larger than the sheet thickness tₘᵢₙ of the steel sheet B3-21 and smaller than the sheet thickness tₘₐₓ of the steel sheet B3-23. However, the steel sheet B3-22 may have a sheet thickness equal to or larger than the sheet thickness of the steel sheet B3-23. That is, the steel sheet B3-22 may have the largest sheet thickness tₘₐₓ among the steel sheets B3-21, B3-22, and B3-23.

The sheet thickness tₘᵢₙ of the steel sheet B3-21 is typically less than 1.4 mm. The sheet thickness tₘᵢₙ may be 0.8 mm or more, for example. The sheet thickness tₘᵢₙ of the steel sheet B3-21 and the sheet thickness tₘₐₓ of the steel sheet B3-23 preferably satisfy a condition that 1.0 < tₘₐₓ/tₘᵢₙ ≤ 3.2, and more preferably satisfy a condition that 1.3 ≤ tₘₐₓ/tₘᵢₙ ≤ 3.2.

The steel sheet B3-21 having the smallest sheet thickness tₘᵢₙ in the blank B3-20 is configured so that the emissivity of at least one of both surfaces thereof is higher than the emissivity of both surfaces of the steel sheet B3-22. For example, at a temperature of 25 °C and a wavelength of 8.0 µm, the emissivity of one or both of the surfaces of the steel sheet B3-21 is 60% or more, whereas the emissivity of both surfaces of the steel sheet B3-22 is less than 60%. The emissivity of one or both of the surfaces of the steel sheet B3-21 at a temperature of 25 °C and a wavelength of 8.0 µm is preferably 70% or more, and more preferably 80% or more. The difference in emissivity at a temperature of 25 °C and a wavelength of 8.0 µm between the steel sheet B3-21 having the smallest sheet thickness tₘᵢₙ and the steel sheet B3-22 is preferably more than 5%, more preferably more than 10%, and even more preferably more than 20%. The emissivity can be measured according to JIS R 1801 (2002). In this case, a specimen taken from the steel sheet to be measured is set in a Fourier transform infrared spectrophotometer, and the radiation intensity is measured at a temperature of 25 °C and a wavelength of 8.0 µm to calculate the emissivity. Alternatively, a radiation thermometer may be used, the measurement wavelength thereof may be set at 8.0 µm, the radiation intensity of an involved region may be measured at 25 °C, and the emissivity may be calculated from the ratio of the radiation intensity to the radiation intensity of a blackbody.

In this embodiment, one surface of the steel sheet B3-21 is coated with a film B3-26. On the other hand, the steel sheet B3-22 is not provided with the film B3-26. In this way, the emissivity of the one surface of the steel sheet B3-21 is higher than the emissivity of both surfaces of the steel sheet B3-22.

The film B3-26 is a film that is black in color, for example. For example, when the lightness L* value of the surface of the film B3-26 (CIE 1976 lightness index L* defined in JIS Z8781-4(2013)) is 60 or less, the film B3-26 can be determined to be black in color. The film B3-26 may be a surface-treated carbon-based film (a film containing carbon (C)). The emissivity of the film B3-26 at a temperature of 25 °C and a wavelength of 8.0 µm is 60% or more, preferably 70% or more, and more preferably 80% or more. That is, the emissivity of the surface of the steel sheet B3-21 provided with the film B3-26 at a temperature of 25 °C and a wavelength of 8.0 µm is 60% or more, preferably 70% or more, and more preferably 80% or more. The film B3-26 may have an emissivity of 60% or more at a temperature of 700 °C and a wavelength of 8.0 µm. As the film B3-26, a surface-treated film described in Patent Literature 1 may be used, for example. Specifically, the film B3-26 may contain carbon black, and one or more oxides selected from among the group consisting of Zr oxide, Zn oxide, and Ti oxide. The film B3-26 may or may not contain silica. In other words, the content of silica in the film B3-26 is 0 g/m² or more. The content of silica in the film B3-26 may be 0.30 g/m² or less. The content of silica is more preferably 0.10 g/m² or less, and more preferably 0.05 g/m² or less.

The carbon black and the oxide may be dispersed over the whole of a surface of the film B3-26 that is perpendicular to the sheet thickness direction of the steel sheet B3-21. Provided that the content of carbon black is X_{CB} (g/m²), and the content of the one or more oxides (metal oxides) selected from among the group consisting of Zr oxide, Zn oxide, and Ti oxide is X_{Oxide} (g/m²), X_{CB} and X_{Oxide} preferably satisfy the following Formula (1). $\begin{matrix}118.9 \leq 24280 / \left\{6700/\left(100+76\times {X}_{CB}\right)+18000/\left(130+65\times {X}_{Oxide}\right)\right\} \leq \\ 332.0\end{matrix}$

In Formula (1), the value calculated by the middle term: 24280/ {6700/ (100 + 76 × X_{CB}) + 18000/ (130 + 65 × X_{Oxide})} is preferably 119.0 or more, more preferably 170.0 or more, and even more preferably 220.0 or more. The value calculated by the middle term is preferably 330.0 or less, more preferably 310.0 or less, and even more preferably 300.0 or less.

The dispersion state of the carbon black and the metal oxide in the film B3-26 can be checked by surface analysis of the film B3-26 in terms of an element (such as C) deriving from carbon black or an element (such as Zr, Zn, or Ti) deriving from the oxide with an electron probe micro analyzer (EPMA). The content X_{CB} of carbon black can be measured by cross-sectional analysis of the film B3-26 with a transmission electron microscope (TEM). Specifically, cross-sectional analysis of a region of the film B3-26 having a predetermined size (film thickness of the film B3-26 × 5 µm) is performed by TEM-EDS analysis, and the film thickness of the film B3-26 and the area fraction of particles having a carbon content of 70 mass% or more in the region are measured. Provided that the density of carbon black is ρ (ton/m³), the film thickness is d (µm) and the area fraction is a (%), the value of ρ × d × a is the content X_{CB} (g/m²) of carbon black. The content X_{Oxide} of the oxide can be determined by performing element analysis of the surface of the film B3-26 using an X-ray fluorescence spectrometer (ZSX Primus available from RIGAKU Holdings Corporation) and quantifying the metal Zr, Zn, and Ti.

The content X_{CB} of carbon black in the film B3-26 is preferably 0.030 g/m² or more, and more preferably 0.100 g/m² or more. Although the content X_{CB} can be set in any range that satisfies Formula (1), the content X_{CB} is preferably 0.800 g/m² or less, and more preferably 0.600 g/m² or less.

The film B3-26 may contain 5.0 or more carbon black in vol%, and preferably contains 8.0 or more carbon black in vol%. Furthermore, the film B3-26 may contain 40.0 or less carbon black in vol%, and preferably contains 30.0 or less carbon black in vol%.

The content X_{Oxide} of the metal oxide in the film B3-26 is preferably 0.030 g/m² or more, and more preferably 0.060 g/m² or more. Although the content X_{Oxide} can be set in any range that satisfies Formula (1), the content X_{Oxide} is preferably 0.500 g/m² or less, and more preferably 0.300 g/m² or less.

The film B3-26 may contain 1.0 or more metal oxide in vol%. Furthermore, the film B3-26 may contain 30.0 or less metal oxide in vol%, and preferably contains 25.0 or less metal oxide in vol%.

The ratio between the content X_{CB} (g/m²) of carbon black and the content X_{Oxide} (g/m²) of metal oxide: X_{Oxide}/X_{CB} is preferably 0.20 or more and 200.00 or less. X_{Oxide}/X_{CB} is more preferably 0.40 or more and 10.00 or less, and more preferably 0.60 or more and 5.00 or less.

The film B3-26 may contain various kinds of binder components or addition agents, in addition to the carbon black and the metal oxides described above.

The binder component is preferably a water-dispersible or water-soluble resin. The content of the binder component is preferably 40 vol% or more of the overall volume of the film B3-26. As the binder component selected from among water-dispersible or water-soluble resins, various kinds of well-known resins that exhibit water dispersibility or water solubility can be used. Such resins that exhibit water dispersibility or water solubility include polyurethane resin, polyester resin, acrylic resin, epoxy resin, fluororesin, polyamide resin, polyolefin resin, and polymer compounds obtained by hydrolysis and condensation polymerization of silane coupling agents, for example. The binder component is more preferably one or more, or two or more selected from among the group consisting of polyester resin, polyurethane resin, polyolefin resin, acrylic resin, epoxy resin, fluororesin, and polyamide resin. When polyurethane resin is used as the binder component, the polyurethane resin is preferably polyether-based polyurethane resin.

The addition agent is a leveling agent, a water-soluble solvent, a metal stabilizer, or an etching inhibitor, for example. The leveling agent is a nonionic or cationic surface-active agent, for example. The nonionic or cationic surface-active agent may be a polyethylene oxide or polypropylene oxide adduct, or an acetylene glycol compound, for example. The water-soluble solvent may be an alcohol such as ethanol, isopropyl alcohol, t-butyl alcohol, or propylene glycol, a cellosolve such as ethylene glycol monobutyl ether or ethylene glycol monoethyl ether, an ester such as ethyl acetate or butyl acetate, or a ketone such as acetone, methyl ethyl ketone, or methyl isobutyl ketone, for example. The metal stabilizer may be a chelate compound such as ethylenediaminetetraacetic acid (EDTA) or diethylenetriaminepentaacetic acid (DTPA), for example. The etching inhibitor may be an amine compound such as ethylenediamine, triethylenepentamine, guanidine, or pyrimidine, for example.

The film B3-26 can be formed by applying an organic or inorganic processing liquid containing carbon black and a metal oxide to the whole of the surface of the steel sheet B3-21 and then drying the volatile constituents in the processing liquid. The processing liquid can be applied to the surface of the steel sheet B3-21 with a roll coater, a curtain coater, or an ink jet, for example. In the case of the ink jet, the film thickness of the film B3-26 can be continuously varied. The film thickness of the film B3-26 is 0.5 µm or more and 5.0 µm or less, for example. The film thickness of the film B3-26 is preferably 1.0 µm or more and 3.0 µm or less. The film thickness of the film B3-26 is small enough to be negligible compared with the sheet thickness tₘᵢₙ of the steel sheet B3-21. Therefore, the measured sheet thickness of the steel sheet B3-21 including the film B3-26 can be treated as the sheet thickness tₘᵢₙ of the steel sheet B3-21.

The steel sheet B3-21 may be a coated steel sheet. In that case, the steel sheet B3-21 includes a base steel sheet B3-216 and a coating layer B3-217. The type of the base steel sheet B3-216 is not particularly limited. The coating layer B3-217 is provided on the base steel sheet B3-216. The coating layer B3-217 covers the whole or substantially the whole of both surfaces of the base steel sheet B3-216. The coating layer B3-217 is a metal coating layer. The coating layer B3-217 may be a molten aluminum coating or may be a molten zinc coating, a galvannealed coating, or an electrogalvanized plating, for example. As the steel sheet B3-21, a well-known aluminum-coated steel sheet or zinc-coated steel sheet, for example, can be used.

The coating layer B3-217 is typically a coating layer (aluminum-based coating layer) primarily containing aluminum. The configuration of the aluminum-based coating layer is not particularly limited. As the coating layer B3-217, a well-known aluminum-based coating layer can be used. When the steel sheet B3-21 is a coated steel sheet, the sheet thickness tₘᵢₙ of the steel sheet B3-21 is the total sheet thickness of the base steel sheet B3-216 and the coating layer B3-217.

The steel sheets B3-22 and B3-23 may be a well-known coated steel sheet, as with the steel sheet B3-21. The steel sheets B3-22 and B3-23 may be an aluminum-coated steel sheet or a zinc-coated steel sheet. The steel sheets B3-22 and B3-23 may be the same type of coated steel sheet as the steel sheet B3-21 or may be a different type of coated steel sheet than the steel sheet B3-21. Furthermore, the steel sheet B3-22 may be the same type of coated steel sheet as the steel sheet B3-23 or may be a different type of coated steel sheet than the steel sheet B3-23. When the steel sheet B3-22 is a coated steel sheet, the sheet thickness t_{mid} of the steel sheet B3-22 is the total sheet thickness of the base steel sheet and the coating layer. Similarly, when the steel sheet B3-23 is a coated steel sheet, the sheet thickness tₘₐₓ of the steel sheet B3-23 is the total sheet thickness of the base steel sheet and the coating layer. When two or more of the steel sheets B3-21, B3-22, and B3-23 are coated steel sheets, the base weight of the coating of each steel sheet may be the same as that of the other steel sheets or may be different from that of the other steel sheets.

### (Heating Step)

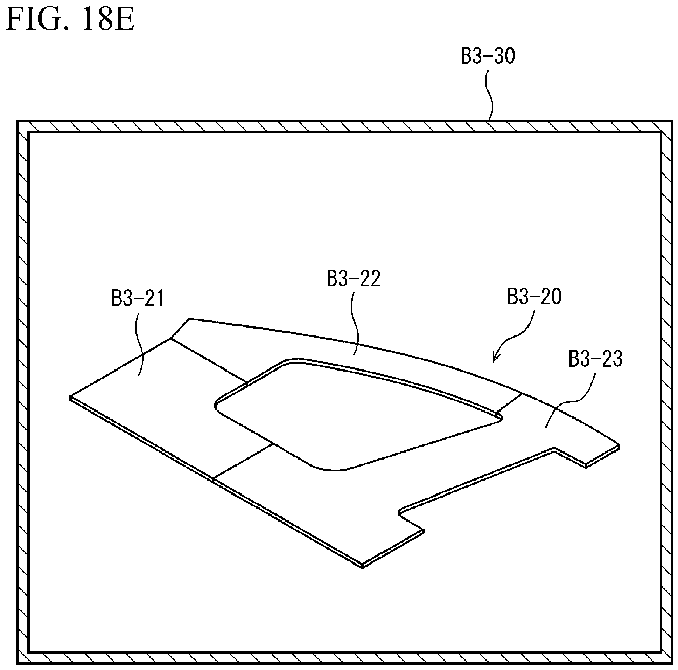

The prepared blank B3-20 is shaped into the structural member B3-10 (FIGS. 16 and 17) through hot stamping (hot press working). For the hot stamping, the blank B3-20 is subjected to the heating step. With reference to FIG. 18E, in the heating step, the blank B3-20 is heated in a heating furnace B3-30, for example. The multiple steel sheets B3-21, B3-22, and B3-23 included in the blank B3-20 are heated to an austenite transformation completion temperature (A_{c3} point) or higher. The steel sheets B3-21, B3-22, and B3-23 are heated to 900 °C or more, for example. In this way, the whole or substantially the whole of the microstructure of the steel sheets B3-21, B3-22, and B3-23 is transformed into the austenite phase, for example.

### (Shaping Step)

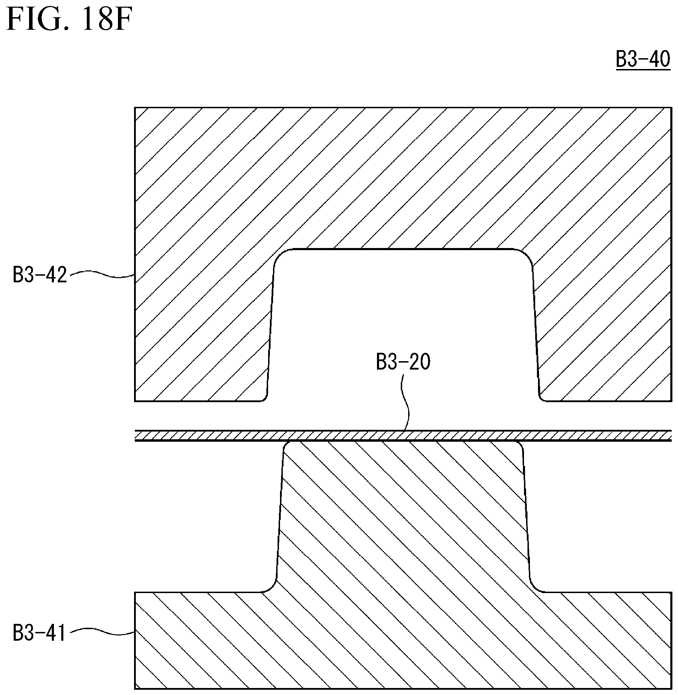

With reference to FIG. 18F, in the shaping step, using press tooling B3-40, the heated blank B3-20 is shaped into the structural member B3-10 having an annular shape in plan view (FIGS. 16 and 17) and quenched. The blank B3-20 heated in the heating step is removed from the heating furnace B3-30 (FIG. 18E) and conveyed to the press tooling B3-40. The press tooling B3-40 is attached to a well-known pressing device. The press tooling B3-40 includes a punch B3-41 and a die B3-42, for example. The blank B3-20 is placed between the punch B3-41 and the die B3-42.

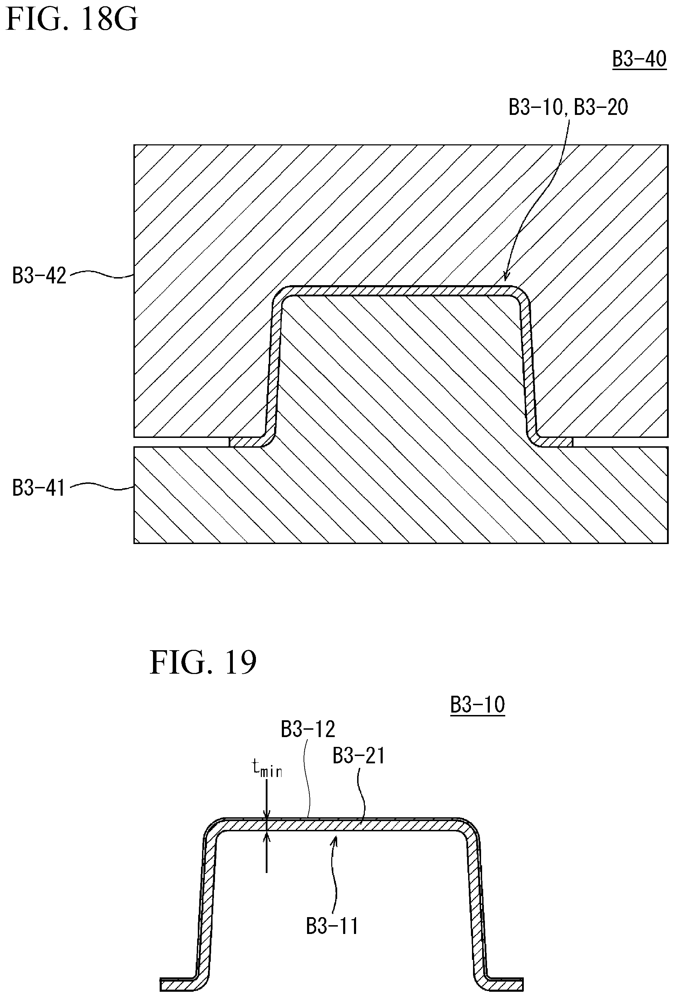

With reference to FIG. 18G, after the blank B3-20 is placed between the punch B3-41 and the die B3-42, the die B3-42 comes relatively closer to the punch B3-41. The blank B3-20 is sandwiched (pressed) between the punch B3-41 and the die B3-42 and formed into a shape conforming to the shaping surfaces of the punch B3-41 and the die B3-42. The blank B3-20 is kept sandwiched between the punch B3-41 and the die B3-42. The blank B3-20 is made to dissipate heat (rapid cooling) in the press tooling B3-40, and thereby the microstructure thereof is transformed into martensite. In this way, the structural member B3-10 can be produced from the blank B3-20.

FIG. 19 is a cross-sectional view of the structural member B3-10 after hot stamping. FIG. 19 shows a cross section of the structural member B3-10 at the position of the steel sheet B3-21 (FIGS. 18B and 18C) that is provided with the film B3-26 that is black in color at the stage of the blank B3-20. The structural member B3-10 includes the member main body B3-11 and a film B3-12. The film B3-12 is provided on the steel sheet B3-21. The film B3-26 (FIGS. 18B and 18C) that is black in color provided to the steel sheet B3-21 of the blank B3-20 is changed into the film B3-12 through hot stamping. When the film B3-26 contains carbon black, the carbon black substantially disappears while heated at high temperature for hot stamping, although some of the carbon black may remain on the member main body B3-11. When the film B3-26 before hot stamping satisfies Formula (1) described above, the film B3-12 after hot stamping may not contain carbon black or may contain 0.500 g/m² or less carbon black. When the film B3-12 after hot stamping contains carbon black, the content of carbon black in the film B3-12 is more than 0 g/m². Furthermore, when the film B3-26 before hot stamping satisfies Formula (1) described above, the value calculated by the middle term: 24280/ {6700/ (100 + 76 × X_{CB}) + 18000/ (130 + 65 × X_{Oxide})} for the film B3-12 after hot stamping is 120.0 or more and 150.0 or less.

When the film B3-26 (FIGS. 18B and 18C) before hot stamping satisfies Formula (1) described above, the film B3-12 after hot stamping contains more than 0 g/m², for example, or more preferably 0.001 g/m² or more, of one or more oxides (metal oxides) selected from among the group consisting of Zr oxide, Zn oxide, and Ti oxide. The content of the metal oxide in the film B3-12 is 0.500 g/m² or less, for example. When the metal oxide remains in the structural member B3-10 in this way, that is, when the film B3-12 contains more than 0 g/m² of metal oxide, the corrosion resistance of the structural member B3-10 is advantageously improved. When the film B3-26 before hot stamping satisfies Formula (1) described above, the film B3-12 after hot stamping contains 0 to 0.30 g/m² silica.

The contents of carbon black, metal oxide, and silica in the film B3-12 can be measured in the same manner as the film B3-26 at the stage of the blank B3-20. Specifically, an automobile body part is disassembled to obtain the annular structural member B3-10, and an analysis specimen is obtained from the structural member B3-10 by laser cutting, for example. For example, an analysis specimen is obtained from each of the multiple steel sheets included in the structural member B3-10. The analysis specimen is taken from a center part or a vicinity thereof of the top plate of each of the steel sheets having an open cross section. The analysis specimen obtained is adjusted by polishing the cut surface to a region outside of the region affected by the heat of laser cutting, for example, thereby preparing a film analysis specimen. Using this specimen, surface analysis of the film B3-12 can be performed by EPMA in terms of an element (such as C) deriving from carbon black or an element (such as Zr, Zn, or Ti) deriving from the oxide, thereby checking the dispersion state of the carbon black or metal oxide in the film B3-12.

For example, an electrodeposited film or the like often exists in the outermost layer of the structural member B3-10. In such a case, a film layer that exists under the electrodeposited film layer and above the alloyed metal coating layer is analyzed. The content X_{CB} of carbon black in the film B3-12 can be measured by cross-sectional analysis of the film B3-26 using TEM. Specifically, cross-sectional analysis of a region of the film B3-12 having a predetermined size (film thickness of the film B3-12 × 5 µm) is performed by TEM-EDS analysis, and the film thickness of the film B3-12 and the area fraction of particles having a carbon content of 70 mass% or more in the region are measured. Provided that the density of carbon black is ρ (ton/m³), the film thickness is d (µm), and the area fraction is a (%), the value of ρ × d × a is the content X_{CB} (g/m²) of carbon black. The content X_{Oxide} of the oxide can be determined by performing element analysis of the film layer that exists under the electrodeposited film layer and above the alloyed metal coating layer using the X-ray fluorescence spectrometer described above and quantifying the metal Zr, Zn, and Ti.

In the cross section of the structural member B3-10 at the position of the steel sheet B3-21 having the smallest sheet thickness tₘᵢₙ, the variation in martensite fraction is 20% or less, for example, provided that a value obtained by subtracting the minimum martensite fraction (%) from the maximum martensite fraction (%) is defined as the variation in martensite fraction. The variation in martensite fraction is preferably 15% or less, and more preferably 10% or less. The variation in martensite fraction can be measured as follows. That is, in the cross section of the structural member B3-10 at the position of the steel sheet B3-21 having the smallest sheet thickness tₘᵢₙ, ten or more analysis samples (a longer side of which has a length of the order of 10 mm, for example) are cut at positions distant from the ends by 20 mm or more and spaced apart from each other by 10 mm or more, and each analysis sample is mirror-polished and etched with the LePera etchant so that the surface in the sheet thickness direction is an observation surface. Then, the structure at the depth of 1/4 of the sheet thickness from the steel sheet surface (that is, in the region from the depth of 1/8 of the sheet thickness from the steel sheet surface to the depth of 3/8 of the sheet thickness from the steel sheet surface) is photographed with an optical microscope with a magnification of 1000 in thirty visual fields each having structure micrographs of 2400 µm² or more, and the structure photographs obtained are subjected to image analysis.

In an image analysis method, a maximum lightness value Lmax and a minimum lightness value Lmin of the image are obtained from the image, any part having a pixel whose lightness ranges from Lmax-0.3 (Lmax-Lmin) to Lmax is defined as a white region, and the ratio of the number of pixels of the white regions to the total number of pixels is calculated, thereby measuring the martensite fraction. For a total of thirty observation visual fields for each analysis sample, the martensite fraction is determined by this image analysis, and a mean value thereof is regarded as the martensite fraction of the analysis sample. Furthermore, the difference between the maximum value and the minimum value of the martensite fractions of ten or more analysis samples is defined as a variation in martensite fraction in the cross section of the structural member B3-10 at the position of the steel sheet B3-21 having the smallest sheet thickness tₘᵢₙ. When the structural member B3-10 has multiple steel sheets having the smallest sheet thickness tₘᵢₙ, this analysis is performed to determine the martensite fraction for each of these steel sheets, and the maximum variation in martensite fraction among these steel sheets is regarded as the variation in martensite fraction of the structural member B3-10.

Note that in some steel sheets, the area ratio of martensite obtained by the image analysis, that is, the area ratio of the white region, may include several percent of the area ratio of the retained austenite. However, the influence is small, since the variation in martensite fraction is calculated as a difference.

After the shaping step (hot stamping), the steel sheet B3-21 can have a tensile strength of 0.5 GPa or more, for example, and preferably has a tensile strength of 1.0 GPa or more. Similarly, after the shaping step (hot stamping), the steel sheets B3-22 and B3-23 (FIG. 16) can have a tensile strength of 0.5 GPa or more, for example, and preferably have a tensile strength of 1.0 GPa or more. At least one of the steel sheets B3-21, B3-22, and B3-23 may have a tensile strength of 1.5 GPa or more after the shaping step. The tensile strength of each of the steel sheets B3-21, B3-22, and B3-23 may be the same as or different from the tensile strengths of the other steel sheets.

### [Effects]

With the blank B3-20 according to this embodiment, the emissivity of one surface of the steel sheet B3-21 having the smallest sheet thickness tₘᵢₙ is higher than the emissivity of both surfaces of the steel sheet B3-22 having a larger sheet thickness. That is, the surface of the steel sheet B3-21 is subjected to a treatment for increasing the emissivity. Therefore, when the blank B3-20 is heated for hot stamping, the heating rate of the steel sheet B3-21 is markedly higher than the heating rate of the steel sheet B3-22. Therefore, in the heating step, the steel sheet B3-21 can be quickly heated to a temperature in the austenite zone, and a long high temperature retention time of the steel sheet B3-21 can be ensured. As a result, the austenite grain in the microstructure of the steel sheet B3-21 is coarsened, and the ferrite transformation region (ferrite nose) in the CCT diagram shifts to longer times. Therefore, the transformation from austenite to ferrite in the steel sheet B3-21 can be prevented in the period from the removal of the steel sheet B3-21 from the heating furnace B3-30 to the start of the shaping with the press tooling B3-40. Therefore, the shaping of the blank B3-20 with the press tooling B3-40 can be started while the microstructure of the steel sheet B3-21 is kept in the austenite phase, and the hardenability of the steel sheet B3-21 having the smallest sheet thickness tₘᵢₙ can be improved.

In this embodiment, since the hardenability of the steel sheet B3-21 having a relatively small thickness is improved, the hardness of the structural member B3-10 produced from the blank B3-20 can be made uniform. More specifically, even the steel sheet B3-21 having the smallest sheet thickness tₘᵢₙ is quenched well, and therefore, the variation in martensite fraction of the steel sheet B3-21 can be reduced to 20% or less. As a result, deformation concentration is less likely to occur when an impact load is applied to the structural member B3-10, for example, and the structural member B3-10 is more likely to exert high shock absorption performance. Therefore, even when an annular structural member B3-10, in particular, a large annular structural member B3-10, that includes a steel sheet B3-21 having a small sheet thickness is produced from the blank B3-20, the failure in strength of the structural member B3-10 can be reduced, and the shock absorption performance of the structural member B3-10 can be improved.

The smaller the variation in martensite fraction, the more uniform the mechanical characteristics in the structural member B3-10, so that smaller variations in martensite fraction are preferable from the viewpoint of functionality of the structural member B3-10. On the other hand, if the variation in martensite fraction is large, it means that poorly hardened parts, that is, low hardness parts, are unevenly distributed in the structural member B3-10, and deformation is likely to be concentrated in the poor hardness parts at the time of collision deformation of the structural member B3-10, so that the functionality of the structural member B3-10 deteriorates.

In this embodiment, since the hardenability of the steel sheet B3-21 having a relatively small thickness is improved, unevenness of stress in the structural member B3-10 is also less likely to occur. Therefore, even when the annular structural member B3-10 is produced from the annular blank B3-20, torsion is less likely to occur in the structural member B3-10. Therefore, even when an annular structural member B3-10, in particular, a large annular structural member B3-10, that includes a steel sheet B3-21 having a small sheet thickness is produced from the blank B3-20, the failure in dimensional accuracy of the structural member B3-10 can be reduced, and the shock absorption performance of the structural member B3-10 can be improved.

With the blank B3-20 according to this embodiment, a surface of the steel sheet B3-21 having the smallest sheet thickness tₘᵢₙ is coated with the film B3-26 that is substantially black in color, whereas the steel sheet B3-22 having a larger sheet thickness than the steel sheet B3-21 is not provided with the film B3-26. Therefore, the emissivity of the surface of the steel sheet B3-21 is higher than the emissivity of both surfaces of the steel sheet B3-22. In this case, since the steel sheet B3-21 is more quickly heated than the steel sheet B3-22, the high temperature retention time of the steel sheet B3-21 is longer compared with the case where steel sheets B3-21 and B3-22 have the same emissivity. As a result, after the heating of the blank B3-20 ends, unevenness of the phase transformation due to the difference in cooling rate between the steel sheets B3-21, B3-22, and B3-23 can be reduced. Specifically, the start of the phase transformation from austenite to ferrite of the steel sheet B3-21 having the smallest sheet thickness tₘᵢₙ can be delayed, so that the difference in start time of phase transformation between the steel sheet B3-21 and the other steel sheets B3-22 and B3-23 can be reduced. As a result, the hardenability of the steel sheets B3-21, B3-22, and B3-23 included in the blank B3-20 can be made uniform.

For example, when the coating layer B3-217 of the steel sheet B3-21 is an aluminum-based coating layer, the heating rate of the steel sheet B3-21 in the heating step tends to be low. The aluminum-based coating layer is white in color and therefore tends to reflect thermal energy, which inhibits heating of the steel sheet B3-21. However, with the blank B3-20 according to this embodiment, the surface of the steel sheet B3-21 is subjected to a treatment for increasing the emissivity. Therefore, even if the steel sheet B3-21 is a coated steel sheet having an aluminum-based coating layer, heating of the steel sheet B3-21 in the heating step is promoted, and a long high temperature retention time of the steel sheet B3-21 can be ensured. Therefore, the hardenability of the steel sheet B3-21 having a smaller thickness can be ensured.

In this embodiment, in the heating step, the steel sheet B3-21 having the smallest sheet thickness tₘᵢₙ first reaches a temperature in the austenite zone, and the steel sheet B3-22 having the middle sheet thickness t_{mid} and the steel sheet B3-23 having the largest sheet thickness tₘₐₓ then reach the temperature in the austenite zone. Here, the ratio of the largest sheet thickness tₘₐₓ to the smallest sheet thickness tₘᵢₙ: tₘₐₓ/tₘᵢₙ is preferably 3.2 or less. In this way, the steel sheet B3-23 having the sheet thickness tₘₐₓ can be sufficiently heated so that the phase transformation to austenite is completed, before alloying of the coating layer B3-217 of the steel sheet B3-21 having the sheet thickness tₘᵢₙ excessively proceeds as a result of the heating, the diffusion layer grows, and the corrosion resistance or the weldability are lost. Therefore, a process window can be ensured in the production of the structural member B3-10.

In this embodiment, in order to increase the emissivity of the steel sheet B3-21, the steel sheet B3-21 can be provided with the film B3-26. The emissivity of the film B3-26 (at a temperature of 25 °C and a wavelength of 8.0 µm) is 60% or more, for example. In this way, the steel sheet B3-21 can be efficiently radiantly heated, and the heating rate of the steel sheet B3-21 in the heating step is likely to be raised.

In this embodiment, the film B3-26 can contain carbon black, one or more oxides selected from among the group consisting of Zr oxide, Zn oxide, and Ti oxide, and 0 to 0.30 g/m² or less silica. The content X_{CB} (g/m²) of carbon black and the content X_{Oxide} (g/m²) of the oxide preferably satisfy Formula (1) described above. Formula (1) is a formula that defines a relationship between the increasing rate (%) of the heating rate (°C/s), and the content X_{CB} of carbon black and the content X_{Oxide} of the oxide. Formula (1) shows that carbon black primarily serves as a heat absorbing material in the range up to 700 °C, and the oxide primarily serves as a heat absorbing material in the range of 700 °C or more. When the film B3-26 satisfies Formula (1), the emissivity of the surface of the steel sheet B3-21 provided with the film B3-26 at a temperature of 25 °C and a wavelength of 8.0 µm is likely to be 60% or more.

The carbon black and the oxide can be dispersed over the whole of a surface of the film B3-26 that is perpendicular to the sheet thickness direction of the steel sheet B3-21. Therefore, the emissivity of the surface of the steel sheet B3-21 is more likely to be uniform. Therefore, in the heating step, the steel sheet B3-21 having the smallest sheet thickness tₘᵢₙ can be quickly and uniformly heated.

However, the configuration of the film B3-26 is not limited to this. The film B3-26 can be any film that is substantially black in color in order to increase the emissivity of the steel sheet B3-21 compared with the case where the steel sheet B3-21 is not subjected to any treatment. For example, the film B3-26 may contain graphite, soot, or the like, instead of or in addition to carbon black. Alternatively, in order to increase the emissivity of the steel sheet B3-21, the film B3-26 may contain an acicular compound having a hexagonal crystal structure having an aspect ratio of 4 or more and 50 or less, for example. Although the compound having a hexagonal crystal structure is typically graphite (C), the compound may be lanthanum silicate, magnesium diboride, beryllium oxide (beryllia), zinc oxide, β-quartz, millerite (NiS), wurtzite (ZnS), or the like.

### <Second Embodiment>

FIG. 5 is a plan view of a blank B3-20A according to a second embodiment. The blank B3-20 according to the first embodiment is a so-called tailor welded blank formed by the steel sheets B3-21, B3-22, and B3-23 butt-joined to each other. The blank B3-20A according to this embodiment mainly differs from the blank B3-20 according to the first embodiment in how the junctures are made between the steel sheets.

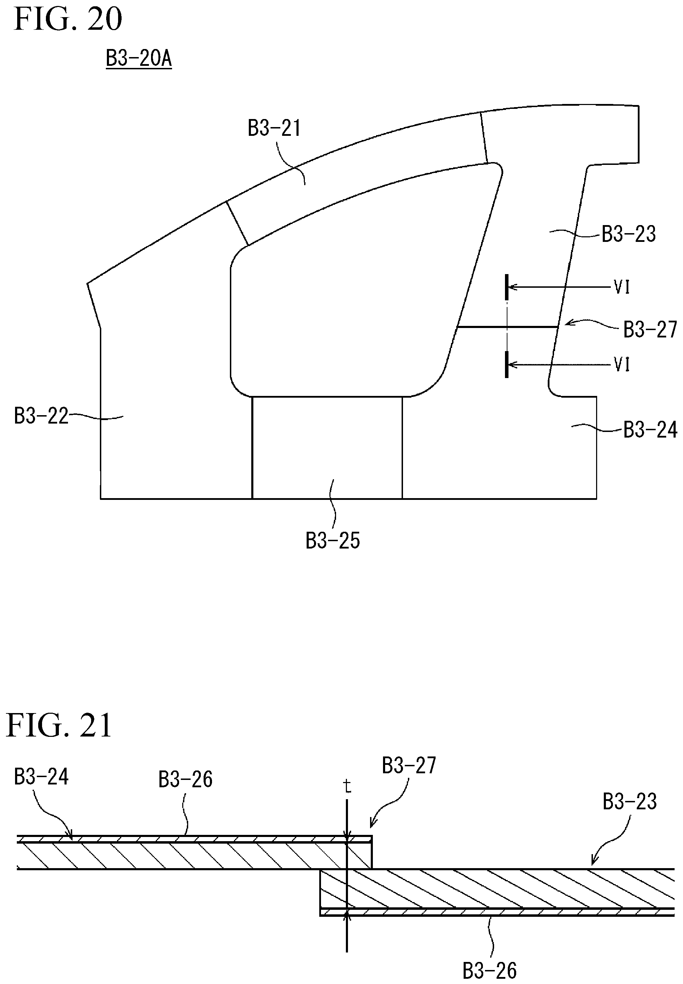

With reference to FIG. 20, the blank B3-20A includes multiple steel sheets B3-21, B3-22, B3-23, B3-24, and B3-25. The steel sheets B3-21, B3-22, B3-23, B3-24, and B3-25 are disposed and joined to each other to form an annular shape in plan view of the blank B3-20. As in the first embodiment, the steel sheet B3-21 has the smallest sheet thickness tₘᵢₙ and is configured so that the emissivity of at least one surface thereof is higher than the emissivity of both surfaces of the steel sheet B3-22. Therefore, the blank B3-20A according to this embodiment has the same effects as in the first embodiment.

The blank B3-20A has an overlap part B3-27. FIG. 21 is a cross-sectional view taken along line VI-VI in FIG. 20, showing a cross section of the overlap part B3-27. In this embodiment, the overlap part B3-27 is formed by laying end parts of adjacent two steel sheets B3-23 and B3-24 on one another. The end part of the steel sheet B3-23 is laid on the end part of the steel sheet B3-24 and joined thereto. The steel sheets B3-23 and B3-24 are joined to each other by spot welding or laser welding, for example.

The overlap part B3-27 has a total sheet thickness t. The total sheet thickness t is the sum of the sheet thickness of the steel sheet B3-23 and the sheet thickness of the steel sheet B3-24. When at least one of the steel sheets B3-23 and B3-24 is a coated steel sheet, the total sheet thickness t includes the thickness of the coating layer. The total sheet thickness t of the overlap part B3-27 is 2.5 mm or more and 4.0 mm or less, for example. In this case, the steel sheet B3-23 is configured so that the emissivity of the surface located on the outer side of the overlap part B3-27, that is, the surface opposite to the steel sheet B3-24, is higher than the emissivity of both surfaces of the steel sheet B3-22 (FIG. 20). The steel sheet B3-24 is configured so that the emissivity of the surface located on the outer side of the overlap part B3-27, that is, the surface opposite to the steel sheet B3-23, is higher than the emissivity of both surfaces of the steel sheet B3-22. That is, the whole of the surface of each of the steel sheets B3-23 and B3-24 that is located on the outer side of the overlap part B3-27 is subjected to a treatment for increasing the emissivity. For example, at a temperature of 25 °C and a wavelength of 8.0 µm, the emissivity of the surface of each of the steel sheets B3-23 and B3-24 that is located on the outer side of the overlap part B3-27 is 60% or more, preferably 70% or more, and more preferably 80% or more. The difference in emissivity at a temperature of 25 °C and a wavelength of 8.0 µm between the surface of each of the steel sheets B3-23 and B3-24 that is located on the outer side of the overlap part B3-27 and both surfaces of the steel sheet B3-22 is preferably more than 5%, more preferably more than 10%, and even more preferably more than 20%. The emissivity of the surface of each of the steel sheets B3-23 and B3-24 that is located on the inner side of the overlap part B3-27 may be higher than the emissivity of both surfaces of the steel sheet B3-22 or may be equal to or less than the emissivity of both surfaces of the steel sheet B3-22.

In the steel sheets B3-23 and B3-24, the surface located on the outer side of the overlap part B3-27 may be coated with a film B3-26, and thus the emissivity of the surface may be higher than the emissivity of the steel sheet B3-22 (FIG. 20). The film B3-26 used for the steel sheets B3-23 and B3-24 may have the same configuration as the film B3-26 used for the steel sheet B3-21. Since the film thickness of the film B3-26 is very small as described above, the measured sheet thickness including the film B3-26 can be regarded as the total sheet thickness t of the overlap part B3-27.

When the total sheet thickness t of the overlap part B3-27 is more than 2.5 mm, for example, the temperature of the overlap part B3-27 is slow to rise. Therefore, when the blank B3-20A is heated for hot stamping, alloying of the coating layer B3-217 (FIGS. 18B and 18C) of the steel sheet B3-21 having the smallest sheet thickness tₘᵢₙ may proceed and the diffusion layer may grow before the overlap part B3-27 reaches a temperature in the austenite zone, and the corrosion resistance or the weldability of the steel sheet B3-21 may be unable to be ensured. However, in this embodiment, the emissivity of the overlap part B3-27 is increased to promote heating, so that even when the total sheet thickness t of the overlap part B3-27 is more than 2.5 mm, the overlap part B3-27 can be sufficiently heated so that the phase transformation to austenite is completed, before alloying of the coating layer B3-217 of the steel sheet B3-21 proceeds and the diffusion layer grows until the corrosion resistance or the weldability are lost. Therefore, a process window can be ensured in the production of the structural member.

With the blank B3-20A according to this embodiment, the steel sheet B3-21 may be butt-joined to the steel sheets B3-22 and B3-23 or may form the overlap part B3-27 with one or both of the steel sheets B3-22 and B3-23. The steel sheet B3-25 may be butt-joined to the steel sheets B3-22 and B3-24 or may form the overlap part B3-27 with one or both of the steel sheets B3-22 and B3-24. When the steel sheets B3-21 and B3-23 form the overlap part B3-27, and the total sheet thickness t of the overlap part B3-27 is more than 2.5 mm, the steel sheets B3-21 and B3-23 may be configured so that the emissivity of the surface located on the outer side of the overlap part B3-27 is higher than the emissivity of both surfaces of the steel sheet B3-22. Similarly, when the steel sheets B3-24 and B3-25 form the overlap part B3-27, and the total sheet thickness t of the overlap part B3-27 is more than 2.5 mm, the steel sheets B3-24 and B3-25 may be configured so that the emissivity of the surface located on the outer side of the overlap part B3-27 is higher than the emissivity of both surfaces of the steel sheet B3-22.

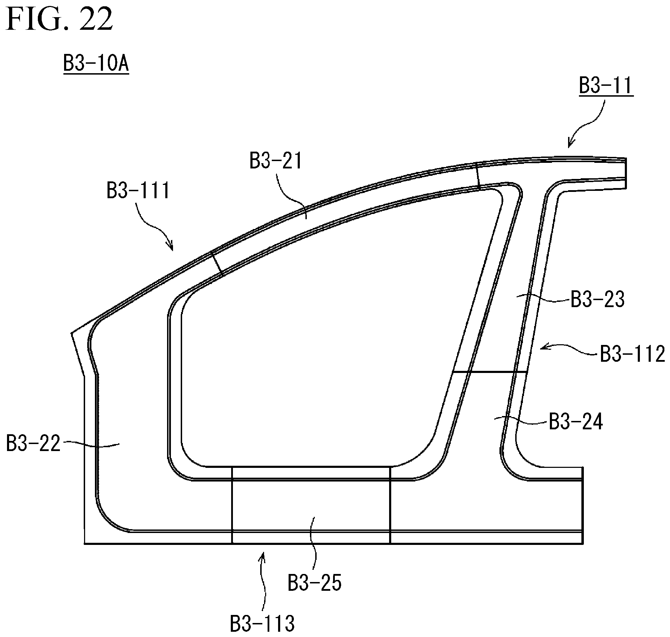

FIG. 22 is a plan view of a structural member B3-10A produced from the blank B3-20A. The structural member B3-10A generally has the same configuration as the structural member B3-10 according to the first embodiment (FIGS. 16 and 17). However, in the structural member B3-10A, a member main body B3-11 is formed of five steel sheets B3-21, B3-22, B3-23, B3-24, and B3-25. The method of producing the structural member B3-10A from the blank B3-20A is the same as the method in the first embodiment.

The structural member B3-10A can have the same size as the structural member B3-10 according to the first embodiment. Specifically, the size of the structural member B3-10A having an annular shape in plan view is 1.0 m or more and 4.0 mm or less, for example. In the structural member B3-10A, the steel sheets B3-21, B3-22, B3-23, B3-24, and B3-25 each have an open cross section, as with the steel sheets in the first embodiment. The steel sheets B3-21, B3-22, B3-23, B3-24, and B3-25 may each have a generally hat-like shape in cross-sectional view of the structural member B3-10A, for example.

Although not shown, in the structural member B3-10A, the width of the steel sheet B3-21 located at an upper part of a front pillar B3-111 is 15 mm or more and 300 mm or less, for example. The height of the steel sheet B3-21 may be 10 mm or more and 150 mm or less. In the structural member B3-10A, the width of the steel sheet B3-22 located at a lower part of the front pillar B3-111 is 30 mm or more and 750 mm or less, for example. The height of the steel sheet B3-22 may be 25 mm or more and 150 mm or less. In the structural member B3-10A, the width of the steel sheets B3-23 and B3-24 located at the center pillar B3-112 is 15 mm or more and 300 mm or less, for example. The height of the steel sheets B3-23 and B3-24 may be 10 mm or more and 150 mm or less. In the structural member B3-10A, the width of the steel sheet B3-25 located at the position of the rocker B3-113 is 30 mm or more and 300 mm or less, for example. The height of the steel sheet B3-25 may be 25 mm or more and 150 mm or less.

Although embodiments of the present disclosure have been described above, the present disclosure is not limited to the embodiments described above, and various modifications can be made without departing from the spirit of the present disclosure.

In each of the embodiments described above, in order to increase the emissivity of the surface of the steel sheet B3-21 having the smallest sheet thickness tₘᵢₙ to be higher than the emissivity of the steel sheet B3-22, the surface of the steel sheet B3-21 is coated with the film B3-26. However, the means for increasing the emissivity of the surface of the steel sheet B3-21 is not limited to the film B3-26. For example, the emissivity of the surface of the steel sheet B3-21 may be increased to be higher than the emissivity of the steel sheet B3-22 by increasing the surface roughness of the steel sheet B3-21 to be higher than the surface roughness of the steel sheet B3-22. Similarly, the means for increasing the emissivity of the surface on the outer side of the overlap part B3-27 is not limited to the film B3-26.

In each of the embodiments described above, an example has been described in which the emissivity of only one of both surfaces of the steel sheet B3-21 having the smallest sheet thickness tₘᵢₙ is increased to be higher than the emissivity of the steel sheet B3-22. However, the emissivity of both surfaces of the steel sheet B3-21 may be increased to be higher than the emissivity of the steel sheet B3-22. For example, both surfaces of the steel sheet B3-21 may be coated with the film B3-26. Alternatively, the surface roughness of both surfaces of the steel sheet B3-21 may be increased to be higher than the surface roughness of the steel sheet B3-22.

In the first embodiment described above, each of the steel sheets B3-21, B3-22, and B3-23 included in the blank B3-20 may be single-layer or multilayer. That is, each of the steel sheets B3-21, B3-22, and B3-23 may be a single steel sheet, or a sheet material formed by multiple steel sheets overlaid on one another. Similarly, in the second embodiment described above, each of the steel sheets B3-21, B3-22, B3-23, B3-24, and B3-25 may be single-layer or multilayer.

In the first embodiment described above, the blank B3-20 includes three steel sheets B3-21, B3-22, and B3-23. In the second embodiment described above, the blank B3-20A includes five steel sheets B3-21, B3-22, B3-23, B3-24, and B3-25. However, the number of steel sheets included in the blanks B3-20 and B3-20A is not limited to these. The blanks B3-20 and B3-20A have only to include the steel sheet B3-21 having the smallest sheet thickness tₘᵢₙ and the steel sheet B3-22 having a sheet thickness larger than the sheet thickness tₘᵢₙ. The emissivity of one surface or both surfaces of the steel sheet B3-21 is higher than the emissivity of both surfaces of the steel sheet B3-22. The steel sheet B3-21 is directly or indirectly joined to the steel sheet B3-22. The blanks B3-20 and B3-20A having an annular shape in plan view can typically include three or more steel sheets. In the blanks B3-20 and B3-20A, the steel sheets other than the steel sheets B3-21 and B3-22 may or may not be subjected to a treatment for increasing the emissivity. When any of the blanks B3-20 and B3-20A includes multiple steel sheets 21 having the smallest sheet thickness tₘᵢₙ, the emissivity of one surface or both surfaces of all the steel sheets 21 is preferably higher than the emissivity of both surfaces of the steel sheet B3-22. In the blanks B3-20 and B3-20A having an annular shape, the arrangement of the multiple steel sheets including the steel sheets B3-21 and B3-22 is not particularly limited.

In each of the embodiments described above, an example has been described in which the steel sheet B3-21 having the smallest sheet thickness tₘᵢₙ is a coated steel sheet. However, the steel sheet B3-21 does not necessarily need to be a coated steel sheet. The steel sheet B3-21 may be a steel sheet with no coating layer on the surface thereof (a bare material). Similarly, the steel sheets other than the steel sheet B3-21 may be a coated steel sheet or a bare material.

In the first embodiment described above, the press tooling B3-40 used for hot stamping of the blank B3-20 includes the punch B3-41 and the die B3-42. However, the configuration of the press tooling B3-40 is not limited to the example described in the first embodiment. The press tooling B3-40 may further include a pad or a blank holder, for example.

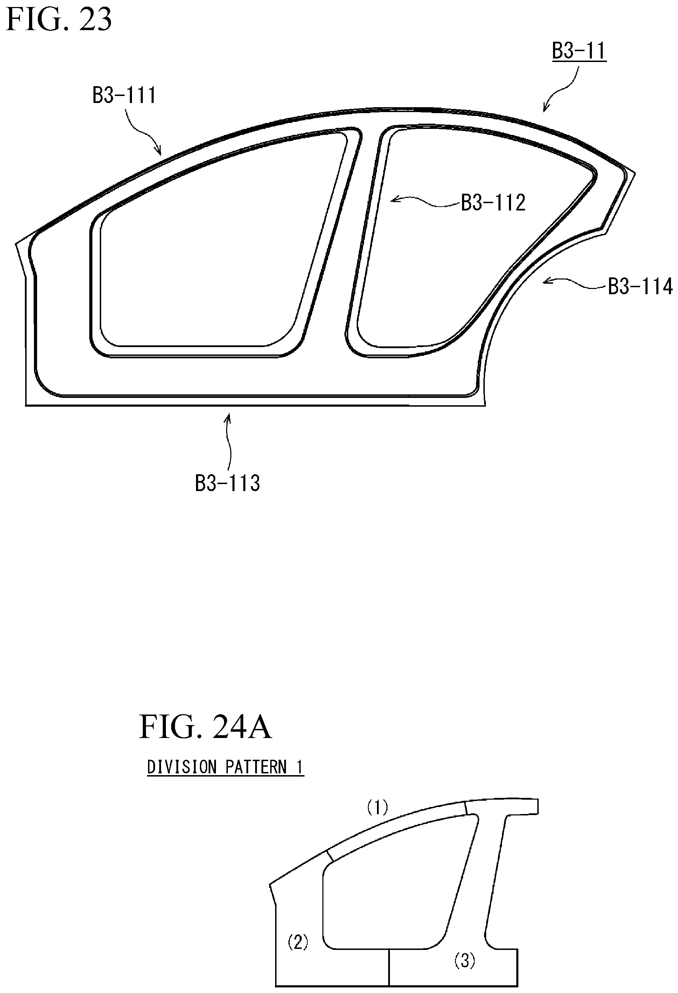

In the embodiments described above, the main body 11 of the structural members B3-10 and B3-10A includes the front pillar B3-111, the center pillar B3-112, and the rocker B3-113. However, the member main body B3-11 may further include another component. For example, as shown in FIG. 23, the member main body B3-11 may further include a rear pillar B3-114. The structural members B3-10 and B3-10A according to the embodiments described above are door ring parts (single door ring parts) having a single ring shape. On the other hand, the structural member shown in FIG. 23 is a door ring part (double door ring part) having a double ring shape. When producing the double door ring part, the blank used as the starting material also has the double ring shape.

### (EXAMPLES)

**In** the following, the present disclosure will be described in more detail with reference to examples. However, the present disclosure is not limited to the examples described below.

### [First Example]

**In** order to check the effects of the present disclosure, using commercially available software (AUTOFORM R. 10 available from AUTOFORM), CAE analysis of the press forming (hot stamping) of structural members that were single door ring parts was performed for different types (types of starting materials) and sheet thicknesses of steel sheets included in the structural members and different division patterns of the structural members.

Table 16 shows the steel sheets used in this analysis.

**[Table 16]**

| Symbol | Type of starting material | Base material | Film specifications |
|---|---|---|---|
| A | Al-Si 1.5G HS | Steel sheet for 1.5 GPa class hot stamping | No film |
| A-1 | Al-Si 1.5G HS | Steel sheet for 1.5 GPa class hot stamping | Black film/one side |
| A-2 | Al-Si 1.5G HS | Steel sheet for 1.5 GPa class hot stamping | Black film/both sides |
| A-G | GA 1.5G HS | Steel sheet for 1.5 GPa class hot stamping | No film |
| A-N | No coating 1.5G HS | Steel sheet for 1.5 GPa class hot stamping | No film |
| B | Al-Si 2.0G HS | Steel sheet for 2.0 GPa class hot stamping | No film |
| B-1 | Al-Si 2.0G HS | Steel sheet for 2.0 GPa class hot stamping | Black film/one side |
| B-2 | Al-Si 2.0G HS | Steel sheet for 2.0 GPa class hot stamping | Black film/both sides |
| B-G | GA 1.5G HS | Steel sheet for 2.0 GPa class hot stamping | No film |
| B-N | No coating 1.5G HS | Steel sheet for 2.0 GPa class hot stamping | No film |
| C | Al-Si 2.5G HS | Steel sheet for 2.5 GPa class hot stamping | No film |
| C-1 | Al-Si 2.5G HS | Steel sheet for 2.5 GPa class hot stamping | Black film/one side |
| C-2 | Al-Si 2.5G HS | Steel sheet for 2.5 GPa class hot stamping | Black film/both sides |
| D | Al-Si 1.0G HS | Steel sheet for 1.0 GPa class hot stamping | No film |
| D-1 | Al-Si 1.0G HS | Steel sheet for 1.0 GPa class hot stamping | Black film/one side |
| D-2 | Al-Si 1.0G HS | Steel sheet for 1.0 GPa class hot stamping | Black film/both sides |
| E | Al-Si 0.5G HS | Steel sheet for 0.5 GPa class hot stamping | No film |
| E-1 | Al-Si 0.5G HS | Steel sheet for 0.5 GPa class hot stamping | Black film/one side |
| E-2 | Al-Si 0.5G HS | Steel sheet for 0.5 GPa class hot stamping | Black film/both sides |

In Table 16, the "type of starting material" shows type of coating, tensile strength, and use (hot stamping) in this order. Concerning the film specifications, "black film" is a film that contains carbon black and metal oxide and is black in color. "Black film/one side" means that the whole of one surface of the steel sheet is coated with a black film. "Black film/both sides" means that the whole of both surfaces of the steel sheet is coated with a black film.

FIGS. 24A to 24G show division patterns of the structural member. FIGS. 24A to 24G show the number of steel sheets (starting materials) included in the structural members that are single door ring parts and the positions of the junctures between the steel sheets in the structural members. In FIGS. 24A to 24G, each steel sheet is denoted by a numeral in parentheses.

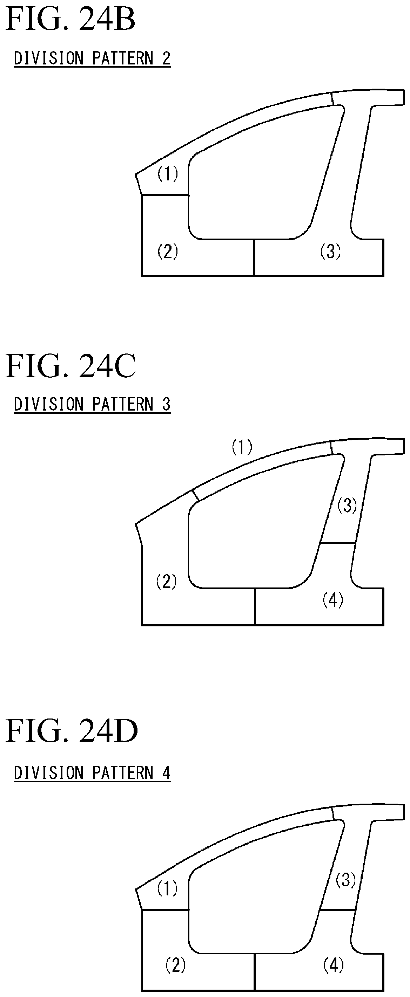

Table 17 shows analysis conditions and results for division patterns 1 and 2 shown in FIGS. 24A and 24B. In FIGS. 24A and 24B, the structural member is formed of three starting materials (1) to (3).

**[Table 17]**

| Symbol | Division pattern | Starting material (1) | | Starting material (2) | | Starting material (3) | | Start time of phase transformation, s | Time required to reach 910 °C, s |
|---|---|---|---|---|---|---|---|---|---|
| | | Type of starting material | Sheet thickness, mm | Type of starting material | Sheet thickness, mm | Type of starting material | Sheet thickness, mm | | |
| Example 1 | 1 | B | 1.4 | D | 1.4 | B-2 | 1.2 | 21.0 | 115.0 |
| Example 2 | 1 | B-1 | 1.2 | D-1 | 1.3 | A | 1.6 | 20.3 | 128.5 |
| Example 3 | 2 | A | 1.6 | D-2 | 1.2 | A | 1.8 | 21.2 | 115.0 |
| Comparative Example 1 | 1 | B | 1.2 | D | 1.4 | B | 1.6 | 17.8 | 149.5 |
| Comparative Example 2 | 2 | A | 1.6 | D | 1.2 | A | 1.8 | 18.6 | 149.5 |

With reference to Table 17, in Example 1, both surfaces of a starting material (3) having the smallest sheet thickness tₘᵢₙ: 1.2 mm among starting materials (1) to (3) were provided with a black film. In Example 2, one surface of a starting material (1) having the smallest sheet thickness tₘᵢₙ: 1.2 mm among starting materials (1) to (3) was provided with a black film. In Example 3, both surfaces of a starting material (2) having the smallest sheet thickness tₘᵢₙ: 1.2 mm among starting materials (1) to (3) were provided with a black film. On the other hand, in Comparative Examples 1 and 2, not all of starting materials (1) to (3) were provided with a black film. In Comparative Examples 1 and 2, the starting material having the smallest sheet thickness tₘᵢₙ: 1.2 mm was not provided with a black film.

In Table 17, "time required to reach 910 °C" means the time required to reach 910 °C by the first starting material to be heated to 910 °C (A_{c3} point or higher) after the start of heating of the blank among the starting materials included in the blank. "Start time of phase transformation" means the shortest time until the phase transformation to ferrite starts after the blank is heated at a furnace temperature of 920 °C for five minutes and thirty seconds and then removed from the heating furnace. As can be seen from Table 17, in Examples 1 to 3 in which the emissivity of the thinnest starting material was increased by the black film, the time required to reach 910 °C was 20 seconds or more shorter than in Comparative Examples 1 and 2, and the heating rate of the thinnest starting material in the heating step was increased. Furthermore, in Examples 1 to 3, the start time of phase transformation was more than 20 seconds and was delayed compared with Comparative Examples 1 and 2. Therefore, the blank is more likely to start being shaped before the start of ferrite transformation, and the blank can be uniformly quenched in the shaping step.

Table 18 shows analysis conditions and results for division patterns 3 and 4 shown in FIGS. 24C and 24D. In FIGS. 24C and 24D, the structural member is formed of four starting materials (1) to (4).

**[Table 18]**

| Symbol | Division pattern | Starting material (1) | | Starting material (2) | | Starting material (3) | | Starting material (4) | | Start time of phase transformation, s | Time required to reach 910 °C, s |
|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | | |
| Example 4 | 3 | C-2 | 1.2 | A-1 | 1.3 | A | 1.8 | A | 1.4 | 21.2 | 115.0 |
| Example 5 | 4 | B | 1.6 | B-2 | 1.2 | B | 1.8 | C | 1.4 | 21.0 | 115.0 |
| Example 6 | 4 | B-G | 1.6 | A | 1.4 | A-N | 1.8 | A-1 | 1.2 | 20.3 | 128.5 |
| Example 7 | 3 | B-1 | 1.2 | D | 1.4 | B-N | 1.8 | D-2 | 1.2 | 20.3 | 115.0 |
| Example 8 | 4 | A | 1.6 | C-1 | 1.2 | B | 2.6 | A-1 | 1.2 | 20.1 | 128.5 |
| Example 9 | 4 | A-G | 1.6 | B | 1.4 | B-1 | 1.2 | D | 1.4 | 20.3 | 128.5 |
| Example 10 | 4 | A | 1.6 | A-2 | 1.2 | B-2 | 1.2 | A | 1.4 | 21.0 | 115.0 |
| Comparative Example 3 | 3 | c | 1.2 | A | 1.3 | A | 1.8 | A | 1.4 | 19.0 | 149.5 |
| Comparative Example 4 | 4 | B | 1.6 | B | 1.2 | B | 1.8 | C | 1.4 | 17.8 | 149.5 |
| Comparative Example 5 | 4 | B-G | 1.6 | A | 1.4 | A-N | 1.8 | A | 1.2 | 18.0 | 149.5 |
| Comparative Example 6 | 3 | B | 1.2 | D | 1.4 | B | 1.8 | D | 1.2 | 17.8 | 149.5 |
| Comparative Example 7 | 4 | A | 1.6 | C | 1.2 | B | 2.6 | A | 1.2 | 17.7 | 149.5 |

With reference to Table 18, in Examples 4 to 10, a starting material having the smallest sheet thickness tₘᵢₙ among starting materials (1) to (4) was provided with a black film. In Examples 4 to 10, one surface or both surfaces of the starting material having the smallest sheet thickness tₘᵢₙ was coated with the black film. When there were multiple starting materials having the smallest sheet thickness tₘᵢₙ, all those starting materials were provided with the black film. On the other hand, in Comparative Examples 3 to 7, not all of starting materials (1) to (4) were provided with the black film. In Comparative Examples 3 to 7, the starting material having the smallest sheet thickness tₘᵢₙ was not provided with the black film.

Table 18 shows that in Examples 4 to 10, the time required to reach 910 °C was 20 seconds or more shorter than in Comparative Examples 3 to 7, and the heating rate of the thinnest starting material in the heating step was increased. Furthermore, in Examples 4 to 10, the start time of phase transformation was more than 20 seconds and was delayed compared with Comparative Examples 3 to 7. Therefore, the blank is more likely to start being shaped before the start of ferrite transformation, and the blank can be uniformly quenched in the shaping step.

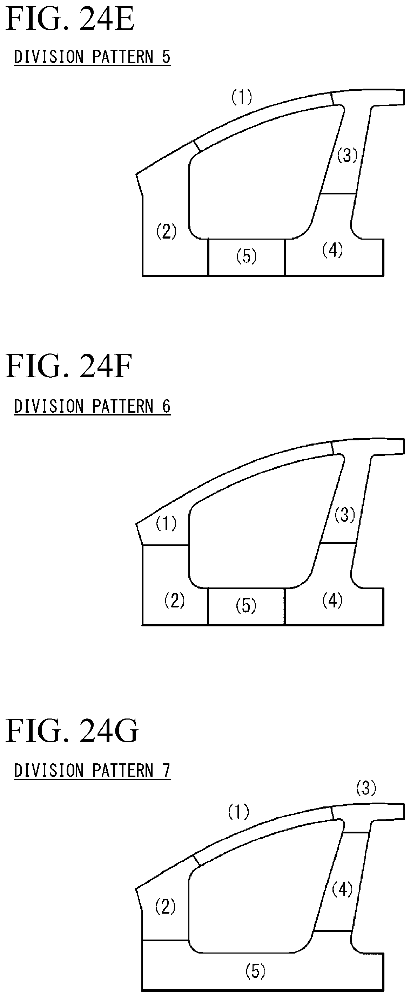

Table 19 shows analysis conditions and results for division patterns 5 to 7 shown in FIGS. 24E to 24G. In FIGS. 24E to 24G, the structural member is formed of five starting materials (1) to (5).

**[Table 19]**

| Symbol | Division pattern | Starting material (1) | | Starting material (2) | | Starting material (3) | | Starting material (4) | | Starting material (5) | | Start time of phase transformation, s | Time required to reach 910 °C, s |
|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | |
| Example 11 | 5 | A-1 | 1.2 | A | 1.6 | C | 1.4 | A-1 | 1.2 | A | 1.4 | 20.3 | 128.5 |
| Example 12 | 5 | A-2 | 1.2 | B | 1.6 | C-1 | 1.2 | D | 1.8 | B-2 | 1.2 | 21.0 | 115.0 |
| Example 13 | 7 | A-1 | 1.2 | C-1 | 1.2 | A | 1.8 | B-1 | 1.0 | D | 1.4 | 18.1 | 107.0 |
| Example 14 | 7 | C-2 | 1.2 | B | 1.6 | B | 1.4 | A-1 | 1.2 | A | 1.4 | 21.2 | 115.0 |
| Example 15 | 6 | B | 1.6 | B | 1.4 | A | 1.6 | D-1 | 1.2 | B | 1.4 | 20.1 | 128.5 |
| Comparative Example 8 | 5 | A | 1.2 | A | 1.6 | C | 1.4 | A | 1.2 | A | 1.4 | 17.7 | 149.5 |
| Comparative Example 9 | 5 | A | 1.2 | B | 1.6 | C | 1.2 | D | 1.8 | B | 1.2 | 17.8 | 149.5 |
| Comparative Example 10 | 7 | C | 1.2 | B | 1.6 | B | 1.4 | A | 1.2 | A | 1.4 | 17.7 | 149.5 |
| Comparative Example 11 | 6 | B | 1.6 | B | 1.4 | A | 1.6 | D | 1.2 | B | 1.4 | 18.0 | 149.5 |

With reference to Table 19, in Examples 11 to 15, a starting material having the smallest sheet thickness tₘᵢₙ among starting materials (1) to (5) is provided with a black film. In Examples 11 to 15, one surface or both surfaces of the starting material having the smallest sheet thickness tₘᵢₙ was coated with the black film. When there were multiple starting materials having the smallest sheet thickness tₘᵢₙ, all those starting materials were provided with the black film. On the other hand, in Comparative Examples 8 to 11, not all of starting materials (1) to (5) were provided with the black film. In Comparative Examples 8 to 11, the starting material having the smallest sheet thickness tₘᵢₙ was not provided with the black film.

As can be seen from Table 19, in Examples 11 to 15, the time required to reach 910 °C was 20 seconds or more shorter than in Comparative Examples 8 to 11, and the heating rate of the thinnest starting material in the heating step was increased. Furthermore, in Examples 11, 12, 14, and 15, the start time of phase transformation was more than 20 seconds and was delayed compared with Comparative Examples 8 to 11. In Example 13, the start time of phase transformation was also delayed compared with Comparative Examples 8 to 11. Therefore, the blank is more likely to start being shaped before the start of ferrite transformation, and the blank can be uniformly quenched in the shaping step.

In the examples and the comparative examples shown in Tables 17 to 19, the starting materials were butted on each other and then joined by laser welding (butt-joint). On the other hand, in the examples and comparative examples shown in Table 20 described below, some starting materials were joined by spot welding, for example, to form an overlap part.

**[Table 20]**

| Symbol | Division pattern | Starting material (1) | | Starting material (2) | | Starting material (3) | | Starting material (4) | | Starting material (5) | | Start time of phase transformation, s | Time required to reach 910 °C, s |
|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | |
| Example 16 | 6 | A | 1.6 | A-1 | 1.6 | C-1 | 1.4 | A-1 | 1.2 | A-1 | 1.4 | 20.3 | 128.5 |
| Example 17 | 5 | B | 1.4 | A-1 | 1.4 | B-1 | 1.4 | D-1 | 1.2 | A-1 | 1.2 | 20.3 | 128.5 |
| Comparative Example 12 | 6 | A | 1.2 | A | 1.6 | C | 1.4 | A | 1.2 | A | 1.4 | 17.7 | 149.5 |
| Comparative Example 13 | 5 | B | 1.6 | A | 1.4 | B | 1.6 | D | 1.2 | A | 1.4 | 17.8 | 149.5 |

With reference to Table 20 and FIG. 24F, in Example 16 and Comparative Example 12, starting materials (2) and (5), starting materials (3) and (4), and starting materials (4) and (5) each form an overlap part at the juncture therebetween. With reference to Table 20 and FIG. 24E, in Example 17 and Comparative Example 13, starting materials (2) and (5) and starting materials (3) and (4) each form an overlap part at the juncture therebetween.

As shown in Table 20, in Examples 16 and 17, the starting material having the smallest sheet thickness tₘᵢₙ among the starting materials (1) to (5) was provided with the black film. On the other hand, in Comparative Examples 12 and 13, not all of the starting materials (1) to (5) were provided with the black film. In Comparative Examples 12 and 13, the starting material having the smallest sheet thickness tₘᵢₙ was not provided with the black film.

As can be seen from Table 20, in Examples 16 and 17, the time required to reach 910 °C was 20 seconds or more shorter than in Comparative Examples 12 and 13, and the start time of phase transformation was delayed. Therefore, it was ascertained that even when the blank includes an overlap part, the same effects as in the case of butt-joint are achieved by increasing the emissivity of the thinnest starting material.

### [Second Example]

The same analysis as in the first example was performed of the press forming (hot stamping) of structural members that were double door ring parts for different types and sheet thicknesses of starting materials included in the structural members and different division patterns of the structural members.

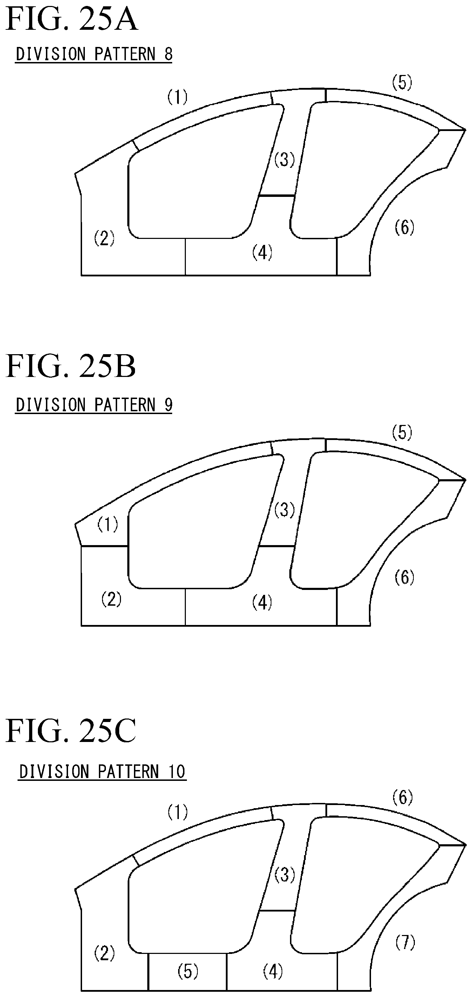

The steel sheets as the starting materials were selected from those shown in Table 16, as in the first embodiment. The division patterns of the structural members are shown in FIGS. 25A to 25D. FIGS. 25A to 25D show the number of steel sheets (starting materials) included in the structural members that are double door ring parts and the positions of the junctures between the steel sheets in the structural members. In FIGS. 25A to 25D, each steel sheet as the starting material is denoted by a numeral in parentheses.

Table 21 shows analysis conditions and results for division patterns 8 and 9 shown in FIGS. 25A and 25B. In FIGS. 25A and 25B, the structural member is formed of six starting materials (1) to (6).

**[Table 21]**

| Symbol | Division pattern | Starting material (1) | | Starting material (2) | | **Starting** material (3) | | Starting material (4) | | Starting material (5) | | Starting material (6) | | Start time of phase transformation, s | Time required to reach 910 °C, s |
|---|---|---|---|---|---|---|---|---|---|---|---|---|---|---|---|
| | | Type of starting material | Sheet thicknes s, mm | Type of starting material | Sheet thicknes s, mm | Type of starting material | Sheet thicknes s, mm | Type of starting material | Sheet thicknes s, mm | Type of starting material | Sheet thicknes s, mm | Type of starting material | Sheet thicknes s, mm | | |
| Example 18 | 8 | C | 1.6 | A | 1.4 | A | 1.8 | D | 1.4 | B-1 | 1.0 | D-1 | 1.2 | 18.4 | 107.0 |
| Example 19 | 8 | A | 1.6 | B-1 | 1.3 | B | 1.8 | A | 1.4 | A-1 | 1.2 | A-1 | 1.0 | 17.9 | 107.0 |
| Example 20 | 9 | B | 1.6 | A | 1.4 | C | 1.8 | B | 1.4 | B-2 | 1.0 | A-2 | 1.0 | 18.1 | 95.5 |
| Comparative Example 14 | 8 | C | 1.6 | A | 1.4 | A | 1.8 | D | 1.4 | B | 1.0 | D | 1.2 | 16.5 | 124.5 |
| Comparative Example 15 | 9 | B | 1.6 | A | 1.4 | C | 1.8 | B | 1.4 | B | 1.0 | A | 1.0 | 15.8 | 124.5 |

With reference to Table 21, in Examples 18 to 20, a starting material having the smallest sheet thickness tₘᵢₙ among starting materials (1) to (6) was provided with a black film. In Examples 18 to 20, one surface or both surfaces of the starting material having the smallest sheet thickness tₘᵢₙ was coated with the black film. On the other hand, in Comparative Examples 14 and 15, not all of starting materials (1) to (6) were provided with the black film. In Comparative Examples 14 and 15, the starting material having the smallest sheet thickness tₘᵢₙ was not provided with the black film.

As can be seen from Table 21, in Examples 18 to 20, the time required to reach 910 °C was about 20 seconds shorter than in Comparative Examples 14 and 15, and the heating rate of the thinnest starting material in the heating step was increased. Furthermore, in Examples 18 to 20, the start time of phase transformation was delayed compared with Comparative Examples 14 and 15. Therefore, it can be said that by increasing the emissivity of the thinnest starting material, the blank is more likely to start being shaped before the start of ferrite transformation, and the blank can be uniformly quenched in the shaping step.

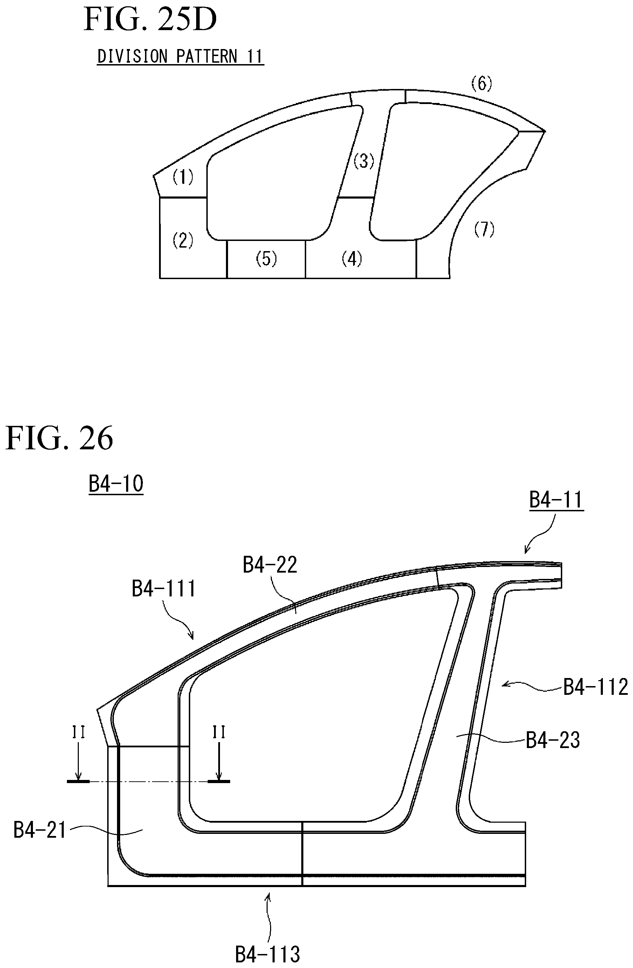

Table 22 shows analysis conditions and results for division patterns 10 and 11 shown in FIGS. 25C and 25D. In FIGS. 25C and 25D, the structural member is formed of seven starting materials (1) to (7).

**[Table 22]**

| Symbol | Division pattern | Starting material (1) | | Starting material (2) | | Starting material (3) | | Starting material (4) | | Starting material (5) | | Starting material (6) | | Starting material (7) | | Start time of phase transformation, s | Time required to reach 910 °C, s |
|---|---|---|---|---|---|---|---|---|---|---|---|---|---|---|---|---|---|
| | | Type of starting material | Sheet thickness , mm | Type of starting material | Sheet thickness , mm | Type of starting material | Sheet thickness , mm | Type of starting material | Sheet thickness , mm | Type of starting material | Sheet thickness , mm | Type of starting material | Sheet thickness , mm | Type of starting material | Sheet thickness , null | | |
| Example 21 | to | C | 1.6 | A | 1.4 | A | 1.8 | D-2 | 1.2 | D-1 | 1.4 | B-1 | 1.2 | D-2 | 1.0 | 18.1 | 95.5 |
| Example 22 | 10 | A | 1.6 | A | 1.4 | B | 1.8 | A-1 | 1.2 | B-1 | 1.2 | A-1 | 1.2 | A-1 | 1.2 | 17.9 | 107.0 |
| Example 23 | 11 | B | 1.6 | B-1 | 1.3 | C | 1.8 | E-1 | 1.2 | A-2 | 1.2 | B-2 | 1.2 | A-2 | 1.0 | 18.1 | 95.5 |
| Comparative Example 16 | 10 | C | 1.6 | A | 1.4 | A | 1.8 | D | 1.2 | D | 1.4 | B | 1.2 | D | 1.2 | 17.4 | 149.5 |
| Comparative Example 17 | 11 | B | 1.6 | A | 1.4 | C | 1.8 | E | 1.2 | A | 1.2 | B | 1.2 | A | 1.0 | 15.8 | 124.5 |

With reference to Table 22, in Examples 21 to 23, a starting material having the smallest sheet thickness tₘᵢₙ among starting materials (1) to (7) was provided with a black film. In Examples 21 to 23, one surface or both surfaces of the starting material having the smallest sheet thickness tₘᵢₙ was coated with the black film. On the other hand, in Comparative Examples 16 and 17, not all of starting materials (1) to (7) were provided with the black film. In Comparative Examples 16 and 17, the starting material having the smallest sheet thickness tₘᵢₙ was not provided with the black film.

As can be seen from Table 22, in Examples 21 to 23, the time required to reach 910 °C was shorter than in Comparative Examples 16 and 17, and the heating rate of the thinnest starting material in the heating step was increased. Furthermore, in Examples 21 to 23, the start time of phase transformation was delayed compared with Comparative Examples 16 and 17. Therefore, the blank is more likely to start being shaped before the start of ferrite transformation, and the blank can be uniformly quenched in the shaping step.

### [Third Example]

In order to check the effect of the sheet thickness on the press forming (hot stamping) of structural members that are single door ring parts, the same analysis as in the first example was performed for different combinations of starting materials and different ways of joining. Table 23 shows analysis conditions and results.

**[Table 23]**

| Symbol | Division pattern | Starting material (1) | | Starting material (2) | | Starting material (3) | | Starting material (4) | | Starting material (5) | | Smallest sheet thickness tₘᵢₙ | Largest sheet thickness tₘₐₓ | Sheet thickness ratio tₘₐₓ/tₘᵢₙ | Largest total sheet thickness t | Time required to reach 910 °C, s | PW | Heating time |
|---|---|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness , mm | Type of starting material | Sheet thickness , mm | | | | | | | |
| Test Example 1 | 7- Overlap | A-1 | 1.6 | A-1 | 1.4 | C-1 | 1.4 | A-1 | 1.2 | A | 1.4 | 1.2 | 1.6 | 1.3 | 3.0 | 128.5 | 85.5 | 288.0 |
| Test Example 2 | 7- Butt | A-1 | 1.6 | A | 1.4 | C | 1.4 | A-1 | 1.2 | A | 1.4 | 1.2 | 1.6 | 1.3 | 1.6 | 128.5 | 174. 0 | 199.5 |
| Test Example 3 | 7- Butt | A | 1.6 | A | 1.4 | A-1 | 3.2 | A-1 | 1.0 | A | 1.4 | 1.0 | 3.2 | 3.2 | 3.2 | 107.0 | 9.0 | 343.0 |
| Test Example 4 | 5- Overlap | C-1 | 1.2 | B | 1.6 | B-1 | 2.0 | A-1 | 1.8 | A | 1.6 | 1.2 | 2.0 | 1.7 | 3.8 | 128.5 | 8.3 | 365.3 |
| Test Example 5 | 7- Overlap | A-1 | 1.0 | A | 1.4 | A-1 | 3.3 | A-1 | 1.0 | A | 1.4 | 1.0 | 3.3 | **3.3** | **4.3** | 107.0 | -61.4 | 413.4 |
| Test Example 6 | 7- Butt | A | 1.6 | A | 1.4 | A-1 | 3.3 | A-1 | 1.0 | A | 1.4 | 1.0 | 3.3 | **3.3** | 3.3 | 107.0 | -1.8 | 353.8 |
| Reference example 1 | 5- Overlap | C | 1.4 | A | 1.4 | A | 1.4 | D | 1.4 | B | 1.4 | 1.4 | 1.4 | 1.0 | 2.8 | 174.5 | 70.0 | 305.0 |

The division pattern in Test Examples 1 and 5 was the division pattern 7 shown in FIG. 24G. The division pattern in Test Example 4 was the division pattern 5 shown in FIG. 24E. In Test Examples 1, 4 and 5, some starting materials form an overlap part at the juncture therebetween. More specifically, in Test Examples 1 and 5, starting materials (1) and (2), starting materials (1) and (3), starting materials (2) and (5), and starting materials (4) and (5) each form an overlap part at the juncture therebetween. In Test Example 4, starting materials (1) and (2), starting materials (1) and (3), starting materials (3) and (4), and starting materials (2) and (5) each form an overlap part at the juncture therebetween. In any of these test examples, the starting material having the smallest sheet thickness tₘᵢₙ was provided with a black film. Furthermore, in any of these test examples, both outer sides of the overlap part having the largest total sheet thickness t were provided with a black film.

The division pattern in Test Examples 2, 3, and 6 was the division pattern 7 shown in FIG. 24G. In Test Examples 2, 3, and 6, the starting materials were butt-joined to each other. In any of these test examples, the starting material having the smallest sheet thickness tₘᵢₙ was provided with the black film.

In Table 24, "process window (PW)" means a value obtained by subtracting the time required for the whole of the blank to reach 910 °C after the first to reach 910 °C among the starting materials included in the blank reaches 910 °C from the allowable heating duration of the first starting material after reaching 910 °C. If the process window is 5 seconds or less, it means that alloying of the coating layer of the first starting material to reach 910 °C in the heating step proceeds, the corrosion resistance of the coating layer cannot be ensured, and it is difficult to produce the structural member of high quality.

As shown in Table 23, in Test Examples 5 and 6 in which the ratio of the largest sheet thickness tₘₐₓ to the smallest sheet thickness tₘᵢₙ: tₘₐₓ/tₘᵢₙ was more than 3.2, the process window was negative, and a process window required for production of the structural member of high quality was not able to be ensured. On the other hand, in Test Examples 1 to 4 in which tₘₐₓ/tₘᵢₙ was 3.2 or less, a process window was able to be ensured.

As shown in Table 23, in Test Example 5 in which the largest total sheet thickness t of the overlap part was more than 4.0 mm, the process window was negative, and a process window required for production of the structural member of high quality was not able to be ensured. On the other hand, in Test Examples 1 and 4 in which the largest total sheet thickness t of the overlap part was more than 2.5 mm and 4.0 mm or less, a process window of 5 seconds or more was able to be ensured.

In Reference example 1, which is an example of the division pattern 5 as with Test Example 4, each starting material, including the overlap part, was not provided with the black film. In Reference example 1, however, the sheet thickness does not vary between the starting materials, and the problem of the proceeding of alloying of the coating layer of the thinnest starting material does not occur, so that a process window of 5 seconds or more was able to be ensured.

In Test Examples 1 to 4 and Comparative Examples 10 and 13A, the blank was heated at a heating furnace temperature of 920 °C for a time required for the whole of the blank to reach 910 °C, then conveyed to the pressing device in 17 seconds, subjected to hot stamping at a forming rate of 40 mm/s, and kept at the bottom dead center under a pressure of 3000 kN for 20 seconds, thereby producing a hot-stamped structural member. From the thinnest part of these structural members, analysis samples were taken in the method described in the embodiments described above, and variations in martensite fraction were measured. In addition, shape accuracy measurement and shock absorption performance measurement of these structural members were performed. Table 24 shows evaluation results.

**[Table 24]**

| Symbol | Division pattern | Variation in martensite fraction | Shape accuracy | Shock absorption performance |
|---|---|---|---|---|
| Test Example 1 | 7- Overlap | 10% | ○ | good |
| Test Example 2 | 7- Butt | 9% | ○ | better |
| Test Example 3 | 7- Butt | 8% | ○ | better |
| Test Example 4 | 5- Overlap | 19% | Δ | marginal |
| Comparative Example 10 | 7- Butt | 23% | × | poor |
| Comparative Example 13A | 5-Overlap | 21% | × | poor |

In Table 24, as described in the above embodiments, the variation in martensite fraction is a value obtained by subtracting the minimum martensite fraction (%) from the maximum martensite fraction (%) in the cross section of the structural member at the position of the starting material having the smallest sheet thickness tₘᵢₙ.

The shape accuracy was evaluated according to the extent to which the structural member having a generally hat-like shape in cross-sectional view placed on another structural member deviates from the other structural member at a part where the structural member is overlaid on the other structural member. In Table 24, ○ is shown when the distance from the surface of the other structural member is within the range of ±2.0 mm, Δ is shown when the distance is out of the range of ±2.0 mm and within the range of ±3.0 mm, and × is shown when the distance is out of the range of ±3.0 mm.

Concerning the shock absorption performance, assuming the small overlap (SOL) collision and the side collision with the structural member assembled to a vehicle, an impactor simulating a vehicle was made to collide with the structural member, and the maximum amount of intrusion in the SOL collision and the maximum amount of intrusion in the side collision were evaluated. The shock absorption performance was evaluated by comparison with a reference shock absorption performance, which was the shock absorption performance of a door ring part formed by shaping each of the starting materials by hot stamping and then joining the shaped starting materials. In Table 24, a shock absorption performance equivalent to the reference shock absorption performance is shown as good, a shock absorption performance more excellent than the reference shock absorption performance is shown as better, a shock absorption performance slightly lower than the reference shock absorption performance is shown as marginal, and shock absorption performance even lower than the reference shock absorption performance is shown as poor.

In Comparative Example 10, which is Comparative Example 10 in the first example, the starting materials were butt-joined using laser as in Test Example 2. In Comparative Example 13A, the same set of sheets as in Comparative Example 13 of in the first example was used, and some starting materials were lap-joined to each other as in Test Example 4. In Comparative Examples 10 and 13A, unlike the Test Examples, each of the starting materials including the thinnest starting material was not provided with the black film. As shown in Table 24, in any of Test Examples 1 to 4, the variation in martensite fraction was 20% or less, and the variation in martensite fraction was significantly reduced compared with Comparative Examples 10 and 13A. In Test Examples 1 to 4, the shape accuracy was also better than in Comparative Examples 10 and 13A.

In Test Examples 1 to 4 in which the variation in martensite fraction was small, the shock absorption performance was also improved compared with Comparative Examples 10 and 13A. In particular, in Test Examples 1 to 3 in which the variation in martensite fraction was 15% or less, a shock absorption performance higher than the reference shock absorption performance was able to be ensured. That is, although the annular structural member was produced from a blank formed by integrating multiple starting materials, a shock absorption performance equivalent to or higher than the shock absorption performance of a structural member produced by joining separately press-formed starting materials was able to be ensured. In Test Examples 2 and 3, the yield strength to an axial force was improved since the starting materials were butt-joined to each other, and therefore, the shock absorption performance was better than in Test Example 1. In Test Examples 2 and 3, in particular, high shock absorption performance against SOL collision was exerted.

### <<Elemental Technology B4>>

The Elemental Technology B4 is a structural member, including:
a member main body that is formed of multiple steel sheets joined to each other and has an annular shape in plan view, the multiple steel sheets including a first steel sheet having a smallest sheet thickness and a second steel sheet having a sheet thickness larger than the sheet thickness of the first steel sheet,
in which the first steel sheet and the second steel sheet are each a coated steel sheet that has an aluminum-based coating layer on both surfaces of a base steel sheet, and
a thickness of the aluminum-based coating layer of the first steel sheet is smaller than a thickness of the aluminum-based coating layer of the second steel sheet.

An object of the Element Technology B4 is to provide a blank for hot stamping that can improve the performance of a structural member having an annular shape produced from the blank, in particular, a large structural member having an annular shape produced from the blank, that includes a steel sheet having a smaller sheet thickness than other steel sheets.

A blank for hot stamping according to an embodiment includes multiple steel sheets. The multiple steel sheets are disposed to form an annular shape in plan view of the blank and joined to each other. The multiple steel sheets include a first steel sheet and a second steel sheet. The first steel sheet has a smallest sheet thickness among the multiple steel sheets. The second steel sheet has a sheet thickness larger than the sheet thickness of the first steel sheet. The first steel sheet and the second steel sheet are each a coated steel sheet. The coated steel sheet has a base steel sheet and an aluminum-based coating layer. The aluminum-based coating layer covers both surfaces of the base steel sheet. A deposition amount (g/m²) of the aluminum-based coating layer on both surfaces of the base steel sheet of the first steel sheet is less than a deposition amount (g/m²) of the aluminum-based coating layer on both surfaces of the base steel sheet of the second steel sheet (a first configuration).

The blank according to the first configuration includes the first steel sheet having the smallest sheet thickness and the second steel sheet having a sheet thickness larger than the sheet thickness of the first steel sheet. Both the first steel sheet and the second steel sheet are coated steel sheets having an aluminum-based coating layer. However, the deposition amount of the aluminum-based coating layer on both surfaces of the base steel sheet is less in the first steel sheet than in the second steel sheet. As a result, when the blank is heated for hot stamping, alloying of the aluminum-based coating layer with iron more quickly proceeds to the surface in the thinner first steel sheet than in the thicker second steel sheet, and both surfaces of the first steel sheet changes color from white silver to black or a color close to black. Therefore, the emissivity of both surfaces of the first steel sheet becomes higher than the emissivity of both surfaces of the second steel sheet. Therefore, the first steel sheet can be more quickly heated to a temperature in the austenite zone, and a longer retention time of the first steel sheet at the temperature can be ensured. Thus, the austenite grain in the first steel sheet can be coarsened. As a result, the ferrite transformation region (ferrite nose) in the CCT diagram shifts to longer times, and therefore, the transformation to ferrite in the first steel sheet after the end of heating of the blank can be delayed, and shaping of the blank can be started while the microstructure of the first steel sheet is kept in the austenite phase. That is, the hardenability of the first steel sheet having the small sheet thickness can be improved.

With the blank according to the first configuration, since the hardenability of the first steel sheet having the small sheet thickness is improved, the first steel sheet can be quenched well when shaping the blank into the structural member by hot stamping. Therefore, the hardness of the structural member is likely to be made uniform, and a local decrease in strength of the structural member can be prevented. In addition, unevenness of stress in the structural member is less likely to occur, so that even when the produced structural member has an annular shape, torsion is less likely to occur, and high dimensional accuracy can be ensured in the structural member. Therefore, when an annular structural member, in particular, a large annular structural member, that includes the first steel sheet having a smaller sheet thickness than the second steel sheet is produced from the blank, the failure in strength and the failure in dimensional accuracy of the structural member can be reduced, and the shock absorption performance (collision resistance performance) of the structural member can be improved.

With the blank according to the first configuration, the deposition amount of the aluminum-based coating layer of the first steel sheet having the smallest sheet thickness is less than the deposition amount of the aluminum-based coating layer of the second steel sheet having a larger sheet thickness. In this case, the first steel sheet can be more quickly heated than the second steel sheet, and the high temperature retention time of the first steel sheet, that is, the time from when the first steel sheet reaches a temperature in the austenite zone to when the second steel sheet and the whole of the blank reach the temperature in the austenite zone, is longer than when the deposition amounts of the aluminum-based coating layer of the first steel sheet and the second steel sheet are equal to each other. Therefore, after the heating of the blank ends, unevenness of the phase transformation due to the difference in cooling rate between the steel sheets can be reduced. Specifically, the start of the phase transformation from austenite to ferrite of the first steel sheet having the smallest sheet thickness can be delayed, so that the difference in start time of phase transformation between the first steel sheet having the smallest sheet thickness and the other steel sheets is reduced. As a result, the hardenability of the first steel sheet having the smallest sheet thickness and the other steel sheets can be made uniform.

In the blank according to the first configuration, provided that the sheet thickness of the first steel sheet is tₘᵢₙ, and a sheet thickness of a steel sheet having a largest sheet thickness among the multiple steel sheets is tₘₐₓ, it is preferred that 1.0 < tₘₐₓ/tₘᵢₙ ≤ 3.2 (a second configuration).

Among the multiple steel sheets included in the blank, when the difference in sheet thickness between the first steel sheet having the smallest sheet thickness tₘᵢₙ and another steel sheet having the largest sheet thickness tₘₐₓ is large, it is difficult to ensure a process window in production of the structural member. For example, when the difference between the smallest sheet thickness tₘᵢₙ and the largest sheet thickness tₘₐₓ is large, when the blank is heated for hot stamping, alloying of the aluminum-based coating layer may excessively proceed and the diffusion layer may become thicker in the first steel sheet having been heated earlier to a temperature in the austenite zone while waiting for the steel sheet having the largest sheet thickness tₘₐₓ to reach the temperature in the austenite zone, and thus, the corrosion resistance or the weldability of the coating layer of the first steel sheet may be unable to be ensured. In view of this, according to the second configuration, the ratio of the largest sheet thickness tₘₐₓ to the smallest sheet thickness tₘᵢₙ is set to be 3.2 or less. In this way, the heating rate of the steel sheet having the largest sheet thickness tₘₐₓ and the heating rate of the first steel sheet having the smallest sheet thickness tₘᵢₙ are not excessively different, so that the heating of the other steel sheets can be ended before alloying of the aluminum-based coating layer of the first steel sheet excessively proceeds. Therefore, the structural member can be produced while maintaining the corrosion resistance or the weldability of the first steel sheet, and a process window can be ensured in the production of the structural member.

The blank according to the first or second configuration may further include an overlap part. The overlap part is formed by end parts of adjacent two steel sheets among the multiple steel sheets overlaid on one another. The overlap part has a total sheet thickness of 4.0 mm or less, for example. The two steel sheets may be each a coated steel sheet that has a base steel sheet and an aluminum-based coating layer that covers both surfaces of the base steel sheet. In this case, it is preferred that a deposition amount (g/m²) of the aluminum-based coating layer on both surfaces of the base steel sheet of each of the two steel sheets is less than the deposition amount (g/m²) of the aluminum-based coating layer on both surfaces of the base steel sheet of the second steel sheet (a third configuration).

When the blank includes the overlap part formed by end parts of two steel sheets overlaid on one another, a process window may be unable to be ensured in production of the structural member. Specifically, when the blank is heated for hot stamping, alloying of the aluminum-based coating layer of the first steel sheet having the smallest sheet thickness may proceed and the diffusion layer may become thicker while waiting for the overlap part to reach a temperature in the austenite zone, and thus, the corrosion resistance or the weldability of the first steel sheet may be unable to be ensured by the coating layer. In view of this, according to the third configuration, the deposition amount of the aluminum-based coating layer on both surfaces of the base steel sheet in each of the steel sheets forming the overlap part is less than the deposition amount in the second steel sheet. In this way, heating of the overlap part can be promoted, so that the heating of the overlap part can be ended before alloying of the coating layer of the first steel sheet excessively proceeds, and the structural member can be produced while maintaining the corrosion resistance or the weldability of the first steel sheet. That is, a process window is more likely to be ensured in the production of the structural member. In addition, according to the third configuration, since the total sheet thickness of the overlap part is limited to 4.0 mm or less, the heating of the overlap part is prevented from being too slow compared with the heating of the first steel sheet, and a process window is more likely to be ensured.

In the blank according to the third configuration, a surface of at least one of the two steel sheets that is located on an outer side of the overlap part may be coated with a film that is black in color (a fourth configuration).

According to the fourth configuration, the surface of at least one of the two steel sheets forming the overlap part that is located on the outer side of the overlap part is provided with a film that is black in color. In this way, the emissivity of the overlap part can be increased, and the heating thereof can be promoted. Therefore, a process window is more likely to be ensured in the production of the structural member.

In the blank according to any of the first to fourth configurations, at least one surface of the first steel sheet may be coated with a film that is black in color (a fifth configuration).

According to the fifth configuration, at least one surface of the first steel sheet having the smallest sheet thickness is provided with a film that is black in color. In this way, the emissivity of the surface of the first steel sheet can be increased in advance, so that when the blank is heated in hot stamping, the first steel sheet is more quickly heated. Therefore, a longer high temperature retention time of the first steel sheet can be ensured, and coarsening of the austenite grain in the first steel sheet can be promoted. As a result, the hardenability of the first steel sheet having the small sheet thickness can be further improved.

A production method for a structural member according to an embodiment includes a step of preparing the blank according to any one of the first to fifth configurations, a step of heating the multiple steel sheets included in the blank to an austenite transformation completion temperature or higher, and a step of shaping and quenching the heated blank into a structural member having an annular shape in plan view with press tooling (a sixth configuration).

A structural member according to an embodiment includes a member main body. The member main body is formed of multiple steel sheets joined to each other and has an annular shape in plan view. The multiple steel sheets include a first steel sheet having a smallest sheet thickness and a second steel sheet having a sheet thickness larger than the sheet thickness of the first steel sheet. The first steel sheet and the second steel sheet are each a coated steel sheet that has an aluminum-based coating layer on both surfaces of a base steel sheet. A thickness of the aluminum-based coating layer of the first steel sheet is smaller than a thickness of the aluminum-based coating layer of the second steel sheet (a seventh configuration).

The structural member according to the seventh configuration may be a door ring part of an automobile. The member main body may include a front pillar, a center pillar, and a rocker that connects the front pillar and the center pillar to each other (an eighth configuration).

In the following, embodiments of the present disclosure will be described with reference to the drawings. In the drawings, the same or corresponding components are denoted by the same reference numerals, and redundant descriptions will be omitted.

### <First Embodiment>

### [Structural Member]

FIG. 26 is a diagram (plan view) showing a structural member B4-10 according to a first embodiment placed on a horizontal surface viewed from above. The structural member B4-10 is used for a body of an automobile, for example. The structural member B4-10 is typically a door ring part of an automobile. This embodiment will be described with reference to an example in which the structural member B4-10 is a door ring part.

The structural member B4-10 is a hot-stamped member. That is, the structural member B4-10 is produced by performing hot stamping (hot press working) on a blank formed of multiple steel sheets. The structural member B4-10 includes a member main body B4-11. The member main body B4-11 has an annular shape in plan view of the structural member B4-10. The member main body B4-11 includes a front pillar B4-111, a center pillar B4-112, and a rocker B4-113. When the structural member B4-10 is assembled to the body of the automobile, the center pillar B4-112 is disposed rearward of the front pillar B4-111. The center pillar B4-112 generally extends in the up-and-down direction of the body. The front pillar B4-111 extends toward the center pillar B4-112. When the structural member B4-10 is assembled to the body of the automobile, the rocker B4-113 is disposed below the front pillar B4-111 and the center pillar B4-112. The rocker B4-113 connects the front pillar B4-111 and the center pillar B4-112 to each other.

In this embodiment, the member main body B4-11 is formed of multiple steel sheets B4-21, B4-22, and B4-23 joined to each other. In the example in FIG. 26, the front pillar B4-111 is mainly formed of the steel sheets B4-21 and B4-22. The center pillar B4-112 is mainly formed of the steel sheet B4-23. The rocker B4-113 is formed of the steel sheets B4-21 and B4-23.

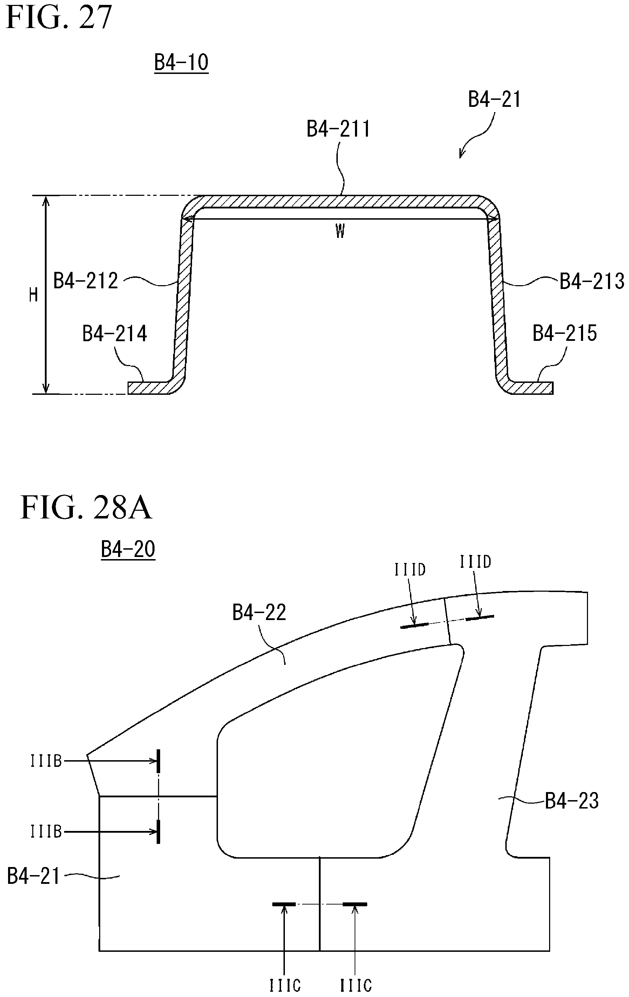

FIG. 27 is a cross-sectional view taken along line II-II in FIG. 1. FIG. 27 shows a cross section of the structural member B4-10 taken at the position of the steel sheet B4-21 along the sheet thickness direction thereof. As shown in FIG. 2, the steel sheet B4-21 has an open cross section. The steel sheet B4-21 has a generally hat-like shape in cross-sectional view of the structural member B4-10, for example. More specifically, the steel sheet B4-21 includes a top plate B4-211, vertical walls B4-212 and B4-213, and flanges B4-214 and B4-215. The vertical wall B4-212 is disposed on the opposite side of the top plate B4-211 to the vertical wall B4-213. In the cross-sectional view of the structural member B4-10, one ends of the vertical walls B4-212 and B4-213 are connected to the top plate B4-211. In the cross-sectional view of the structural member B4-10, the other ends of the vertical walls B4-212 and B4-213 are connected to the flanges B4-214 and B4-215, respectively. The flanges B4-214 and B4-215 project outward from the vertical walls B4-212 and B4-213 of the structural member B4-10, respectively.

In the structural member B4-10, a width W of the steel sheet B4-21 may be 30 mm or more and 750 mm or less. A height H of the steel sheet B4-21 may be 25 mm or more and 150 mm or less. The width W is the distance from the R-end on the vertical wall B4-212 side of the corner part between the top plate B4-211 and the vertical wall B4-212 to the R-end on the vertical wall B4-213 side of the corner part between the top plate B4-211 and the vertical wall B4-213, in the cross section of the structural member B4-10. The height H is the distance from the top plate B4-211 to the flange B4-214 or B-215 in the sheet thickness direction of the top plate B4-211.

Although not shown, the other steel sheets B4-22 and B4-23 have an open cross section, as with the steel sheet B4-21. The steel sheets B4-22 and B4-23 can also have a generally hat-like shape in cross-sectional view of the structural member B4-10. The width of each of the steel sheets B4-22 and B4-23 may be 15 mm or more and 300 mm or less. The height of each of the steel sheets B4-22 and B4-23 may be 10 mm or more and 150 mm or less.

The size of the structural member B4-10 having an annular shape in plan view is 1.0 m or more, for example. The size of the structural member B4-10 may be 4.0 m or less, for example. The size of the structural member B4-10 means the length of the line segment connecting two points that are the most distant from each other among any two points on the outer circumference of the structural member B4-10 when the structural member B4-10 placed on a horizontal surface is viewed in the vertical direction.

### [Production Method for Structural Member]

In the following, a production method for the structural member B4-10 will be described with reference to FIGS. 28A to 28G. The production method for the structural member B4-10 according to this embodiment includes a step of preparing a blank B4-20, a step of heating the blank B4-20, and a step of shaping the heated blank B4-20 into the structural member B4-10.

### (Preparation Step)

As shown in FIG. 28A, in the preparation step, a blank B4-20 having the expanded shape of the structural member B4-10 is prepared. The blank B4-20 includes multiple steel sheets B4-21, B4-22, and B4-23. The steel sheets B4-21, B4-22, and B4-23 are disposed to form an annular shape in plan view of the blank B4-20 and joined to each other.

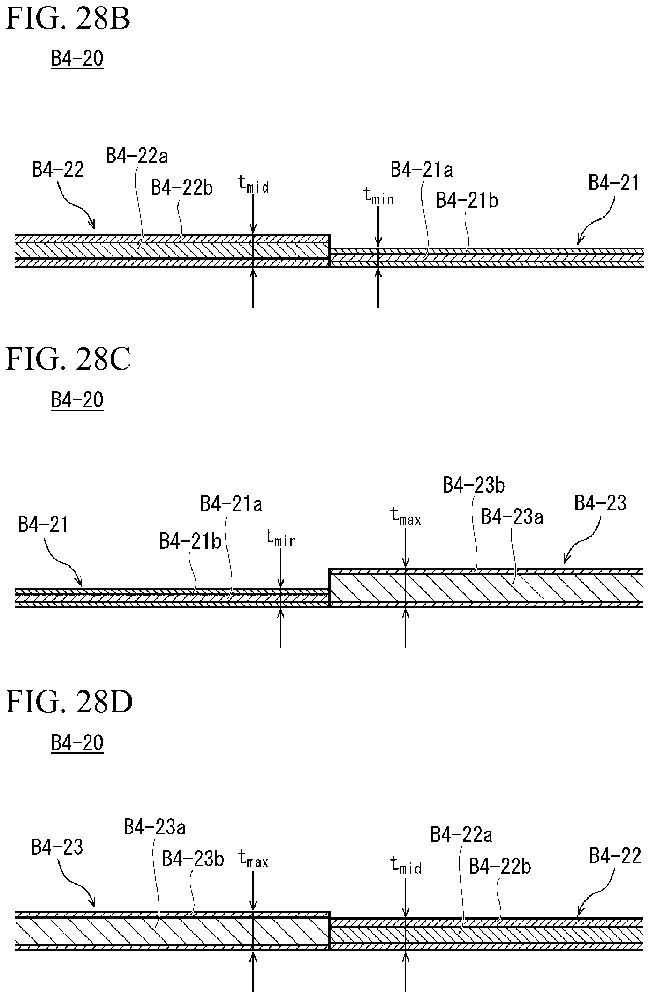

FIGS. 28B, 28C, and 28D are cross-sectional views of the blank B4-20, showing junctures between the steel sheets B4-21, B4-22, and B4-23. FIGS. 28B, 28C, and 28D are cross-sectional views taken along lines IIIB-IIIB, IIIC-IIIC, and IIID-IIID in FIG. 28A, respectively. With reference to FIGS. 28B and 28C, the steel sheet B4-21 is butt-joined to each of the steel sheets B4-22 and B4-23. That is, an end face of the steel sheet B4-21 abuts on and is joined to an end face of the steel sheet B4-22, and another end face of the steel sheet B4-21 abuts on and is joined to an end face of the steel sheet B4-23. With reference to FIG. 28D, the steel sheet B4-22 is butt-joined not only to the steel sheet B4-21 but also to the steel sheet B4-23. An end face of the steel sheet B4-22 abuts on and is joined to an end face of the steel sheet B4-23. The steel sheets B4-21, B4-22, and B4-23 are joined to each other by laser welding, for example. In this embodiment, the blank B4-20 is a so-called tailor welded blank.

With reference to FIGS. 28B and 28C, among the steel sheets B4-21, B4-22, and B4-23, the steel sheet B4-21 has the smallest sheet thickness tₘᵢₙ. The steel sheet B4-22 has a sheet thickness larger than the sheet thickness tₘᵢₙ of the steel sheet B4-21. The steel sheet B4-23 has a sheet thickness equal to or larger than the sheet thickness tₘᵢₙ of the steel sheet B4-21. In the example of this embodiment, the steel sheets B4-22 and B4-23 each have a sheet thickness larger than the sheet thickness tₘᵢₙ of the steel sheet B4-21. In this embodiment, the steel sheet B4-23 has the largest sheet thickness tₘₐₓ among the steel sheets B4-21, B4-22, and B4-23. The steel sheet B4-22 has a sheet thickness t_{mid} larger than the sheet thickness tₘᵢₙ of the steel sheet B4-21 and smaller than the sheet thickness tₘₐₓ of the steel sheet B4-23. However, the steel sheet B4-22 may have a sheet thickness equal to or larger than the sheet thickness of the steel sheet B4-23. That is, the steel sheet B4-22 may have the largest sheet thickness tₘₐₓ among the steel sheets B4-21, B4-22, and B4-23.

The sheet thickness tₘᵢₙ of the steel sheet B4-21 is typically less than 1.4 mm. The sheet thickness tₘᵢₙ may be 0.8 mm or more, for example. The sheet thickness tₘᵢₙ of the steel sheet B4-21 and the sheet thickness tₘₐₓ of the steel sheet B4-23 preferably satisfy a condition that 1.0 < tₘₐₓ/tₘᵢₙ ≤ 3.2, and more preferably satisfy a condition that 1.3 ≤ tₘₐₓ/tₘᵢₙ ≤ 3.2.

Each of the steel sheets B4-21, B4-22, and B4-23 is a coated steel sheet, more specifically, an aluminum-coated steel sheet. The steel sheet B4-21 has a base steel sheet B4-21a and an aluminum-based coating layer 4B-21b. The steel sheet B4-22 has a base steel sheet B4-22a and an aluminum-based coating layer 4B-22b. The steel sheet B4-23 has a base steel sheet B4-23a and an aluminum-based coating layer 4B-23b. The sheet thickness tₘᵢₙ of the steel sheet B4-21 is the total sheet thickness of the base steel sheet B4-21a and the aluminum-based coating layer 4B-21b and is a mean sheet thickness of the steel sheet B4-21. The sheet thickness t_{mid} of the steel sheet B4-22 is the total sheet thickness of the base steel sheet B4-22a and the aluminum-based coating layer 4B-22b and is a mean sheet thickness of the steel sheet B4-22. The sheet thickness tₘₐₓ of the steel sheet B4-23 is the total sheet thickness of the base steel sheet B4-23a and the aluminum-based coating layer 4B-23b and is a mean sheet thickness of the steel sheet B4-23.

The type of the base steel sheets B4-21a, B4-22a, and B4-23a is not particularly limited. Each of the base steel sheets B4-21a, B4-22a, and B4-23a may be the same as or different from the other base steel sheets.

In the steel sheet B4-21, the aluminum-based coating layer 4B-21b covers both surfaces of the base steel sheet B4-21a. The aluminum-based coating layer 4B-21b is provided over the whole or substantially the whole of both surfaces of the base steel sheet B4-21a. Similarly, in the steel sheet B4-22, the aluminum-based coating layer 4B-22b covers both surfaces of the base steel sheet B4-22a. The aluminum-based coating layer 4B-22b is provided over the whole or substantially the whole of both surfaces of the base steel sheet B4-22a. Furthermore, in the steel sheet B4-23, the aluminum-based coating layer 4B-23b covers both surfaces of the base steel sheet B4-23a. The aluminum-based coating layer 4B-23b is provided over the whole or substantially the whole of both surfaces of the base steel sheet B4-23a.

The chemical composition of the aluminum-based coating layers 4B-21b, 4B-22b, and 4B-23b is not particularly limited. As the aluminum-based coating layers 4B-21b, 4B-22b, and 4B-23b, a well-known aluminum-based coating layer (a coating layer primarily containing aluminum) can be used. Although this is not intended to be limited, the aluminum-based coating layers 4B-21b, 4B-22b, and 4B-23b are Al-Si-based coating layers, for example. Each of the aluminum-based coating layers 4B-21b, 4B-22b, and 4B-23b may be the same or different from the aluminum-based coating layers of the other steel sheets.

With reference to FIG. 28B, provided that the deposition amount of the aluminum-based coating layer 4B-21b on both surfaces of the base steel sheet B4-21a of the steel sheet B4-21 having the smallest sheet thickness tₘᵢₙ is W1 (g/m²) and the deposition amount of the aluminum-based coating layer 4B-22b on both surfaces of the base steel sheet B4-22a of the steel sheet B4-22 having the larger sheet thickness t_{mid} is W2 (g/m²) the deposition amount W1 of the aluminum-based coating layer 4B-21b of the steel sheet B4-21 is less than the deposition amount W2 of the aluminum-based coating layer 4B-22b of the steel sheet B4-22. The deposition amount W1 of the aluminum-based coating layer 4B-21b of the steel sheet B4-21 is a mean deposition amount on both surfaces of the base steel sheet B4-21a. Typically, the deposition amount (g/m²) of the aluminum-based coating layer 4B-21b on one surface of the base steel sheet B4-21 a is substantially equal to the deposition amount (g/m²) of the aluminum-based coating layer 4B-21b on the other surface of the base steel sheet B4-21a. However, the deposition amount of the aluminum-based coating layer 4B-21b may vary between the front and back surfaces of the base steel sheet B4-21a due to the production conditions, for example. The deposition amount of the aluminum-based coating layer 4B-21b may be different between one surface and the other surface of the base steel sheet B4-21a. The deposition amount W2 of the aluminum-based coating layer 4B-22b of the steel sheet B4-22 is a mean deposition amount on both surfaces of the base steel sheet B4-22a. Typically, the deposition amount (g/m²) of the aluminum-based coating layer 4B-22b on one surface of the base steel sheet B4-22a is substantially equal to the deposition amount (g/m²) of the aluminum-based coating layer 4B-22b on the other surface of the base steel sheet B4-22a. However, the deposition amount of the aluminum-based coating layer 4B-22b may vary between the front and back surfaces of the base steel sheet B4-22a due to the production conditions, for example. The deposition amount of the aluminum-based coating layer 4B-22b may be different between one surface and the other surface of the base steel sheet B4-22a.

The deposition amount W1 of the aluminum-based coating layer 4B-21b of the steel sheet B4-21 and the deposition amount W2 of the aluminum-based coating layer 4B-22b of the steel sheet B4-22 may be each 20 g/m² or more and 120 g/m² or less. The deposition amounts W1 and W2 are each preferably 30 g/m² or more, and more preferably 35 g/m² or more. The deposition amounts W1 and W2 are each preferably 115 g/m² or less, and more preferably 100 g/m² or less. The difference between the deposition amounts W1 and W2: W2-W1 is 10 (g/m²) or more, for example. W2-W1 is preferably 20 (g/m²) or more, and more preferably 30 (g/m²) or more. W2-W1 may be 80 (g/m²) or less. W2-W1 is preferably 70 (g/m²) or less, and more preferably 60 (g/m²) or less. Furthermore, the deposition amounts W1 and W2 satisfy a relation that W2/W1 > 1.0. The deposition amounts W1 and W2 can preferably satisfy a relation that W2/W1 ≥ 1.2, and more preferably satisfy a relation that W2/W1 ≥ 1.5.

With reference to FIG. 28D, provided that the deposition amount of the aluminum-based coating layer 4B-23b on both surfaces of the base steel sheet B4-23a of the steel sheet B4-23 having the largest sheet thickness tₘₐₓ is W3 (g/m²) the deposition amount W3 of the aluminum-based coating layer 4B-23b of the steel sheet B4-23 may be less than the deposition amount W2 of the aluminum-based coating layer 4B-22b of the steel sheet B4-22. The deposition amount W3 of the aluminum-based coating layer 4B-23b is a mean deposition amount on both surfaces of the base steel sheet B4-23a. Typically, the deposition amount (g/m²) of the aluminum-based coating layer 4B-23b on one surface of the base steel sheet B4-23a is substantially equal to the deposition amount (g/m²) of the aluminum-based coating layer 4B-23b on the other surface of the base steel sheet B4-23a. However, the deposition amount of the aluminum-based coating layer 4B-23b may vary between the front and back surfaces of the base steel sheet B4-23a due to the production conditions, for example. The deposition amount of the aluminum-based coating layer 4B-23b may be different between one surface and the other surface of the base steel sheet B4-23a.

As with the steel sheets B4-21 and B4-22, the deposition amount W3 of the aluminum-based coating layer 4B-23b of the steel sheet B4-23 may be 20 g/m² or more and 120 g/m² or less, for example. The deposition amount W3 is preferably 30 g/m² or more, and more preferably 35 g/m² or more. The deposition amount W3 is preferably 115 g/m² or less, and more preferably 100 g/m² or less. When W2 > W3, the difference W2-W3 between the deposition amounts W2 and W3 is 10 (g/m²) or more, for example. W2-W3 is preferably 20 (g/m²) or more, and more preferably 30 (g/m²) or more. W2-W3 may be 80 (g/m²) or less. W2-W3 is preferably 70 (g/m²) or less, and more preferably 60 (g/m²) or less. The deposition amount W3 of the aluminum-based coating layer 4B-23b of the steel sheet B4-23 may be equal to or more than the deposition amount W1 of the aluminum-based coating layer 4B-21b of the steel sheet B4-21 having the smallest sheet thickness tₘᵢₙ.

Although the method of forming the aluminum-based coating layers 4B-21b, 4B-22b, and 4B-23b on the base steel sheets B4-21a, B4-22a, and B4-23a, respectively, is not particularly limited, a common hot dipping process is used, for example. Specifically, the aluminum-coated steel sheet B4-21 having an adjusted deposition amount W1 of the aluminum-based coating layer 4B-21b can be obtained by immersing the base steel sheet B4-21a in a molten aluminum coating bath and then performing gas wiping with nitrogen or atmosphere, for example. Similarly, the aluminum-coated steel sheet B4-22 having an adjusted deposition amount W2 of the aluminum-based coating layer 4B-22b can be obtained by immersing the base steel sheet B4-22a in a molten aluminum coating bath and then performing gas wiping with nitrogen or atmosphere, for example. Furthermore, the aluminum-coated steel sheet B4-23 having an adjusted deposition amount W3 of the aluminum-based coating layer 4B-23b can be obtained by immersing the base steel sheet B4-23a in a molten aluminum coating bath and then performing gas wiping with nitrogen or atmosphere, for example. When the aluminum-based coating layer is formed in the hot dipping process, an Al-Fe-based alloy layer is formed at the interface between the base steel sheet and the aluminum-based coating layer, as a result of the elution of Fe in the hot dipping process.

The method of measuring the deposition amounts W1, W2, and W3 of the aluminum-based coating layers 4B-21b, 4B-22b, and 4B-23b may be the sodium hydroxide-hexamethylenetetramine and hydrochloric acid peel weigh measuring method described in JIS 6 3314: 2019, for example. Specifically, according to JIS G 3314: 2019, five or more test specimens having a predetermined surface area S (mm²) (such as 50 mm × 50 mm) are taken from each of the steel sheets B4-21, B4-22, and B4-23 of the blank B4-20, and the weight w1 (g) of each test specimen is measured. Then, each test specimen is immersed in a sodium hydroxide solution, and after it is ascertained that the gasification due to the dissolution of the coating ends, the test specimen is removed from the sodium hydroxide solution and rinsed with water. Then, each test specimen still wet after the rinsing is immersed in a hydrochloric acid solution added with hexamethylenetetramine until the gasification due to the dissolution of the coating ends. Each test specimen removed from the hexamethylenetetramine-hydrochloric acid solution is rinsed with water and dried immediately, and the weight w2 (g) of the test specimen is measured again. The deposition amount W (g/m²) of the aluminum-based coating layer of each test specimen can be determined according to {(wl-w2)/S} × 10⁶. A mean value of the deposition amounts W of the five or more test specimens taken from each steel sheet is regarded as the deposition amount of the aluminum-based coating layer of the steel sheet.

However, when the test specimens taken from each of the steel sheets B4-21, B4-22, and B4-22 are small in size, the cross section of each of the aluminum-based plating layers 4B-21b, 4B-22b, and 4B-23b may be observed with an optical microscope (area: 100 µm × 100 µm), the thickness (µm) of the coating layer may be measured in three visual fields, and a mean value of the thicknesses measured in the three visual fields may be multiplied by three and converted to the deposition amount. In this case, for each of the steel sheets B4-21, B4-22, and B4-22, the deposition amount is calculated for each surface of the base steel sheet, and a mean value of the calculated deposition amounts (mean value for both surfaces) is regarded as the deposition amount of the aluminum-based coating layer. When there is an Al-Fe-based alloy layer at the interface between the base steel sheet and the aluminum-based coating layer, the thickness of the aluminum-based coating layer includes the thickness of the Al-Fe-based alloy layer. The thickness of the aluminum-based coating layer 4B-21b of the thinnest steel sheet B4-21 is smaller than the thickness of the aluminum-based coating layer 4B-22b of the steel sheet B4-22. In this embodiment, the thickness of the aluminum-based coating layer 4B-23b of the thickest steel sheet B4-23 is also smaller than the thickness of the aluminum-based coating layer 4B-22b of the steel sheet B4-22. The thicknesses of the aluminum-based coating layers 4B-21b and 4B-23b may be different or the same.

### (Heating Step)

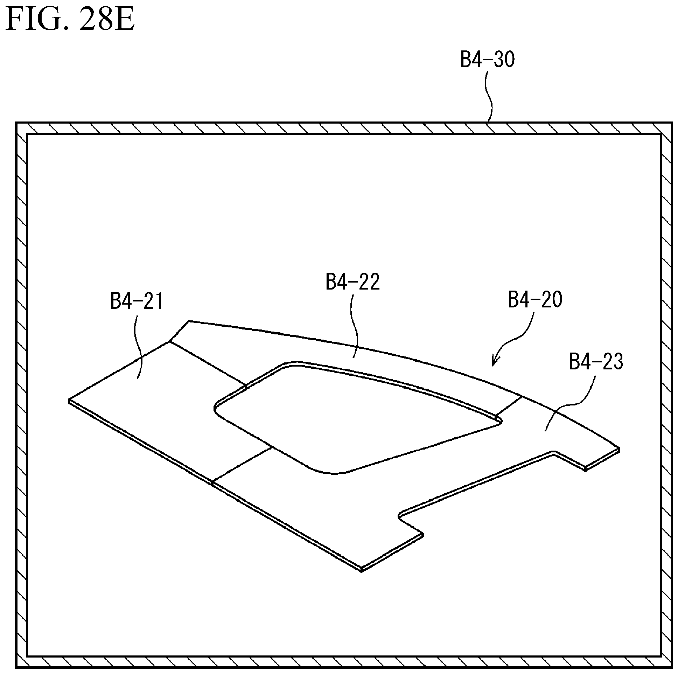

The prepared blank B4-20 is shaped into the structural member B4-10 (FIGS. 26 and 27) through hot stamping (hot press working). For the hot stamping, the blank B4-20 is subjected to the heating step. With reference to FIG. 28E, in the heating step, the blank B4-20 is heated in a heating furnace 4B-30, for example. The multiple steel sheets B4-21, B4-22, and B4-23 included in the blank B4-20 are heated to an austenite transformation completion temperature (A_{c3} point) or higher. The steel sheets B4-21, B4-22, and B4-23 are heated to 900 °C or more, for example. **In** this way, the whole or substantially the whole of the microstructure of the steel sheets B4-21, B4-22, and B4-23 is transformed into the austenite phase.

### (Shaping Step)

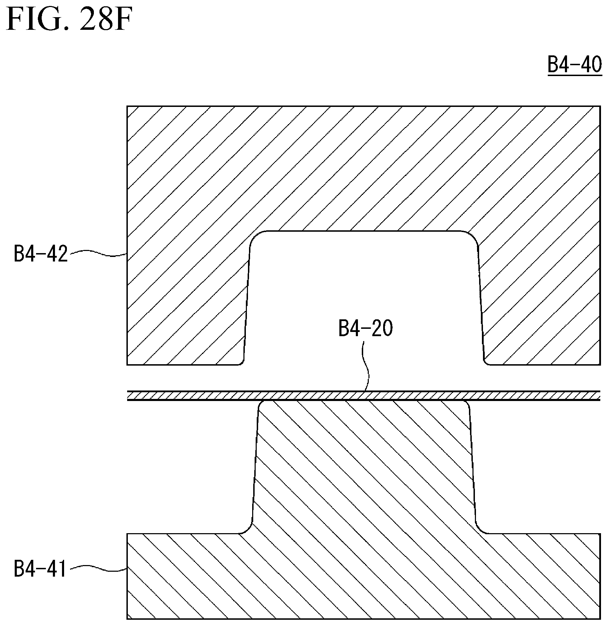

With reference to FIG. 28F, in the shaping step, using press tooling B4-40, the heated blank B4-20 is shaped into the structural member B4-10 having an annular shape in plan view (FIGS. 26 and 27) and quenched. The blank B4-20 heated in the heating step is removed from the heating furnace 4B-30 (FIG. 28E) and conveyed to the press tooling B4-40. The press tooling B4-40 is attached to a well-known pressing device. The press tooling B4-40 includes a punch B4-41 and a die B4-42, for example. The blank B4-20 is placed between the punch B4-41 and the die B4-42.

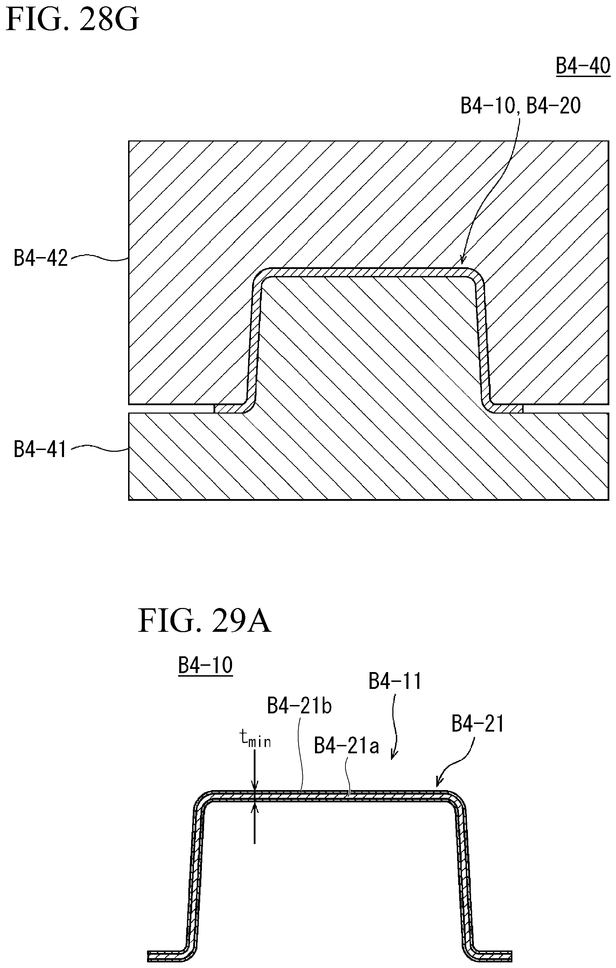

With reference to FIG. 28G, after the blank B4-20 is placed between the punch B4-41 and the die B4-42, the die B4-42 comes relatively closer to the punch B4-41. The blank B4-20 is sandwiched (pressed) between the punch B4-41 and the die B4-42 and formed into a shape conforming to the shaping surfaces of the punch B4-41 and the die B4-42. The blank B4-20 is kept sandwiched between the punch B4-41 and the die B4-42. The blank B4-20 is made to dissipate heat (rapid cooling) in the press tooling B4-40, and thereby the microstructure thereof is transformed into martensite. **In** this way, the structural member B4-10 can be produced from the blank B4-20.

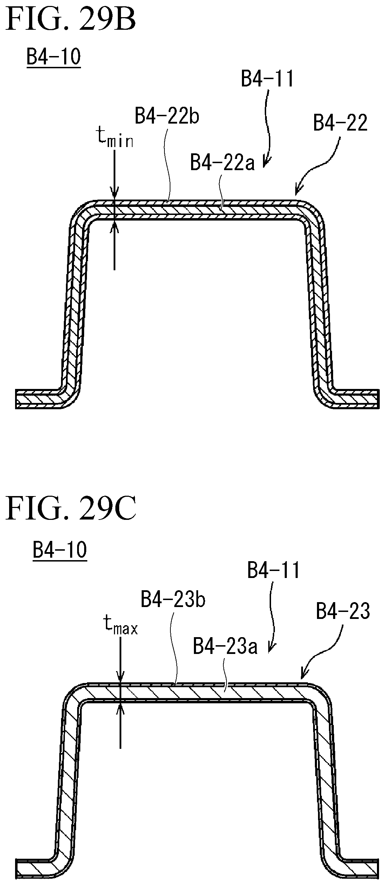

FIGS. 29A to 29C are cross-sectional views of the structural member B4-10 after the hot stamping. FIG. 29A shows a cross section of the structural member B4-10 at the position of the steel sheet B4-21 having the smallest thickness tₘᵢₙ. FIG. 29B shows a cross section of the structural member B4-10 at the position of the steel sheet B4-22 having a larger thickness t_{mid} than the steel sheet B4-21. FIG. 29C shows a cross section of the structural member B4-10 at the position of the steel sheet B4-23 having the largest thickness tₘₐₓ.

With reference to FIG. 29A, also in the structural member B4-10 after the hot stamping, the steel sheet B4-21 is a coated steel sheet having the aluminum-based coating layers 21b on both surfaces of the base steel sheet B4-21a. With reference to FIG. 29B, in the structural member B4-10 after the hot stamping, the steel sheet B4-22 is a coated steel sheet having the aluminum-based coating layers 4B-22b on both surfaces of the base steel sheet B4-22a. With reference to FIG. 29C, in the structural member B4-10 after the hot stamping, the steel sheet B4-23 is a coated steel sheet having the aluminum-based coating layers 4B-23b on both surfaces of the base steel sheet B4-23a. However, the aluminum-based coating layers 4B-21b, 4B-22b, and 4B-23b in the structural member B4-10 are more alloyed with iron through the heating step than those in the blank B4-20 (FIGS. 28B to 28D).

With reference to FIGS. 29A and 29B, provided that a mean thickness (coating thickness) of the aluminum-based coating layers 4B-21b on both surfaces of the steel sheet B4-21 is K1 (µm), and a mean thickness (coating thickness) of the aluminum-based coating layers 22b on both surfaces of the steel sheet B4-22 is K2 (µm), the coating thickness K1 of the steel sheet B4-21 is smaller than the coating thickness K2 of the steel sheet B4-22. The difference between the coating thicknesses K1 and K2: K2-K1 is 7 (µm) or more, for example. K2-K1 may be 33 (µm) or less. In addition, the coating thicknesses K1 and K2 can satisfy a relation that K2/K1 > 1.0. K2/K1 is preferably 1.2 or more, and more preferably 1.5 or more.

With reference to FIGS. 4B and 4C, in the example of this embodiment, provided that a mean thickness (coating thickness) of the aluminum-based coating layers 4B-23b on both surfaces of the steel sheet B4-23 is K3 (µm), the coating thickness K3 of the steel sheet B4-23 is smaller than the coating thickness K2 of the steel sheet B4-22. The difference between the coating thicknesses K2 and K3: K2-K3 may be 7 (µm) or more, for example. K2-K3 may be 33 (µm) or less.

The coating thicknesses K1, K2, and K3 of the aluminum-based coating layers 4B-21b, 4B-22b, and 4B-23b of the structural member B4-10 can be measured as follows. That is, an automobile body part is disassembled to obtain the annular structural member B4-10, and an analysis specimen is obtained from the structural member B4-10 by laser cutting, for example. For example, an analysis specimen is obtained from each of the multiple steel sheets included in the structural member B4-10. The analysis specimen is taken from a center part or a vicinity thereof of the top plate of each of the steel sheets having an open cross section. For the test specimen taken from each of the multiple steel sheets, the cut surface of the aluminum-based coating layer is etched with nital and then observed with an optical microscope (area: 100 µm × 100 µm), the thickness of the coating layer is measured in three visual fields, and a mean value of the thicknesses of the coating layer measured in the three visual fields can be regarded as the coating thickness. In the outermost layer of the structural member B4-10, there is often an electrodeposition film or the like, for example. In such a case, the coating layer that exists under the electrodeposition film layer and on the base steel sheet is observed.

In the cross section of the structural member B4-10 at the position of the steel sheet B4-21 having the smallest sheet thickness tₘᵢₙ, the variation in martensite fraction is 20% or less, for example, provided that a value obtained by subtracting the minimum martensite fraction (%) from the maximum martensite fraction (%) is defined as the variation in martensite fraction. The variation in martensite fraction is preferably 15% or less, and more preferably 10% or less. The variation in martensite fraction can be measured as follows. That is, in the cross section of the structural member B4-10 at the position of the steel sheet B4-21 having the smallest sheet thickness tₘᵢₙ, ten or more analysis samples (a longer side of which has a length of the order of 10 mm, for example) are cut at positions distant from the ends by 20 mm or more and spaced apart from each other by 10 mm or more, and each analysis sample is mirror-polished and etched with the LePera etchant so that the surface in the sheet thickness direction is an observation surface. Then, the structure at the depth of 1/4 of the sheet thickness from the steel sheet surface (that is, in the region from the depth of 1/8 of the sheet thickness from the steel sheet surface to the depth of 3/8 of the sheet thickness from the steel sheet surface) is photographed with an optical microscope with a magnification of 1000 in thirty visual fields each having structure micrographs of 2400 µm² or more, and the structure photographs obtained are subjected to image analysis.

In an image analysis method, a maximum lightness value Lmax and a minimum lightness value Lmin of the image are obtained from the image, any part having a pixel whose lightness ranges from Lmax-0.3 (Lmax-Lmin) to Lmax is defined as a white region, and the ratio of the number of pixels of the white regions to the total number of pixels is calculated, thereby measuring the martensite fraction. For a total of thirty observation visual fields for each analysis sample, the martensite fraction is determined by this image analysis, and a mean value thereof is regarded as the martensite fraction of the analysis sample. Furthermore, the difference between the maximum value and the minimum value of the martensite fractions of ten or more analysis samples is defined as a variation in martensite fraction in the cross section of the structural member B4-10 at the position of the steel sheet B4-21 having the smallest sheet thickness tₘᵢₙ. When the structural member B4-10 has multiple steel sheets having the smallest sheet thickness tₘᵢₙ, this analysis is performed to determine the martensite fraction for each of these steel sheets, and the maximum variation in martensite fraction among these steel sheets is regarded as the variation in martensite fraction of the structural member B4-10.

Note that in some steel sheets, the area ratio of martensite obtained by the image analysis, that is, the area ratio of the white region, may include several percent of the area ratio of the retained austenite. However, the influence is small, since the variation in martensite fraction is calculated as a difference.

After the shaping step (hot stamping), the steel sheets B4-21, B4-22, and B4-23 can have a tensile strength of 0.5 GPa or more, for example, and preferably have a tensile strength of 1.0 GPa or more. At least one of the steel sheets B4-21, B4-22, and B4-23 may have a tensile strength of 1.5 GPa or more after the shaping step. The tensile strength of each of the steel sheets B4-21, B4-22, and B4-23 may be the same as or different from the tensile strengths of the other steel sheets.

### [Effects]

In the blank B4-20 according to this embodiment, the deposition amount W1 of the aluminum-based coating layer 4B-21b of the steel sheet B4-21 having the smallest sheet thickness tₘᵢₙ is less than the deposition amount W2 of the aluminum-based coating layer 4B-22b of the steel sheet B4-22 having a larger sheet thickness. As a result, when the blank B4-20 is heated for the hot stamping, the heating rate of the steel sheet B4-21 is markedly higher than the heating rate of the steel sheet B4-22. Specifically, since the aluminum-based coating layer 4B-21b in the outer layer of the steel sheet B4-21 is relatively thin, when the blank B4-20 is heated, alloying of the aluminum-based coating layer 4B-21b with iron contained in the base steel sheet B4-21a quickly proceeds to the surface of the steel sheet B4-21, and both surfaces of the steel sheet B4-21 change color to black or a color close to black. That is, the emissivity of both surfaces of the steel sheet B4-21 increases during the heating step. Therefore, the steel sheet B4-21 can be more quickly heated to a temperature in the austenite zone, and a longer high temperature retention time of the steel sheet B4-21 can be ensured. As a result, the austenite grain in the microstructure of the steel sheet B4-21 is coarsened, and the ferrite transformation region (ferrite nose) in the CCT diagram shifts to longer times. Therefore, the transformation from austenite to ferrite in the steel sheet B4-21 can be prevented in the period from the removal of the steel sheet B4-21 from the heating furnace 4B-30 to the start of the shaping with the press tooling B4-40. Therefore, the shaping of the blank B4-20 with the press tooling B4-40 can be started while the microstructure of the steel sheet B4-21 is kept in the austenite phase, and the hardenability of the steel sheet B4-21 having the smallest sheet thickness tₘᵢₙ can be improved.

In this embodiment, since the hardenability of the steel sheet B4-21 having a relatively small thickness is improved, the hardness of the structural member B4-10 produced from the blank B4-20 can be made uniform. More specifically, even the steel sheet B4-21 having the smallest sheet thickness tₘᵢₙ is quenched well, and therefore, the variation in martensite fraction of the steel sheet B4-21 can be reduced to 20% or less. As a result, deformation concentration is less likely to occur when an impact load is applied to the structural member B4-10, for example, and the structural member B4-10 is more likely to exert high shock absorption performance. Therefore, even when an annular structural member B4-10, in particular, a large annular structural member B4-10, that includes a steel sheet B4-21 having a small sheet thickness is produced from the blank B4-20, the failure in strength of the structural member B4-10 can be reduced, and the shock absorption performance of the structural member B4-10 can be improved.

The smaller the variation in martensite fraction, the more uniform the mechanical characteristics in the structural member B4-10, so that smaller variations in martensite fraction are preferable from the viewpoint of functionality of the structural member B4-10. On the other hand, if the variation in martensite fraction is large, it means that poorly hardened parts, that is, low hardness parts, are unevenly distributed in the structural member B4-10, and deformation is likely to be concentrated in the poor hardness parts at the time of collision deformation of the structural member B4-10, so that the functionality of the structural member B4-10 deteriorates.

In this embodiment, since the hardenability of the steel sheet B4-21 having a relatively small thickness is improved, unevenness of stress in the structural member B4-10 is also less likely to occur. Therefore, even when the annular structural member B4-10 is produced from the annular blank B4-20, torsion is less likely to occur in the structural member B4-10. Therefore, even when an annular structural member B4-10, in particular, a large annular structural member B4-10, that includes a steel sheet B4-21 having a small sheet thickness is produced from the blank B4-20, the failure in dimensional accuracy of the structural member B4-10 can be reduced, and the shock absorption performance of the structural member B4-10 can be improved.

With the blank B4-20 according to this embodiment, the deposition amount W1 of the aluminum-based coating layer 4B-21b in the steel sheet B4-21 having the smallest sheet thickness tₘᵢₙ is less than the deposition amount W2 of the aluminum-based coating layer 4B-22b in the steel sheet B4-22 having a larger sheet thickness than the steel sheet B4-21. As a result, the steel sheet B4-21 can be more quickly heated than the steel sheet B4-22, and therefore, the high temperature retention time of the steel sheet B4-21 is longer than when the deposition amount W1 of the aluminum-based coating layer 4B-21b in the steel sheet B4-21 is equal to or more than the deposition amount W2 of the aluminum-based coating layer 4B-22b in the steel sheet B4-22. Therefore, after the heating of the blank B4-20 ends, unevenness of the phase transformation due to the difference in cooling rate between the steel sheets B4-21, B4-22, and B4-23 can be reduced. Specifically, the start of the phase transformation from austenite to ferrite of the steel sheet B4-21 having the smallest sheet thickness tₘᵢₙ can be delayed, so that the difference in start time of phase transformation between the steel sheet B4-21 and the other steel sheets B4-22 and B4-23 can be reduced. As a result, the hardenability of the steel sheets B4-21, B4-22, and B4-23 included in the blank B4-20 can be made uniform.

In this embodiment, in the heating step, the steel sheet B4-21 having the smallest sheet thickness tₘᵢₙ first reaches a temperature in the austenite zone, and the steel sheet B4-22 having the middle sheet thickness t_{mid} and the steel sheet B4-23 having the largest sheet thickness tₘₐₓ then reach the temperature in the austenite zone. Here, the ratio of the largest sheet thickness tₘₐₓ to the smallest sheet thickness tₘᵢₙ: tₘₐₓ/tₘᵢₙ is preferably 3.2 or less. In this way, the steel sheet B4-23 having the sheet thickness tₘₐₓ can be sufficiently heated so that the phase transformation to austenite is completed, before alloying of the aluminum-based coating layer 4B-21b of the steel sheet B4-21 having the sheet thickness tₘᵢₙ excessively proceeds as a result of the heating, the diffusion layer grows, and the corrosion resistance or the weldability of the coating layer 21b are lost. Therefore, a process window can be ensured in the production of the structural member B4-10.

### <Second Embodiment>

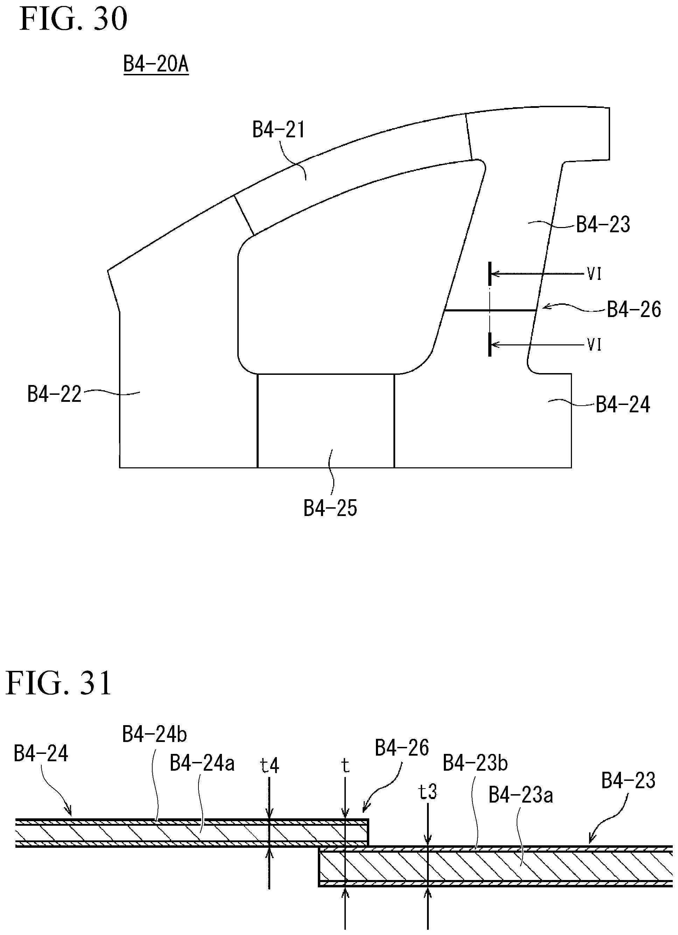

FIG. 30 is a plan view of a blank B4-20A according to a second embodiment. The blank B4-20 according to the first embodiment is a so-called tailor welded blank formed by the steel sheets B4-21, B4-22, and B4-23 butt-joined to each other. The blank B4-20A according to this embodiment mainly differs from the blank B4-20 according to the first embodiment in how the junctures are made between the steel sheets.

With reference to FIG. 30, the blank B4-20A includes multiple steel sheets B4-21, B4-22, B4-23, B4-24, and B4-25. The steel sheets B4-21, B4-22, B4-23, B4-24, and B4-25 are disposed and joined to each other to form an annular shape in plan view of the blank B4-20. As in the first embodiment, the steel sheet B4-21 has the smallest sheet thickness tₘᵢₙ and has a smaller deposition amount of the aluminum-based coating layer than the steel sheet B4-22. Therefore, the blank B4-20A according to this embodiment have the same effects as those in the first embodiment.

The blank B4-20A has an overlap part B4-26. FIG. 31 is a cross-sectional view taken along line VI-VI in FIG. 30, showing a cross section of the overlap part B4-26. In this embodiment, the overlap part B4-26 is formed by laying end parts of adjacent two steel sheets B4-23 and B4-24 on one another. The end part of the steel sheet B4-23 is laid on the end part of the steel sheet B4-24 and joined thereto. The steel sheets B4-23 and B4-24 are joined to each other by spot welding or laser welding, for example.

In the example of this embodiment, the steel sheets B4-23 and B4-24 are coated steel sheets. That is, as in the first embodiment, the steel sheet B4-23 includes a base steel sheet B4-23a and an aluminum-based coating layer 4B-23b. Similarly, the steel sheet B4-24 includes a base steel sheet B4-24a and an aluminum-based coating layer B4-24b. The base steel sheets B4-23a and B4-24a may be steel sheets of the same kind or may be steel sheets of different kinds. Similarly, the aluminum-based coating layers 4B-23b and B4-24b may be the same coating layers of the same kind or may be coating layers of different kinds.

The overlap part B4-26 has a total sheet thickness t. The total sheet thickness t is the sum of a sheet thickness t3 of the steel sheet B4-23 and a sheet thickness t4 of the steel sheet B4-24. The total sheet thickness t includes the thicknesses of the aluminum-based coating layers 4B-23b and B4-24b of the steel sheets B4-23 and B4-24. The total sheet thickness t of the overlap part B4-26 is more than 2.5 mm, for example. The total sheet thickness t of the overlap part B4-26 is preferably 4.0 mm or less. In this case, provided that the deposition amount of the aluminum-based coating layer 4B-23b on both surfaces of the base steel sheet B4-23a of the steel sheet B4-23 is W3 (g/m²), and the deposition amount of the aluminum-based coating layer B4-24b on both surfaces of the base steel sheet B4-24a of the steel sheet B4-24 is W4 (g/m²), the deposition amounts W3 and W4 are less than the deposition amount W2 of the aluminum-based coating layer 4B-22b on both surfaces of the base steel sheet B4-22a of the steel sheet B4-22 (FIGS. 28B and 28D).

The deposition amount W3 of the aluminum-based coating layer 4B-23b of the steel sheet B4-23 is a mean deposition amount on both surfaces of the base steel sheet B4-23a. Typically, the deposition amount (g/m²) of the aluminum-based coating layer 4B-23b on one surface of the base steel sheet B4-23a is substantially equal to the deposition amount (g/m²) of the aluminum-based coating layer 4B-23b on the other surface of the base steel sheet B4-23a. However, the deposition amount of the aluminum-based coating layer 4B-23b may vary between the front and back surfaces of the base steel sheet B4-23a due to the production conditions, for example. The deposition amount of the aluminum-based coating layer 4B-23b may be different between one surface and the other surface of the base steel sheet B4-23a. The deposition amount W4 of the aluminum-based coating layer B4-24b of the steel sheet B4-24 is a mean deposition amount on both surfaces of the base steel sheet B4-24a. Typically, the deposition amount (g/m²) of the aluminum-based coating layer B4-24b on one surface of the base steel sheet B4-24a is substantially equal to the deposition amount (g/m²) of the aluminum-based coating layer B4-24b on the other surface of the base steel sheet B4-24a. However, the deposition amount of the aluminum-based coating layer B4-24b may vary between the front and back surfaces of the base steel sheet B4-24a due to the production conditions, for example. The deposition amount of the aluminum-based coating layer B4-24b may be different between one surface and the other surface of the base steel sheet B4-24a. The deposition amounts W3 and W4 may be each 20 g/m² or more and 120 g/m² or less. The deposition amounts W3 and W4 are each preferably 30 g/m² or more, and more preferably 35 g/m² or more. The deposition amounts W3 and W4 are each preferably 115 g/m² or less, and more preferably 100 g/m² or less. The difference between the deposition amounts W2 and W3 of the steel sheets B4-22 and B4-23: W2-W3 is 20 (g/m²) or more, for example. W2-W3 may be 80 (g/m²) or less. Similarly, the difference between the deposition amounts W2 and W4 of the steel sheets B4-22 and B4-24: W2-W4 is 20 (g/m²) or more, for example. W2-W4 may be 80 (g/m²) or less. The deposition amount W3 of the aluminum-based coating layer 4B-23b of the steel sheets B4-23 and the deposition amount W4 of the aluminum-based coating layer B4-24b of the steel sheet B4-24 may be the same or may be different. Furthermore, the sheet thickness t3 of the steel sheet B4-23 and the sheet thickness t4 of the steel sheet B4-24 may be the same or may be different. The sheet thickness t3 of the steel sheet B4-23 and the sheet thickness t4 of the steel sheet B4-24 are mean sheet thicknesses of the steel sheets B4-23 and B4-24, respectively, and include the thicknesses of the aluminum-based coating layers 4B-23b and B4-24b, respectively.

The deposition amount W3 of the aluminum-based coating layer 4B-23b of the steel sheet B4-23 and the deposition amount W4 of the aluminum-based coating layer B4-24b of the steel sheet B4-24 can be measured in the method described in the first embodiment.

When the total sheet thickness t of the overlap part B4-26 is more than 2.5 mm, for example, the temperature of the overlap part B4-26 is slow to rise. Therefore, when the blank B4-20A is heated for the hot stamping, alloying of the aluminum-based coating layer 4B-21b of the steel sheet B4-21 having the smallest sheet thickness tₘᵢₙ (FIGS. 28B and 28C) may proceed and the diffusion layer may grow before the overlap part B4-26 reaches a temperature in the austenite zone, and the corrosion resistance or the weldability of the steel sheet B4-21 may be unable to be ensured. However, in this embodiment, the emissivity of the overlap part B4-26 is increased to promote heating, so that even when the total sheet thickness t of the overlap part B4-26 is more than 2.5 mm, for example, the overlap part B4-26 can be sufficiently heated until the phase transformation to austenite is completed, before alloying of the aluminum-based coating layer 4B-21b of the steel sheet B4-21 proceeds, the diffusion layer excessively grows, and the corrosion resistance or the weldability are lost. Therefore, a process window can be ensured in the production of the structural member.

With the blank B4-20A according to this embodiment, the steel sheet B4-21 may be butt-joined to the steel sheets B4-22 and B4-23 or may form the overlap part B4-26 with one or both of the steel sheets B4-22 and B4-23. The steel sheet B4-25 may be butt-joined to the steel sheets B4-22 and B4-24 or may form the overlap part B4-26 with one or both of the steel sheets B4-22 and B4-24.

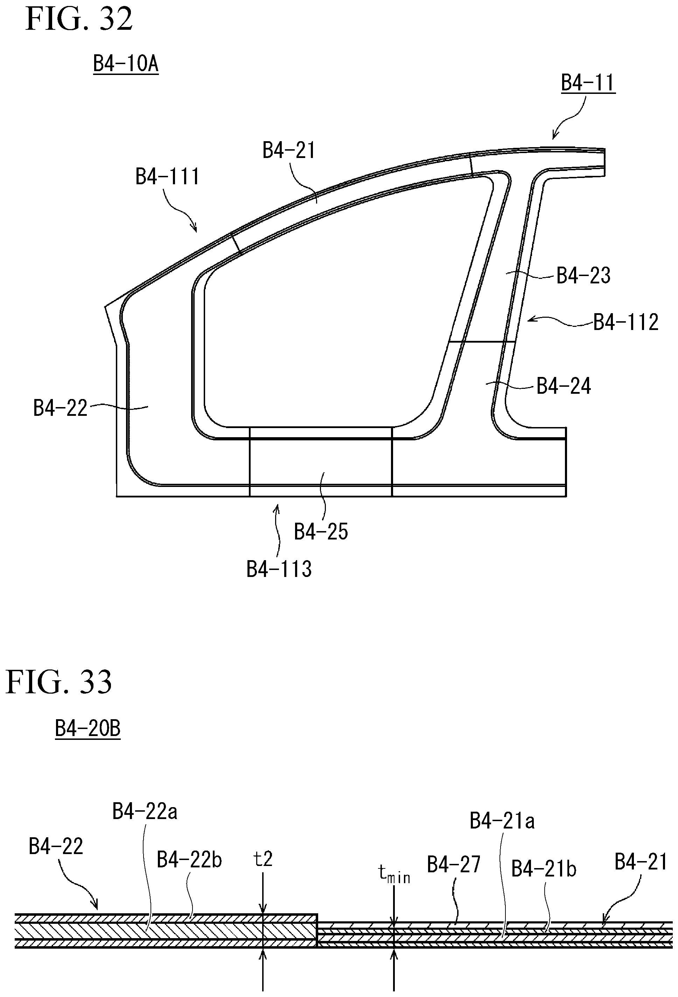

FIG. 32 is a plan view of a structural member B4-10A produced from the blank B4-20A. The structural member B4-10A generally has the same configuration as the structural member B4-10 according to the first embodiment (FIGS. 26 and 27). However, in the structural member B4-10A, a member main body B4-11 is formed of five steel sheets B4-21, B4-22, B4-23, B4-24, and B4-25. The method of producing the structural member B4-10A from the blank B4-20A is the same as the method in the first embodiment.

The structural member B4-10A can have the same size as the structural member B4-10 according to the first embodiment. Specifically, the size of the structural member B4-10A having an annular shape in plan view is 1.0 m or more and 4.0 mm or less, for example. In the structural member B4-10A, the steel sheets B4-21, B4-22, B4-23, B4-24, and B4-25 each have an open cross section, as with the steel sheets in the first embodiment. The steel sheets B4-21, B4-22, B4-23, B4-24, and B4-25 may each have a generally hat-like shape in cross-sectional view of the structural member B4-10A, for example.

Although not shown, in the structural member B4-10A, the width of the steel sheet B4-21 located at an upper part of a front pillar B4-111 is 15 mm or more and 300 mm or less, for example. The height of the steel sheet B4-21 may be 10 mm or more and 150 mm or less. In the structural member B4-10A, the width of the steel sheet B4-22 located at a lower part of the front pillar B4-111 is 30 mm or more and 750 mm or less, for example. The height of the steel sheet B4-22 may be 25 mm or more and 150 mm or less. In the structural member B4-10A, the width of the steel sheets B4-23 and B4-24 located at the center pillar B4-112 is 15 mm or more and 300 mm or less, for example. The height of the steel sheets B4-23 and B4-24 may be 10 mm or more and 150 mm or less. In the structural member B4-10A, the width of the steel sheet B4-25 located at the position of the rocker B4-113 is 30 mm or more and 300 mm or less, for example. The height of the steel sheet B4-25 may be 25 mm or more and 150 mm or less.

### <Third Embodiment>

FIG. 33 is a cross-sectional view of a blank B4-20B according to a third embodiment. FIG. 33 shows a juncture of a steel sheet B4-21 having the smallest sheet thickness tₘᵢₙ and a steel sheet B4-22 having a larger sheet thickness t2 in the blank B4-20B. The example shown in FIG. 33 differs from the example of the first embodiment shown in FIG. 33B only in configuration of the steel sheet B4-21.

In this embodiment, one surface of the steel sheet B4-21 is coated with a film B4-27 that is substantially black in color. On the other hand, the steel sheet B4-22 is provided with no film B4-27 that is substantially black in color. When the lightness L* value of the surface of the film B4-27 (CIE 1976 lightness index L* defined in JIS Z8781-4: 2013) is 60 or less, for example, the film B4-27 can be determined to be black in color. The film B4-27 is provided over the whole of the surface of the steel sheet B4-21. The film B4-27 may be a surface-treated carbon-based film (a film containing carbon (C)). Since the surface of the steel sheet B4-21 is provided with such a black film B4-27, the emissivity of the surface of the steel sheet B4-21 is higher than the emissivity of both surfaces of the steel sheet B4-22. For example, at a measurement temperature of 25 °C and a wavelength of 8.0 µm, the emissivity of the surface of the steel sheet B4-21 is higher than the emissivity of both surfaces of the steel sheet B4-22. The difference in emissivity between the steel sheets B4-21 and B4-22 at the temperature of 25 °C and the wavelength of 8.0 µm is preferably more than 5%, more preferably more than 10%, and even more preferably more than 20%.

As the film B4-27, a surface-treated film described in International Application Publication No. WO2022/215229 can be used, for example. Specifically, the film B4-27 may contain carbon black, for example. The film B4-27 may further contain a metal oxide. The metal oxide is one or more oxides selected from among the group consisting of Zr oxide, Zn oxide, and Ti oxide, for example. The film B4-27 may contain silica.

The film B4-27 may contain graphite, soot, or the like, instead of or in addition to carbon black. Alternatively, in order to increase the emissivity of the steel sheet B4-21, the film B4-27 may contain an acicular compound having a hexagonal crystal structure having an aspect ratio of 4 or more and 50 or less, for example. The compound having a hexagonal crystal structure is typically graphite (C). However, the compound may be lanthanum silicate, magnesium diboride, beryllium oxide (beryllia), zinc oxide, β-quartz, millerite (NiS), wurtzite (ZnS), or the like.

In this embodiment, the black film B4-27 is provided on one surface of the steel sheet B4-21 having the smallest sheet thickness tₘᵢₙ. As a result, the emissivity of the surface of the steel sheet B4-21 can be increased in advance, so that the temperature of the steel sheet B4-21 more quickly rises when the blank B4-20B is heated for the hot stamping. Therefore, a longer high temperature retention time of the steel sheet B4-21 can be ensured. In this way, the hardenability of the thinnest steel sheet B4-21 can be further improved.

In this embodiment, only one surface of the steel sheet B4-21 is coated with the film B4-27. However, both surfaces of the steel sheet B4-21 may be coated with the film B4-27. The thickness of the film B4-27 is 0.5 µm or more and 5.0 µm or less, for example. The thickness of the film B4-27 is preferably 1.0 µm or more and 3.0 µm or less. The thickness of the film B4-27 is small enough to be negligible compared with the sheet thickness tₘᵢₙ of the steel sheet B4-21. Therefore, the measured sheet thickness of the steel sheet B4-21 including the film B4-27 can be treated as the sheet thickness tₘᵢₙ of the steel sheet B4-21.

### <Fourth Embodiment>

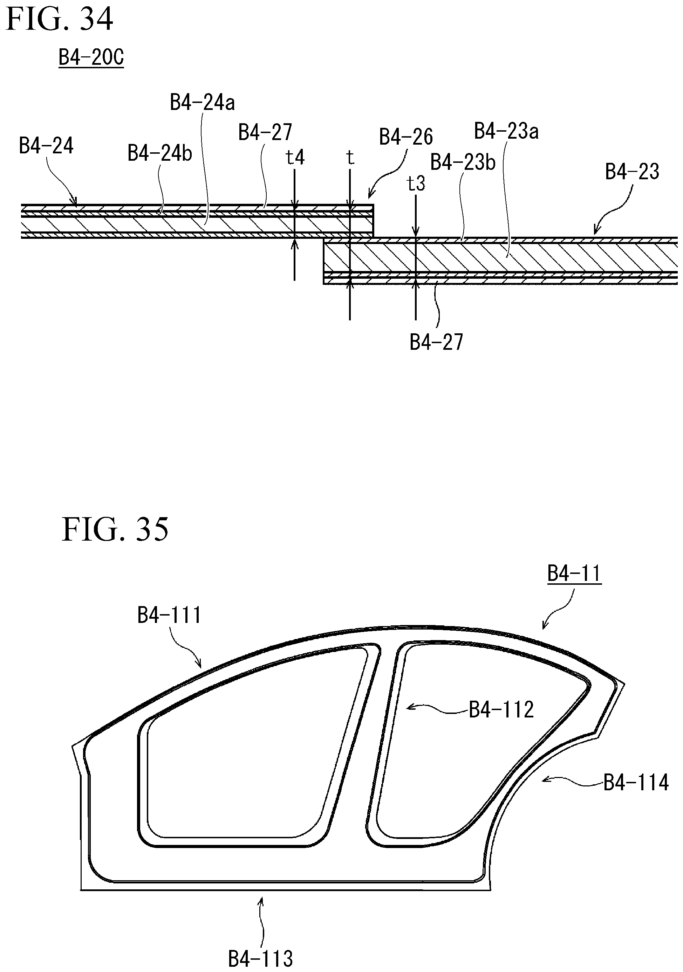

FIG. 34 is a cross-sectional view of a blank B4-20C according to a fourth embodiment. FIG. 34 shows an overlap part B4-26 formed by steel sheets B4-23 and B4-24 in the blank B4-20C. The example shown in FIG. 34 differs from the example of the second embodiment (FIG. 31) in that the overlap part B4-26 is provided with films B4-27 described in the third embodiment.

In this embodiment, a surface of each of the steel sheets B4-23 and B4-24 that is located on the outer side of the overlap part B4-26 is coated with a film B4-27 that is substantially black in color. With the steel sheet B4-23, the whole of a surface opposite to the other steel sheet B4-24 is coated with the film B4-27. With the steel sheet B4-24, the whole of a surface opposite to the other steel sheet B4-23 is coated with the film B4-27. That is, the surfaces of the steel sheets B4-23 and B4-24 that form the front and back surfaces of the overlap part B4-26 are each coated with the film B4-27. As a result, the emissivity of the overlap part B4-26 can be increased, so that the temperature of the overlap part B4-26 can be more quickly raised when the blank B4-20C is heated for the hot stamping. Therefore, the overlap part B4-26 can be heated to a temperature in the austenite zone before alloying of the aluminum-based coating layer 4B-21b of the steel sheet B4-21 having the sheet thickness tₘᵢₙ (FIGS. 28B and 28C) excessively proceeds, and a structural member B4-10 with the corrosion resistance or weldability of the steel sheet B4-21 maintained can be produced. Therefore, a process window can be easily ensured in the production of the structural member B4-10.

In the example shown in FIG. 34, the surface of each of the steel sheets B4-23 and B4-24 that is located on the outer side of the overlap part B4-26 is coated with the film B4-27 that is substantially black in color. However, it is also possible that although the surface of one of the steel sheets B4-23 and B4-24 that is located on the outer side of the overlap part B4-26 is coated with the film B4-27, the surface of the other of the steel sheets B4-23 and B4-24 that is located on the outer side of the overlap part B4-26 is not coated with the film B4-27. Furthermore, in the example shown in FIG. 34, the surface of each of the steel sheets B4-23 and B4-24 that is located on the inner side of the overlap part B4-26 is not coated with the film B4-27 that is substantially black in color. However, in each of the steel sheets B4-23 and B4-24, the surface located on the inner side of the overlap part B4-26 may also be coated with the film B4-27. However, from the viewpoint of making heating of the blank B4-20C uniform in the hot stamping, it is preferred that the surface of each of the steel sheets B4-23 and B4-24 that is located on the outer side of the overlap part B4-26 is coated with the film B4-27, and the surface located on the inner side of the overlap part B4-26 is not coated with the film B4-27.

Although embodiments of the present disclosure have been described above, the present disclosure is not limited to the embodiments described above, and various modifications can be made without departing from the spirit of the present disclosure.

In the first embodiment described above, an example has been described in which not only the deposition amount W1 of the aluminum-based coating layer 4B-21b of the steel sheet B4-21 having the smallest sheet thickness tₘᵢₙ but also the deposition amount W3 of the aluminum-based coating layer 4B-23b of the steel sheet B4-23 having the largest sheet thickness tₘₐₓ is less than the deposition amount W2 of the aluminum-based coating layer 4B-22b of another steel sheet B4-22. However, the deposition amount W3 of the aluminum-based coating layer 4B-23b of the steel sheet B4-23 having the largest sheet thickness tₘₐₓ may be equal to or more than the deposition amount W2 of the aluminum-based coating layer 4B-22b of the steel sheet B4-22. In that case, in the structural member B4-10 after the hot stamping, the coating thickness K3 of the steel sheet B4-23 is also equal to or more than the coating thickness K2 of the steel sheet B4-22. It is essential only that among the multiple steel sheets B4-21, B4-22, and B4-23 forming the blank B4-20, at least the deposition amount W1 of the aluminum-based coating layer 4B-21b of the steel sheet B4-21 having the smallest sheet thickness tₘᵢₙ is less than the deposition amount W2 of the aluminum-based coating layer 4B-22b of the steel sheet B4-22.

In the first embodiment described above, the blank B4-20 includes three steel sheets B4-21, B4-22, and B4-23. In the second embodiment described above, the blank B4-20A includes five steel sheets B4-21, B4-22, B4-23, B4-24, and B4-25. However, the number of steel sheets included in the blanks B4-20 and B4-20A is not limited to these. The blanks B4-20 and B4-20A have only to include the steel sheet B4-21 having the smallest sheet thickness tₘᵢₙ and the steel sheet B4-22 having a sheet thickness larger than the sheet thickness tₘᵢₙ. Furthermore, it is essential only that the deposition amount W1 of the aluminum-based coating layer 4B-21b of the steel sheet B4-21 having the smallest sheet thickness tₘᵢₙ is less than the deposition amount W2 of the aluminum-based coating layer 4B-22b of the steel sheet B4-22. The steel sheet B4-21 is directly or indirectly joined to the steel sheet B4-22. The blanks B4-20 and B4-20A having an annular shape in plan view can typically include three or more steel sheets. In the blanks B4-20 and B4-20A, the deposition amount of the aluminum-based coating layer in the steel sheets other than the steel sheets B4-21 and B4-22 is not particularly limited. The steel sheets other than the steel sheets B4-21 and B4-22 may be aluminum-coated steel sheets, other coated steel sheets, or steel sheets with no coating layers on the surfaces thereof (bare materials). In the blanks B4-20 and B4-20A having an annular shape, the arrangement of the multiple steel sheets including the steel sheets B4-21 and B4-22 is not particularly limited.

When any of the blanks B4-20 and B4-20A includes multiple steel sheets 21 having the smallest sheet thickness tₘᵢₙ, the deposition amount W1 of the aluminum-based coating layer 4B-21b of all the steel sheets 21 is preferably less than the deposition amount W2 of the aluminum-based coating layer 4B-22b of another steel sheet B4-22. The deposition amounts W1 of the aluminum-based coating layer 4B-21b of the steel sheets B4-21 may be the same or may be different. When there are multiple steel sheets 21 having the smallest sheet thickness tₘᵢₙ, the difference between the deposition amount W1 of the aluminum-based coating layer 4B-21b of the steel sheet B4-21 and the deposition amount W2 of the aluminum-based coating layer 4B-22b of the steel sheet B4-22: W2-W1 is calculated by referring to the largest one of the deposition amounts W1 of the aluminum-based coating layer 4B-21b of the multiple steel sheets 21.

In the first embodiment described above, the press tooling B4-40 used for hot stamping of the blank B4-20 includes the punch B4-41 and the die B4-42. However, the configuration of the press tooling B4-40 is not limited to the example described in the first embodiment. The press tooling B4-40 may further include a pad or a blank holder, for example.

In the embodiments described above, the main body 11 of the structural members B4-10 and B4-10A includes the front pillar B4-111, the center pillar B4-112, and the rocker B4-113. However, the member main body B4-11 may further include another component. For example, as shown in FIG. 35, the member main body B4-11 may further include a rear pillar B4-114. The structural members B4-10 and B4-10A according to the embodiments described above are door ring parts (single door ring parts) having a single ring shape. On the other hand, the structural member shown in FIG. 33 is a door ring part (double door ring part) having a double ring shape. When producing the double door ring part, the blank used as the starting material also has the double ring shape.

### (EXAMPLES)

In the following, the present disclosure will be described in more detail with reference to examples. However, the present disclosure is not limited to the examples described below.

### [First Example]

In order to check the effects of the present disclosure, using commercially available software (AUTOFORM R. 10 available from AUTOFORM), CAE analysis of the press forming (hot stamping) of structural members that were single door ring parts was performed for different types (types of starting materials) and sheet thicknesses of steel sheets included in the structural members and different division patterns of the structural members.

Table 25 shows the steel sheets used in this analysis.

**[Table 25]**

| Symbol | Type of starting material | Base material | Plating amount on one side, g/m² |
|---|---|---|---|
| A120 | Al-Si 1.5G HS | Steel sheet for 1.5 GPa class hot stamping | 120 |
| A100 | Al-Si 1.5G HS | Steel sheet for 1.5 GPa class hot stamping | 100 |
| A80 | Al-Si 1.5G HS | Steel sheet for 1.5 GPa class hot stamping | 80 |
| A60 | Al-Si 1.5G HS | Steel sheet for 1.5 GPa class hot stamping | 60 |
| A40 | Al-Si 1.5G HS | Steel sheet for 1.5 GPa class hot stamping | 40 |
| A80-1 | Black film (one side) Al-Si 1.5G HS | Steel sheet for 1.5 GPa class hot stamping | 80 |
| A40-1 | Black film (one side) Al-Si 1.5G HS | Steel sheet for 1.5 GPa class hot stamping | 40 |
| A40-2 | Black film (both sides) Al-Si 1.5G HS | Steel sheet for 1.5 GPa class hot stamping | 40 |
| A60-G | GA 1.5G HS | Steel sheet for 1.5 GPa class hot stamping | 60 |
| B120 | Al-Si 2.0G HS | Steel sheet for 2.0 GPa class hot stamping | 120 |
| B60 | Al-Si 2.0G HS | Steel sheet for 2.0 GPa class hot stamping | 60 |
| B80 | Al-Si 2.0G HS | Steel sheet for 2.0 GPa class hot stamping | 80 |
| B40 | Al-Si 2.0G HS | Steel sheet for 2.0 GPa class hot stamping | 40 |
| B40-1 | Black film (one side) Al-Si 2.0G HS | Steel sheet for 2.0 GPa class hot stamping | 40 |
| B40-2 | Black film (both sides) Al-Si 2.0G HS | Steel sheet for 2.0 GPa class hot stamping | 40 |
| B60-G | GA 2.0G HS | Steel sheet for 2.0 GPa class hot stamping | 60 |
| C80 | Al-Si 2.5G HS | Steel sheet for 2.5 GPa class hot stamping | 80 |
| C60 | Al-Si 2.5G HS | Steel sheet for 2.5 GPa class hot stamping | 60 |
| C40 | Al-Si 2.5G HS | Steel sheet for 2.5 GPa class hot stamping | 40 |
| C40-2 | Black film (both sides) Al-Si 2.5G HS | Steel sheet for 2.5 GPa class hot stamping | 40 |
| D80 | Al-Si 1.0G HS | Steel sheet for 1.0 GPa class hot stamping | 80 |
| D40 | Al-Si 1.0G HS | Steel sheet for 1.0 GPa class hot stamping | 40 |
| D40-2 | Black film (both sides) Al-Si 1.0G HS | Steel sheet for 1.0 GPa class hot stamping | 40 |
| E80 | Al-Si 0.5G HS | Steel sheet for 0.5 GPa class hot stamping | 80 |
| E40 | Al-Si 0.5G HS | Steel sheet for 0.5 GPa class hot stamping | 40 |
| E40-2 | Black film (both sides) Al-Si 0.5G HS | Steel sheet for 0.5 GPa class hot stamping | 40 |

In Table 25, the "type of starting material" shows type of coating, tensile strength, and use (hot stamping) in this order. However, for cases where a black film containing carbon (C) is provided on a coating layer, a term "black film (one side)" or "black film (both sides)" is shown before type of starting material. The "black film (one side)" means that the whole of one surface of the coated steel sheet is coated with a black film. The "black film (both sides)" means that the whole of both surfaces of the coated steel sheet is coated with a black film. Although Table 25 shows values of the deposition amount of the coating layer per side, the deposition amount of the coating layer is the same on both surfaces of the starting material in this analysis.

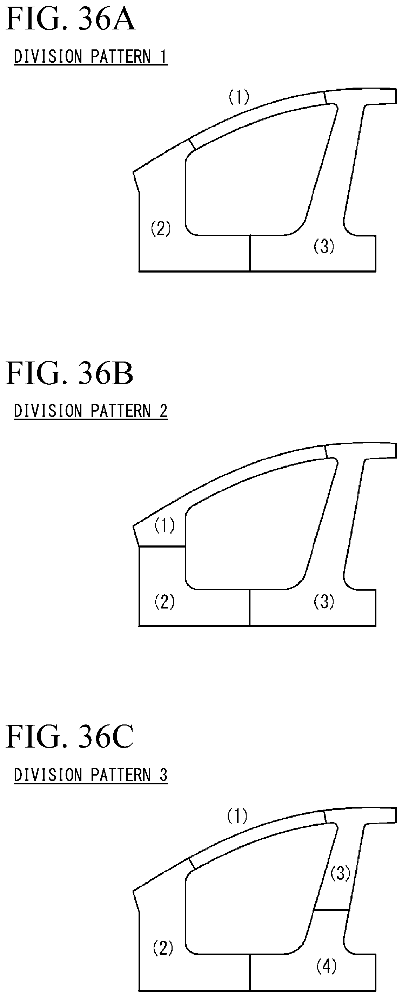

FIGS. 36A to 36G show division patterns of the structural member. FIGS. 36A to 36G show the number of steel sheets (starting materials) included in the structural members that are single door ring parts and the positions of the junctures between the steel sheets in the structural members. **In** FIGS. 36A to 36G, each steel sheet is denoted by a numeral in parentheses.

Table 26 shows analysis conditions and results for division patterns 1 and 2 shown in FIGS. 36A and 36B. In FIGS. 36A and 36B, the structural member is formed of three starting materials (1) to (3).

**[Table 26]**

| Symbol | Division pattern | Starting material (1) | | Starting material (2) | | Starting material (3) | | Start time of phase transformation, s | Time required to reach 910 °C, s | Difference in coating thickness, g/m² |
|---|---|---|---|---|---|---|---|---|---|---|
| | | Type of starting material | Sheet thickness, mm | Type of starting material | Sheet thickness, mm | Type of starting material | Sheet thickness, mm | | | |
| Example 1 | 1 | B80 | 1.4 | D80 | 1.4 | B40 | 1.2 | 20.2 | 129.0 | 40 |
| Example 2 | 1 | B40 | 1.2 | D40 | 1.3 | A80 | 1.6 | 20.3 | 129.0 | 40 |
| Example 3 | 2 | A80 | 1.6 | D40 | 1.2 | A80 | 1.8 | 20.4 | 129.0 | 40 |
| Comparative Example 1 | 1 | B80 | 1.2 | D80 | 1.4 | B80 | 1.6 | 17.8 | 149.5 | 0 |
| Comparative Example 2 | 2 | A80 | 1.6 | D80 | 1.2 | A80 | 1.8 | 18.6 | 149.5 | 0 |

With reference to Table 26, in Example 1, the deposition amount of the aluminum-based coating layer on both surfaces of the base steel sheet was small for a starting material (3) having the smallest sheet thickness tₘᵢₙ: 1.2 mm among starting materials (1) to (3), and was large for the other starting materials (1) and (2) having a larger sheet thickness than the starting material (3). In Example 2, the deposition amount of the aluminum-based coating layer was small for a starting material (1) having the smallest sheet thickness tₘᵢₙ: 1.2 mm among starting materials (1) to (3), and was large for another starting material (3) having a larger sheet thickness than the starting material (1). In Example 3, the deposition amount of the aluminum-based coating layer was small for a starting material (2) having the smallest sheet thickness tₘᵢₙ: 1.2 mm among starting materials (1) to (3), and was large for the other starting materials (1) and (3) having a larger sheet thickness than the starting material (2). On the other hand, in Comparative Examples 1 and 2, the deposition amount of the aluminum-based coating layer was the same for starting materials (1) to (3).

In Table 26, "time required to reach 910 °C" means the time required to reach 910 °C by the first starting material to be heated to 910 °C (A_{c3} point or higher) after the start of heating of the blank among the starting materials included in the blank. "Start time of phase transformation" means the shortest time until the phase transformation to ferrite starts after the blank is heated at a furnace temperature of 920 °C for five minutes and thirty seconds and then removed from the heating furnace. "Difference in coating thickness" means the difference between the deposition amount of the aluminum-based coating layer of the starting material having the smallest sheet thickness tₘᵢₙ and the deposition amount of the aluminum-based coating layer of the starting material having a larger sheet thickness (the largest deposition amount in the case where there are multiple starting materials having a sheet thickness larger than the sheet thickness tₘᵢₙ and the deposition amount of the aluminum-based coating layer varies between these starting materials). Table 26 shows that in Examples 1 to 3 in which the deposition amount of the aluminum-based coating layer of the thinnest starting material was less than the deposition amount of the aluminum-based coating layer of one or more other starting materials, the time required to reach 910 °C was 20 seconds or more shorter than in Comparative Examples 1 and 2, and the heating rate of the thinnest starting material in the heating step was increased. Furthermore, in Examples 1 to 3, the start time of phase transformation was more than 20 seconds and was delayed compared with Comparative Examples 1 and 2. Therefore, the blank is more likely to start being shaped before the start of ferrite transformation, and the blank can be uniformly quenched in the shaping step.

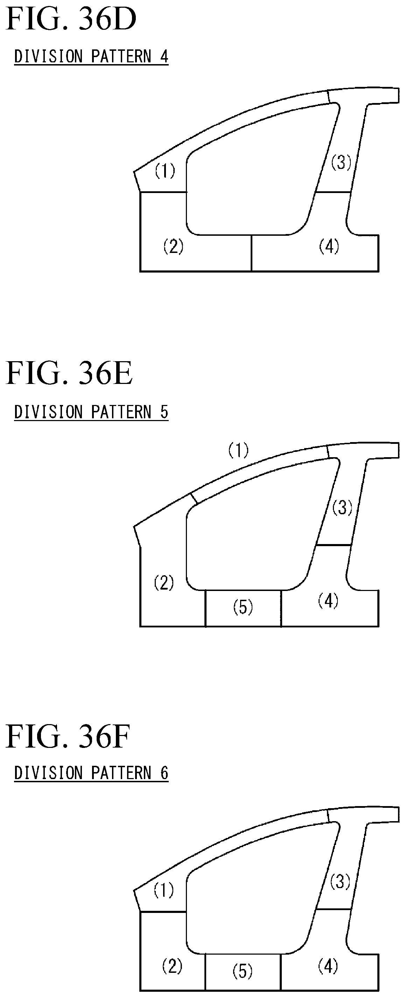

Table 27 shows analysis conditions and results for division patterns 3 and 4 shown in FIGS. 36C and 36D. In FIGS. 36C and 36D, the structural member is formed of four starting materials (1) to (4).

**[Table 27]**

| Symbol | Division pattern | Starting material (1) | | Starting material (2) | | Starting material (3) | | Starting material (4) | | Start time of phase transformation, s | Time required to reach 910 °C, s | Difference in coating thickness, g/m² |
|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | | | |
| Example 4 | 3 | C40-2 | 1.2 | A40 | 1.3 | A80 | 1.8 | A80 | 1.4 | 23.2 | 95.0 | 40 |
| Example 5 | 4 | B80 | 1.6 | B40-2 | 1.2 | B80 | 1.8 | C80 | 1.4 | 23.0 | 95.0 | 40 |
| Example 6 | 4 | B60-G | 1.6 | A120 | 1.4 | A80 | 1.8 | A40 | 1.2 | 20.1 | 129.0 | 80 |
| Example 7 | 3 | B40 | 1.2 | D80 | 1.4 | B80 | 1.8 | D40 | 1.2 | 20.2 | 129.0 | 40 |
| Example 8 | 4 | A80 | 1.6 | C40 | 1.2 | B80 | 2.6 | A40 | 1.2 | 20.3 | 129.0 | 40 |
| Example 9 | 4 | A60-G | 1.6 | B80 | 1.4 | B40 | 1.2 | D80 | 1.4 | 20.2 | 129.0 | 40 |
| Example 10 | 4 | A80 | 1.6 | A40-2 | 1.2 | B40-2 | 1.2 | A80 | 1.4 | 23.0 | 95.0 | 40 |
| Comparative Example 3 | 3 | C80 | 1.2 | A80 | 1.3 | A80 | 1.8 | A80 | 1.4 | 19.0 | 149.5 | 0 |
| Comparative Example 4 | 4 | B80 | 1.6 | B80 | 1.2 | B80 | 1.8 | C80 | 1.4 | 17.8 | 149.5 | 0 |
| Comparative Example 5 | 4 | B60-G | 1.6 | A80 | 1.4 | A80 | 1.8 | A80 | 1.2 | 18.0 | 149.5 | 0 |
| Comparative Example 6 | 3 | B80 | 1.2 | D80 | 1.4 | B80 | 1.8 | D80 | 1.2 | 17.8 | 149.5 | 0 |
| Comparative Example 7 | 4 | A80 | 1.6 | C80 | 1.2 | B80 | 2.6 | A80 | 1.2 | 17.7 | 149.5 | 0 |

With reference to Table 27, in Examples 4 to 10, the deposition amount of the aluminum-based coating layer of the starting material(s) having the smallest sheet thickness tₘᵢₙ among starting materials (1) to (4) was less than the deposition amount of the aluminum-based coating layer of one or more other starting materials. When there were multiple starting materials having the smallest sheet thickness tₘᵢₙ, the deposition amount of the aluminum-based coating layer of all those starting materials was less than the deposition amount of the aluminum-based coating layer of the starting material(s) having a larger sheet thickness. On the other hand, in Comparative Examples 3 to 7, the deposition amount of the aluminum-based coating layer of the starting material(s) having the smallest sheet thickness tₘᵢₙ among starting materials (1) to (4) was equal to or more than the deposition amount of the aluminum-based coating layer of the other starting materials. Note that in Examples 6 and 9 and Comparative Example 5, the starting material (1) was a galvannealed steel sheet (GA steel sheet).

Table 27 shows that in Examples 4 to 10, the time required to reach 910 °C was 20 seconds or more shorter than in Comparative Examples 3 to 7, and the heating rate of the thinnest starting material in the heating step was increased. Furthermore, in Examples 4 to 10, the start time of phase transformation was more than 20 seconds and was delayed compared with Comparative Examples 3 to 7. Therefore, the blank is more likely to start being shaped before the start of ferrite transformation, and the blank can be uniformly quenched in the shaping step.

In Examples 4, 5 and 10, both surfaces of the starting material having the smallest sheet thickness tₘᵢₙ were coated with a black film. In Examples 4, 5 and 10, the time required to reach 910 °C was 20 seconds or more shorter than in Examples 6 to 9, in which the starting material having the smallest sheet thickness tₘᵢₙ was not provided with the black film, and the heating rate of the thinnest starting material in the heating step was further increased. Furthermore, in Examples 4, 5, and 10, the start time of phase transformation was also delayed compared with Examples 6 to 9. Therefore, the emissivity of the surfaces of the starting material having the smallest sheet thickness tₘᵢₙ is increased in advance by the black film, so that the starting material can be more quickly heated, and the start of transformation to the ferrite phase can be further delayed.

Table 28 shows analysis conditions and results for division patterns 5 to 7 shown in FIGS. 36E to 36G. In FIGS. 36E to 36G, the structural member is formed of five starting materials (1) to (5).

**[Table 28]**

| Symbol | Division pattern | Starting material (1) | | Starting material (2) | | Starting material (3) | | Starting material (4) | | Starting material (5) | | Start time of phase transformation, s | Time required to reach 910 °C, s | Difference in coating thickness, g/m² |
|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | |
| Example 11 | 5 | A40 | 1.2 | A80 | 1.6 | C80 | 1.4 | A40 | 1.2 | A80 | 1.4 | 20.3 | 129.0 | 40 |
| Example 12 | 5 | A40-1 | 1.2 | B80 | 1.6 | C40 | 1.2 | D80 | 1.8 | B40-1 | 1.2 | 21.9 | 108.0 | 40 |
| Example 13 | 7 | A40 | 1.2 | C40 | 1.2 | A80 | 1.8 | B40 | 1.0 | D80 | 1.4 | 18.1 | 107.0 | 40 |
| Example 14 | 7 | C40-2 | 1.2 | B80 | 1.6 | B80 | 1.4 | A40 | 1.2 | A80 | 1.4 | 21.2 | 129.0 | 40 |
| Example 15 | 6 | B80 | 1.6 | B80 | 1.4 | A80 | 1.6 | D40 | 1.2 | B80 | 1.4 | 20.1 | 129.0 | 40 |
| Comparative Example 8 | 5 | A80 | 1.2 | A80 | 1.6 | C80 | 1.4 | A80 | 1.2 | A80 | 1.4 | 17.7 | 149.5 | 0 |
| Comparative Example 9 | 5 | A80 | 1.2 | B80 | 1.6 | C80 | 1.2 | D80 | 1.8 | B80 | 1.2 | 17.8 | 149.5 | 0 |
| Comparative Example 10 | 7 | C80 | 1.2 | B80 | 1.6 | B80 | 1.4 | A80 | 1.2 | A80 | 1.4 | 17.7 | 149.5 | 0 |
| Comparative Example 11 | 6 | B80 | 1.6 | B80 | 1.4 | A80 | 1.6 | D80 | 1.2 | B80 | 1.4 | 18.0 | 149.5 | 0 |

With reference to Table 28, in Examples 11 to 15, the deposition amount of the aluminum-based coating layer of the starting material(s) having the smallest sheet thickness tₘᵢₙ among starting materials (1) to (5) was less than the deposition amount of the aluminum-based coating layer of one or more other starting materials. When there were multiple starting materials having the smallest sheet thickness tₘᵢₙ, the deposition amount of the aluminum-based coating layer of all those starting materials was less than the deposition amount of the aluminum-based coating layer of the starting material(s) having a larger sheet thickness. On the other hand, in Comparative Examples 8 to 11, the deposition amount of the aluminum-based coating layer was the same for the starting materials (1) to (5).

Table 28 shows that in Examples 11 to 15, the time required to reach 910 °C was 20 seconds or more shorter than in Comparative Examples 8 to 11, and the heating rate of the thinnest starting material in the heating step was increased. Furthermore, in Examples 11 to 15, the start time of phase transformation was delayed compared with Comparative Examples 8 to 11. Therefore, the blank is more likely to start being shaped before the start of ferrite transformation, and the blank can be uniformly quenched in the shaping step.

In Examples 12 and 14, one or both surfaces of the starting material (1) having the smallest sheet thickness tₘᵢₙ were coated with a black film. In Example 12, one surface of the starting material (5) having the smallest sheet thickness tₘᵢₙ was also coated with a black film. For example, comparing Example 12 with Comparative Example 9 in which the same combination of the division pattern, the type of starting material (except for the coating amount), and the sheet thickness was used, the time required to reach 910 °C was 40 seconds or more shorter and the thinnest starting material was markedly more quickly heated in Example 12 in the heating step. Furthermore, in Example 12, the start time of phase transformation was obviously delayed compared with Comparative Example 9. Therefore, the emissivity of the surface of the starting material having the smallest sheet thickness tₘᵢₙ is increased in advance by the black film, so that the starting material can be more quickly heated, and the start of transformation to the ferrite phase can be further delayed.

In the examples and the comparative examples shown in Tables 26 to 28, the starting materials were butted on each other and then joined by laser welding (butt-joint). On the other hand, in the examples shown in Table 29 described below, some starting materials were joined by spot welding, for example, to form an overlap part.

**[Table 29]**

| Symbol | Division pattern | Starting material (1) | | Starting material (2) | | Starting material (3) | | Starting material (4) | | Starting material (5) | | Start time of phase transformatio n, s | Time required to reach 910 °C, s | Difference in coating thickness, g/m² |
|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | |
| Example 16 | 6 | A80 | 1.6 | A40 | 1.6 | C40 | 1.4 | A40-2 | 1.2 | A40 | 1.4 | 22.0 | 95.0 | 40 |
| Example 17 | 5 | B80 | 1.4 | A40 | 1.4 | C40 | 1.4 | D40 | 1.2 | A40 | 1.2 | 20.2 | 129.0 | 40 |
| Example 18 | 6 | A100 | 1.6 | B80 | 1.6 | A60 | 1.4 | A40-2 | 1.2 | A60 | 1.4 | 22.0 | 95.0 | 60 |
| Example 19 | 5 | B60 | 1.4 | A60 | 1.4 | A60 | 1.4 | D40 | 1.2 | A40 | 1.2 | 20.2 | 129.0 | 20 |
| Comparative Example 12 | 6 | A80 | 1.2 | A80 | 1.6 | C80 | 1.4 | A80 | 1.2 | A80 | 1.4 | 17.7 | 149.5 | 0 |
| Comparative Example 13 | 5 | B80 | 1.6 | A80 | 1.4 | B80 | 1.6 | D80 | 1.2 | A80 | 1.4 | 17.8 | 149.5 | 0 |
| Comparative Example 14 | 5 | B60 | 1.6 | A60 | 1.4 | B40 | 1.6 | D80 | 1.2 | A60 | 1.4 | 17.8 | 149.5 | -20 |

With reference to Table 29 and FIG. 36F, in Examples 16 and 18 and Comparative Example 12, starting materials (2) and (5), starting materials (3) and (4), and starting materials (4) and (5) each form an overlap part at the juncture therebetween. With reference to Table 29 and FIG. 36E, in Examples 17 and 19 and Comparative Examples 13 and 14, starting materials (2) and (5) and starting materials (3) and (4) each form an overlap part at the juncture therebetween.

With reference to Table 29, in Examples 16 to 19, the deposition amount of the aluminum-based coating layer of the starting material(s) having the smallest sheet thickness tₘᵢₙ among starting materials (1) to (5) was less than the deposition amount of the aluminum-based coating layer of the other starting materials having a larger sheet thickness. In Examples 16 and 17, the difference in coating thickness between the thinnest starting material and the other starting materials was 40 g/m². In Examples 18 and 19, the differences in coating thickness between the thinnest starting material and the other starting materials were 60 g/m² and 20 g/m², respectively. On the other hand, in Comparative Examples 12 and 13, the deposition amount of the aluminum-based coating layer was the same for the starting materials (1) to (5). In Comparative Example 14, the deposition amount of the aluminum-based coating layer of the starting material (4) having the smallest sheet thickness tₘᵢₙ was more than the deposition amount of the aluminum-based coating layer of other starting materials (1), (2) and (5) having a larger sheet thickness. In Comparative Example 14, the difference in coating thickness between the thinnest starting material and the other starting materials was -20 g/m².

Table 29 shows that in Examples 16 to 19, the time required to reach 910 °C was 20 seconds or more shorter than in Comparative Examples 12 to 14, and the start time of phase transformation was also delayed compared with Comparative Examples 12 to 14. Therefore, it was ascertained that even when the blank includes an overlap part, the same effects as those in the case of the butt joint are achieved by reducing the deposition amount of the aluminum-based coating layer of the thinnest starting material. In particular, in Examples 16 to 18 in which both surfaces of the thinnest starting material were provided with a black film, the time required to reach 910 °C was 40 seconds or more shorter than in Comparative Examples 12 to 14, and the start time of phase transformation was further delayed compared with Comparative Examples 12 to 14.

In Example 19, the difference in coating thickness between the thinnest starting material and the other starting materials was relatively small as 20 g/m². In Example 19, again, it was ascertained that the time required to reach 910 °C was markedly shorter than in Comparative Examples 12 to 14, and the start time of phase transformation was also significantly delayed compared with Comparative Examples 12 to 14.

### [Second Example]

The same analysis as in the first example was performed of the press forming (hot stamping) of structural members that were double door ring parts for different types and sheet thicknesses of starting materials included in the structural members and different division patterns of the structural members.

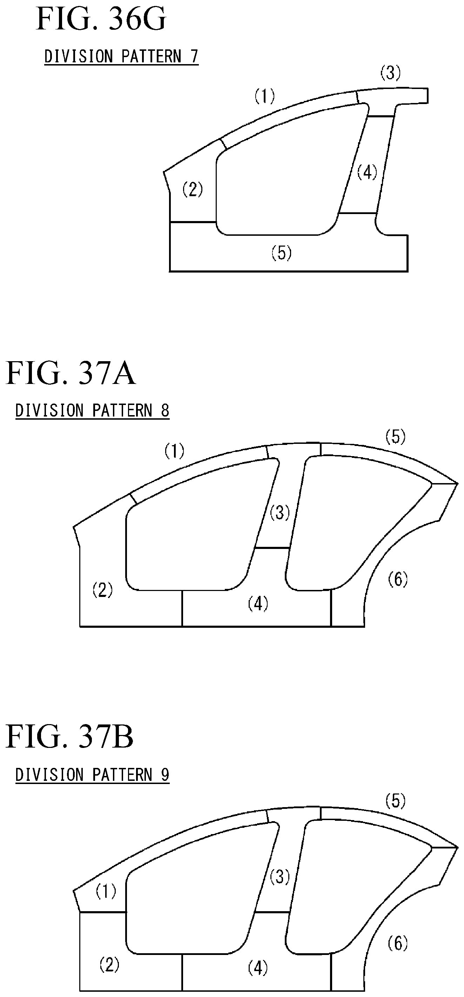

The steel sheets as the starting materials were selected from those shown in Table 25, as in the first embodiment. The division patterns of the structural members are shown in FIGS. 37A to 37D. FIGS. 37A to 37D show the number of steel sheets (starting materials) included in the structural members that are double door ring parts and the positions of the junctures between the steel sheets in the structural members. In FIGS. 37A to 37D, each steel sheet as the starting material is denoted by a numeral in parentheses.

Table 30 shows analysis conditions and results for division patterns 8 and 9 shown in FIGS. 37A and 37B. In FIGS. 37A and 37B, the structural member is formed of six starting materials (1) to (6).

**[Table 30]**

| Symbol | Division pattern | Starting material (1) | | Starting material (2) | | Starting material (3) | | Starting material (4) | | Starting material (5) | | **Starting** material (6) | | Start time of phase transformation, s | Time required to reach 910 °C, s | Difference in coating thickness, g/m² |
|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | |
| Example 20 | 8 | C80 | 1.6 | A80 | 1.4 | A80 | 1.8 | D80 | 1.4 | B40 | 1.0 | D40 | 1.2 | 18.4 | 107.0 | 40 |
| Example 21 | 8 | A80 | 1.6 | B40-1 | 1.3 | B80 | 1.8 | A80 | 1.4 | A40 | 1.2 | A40 | 1.0 | 18.6 | 99.0 | 40 |
| Example 22 | 9 | B60 | 1.6 | A60 | 1.4 | C60 | 1.8 | B60 | 1.4 | B40 | 1.0 | A40 | 1.0 | 18.2 | 107.0 | 20 |
| Comparative Example 15 | 8 | C80 | 1.6 | A80 | 1.4 | A80 | 1.8 | D80 | 1.4 | B80 | 1.0 | D80 | 1.2 | 16.5 | 124.5 | 0 |
| Comparative Example 16 | 9 | B60 | 1.6 | A60 | 1.4 | C60 | 1.8 | B60 | 1.4 | B80 | 1.0 | A80 | 1.0 | 15.8 | 124.5 | -20 |

With reference to Table 30, in Examples 20 to 22, the deposition amount of the aluminum-based coating layer of the starting material having the smallest sheet thickness tₘᵢₙ among the starting materials (1) to (6) was less than the deposition amount of the aluminum-based coating layer of one or more starting materials having a larger sheet thickness. In Examples 20 to 22, the difference in coating thickness was 20 g/m² or more. On the other hand, in Comparative Example 15, the deposition amount of the aluminum-based coating layer was the same for the starting materials (1) to (6). In Comparative Example 16, the deposition amount of the aluminum-based coating layer of the other starting materials was more than the deposition amount of the aluminum-based coating layer of the starting material having the smallest sheet thickness tₘᵢₙ, and the difference in coating thickness was - 20 g/m².

Table 30 shows that in Examples 20 to 22, the time required to reach 910 °C was approximately 20 seconds shorter than in Comparative Examples 15 and 16, and the heating rate of the thinnest starting material in the heating step was increased. Furthermore, in Examples 20 to 22, the start time of phase transformation was delayed compared with Comparative Examples 15 and 16. It can be said that as a result of reducing the deposition amount of the aluminum-based coating layer of the thinnest starting material, the blank is more likely to start being shaped before the start of ferrite transformation, and the blank can be uniformly quenched in the shaping step.

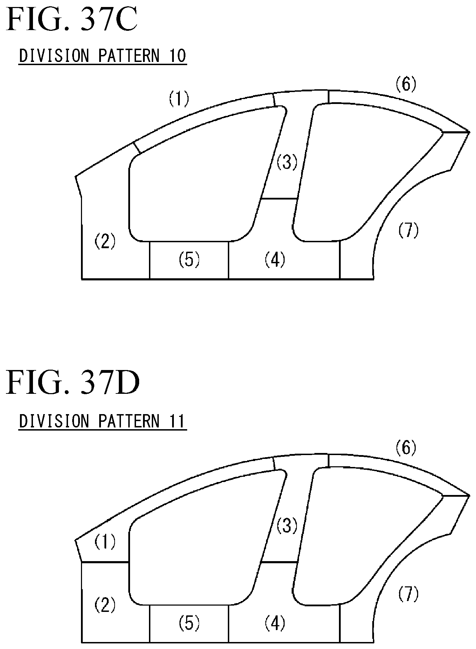

Table 31 shows analysis conditions and results for division patterns 10 and 11 shown in FIGS. 37C and 37D. **In** FIGS. 37C and 37D, the structural member is formed of seven starting materials (1) to (7).

**[Table 31]**

| Symbol | Division pattern | Starting material (1) | | Starting material (2) | | Starting material (3) | | Starting material (4) | | Starting material (5) | | Starting material (6) | | Starting material (7) | | Start time of phase transformation, s | Time required to reach 910 °C, s | Difference in coating thickness, g/m² |
|---|---|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | |
| Example 23 | 10 | C80 | 1.6 | A80 | 1.4 | A80 | 1.8 | D40 | 1.2 | D40-2 | 1.4 | B40 | 1.2 | D40 | 1.0 | 17.9 | 107.0 | 40 |
| Example 24 | 10 | A80 | 1.6 | A80 | 1.4 | B80 | 1.8 | A40-1 | 1.2 | B40-1 | 1.2 | A40-1 | 1.2 | A40-1 | 1.2 | 18.4 | 108.0 | 40 |
| Example 25 | 11 | B80 | 1.6 | B40 | 1.3 | C80 | 1.8 | E40-2 | 1.2 | A40-2 | 1.2 | B40-2 | 1.2 | A40-1 | 1.0 | 18.6 | 89.5 | 40 |
| Comparative Example 17 | 10 | C80 | 1.6 | A80 | 1.4 | A80 | 1.8 | D80 | 1.2 | D80 | 1.4 | B80 | 1.2 | D80 | 1.2 | 17.4 | 149.5 | 0 |
| Comparative Example 18 | 11 | B80 | 1.6 | A80 | 1.4 | C80 | 1.8 | E80 | 1.2 | A80 | 1.2 | B80 | 1.2 | A80 | 1.0 | 15.8 | 124.5 | 0 |

With reference to Table 31, in Examples 23 to 25, the deposition amount of the aluminum-based coating layer of the starting materials having the smallest sheet thickness tₘᵢₙ among starting materials (1) to (7) was less than the deposition amount of the aluminum-based coating layer of one or more starting materials having a larger sheet thickness. On the other hand, in Comparative Examples 17 and 18, the deposition amount of the aluminum-based coating layer was the same for the starting materials (1) to (7).

Table 31 shows that in Examples 23 to 25, the time required to reach 910 °C was shorter than in Comparative Examples 17 and 18, and the heating rate of the thinnest starting material in the heating step was increased. Furthermore, in Examples 23 to 25, the start time of phase transformation was delayed compared with Comparative Examples 17 and 18. Therefore, the blank is more likely to start being shaped before the start of ferrite transformation, and the blank can be uniformly quenched in the shaping step.

### [Third Example]

In order to check the effect of the sheet thickness on the press forming (hot stamping) of structural members that are single door ring parts, the same analysis as in the first example was performed for different combinations of starting materials and different ways of joining. Table 32 shows analysis conditions and results.

**[Table 32]**

| Symbol | Division pattern | Starting material (1) | | Starting material (2) | | Starting material (3) | | Starting material (4) | | Starting material (5) | | Smallest sheet thickness tₘᵢₙ | Largest sheet thickness tₘₐₓ | Sheet thickness ratio tₘₐₓ/tₘᵢₙ | Largest total sheet thickness t | Time required to reach 910 °C, s | Difference in coating thickness, g/m² | PW, s | Heating time |
|---|---|---|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | | | | | | |
| Test Example 1 | 7-Overlap | A40 | 1.6 | A40 | 1.4 | C40 | 1.2 | A80 | 1.4 | A40 | 1.4 | 1.2 | 1.6 | 1.3 | 3.0 | 129.0 | 40 | 51.0 | 323.0 |
| Test Example 2 | 7- Butt | A40 | 1.6 | A80 | 1.4 | C40 | 1.2 | A80 | 1.4 | A80 | 1.4 | 1.2 | 1.6 | 1.3 | 1.6 | 129.0 | 40 | 174.5 | 199.5 |
| Test Example 3 | 7- Butt | A80 | 1.6 | A80 | 1.4 | A40 | 3.2 | A40 | 1.1 | A80 | 1.4 | 1.1 | 3.2 | 2.9 | 3.2 | 118.0 | 40 | 7.8 | 355.3 |
| Test Example 4 | 5-Overlap | C40 | 1.2 | B80 | 1.6 | B40 | 2.0 | A40-2 | 1.8 | A120 | 1.6 | 1.2 | 2.0 | 1.7 | 3.8 | 129.0 | 80 | 32.0 | 342.0 |
| Test Example 5 | 7-Overlap | A40 | 1.0 | A80 | 1.4 | A40 | 3.3 | A40-2 | 1.0 | A80 | 1.4 | 1.0 | 3.3 | **3.3** | **4.3** | 78.0 | 40 | -32.3 | 355.3 |
| Test Example 6 | 7- Butt | A80 | 1.6 | A80 | 1.4 | A40 | 3.3 | A40-1 | 1.0 | A80 | 1.4 | 1.0 | 3.3 | **3.3** | 3.3 | 89.5 | 40 | -19.3 | 353.8 |
| Reference example 1 | 5-Overlap | C80 | 1.4 | A80 | 1.4 | A80 | 1.4 | D80 | 1.4 | B80 | 1.4 | 1.4 | 1.4 | 1.0 | 2.8 | 174.5 | 0 | 70.0 | 349.5 |

The division pattern in Test Examples 1 and 5 was the division pattern 7 shown in FIG. 36G. The division pattern in Test Example 4 was the division pattern 5 shown in FIG. 36E. In Test Examples 1, 4, and 5, some starting materials form an overlap part at the juncture therebetween. More specifically, in Test Examples 1 and 5, starting materials (1) and (2), starting materials (1) and (3), starting materials (2) and (5), and starting materials (4) and (5) each form an overlap part at the juncture therebetween. In Test Example 4, starting materials (1) and (2), starting materials (1) and (3), starting materials (3) and (4), and starting materials (2) and (5) each form an overlap part at the juncture therebetween. In any of these test examples, the deposition amount of the aluminum-based coating layer of the starting material(s) having the smallest sheet thickness tₘᵢₙ was less than the deposition amount of the aluminum-based coating layer of one or more starting materials having a larger sheet thickness.

The division pattern in Test Examples 2, 3, and 6 was the division pattern 7 shown in FIG. 36G. In Test Examples 2, 3, and 6, the starting materials were butt-joined to each other. In any of these test examples, the deposition amount of the aluminum-based coating layer of the starting material having the smallest sheet thickness tₘᵢₙ was less than the deposition amount of the aluminum-based coating layer of one or more starting materials having a larger sheet thickness.

In Table 32, "process window (PW)" means a value obtained by subtracting the time required for the whole of the blank to reach 910 °C after the first to reach 910 °C among the starting materials included in the blank reaches 910 °C from the allowable heating duration of the first starting material after reaching 910 °C. If the process window is 5 seconds or less, it means that alloying of the coating layer of the first starting material to reach 910 °C in the heating step proceeds, the corrosion resistance of the coating layer cannot be ensured, and it is difficult to produce the structural member of high quality.

As shown in Table 32, in Test Examples 5 and 6 in which the ratio of the largest sheet thickness tₘₐₓ to the smallest sheet thickness tₘᵢₙ: tₘₐₓ/tₘᵢₙ was more than 3.2, the process window was negative, and a process window required for production of the structural member of high quality was not able to be ensured. On the other hand, in Test Examples 1 to 4 in which tₘₐₓ/tₘᵢₙ was 3.2 or less, a process window of 5 seconds or more was able to be ensured.

As shown in Table 32, in Test Example 5 in which the largest total sheet thickness t of the overlap part was more than 4.0 mm, the process window was negative, and a process window required for production of the structural member of high quality was not able to be ensured. On the other hand, in Test Examples 1 to 4 in which the largest total sheet thickness t of the overlap part was 4.0 mm or less, a process window of 5 seconds or more was able to be ensured.

In Reference example 1, which is an example of the division pattern 5 as with Test Example 4, the deposition amount of the aluminum-based coating layer does not vary between the starting materials. In Reference example 1, however, the sheet thickness also does not vary between the starting materials, and the problem of the proceeding of alloying of the coating layer of the thinnest starting material does not occur, so that a process window of 5 seconds or more was able to be ensured.

In Test Examples 1 to 4 and Comparative Examples 11 and 13A, the blank was heated at a heating furnace temperature of 920 °C for a time required for the whole of the blank to reach 910 °C, then conveyed to the pressing device in 17 seconds, subjected to hot stamping at a forming rate of 40 mm/s, and kept at the bottom dead center under a pressure of 3000 kN for 20 seconds, thereby producing a hot-stamped structural member. From the thinnest part of these structural members, analysis samples were taken in the method described in the embodiments described above, and variations in martensite fraction were measured. In addition, shape accuracy measurement and shock absorption performance measurement of these structural members were performed. Table 33 shows evaluation results.

**[Table 33]**

| Symbol | Division pattern | Variation in martensite fraction | Shape accuracy | Evaluation of SOL maximum amount of intrusion | Evaluation of side-collision maximum amount of intrusion | Total evaluation |
|---|---|---|---|---|---|---|
| Test Example 1 | 7- Overlap | 10% | ○ | good | good | good |
| Test Example 2 | 7- Butt | 8% | ○ | good | better | better |
| Test Example 3 | 7- Butt | 18% | Δ | marginal | marginal | marginal |
| Test Example 4 | 5- Overlap | 12% | ○ | good | good | good |
| Comparative Example 11 | 7- Butt | 25% | × | poor | poor | poor |
| Comparative Example 13A | 5-Overlap | 46% | × | poor | poor | poor |

In Table 33, as described in the above embodiments, the variation in martensite fraction is a value obtained by subtracting the minimum martensite fraction (%) from the maximum martensite fraction (%) in the cross section of the structural member at the position of the starting material having the smallest sheet thickness tₘᵢₙ.

The shape accuracy was evaluated according to the extent to which the structural member having a generally hat-like shape in cross-sectional view placed on another structural member deviates from the other structural member at a part where the structural member is overlaid on the other structural member. In Table 33, ○ is shown when the distance from the surface of the other structural member is within the range of ±2.0 mm, Δ is shown when the distance is out of the range of ±2.0 mm and within the range of ±3.0 mm, and × is shown when the distance is out of the range of ±3.0 mm.

Concerning the shock absorption performance, assuming the small overlap (SOL) collision and the side collision with the structural member assembled to a vehicle, an impactor simulating a vehicle was made to collide with the structural member, and the maximum amount of intrusion in the SOL collision (SOL maximum amount of intrusion) and the maximum amount of intrusion in the side collision (side-collision maximum amount of intrusion) were evaluated. The shock absorption performance was evaluated by comparison with a reference shock absorption performance, which was the shock absorption performance of a door ring part formed by shaping each of the starting materials by hot stamping and then joining the shaped starting materials. In Table 33, a shock absorption performance equivalent to the reference shock absorption performance is shown as good, a shock absorption performance more excellent than the reference shock absorption performance is shown as better, a shock absorption performance slightly lower than the reference shock absorption performance is shown as marginal, and shock absorption performance even lower than the reference shock absorption performance is shown as poor.

In Comparative Example 11, which is Comparative Example 11 in the first example, the starting materials were butt-joined using laser as in Test Example 2. In Comparative Example 13A, the same set of sheets as in Comparative Example 13 of in the first example was used, and some starting materials were lap-joined to each other as in Test Example 4. In Comparative Examples 11 and 13A, unlike the test examples, the deposition amount of the coating layer of the thinnest starting material is equal to the deposition amount of the coating layer of the other starting materials. As shown in Table 33, in any of Test Examples 1 to 4, the variation in martensite fraction was 20% or less, and the variation in martensite fraction was significantly reduced compared with Comparative Examples 11 and 13A. In Test Examples 1 to 4, the shape accuracy was also better than in Comparative Examples 11 and 13A.

In Test Examples 1 to 4 in which the variation in martensite fraction was small, the shock absorption performance was also improved compared with Comparative Examples 11 and 13A. In particular, in Test Examples 1, 2, and 4 in which the variation in martensite fraction was 15% or less, a shock absorption performance higher than the reference shock absorption performance was able to be ensured. That is, although the annular structural member was produced from a blank formed by integrating multiple starting materials, a shock absorption performance equivalent to or higher than the shock absorption performance of a structural member produced by joining separately press-formed starting materials was able to be ensured. Among Test Examples 1 to 4, the shock absorption performance in Test Example 2 was the best. In Test Example 2, in particular, a high shock absorption performance was exerted in side collision.

### <<Element Technologies B5a and B5b>>

The Element Technology B5a is a structural member, including:
a member main body that is formed of multiple steel sheets joined to each other and has an annular shape in plan view, the multiple steel sheets including a first steel sheet and a second steel sheet having an end part that is overlaid on and joined to an end part of the first steel sheet to form an overlap part with the end part of the first steel sheet; and
a film that is provided on a surface of each of the first steel sheet and the second steel sheet that is located on an outer side of the overlap part and contains 0.001 g/m² or more of one or more oxides selected from among the group consisting of Zr oxide, Zn oxide, and Ti oxide.

The Element Technology B5b is a structural member, including:
a member main body that is formed of multiple steel sheets joined to each other and has an annular shape in plan view, the multiple steel sheets including a first steel sheet and a second steel sheet having an end part that is overlaid on and joined to an end part of the first steel sheet to form an overlap part with the end part of the first steel sheet; and
a film that is provided on a surface of each of the first steel sheet and the second steel sheet that is located on an outer side of the overlap part and contains 0.500 g/m² or less carbon black.

An object of the element technologies B5a and B5b is to provide a blank for hot stamping that can produce a structural member that combines a strength of an overlap part having a largest sheet thickness and a rust resistance function of a part having a smallest sheet thickness.

A blank for hot stamping according to an embodiment includes multiple steel sheets. The multiple steel sheets are disposed to form an annular shape in plan view of the blank and joined to each other. The multiple steel sheets include a first steel sheet and a second steel sheet. The second steel sheet has an end part. The end part of the second steel sheet is overlaid on and joined to an end part of the first steel sheet to form an overlap part with the end part of the first steel sheet. Among the multiple steel sheets, a steel sheet that forms a part having the smallest sheet thickness in the blank is a coated steel sheet that has a base steel sheet and a coating layer provided on the base steel sheet. The overlap part has the largest sheet thickness in the blank. An emissivity of a surface of each of the first steel sheet and the second steel sheet that is located on an outer side of the overlap part is higher than an emissivity of at least one of other surfaces of the multiple steel sheets (a first configuration).

With the blank according to the first configuration, an end part of the first steel sheet and an end part of the second steel sheet form an overlap part having the largest sheet thickness in the blank. The emissivity of each of the first steel sheet and the second steel sheet that is located on the outer side of the overlap part is higher than the emissivity of at least one of the other surfaces of the blank. That is, in the blank, the emissivity of the surfaces on both outer sides of the overlap part is relatively high. In this way, when the blank is heated for hot stamping, the heating rate of the overlap part can be increased, so that the heating time of the overlap part can be reduced. Therefore, heating of the blank required for hot stamping can be ended before alloying of the coating layer of the steel sheet having the smallest sheet thickness, which is more quickly heated than the other steel sheets, excessively proceeds and the diffusion layer becomes thick. As a result, the strength of the overlap part having the largest sheet thickness can be ensured by the hot stamping, and the corrosion resistance (rust resistance) of the steel sheet having the smallest sheet thickness can be ensured.

As described above, with the blank according to the first configuration, a structural member that combines the strength of the overlap part having the largest sheet thickness and the rust resistance function of the part having the smallest sheet thickness can be produced. That is, with the blank, the heating rate of the overlap part having the largest sheet thickness can be increased, and as a result, a process window of the heating condition in the production of the structural member is more likely to be ensured. Furthermore, by increasing the heating rate of the overlap part, the heating time of the blank for hot stamping can be reduced, so that the productivity of the structural member can be improved. Furthermore, since the heating time of the blank is reduced, the energy consumption in the production of the structural member can be reduced, and the emissions of the greenhouse effect gas during heating of the blank for hot stamping can be reduced.

In the first configuration, each of the multiple steel sheets may be a coated steel sheet. The coated steel sheet has a base steel sheet, and a coating layer provided on the base steel sheet (a second configuration).

In the second configuration, each steel sheet included in the blank is a coated steel sheet. In this case, when shaping the blank into a structural member by hot stamping, generation of oxide scales can be reduced. Therefore, after the hot stamping, the structural member does not need to be subjected to any treatment for removing oxide scales, such as shot blasting. Therefore, the productivity of the structural member can be improved.

In the second configuration, the coating layer may be an aluminum-based coating layer (a third configuration).

When each steel sheet is a coated steel sheet having an aluminum-based coating layer as in the third configuration, when the blank is heated for hot stamping, a difference in heating rate is particularly likely to occur between the overlap part having the largest sheet thickness and the steel sheet having the smallest sheet thickness. The aluminum-based coating layer is close to white in color and therefore tends to reflect thermal energy, which inhibits heating of the overlap part. However, even if each steel sheet is a coated steel sheet having an aluminum-based coating layer, if the emissivity of the surfaces on both outer sides of the overlap part is increased, heating of the overlap part can be promoted when the blank is heated for hot stamping, and the heating time of the overlap part can be reduced. As a result, the corrosion resistance of the steel sheet having the smallest sheet thickness can be ensured, and the productivity of the structural member produced from the blank can be improved.

Concerning any of the first to third configurations, the surface of each of the first steel sheet and the second steel sheet that is located on the outer side of the overlap part may be coated with a film. For example, the film has an emissivity of 60% or more at a temperature of 25 °C and a wavelength of 8.0 µm (a fourth configuration).

Concerning any of the first to third configurations, the surface of each of the first steel sheet and the second steel sheet that is located on the outer side of the overlap part may be coated with a film. The film may contain carbon black, one or more oxides selected from among the group consisting of Zr oxide, Zn oxide, and Ti oxide, and 0 to 0.30 g/m² silica. The carbon black and the oxide may be dispersed over the whole of the film. Provided that a content of the carbon black in the film is X_{CB} (g/m²), and a content of the oxide is X_{Oxide} (g/m²), X_{CB} and X_{Oxide} preferably satisfy the following Formula (1) (see International Publication No. WO/2022/215229) (a fifth configuration): $\begin{matrix}118.9 \leq 24280 / \left\{6700/\left(100+76\times {X}_{CB}\right)+18000/\left(130+65\times {X}_{Oxide}\right)\right\} \leq \\ 332.0\end{matrix}$

In any of the first to fifth configurations, the multiple steel sheets may include two or more steel sheets having different sheet thicknesses. In this case, provided that a sheet thickness of the overlap part is tₘₐₓ, and a sheet thickness of the steel sheet that forms a part having the smallest sheet thickness in the blank is tₘᵢₙ, it is preferable that tₘₐₓ/tₘᵢₙ ≤ 3.2 (a sixth configuration).

When the blank includes two or more steel sheets having different sheet thicknesses, the difference in sheet thickness between the overlap part and the steel sheet that forms the part having the smallest sheet thickness in the blank is larger than when all the steel sheets included in the blank have the same sheet thickness. When the difference in sheet thickness is excessively large, when producing the structural member from the blank by hot stamping, heating of the overlap part is delayed compared with the steel sheet that forms the part having the smallest sheet thickness in the blank, and the process window of the heating condition is more likely to be difficult to be ensured. Therefore, in the sixth configuration, the ratio between the sheet thickness tₘₐₓ of the overlap part and the smallest sheet thickness tₘᵢₙ: tₘₐₓ/tₘᵢₙ is set to be 3.2 or less. In this way, even if the blank includes two or more steel sheets having different sheet thicknesses, heating of the overlap part, which is the thickest part, is likely to be ended before alloying of the coating layer of the thinnest steel sheet excessively proceeds, and the process window of the heating condition is more likely to be ensured.

A production method for a structural member according to an embodiment includes a step of preparing the blank according to any one of the first to sixth configurations, a step of heating the multiple steel sheets included in the blank to an austenite transformation completion temperature or higher, and a step of shaping and quenching the heated blank into a structural member having an annular shape in plan view with press tooling (a seventh configuration).

A structural member according to an embodiment includes a member main body and a film. The member main body is formed of multiple steel sheets joined to each other and has an annular shape in plan view. The multiple steel sheets include a first steel sheet and a second steel sheet. The second steel sheet has an end part. The end part of the second steel sheet is overlaid on and joined to an end part of the first steel sheet to form an overlap part with the end part of the first steel sheet. A film is provided on a surface of each of the first steel sheet and the second steel sheet that is located on an outer side of the overlap part. The film contains 0.001 g/m² or more of one or more oxides selected from among the group consisting of Zr oxide, Zn oxide, and Ti oxide (an eighth configuration).

A structural member according to an embodiment includes a member main body and a film. The member main body is formed of multiple steel sheets joined to each other and has an annular shape in plan view. The multiple steel sheets include a first steel sheet and a second steel sheet. The second steel sheet has an end part. The end part of the second steel sheet is overlaid on and joined to an end part of the first steel sheet to form an overlap part with the end part of the first steel sheet. A film is provided on a surface of each of the first steel sheet and the second steel sheet that is located on an outer side of the overlap part. The film contains 0.500 g/m² or less carbon black (a ninth configuration).

In the eighth or ninth configuration, the structural member may be a door ring part of an automobile. In this case, the member main body may include a front pillar, a center pillar, and a rocker that connects the front pillar and the center pillar to each other (a tenth configuration).

In the following, embodiments of the present disclosure will be described with reference to the drawings. In the drawings, the same or corresponding components are denoted by the same reference numerals, and redundant descriptions will be omitted.

### [Structural Member]

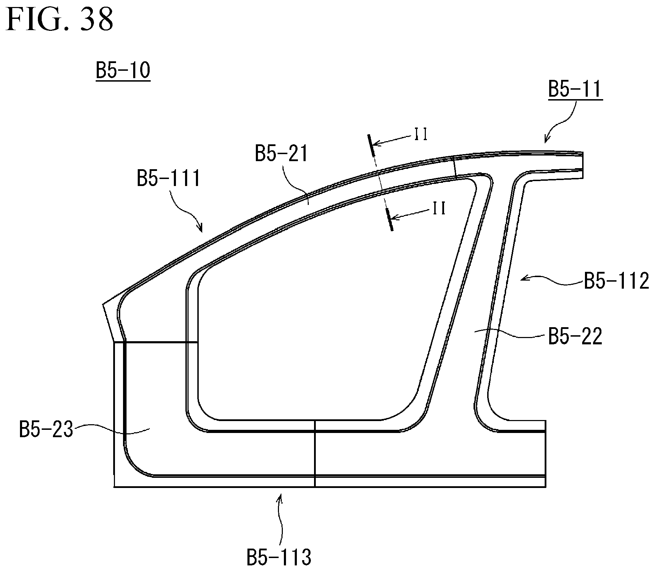

FIG. 38 is a diagram (plan view) showing a structural member B5-10 according to a present embodiment placed on a horizontal surface viewed from above. The structural member B5-10 is used for a body of an automobile, for example. The structural member B5-10 is typically a door ring part of an automobile. This embodiment will be described with reference to an example in which the structural member B5-10 is a door ring part.

The structural member B5-10 is a hot-stamped member. That is, the structural member B5-10 is produced by performing hot stamping (hot press working) on a blank formed of multiple steel sheets. The structural member B5-10 includes a member main body B5-11. The member main body B5-11 has an annular shape in plan view of the structural member B5-10. The member main body B5-11 includes a front pillar B5-111, a center pillar B5-112, and a rocker B5-113. When the structural member B5-10 is assembled to the body of the automobile, the center pillar B5-112 is disposed rearward of the front pillar B5-111. The center pillar B5-112 generally extends in the up-and-down direction of the body. The front pillar B5-111 extends toward the center pillar B5-112. When the structural member B5-10 is assembled to the body of the automobile, the rocker B5-113 is disposed below the front pillar B5-111, and the center pillar B5-112. The rocker B5-113 connects the front pillar B5-111 and the center pillar B5-112 to each other.

In this embodiment, the member main body B5-11 is formed of multiple steel sheets B5-21, B5-22, and B5-23 joined to each other. In the example in FIG. 38, the front pillar B5-111 is mainly formed of the steel sheets B5-21 and B5-23. The center pillar B5-112 is mainly formed of the steel sheet B5-22. The rocker B5-113 is formed of the steel sheets B5-22 and B5-23.

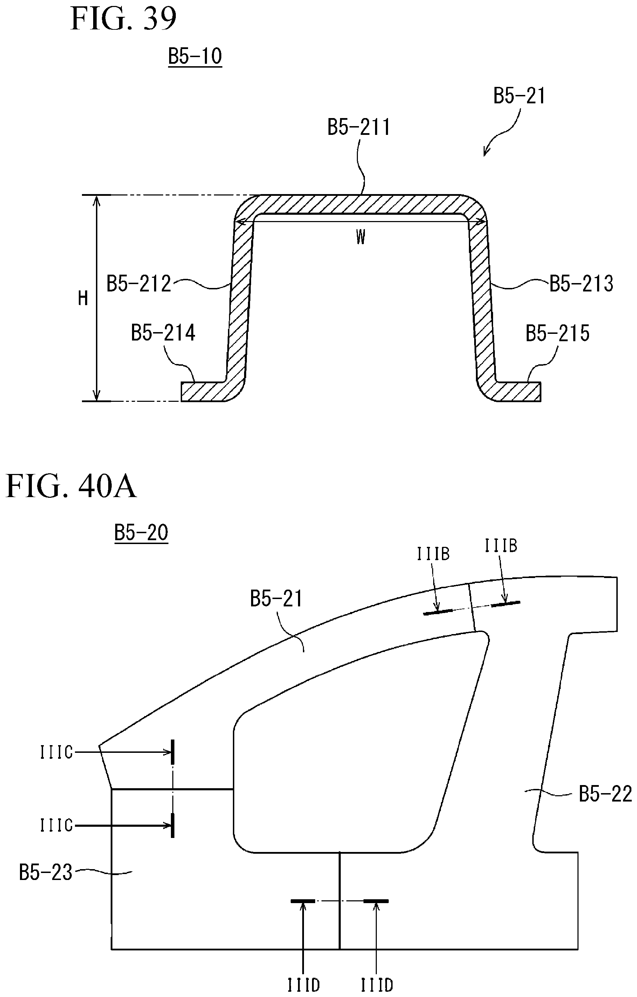

FIG. 39 is a cross-sectional view taken along line II-II in FIG. 38. FIG. 39 shows a cross section of the structural member B5-10 taken at the position of the steel sheet B5-21 along the sheet thickness direction thereof. As shown in FIG. 39, the steel sheet B5-21 has an open cross section. The steel sheet B5-21 has a generally hat-like shape in cross-sectional view of the structural member B5-10, for example. More specifically, the steel sheet B5-21 includes a top plate B5-211, vertical walls B5-212 and B5-213, and flanges B5-214 and B5-215. The vertical wall B5-212 is disposed on the opposite side of the top plate B5-211 to the vertical wall B5-213. In the cross-sectional view of the structural member B5-10, one ends of the vertical walls B5-212 and B5-213 are connected to the top plate B5-211. In the cross-sectional view of the structural member B5-10, the other ends of the vertical walls B5-212 and B5-213 are connected to the flanges B5-214 and B5-215, respectively. The flanges B5-214 and B5-215 project outward from the vertical walls B5-212 and B5-213 of the structural member B5-10, respectively.

In the structural member B5-10, a width W of the steel sheet B5-21, that is, a part located at an upper part of the front pillar B5-111 (FIG. 38), may be 15 mm or more and 300 mm or less. A height H of the steel sheet B5-21, that is, the part located at the upper part of the front pillar B5-111, may be 10 mm or more and 150 mm or less. The width W is the distance from the R-end on the vertical wall B5-212 side of the corner part between the top plate B5-211 and the vertical wall B5-212 to the R-end on the vertical wall B5-213 side of the corner part between the top plate B5-211 and the vertical wall B5-213, in the cross section of the structural member B5-10. The height H is the distance from the top plate B5-211 to the flange B5-214 or B-215 in the sheet thickness direction of the top plate B5-211.

Although not shown, the other steel sheets B5-22 and B5-23 have an open cross section, as with the steel sheet B5-21. The steel sheets B5-22 and B5-23 can also have a generally hat-like shape in cross-sectional view of the structural member B5-10. The width of a part of the steel sheet B5-22 that corresponds to the center pillar B5-112 (FIG. 38) may be 15 mm or more and 300 mm or less. The height of the part of the steel sheet B5-22 that corresponds to the center pillar B5-112 may be 10 mm or more and 150 mm or less. The width of a part of the steel sheet B5-23 that corresponds to a lower part of the front pillar B5-111 (FIG. 38) is 30 mm or more and 750 mm or less, for example. The height of the part of the steel sheet B5-23 that corresponds to the lower part of the front pillar B5-111 may be 25 mm or more and 150 mm or less. The width of a part of the steel sheet B5-23 that corresponds to the rocker B5-113 (FIG. 38) is 30 mm or more and 300 mm or less, for example. The height of the part of the steel sheet B5-23 that corresponds to the rocker B5-113 may be 25 mm or more and 150 mm or less.

The size of the structural member B5-10 having an annular shape in plan view is 1.0 m or more, for example. The size of the structural member B5-10 may be 4.0 m or less, for example. The size of the structural member B5-10 means the length of the line segment connecting two points that are the most distant from each other among any two points on the outer circumference of the structural member B5-10 when the structural member B5-10 placed on a horizontal surface is viewed in the vertical direction.

### [Production Method for Structural Member]

In the following, a production method for the structural member B5-10 will be described with reference to FIGS. 40A to 40G. The production method for the structural member B5-10 according to this embodiment includes a step of preparing a blank B5-20, a step of heating the blank B5-20, and a step of shaping the heated blank B5-20 into the structural member B5-10.

### (Preparation Step)

As shown in FIG. 40A, in the preparation step, a blank B5-20 having the expanded shape of the structural member B5-10 is prepared. The blank B5-20 includes multiple steel sheets B5-21, B5-22, and B5-23. The steel sheets B5-21, B5-22, and B5-23 are disposed to form an annular shape in plan view of the blank B5-20 and joined to each other.

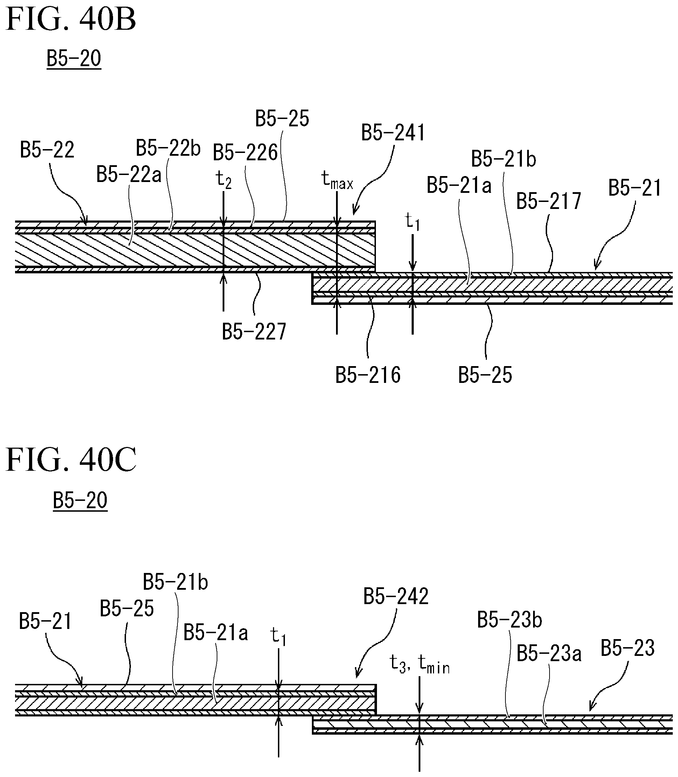

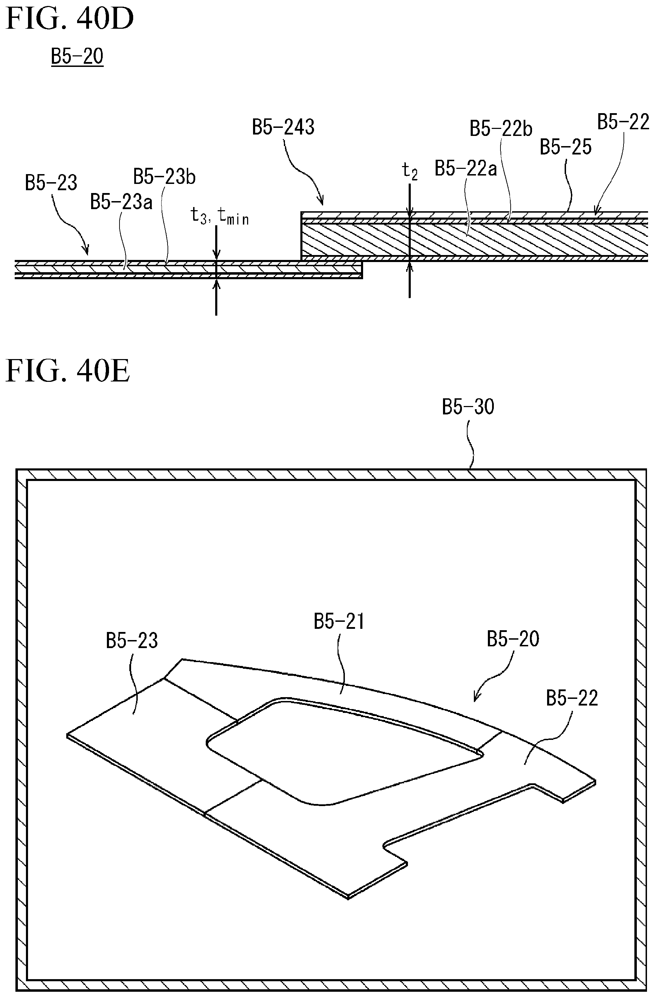

FIGS. 40B, 40C, and 40D are cross-sectional views of the blank B5-20, showing junctures between the steel sheets B5-21, B5-22, and B5-23. FIGS. 40B, 40C, and 40D are cross-sectional views taken along lines IIIB-IIIB, IIIC-IIIC, and IIID-IIID in FIG. 40A, respectively. With reference to FIGS. 40B and 40C, the steel sheet B5-21 is lap-joined to each of the steel sheets B5-22 and B5-23. Specifically, an end part of the steel sheet B5-22 is overlaid on and joined to an end part of the steel sheet B5-21, thereby forming an overlap part B5-241 with the end part of the steel sheet B5-21. Similarly, an end part of the steel sheet B5-23 is overlaid on and joined to an end part of the steel sheet B5-21, thereby forming an overlap part B5-242 with the end part of the steel sheet B5-21. With reference to FIG. 40D, the steel sheet B5-22 is lap-joined not only to the steel sheet B5-21 but also to the steel sheet B5-23. An end part of the steel sheet B5-22 is overlaid on and joined to an end part of the steel sheet B5-23, thereby forming an overlap part B5-243 with the end part of the steel sheet B5-23. The steel sheets B5-21, B5-22, and B5-23 are joined by spot welding or laser welding, for example.

With reference to FIGS. 40B to 40D, the steel sheet B5-21 has a sheet thickness t₁. The steel sheet B5-22 has a sheet thickness t₂. The steel sheet B5-23 has a sheet thickness t₃. In the example of this embodiment, the sheet thickness t₁ of the steel sheet B5-21 and the sheet thickness t₂ of the steel sheet B5-22 are larger than the sheet thickness t₃ of the steel sheet B5-23. Therefore, the overlap part B5-241 between the steel sheets B5-21 and B5-22 has the largest sheet thickness tₘₐₓ in the blank B5-20. The sheet thickness tₘₐₓ of the overlap part B5-241 is larger than the sheet thickness of the overlap part B5-242 between the steel sheets B5-21 and B5-23 and the sheet thickness of the overlap part B5-243 between the steel sheets B5-22 and B5-23.

In the example of this embodiment, among the multiple steel sheets B5-21, B5-22, and B5-23 included in the blank B5-20, the sheet thickness t₃ of the steel sheet B5-23 is the smallest. Therefore, the steel sheet B5-23 forms a part having the smallest sheet thickness tₘᵢₙ in the blank B5-20. That is, the part of the steel sheet B5-23 that is not overlaid on the other steel sheets B5-21 and B5-22 is the part having the smallest sheet thickness tₘᵢₙ in the blank B5-20, and the sheet thickness t₃ of the steel sheet B5-23 is the smallest sheet thickness tₘᵢₙ in the blank B5-20.

When the multiple steel sheets B5-21, B5-22, and B5-23 have different sheet thicknesses t₁, t₂, and t₃ as in this embodiment, the ratio between the largest sheet thickness tₘₐₓ and the smallest sheet thickness tₘᵢₙ: tₘₐₓ/tₘᵢₙ in the blank B5-20 is more than 2.0. In this case, the largest sheet thickness tₘₐₓ and the smallest sheet thickness tₘᵢₙ satisfy a relation that tₘₐₓ/tₘᵢₙ < 4.0, for example. The largest sheet thickness tₘₐₓ and the smallest sheet thickness tₘᵢₙ preferably satisfy a relation that tₘₐₓ/tₘᵢₙ ≤ 3.2. The largest sheet thickness tₘₐₓ and the smallest sheet thickness tₘᵢₙ may satisfy a relation that tₘₐₓ/tₘᵢₙ ≥ 2.5. The largest sheet thickness tₘₐₓ is 4.2 mm or less, for example. The sheet thickness tₘₐₓ may be 1.6 mm or more.

The steel sheets B5-21 and B5-22 form the overlap part B5-241 having the largest sheet thickness tₘₐₓ in the blank B5-20. The emissivity of surfaces B5-216 and B5-226 of the steel sheets B5-21 and B5-22 that are located on the outer sides of the overlap part B5-241 is higher than the emissivity of at least one of the other surfaces of the steel sheets B5-21, B5-22, and B5-23 included in the blank B5-20. That is, the emissivity of the surfaces B5-216 and B5-226 of the steel sheets B5-21 and B5-22 that are located on the outer sides of the overlap part B5-241 is higher than the emissivity of surfaces B5-217 and B5-227 of the steel sheets B5-21 and B5-22 that are located on the inner side of the overlap part B5-241 and/or the emissivity of one surface or both surfaces of the other steel sheet B5-23. The surfaces B5-216 and B5-226 of the steel sheets B5-21 and B5-22 that are located on the outer sides of the overlap part B5-241 are surfaces that form the front and back surfaces of the overlap part B5-241 having the largest sheet thickness tₘₐₓ. In this embodiment, the emissivity of the surfaces B5-216 and B5-226 of the steel sheets B5-21 and B5-22 that are located on the outer sides of the overlap part B5-241 is higher than the emissivity of the surfaces B5-217 and B5-227 that are located on the inner side of the overlap part B5-241. Furthermore, the emissivity of the surfaces B5-216 and B5-226 of the steel sheets B5-21 and B5-22 that are located on the outer sides of the overlap part B5-241 is higher than the emissivity of both surfaces of the steel sheet B5-23 that forms the part having the smallest sheet thickness tₘᵢₙ. For example, the emissivity of the surfaces B5-216 and B5-226 of the steel sheets B5-21 and B5-22 at a temperature of 25 °C and a wavelength of 8.0 µm is 60% or more. The emissivity of the surfaces B5-216 and B5-226 of the steel sheets B5-21 and B5-22 at a temperature of 25 °C and a wavelength of 8.0 µm is more preferably 70% or more, and even more preferably 80% or more. Among the steel sheets B5-21, B5-22, and B5-23 included in the blank B5-20, the emissivity of at least one surface other than the surfaces B5-216 and B5-226 at a temperature of 25 °C and a wavelength of 8.0 µm may be less than 60%. The difference in emissivity at a temperature of 25 °C and a wavelength of 8.0 µm between the surfaces B5-216 and B5-226 on the outer sides of the overlap part B5-241 and at least one surface other than the surfaces B5-216 and B5-226 is preferably more than 5%, more preferably more than 10%, and even more preferably more than 20%. The emissivity can be measured according to JIS R 1801 (2002). In this case, a specimen taken from the steel sheet to be measured is set in a Fourier transform infrared spectrophotometer, and the radiation intensity is measured at a temperature of 25 °C and a wavelength of 8.0 µm to calculate the emissivity. Alternatively, a radiation thermometer may be used, the measurement wavelength thereof may be set at 8.0 µm, the radiation intensity of an involved region may be measured at 25 °C, and the emissivity may be calculated from the ratio of the radiation intensity to the radiation intensity of a blackbody.

In this embodiment, the whole of the surface B5-216 of the steel sheet B5-21 opposite to the steel sheet B5-22 is coated with a film B5-25. Furthermore, the whole of the surface B5-226 of the steel sheet B5-22 opposite to the steel sheet B5-21 is coated with a film B5-25. On the other hand, the steel sheet B5-23 is provided with no film B5-25. Therefore, the emissivity of both outer surfaces of the overlap part B5-241 is higher than the emissivity of the surface of the steel sheet B5-23.

The film B5-25 is a film that is black in color, for example. The film B5-25 may be a surface-treated carbon-based film (a film containing carbon (C)). For example, when the lightness L* value of the surface of the film B5-25 (CIE 1976 lightness index L* defined in JIS Z8781-4(2013)) is 60 or less, the film B5-25 can be determined to be black in color. The emissivity of the film B5-25 at a temperature of 25 °C and a wavelength of 8.0 µm is 60% or more, preferably 70% or more, and more preferably 80% or more. That is, the emissivity of the surfaces B5-216 and B5-226 of the steel sheets B5-21 and B5-22 provided with the film B5-25 at a temperature of 25 °C and a wavelength of 8.0 µm is 60% or more, preferably 70% or more, and more preferably 80% or more. The film B5-25 may have an emissivity of 60% or more at a temperature of 700 °C and a wavelength of 8.0 µm. As the film B5-25, a surface-treated film described in Patent Literature 1 may be used, for example. Specifically, the film B5-25 may contain carbon black, and one or more oxides selected from among the group consisting of Zr oxide, Zn oxide, and Ti oxide. The film B5-25 may or may not contain silica. In other words, the content of silica in the film B5-25 is 0 g/m² or more. The content of silica in the film B5-25 may be 0.30 g/m² or less. The content of silica is more preferably 0.10 g/m² or less, and more preferably 0.05 g/m² or less.

The carbon black and the oxide may be dispersed over the whole of a surface of the film B5-25 that is perpendicular to the sheet thickness direction of the steel sheet B5-21. Provided that the content of carbon black is X_{CB} (g/m²), and the content of the one or more oxides (metal oxides) selected from among the group consisting of Zr oxide, Zn oxide, and Ti oxide is X_{Oxide} (g/m²), X_{CB} and X_{Oxide} preferably satisfy the following Formula (1). $\begin{matrix}118.9 \leq 24280 / \left\{6700/\left(100+76\times {X}_{CB}\right)+18000/\left(130+65\times {X}_{Oxide}\right)\right\} \leq \\ 332.0\end{matrix}$

In Formula (1), the value calculated by the middle term: 24280/ {6700/ (100 + 76 × X_{CB}) + 18000/ (130 + 65 × X_{Oxide})} is preferably 119.0 or more, more preferably 170.0 or more, and even more preferably 220.0 or more. The value calculated by the middle term is preferably 330.0 or less, more preferably 310.0 or less, and even more preferably 300.0 or less.

The dispersion state of the carbon black and the metal oxide in the film B5-25 can be checked by surface analysis of the film B5-25 in terms of an element (such as C) deriving from carbon black or an element (such as Zr, Zn, or Ti) deriving from the oxide with an electron probe micro analyzer (EPMA). The content X_{CB} of carbon black can be measured by cross-sectional analysis of the film B5-25 with a transmission electron microscope (TEM). Specifically, cross-sectional analysis of a region of the film B5-25 having a predetermined size (film thickness of the film B5-25 × 5 µm) is performed by TEM-EDS analysis, and the film thickness of the film B5-25 and the area fraction of particles having a carbon content of 70 mass% or more in the region are measured. Provided that the density of carbon black is ρ (ton/m³), the film thickness is d (µm), and the area fraction is a (%), the value of ρ × d × a is the content X_{CB} (g/m²) of carbon black. The content X_{Oxide} of the oxide can be determined by performing element analysis of the surface of the film B5-25 using an X-ray fluorescence spectrometer (ZSX Primus available from RIGAKU Holdings Corporation) and quantifying the metal Zr, Zn, and Ti.

The content X_{CB} of carbon black in the film B5-25 is preferably 0.030 g/m*²* or more, and more preferably 0.100 g/m² or more. Although the content X_{CB} can be set in any range that satisfies Formula (1), the content X_{CB} is preferably 0.800 g/m² or less, and more preferably 0.600 g/m² or less.

The film B5-25 may contain 5.0 or more carbon black in vol%, and preferably contains 8.0 or more carbon black in vol%. Furthermore, the film B5-25 may contain 40.0 or less carbon black in vol%, and preferably contains 30.0 or less carbon black in vol%.

The content X_{Oxide} of the metal oxide in the film B5-25 is preferably 0.030 g/m² or more, and more preferably 0.060 g/m² or more. Although the content X_{Oxide} can be set in any range that satisfies Formula (1), the content X_{Oxide} is preferably 0.500 g/m² or less, and more preferably 0.300 g/m² or less.

The film B5-25 may contain 1.0 or more metal oxide in vol%. Furthermore, the film B5-25 may contain 30.0 or less metal oxide in vol%, and preferably contains 25.0 or less metal oxide in vol%.

The ratio between the content X_{CB} (g/m²) of carbon black and the content X_{Oxide} (g/m²) of metal oxide: X_{Oxide}/X_{CB} is preferably 0.20 or more and 200.00 or less. X_{Oxide}/X_{CB} is more preferably 0.40 or more and 10.00 or less, and more preferably 0.60 or more and 5.00 or less.

The film B5-25 may contain various kinds of binder components or addition agents, in addition to the carbon black and the metal oxides described above.

The binder component is preferably a water-dispersible or water-soluble resin. The content of the binder component is preferably 40 vol% or more of the overall volume of the film B5-25. As the binder component selected from among water-dispersible or water-soluble resins, various kinds of well-known resins that exhibit water dispersibility or water solubility can be used. Such resins that exhibit water dispersibility or water solubility include polyurethane resin, polyester resin, acrylic resin, epoxy resin, fluororesin, polyamide resin, polyolefin resin, and polymer compounds obtained by hydrolysis and condensation polymerization of silane coupling agents, for example. The binder component is more preferably one or more, or two or more selected from among the group consisting of polyester resin, polyurethane resin, polyolefin resin, acrylic resin, epoxy resin, fluororesin, and polyamide resin. When polyurethane resin is used as the binder component, the polyurethane resin is preferably polyether-based polyurethane resin.

The addition agent is a leveling agent, a water-soluble solvent, a metal stabilizer, or an etching inhibitor, for example. The leveling agent is a nonionic or cationic surface-active agent, for example. The nonionic or cationic surface-active agent may be a polyethylene oxide or polypropylene oxide adduct, or an acetylene glycol compound, for example. The water-soluble solvent may be an alcohol such as ethanol, isopropyl alcohol, t-butyl alcohol, or propylene glycol, a cellosolve such as ethylene glycol monobutyl ether or ethylene glycol monoethyl ether, an ester such as ethyl acetate or butyl acetate, or a ketone such as acetone, methyl ethyl ketone, or methyl isobutyl ketone, for example. The metal stabilizer may be a chelate compound such as ethylenediaminetetraacetic acid (EDTA) or diethylenetriaminepentaacetic acid (DTPA), for example. The etching inhibitor may be an amine compound such as ethylenediamine, triethylenepentamine, guanidine, or pyrimidine, for example.

The film B5-25 can be formed by applying an organic or inorganic processing liquid containing carbon black and a metal oxide to the whole of the surfaces B5-216 and B5-226 of the steel sheets B5-21 and B5-22 and then drying the volatile constituents in the processing liquid. The processing liquid can be applied to the surfaces B5-216 and B5-226 of the steel sheets B5-21 and B5-22 with a roll coater, a curtain coater, or an ink jet, for example. **In** the case of the ink jet, the film thickness of the film B5-25 can be continuously varied. The film thickness of the film B5-25 is 0.5 µm or more and 5.0 µm or less, for example. The film thickness of the film B5-25 is preferably 1.0 µm or more and 3.0 µm or less. The film thickness of the film B5-25 is small enough to be negligible compared with the sheet thicknesses t₁ and t₂ of the steel sheets B5-21 and B5-22. Therefore, the measured sheet thickness of the steel sheets B5-21 and B5-22 including the film B5-25 can be treated as the sheet thicknesses t₁ and t₂, respectively.

The steel sheet B5-23 having the smallest sheet thickness tₘᵢₙ in the blank B5-20 is a coated steel sheet. In this case, the steel sheet B5-23 includes a base steel sheet B5-23a and a coating layer B5-23b. The type of the base steel sheet B5-23a is not particularly limited. The coating layer B5-23b is provided on the base steel sheet B5-23a. The coating layer B5-23b covers the whole or substantially the whole of both surfaces of the base steel sheet B5-23a. The coating layer B5-23b is a metal coating layer. The coating layer B5-23b may be a molten aluminum coating or may be a molten zinc coating, a galvannealed coating, or an electrogalvanized plating, for example. As the steel sheet B5-23, a well-known aluminum-coated steel sheet or zinc-coated steel sheet can be used, for example. The sheet thickness tₘᵢₙ of the steel sheet B5-23 is the total sheet thickness of the base steel sheet B5-23a and the coating layer B5-23b.

As with the steel sheet B5-23, the steel sheets B5-21 and B5-22 may be a well-known coated steel sheet. Specifically, the steel sheet B5-21 may include a base steel sheet B5-21a and a coating layer B5-21b provided on the base steel sheet B5-21a. The steel sheet B5-22 may include a base steel sheet B5-22a and a coating layer B5-22b provided on the base steel sheet B5-22a. The type of the base steel sheets B5-21a and B5-22a is not particularly limited. The coating layers B5-21b and B5-22b cover the whole or substantially the whole of both surfaces of the base steel sheets B5-21a and B5-22a, respectively. The coating layers B5-21b and B5-22b are metal coating layers. As the coating layers B5-21b and B5-22b, the same coating layers as those illustrated for the steel sheet B5-23 can be used. Specifically, as with the steel sheet B5-23, the steel sheets B5-21 and B5-22 may be an aluminum-coated steel sheet or a zinc-coated steel sheet. When the steel sheet B5-21 is a coated steel sheet, the sheet thickness t₁ of the steel sheet B5-21 is the total sheet thickness of the base steel sheet B5-21a and the coating layer B5-21b. Similarly, when the steel sheet B5-22 is a coated steel sheet, the sheet thickness t₂ of the steel sheet B5-22 is the total sheet thickness of the base steel sheet B5-22a and the coating layer B5-22b.

The coating layers B5-21b, B5-22b, and B5-23b are typically a coating layer primarily containing aluminum (aluminum-based coating layer). The configuration of the aluminum-based coating layer is not particularly limited. As the coating layers B5-21b, B5-22b, and B5-23b, a well-known aluminum-based coating layer can be used.

Each of the steel sheets B5-21, B5-22, and B5-23 may be the same type of coated steel sheet as the other steel sheets or may be a different type of coated steel sheet than the other steel sheets. The steel sheets B5-21 and B5-22 may be steel sheets without the coating layers B5-21b and B5-22b on the surfaces thereof (bare materials). When two or more of the steel sheets B5-21, B5-22, and B5-23 are coated steel sheets, the base weight of the coating of each steel sheet may be the same as that of the other steel sheets or may be different from that of the other steel sheets.

### (Heating Step)

The prepared blank B5-20 is shaped into the structural member B5-10 (FIGS. 38 and 39) through hot stamping (hot press working). For the hot stamping, the blank B5-20 is subjected to the heating step. With reference to FIG. 40E, in the heating step, the blank B5-20 is heated in a heating furnace B5-30, for example. The multiple steel sheets B5-21, B5-22, and B5-23 included in the blank B5-20 are heated to an austenite transformation completion temperature (A_{c3} point) or higher. The steel sheets B5-21, B5-22, and B5-23 are heated to 900 °C or more, for example. In this way, the whole or substantially the whole of the microstructure of the steel sheets B5-21, B5-22, and B5-23 is transformed into the austenite phase.

### (Shaping Step)

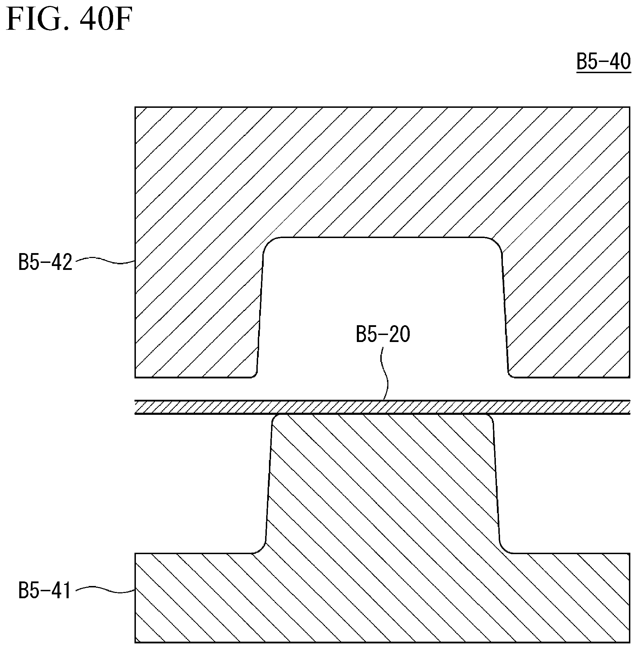

With reference to FIG. 40F, in the shaping step, using press tooling B5-40, the heated blank B5-20 is shaped into the structural member B5-10 having an annular shape in plan view (FIGS. 38 and 39) and quenched. The blank B5-20 heated in the heating step is removed from the heating furnace B5-30 (FIG. 40E) and conveyed to the press tooling B5-40. The press tooling B5-40 is attached to a well-known pressing device. The press tooling B5-40 includes a punch B5-41 and a die B5-42, for example. The blank B5-20 is placed between the punch B5-41 and the die B5-42.

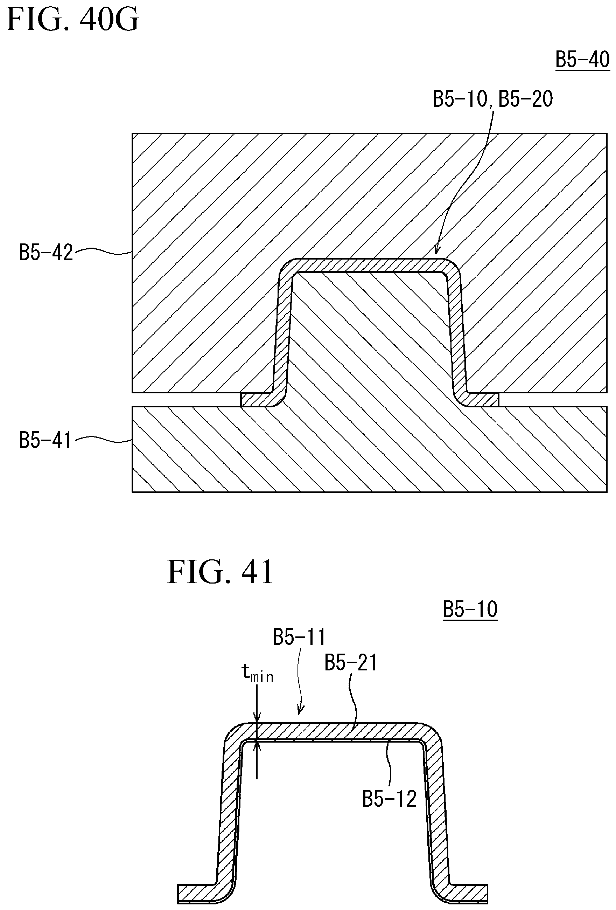

With reference to FIG. 40G, after the blank B5-20 is placed between the punch B5-41 and the die B5-42, the die B5-42 comes relatively closer to the punch B5-41. The blank B5-20 is sandwiched (pressed) between the punch B5-41 and the die B5-42 and formed into a shape conforming to the shaping surfaces of the punch B5-41 and the die B5-42. The blank B5-20 is kept sandwiched between the punch B5-41 and the die B5-42. The blank B5-20 is made to dissipate heat (rapid cooling) in the press tooling B5-40, and thereby the microstructure thereof is transformed into martensite. In this way, the structural member B5-10 can be produced from the blank B5-20.

FIG. 41 is a cross-sectional view of the structural member B5-10 after hot stamping. FIG. 41 shows a cross section of the structural member B5-10 at the position of the steel sheet B5-21 (FIGS. 40B and 40C) that is provided with the film B5-25 that is black in color at the stage of the blank B5-20. The structural member B5-10 includes the member main body B5-11 and a film B5-12. The film B5-12 is provided on the steel sheet B5-21. The film B5-25 (FIGS. 40B and 40C) that is black in color provided to the steel sheet B5-21 of the blank B5-20 is changed into the film B5-12 through hot stamping. Although not shown, the film B5-25 (FIGS. 40B and 40D) that is black in color and provided to the steel sheet B5-22 of the blank B5-20 is changed into the film B5-12 through hot stamping. The film B5-12 is provided on the surfaces B5-216 and B5-226 (FIG. 40B) of the steel sheets B5-21 and B5-22 that are located on the outer sides of the overlap part B5-241. When the film B5-25 before hot stamping contains carbon black, the carbon black substantially disappears while heated at high temperature for hot stamping, although some of the carbon black may remain on the member main body B5-11. When the film B5-25 before hot stamping satisfies Formula (1) described above, the film B5-12 after hot stamping may not contain carbon black or may contain 0.500 g/m² or less carbon black. When the film B5-12 after hot stamping contains carbon black, the content of carbon black in the film B5-12 is more than 0 g/m². Furthermore, when the film 26 before hot stamping satisfies Formula (1) described above, the value calculated by the middle term: 24280/ {6700/ (100 + 76 × X_{CB}) + 18000/ (130 + 65 × X_{Oxide}) } for the film B5-12 after hot stamping is 120.0 or more and 150.0 or less.

When the film B5-25 (FIGS. 40B and 40C) before hot stamping satisfies Formula (1) described above, the film B5-12 after hot stamping contains more than 0 g/m², for example, or more preferably 0.001 g/m² or more, of one or more oxides (metal oxides) selected from among the group consisting of Zr oxide, Zn oxide, and Ti oxide. The content of the metal oxide in the film B5-12 is 0.500 g/m² or less, for example. When the metal oxide remains in the structural member B5-10 in this way, that is, when the film B5-12 contains more than 0 g/m² of metal oxide, the corrosion resistance of the structural member B5-10 is advantageously improved. When the film B5-25 before hot stamping satisfies Formula (1) described above, the film B5-12 after hot stamping contains 0 to 0.30 g/m² silica.

The contents of carbon black, metal oxide, and silica in the film B5-12 can be measured in the same manner as the film B5-25 at the stage of the blank B5-20. Specifically, an automobile body part is disassembled to obtain the annular structural member B5-10, and an analysis specimen is obtained from the structural member B5-10 by laser cutting, for example. For example, an analysis specimen is obtained from each of the multiple steel sheets included in the structural member B5-10. The analysis specimen is taken from a center part or a vicinity thereof of the top plate of each of the steel sheets having an open cross section. The analysis specimen obtained is adjusted by polishing the cut surface to a region outside of the region affected by the heat of laser cutting, for example, thereby preparing a film analysis specimen. Using this specimen, surface analysis of the film B5-12 can be performed by EPMA in terms of an element (such as C) deriving from carbon black or an element (such as Zr, Zn, or Ti) deriving from the oxide, thereby checking the dispersion state of the carbon black or metal oxide in the film B5-12. Depending on the part of the structural member B5-10, the film B5-12 exists on the front side and/or the back side of the structural member B5-10, so that the front side and the back side of the analysis specimen are analyzed.

For example, an electrodeposited film or the like often exists in the outermost layer of the structural member B5-10. In such a case, a film layer that exists under the electrodeposited film layer and above the alloyed metal coating layer is analyzed. The content X_{CB} of carbon black in the film B5-12 can be measured by cross-sectional analysis of the film B5-25 using TEM. Specifically, cross-sectional analysis of a region of the film B5-12 having a predetermined size (film thickness of the film B5-12 × 5 µm) is performed by TEM-EDS analysis, and the film thickness of the film B5-12 and the area fraction of particles having a carbon content of 70 mass% or more in the region are measured. Provided that the density of carbon black is ρ (ton/m³), the film thickness is d (µm), and the area fraction is a (%), the value of ρ × d × a is the content X_{CB} (g/m²) of carbon black. The content X_{Oxide} of the oxide can be determined by performing element analysis of the film layer that exists under the electrodeposited film layer and above the alloyed metal coating layer using the X-ray fluorescence spectrometer described above and quantifying the metal Zr, Zn, and Ti.

After the shaping step (hot stamping), the steel sheet B5-21 can have a tensile strength of 0.5 GPa or more, for example, and preferably has a tensile strength of 1.0 GPa or more. Similarly, after the shaping step (hot stamping), the steel sheets B5-22 and B5-23 (FIG. 1) can have a tensile strength of 0.5 GPa or more, for example, and preferably has a tensile strength of 1.0 GPa or more. At least one of the steel sheets B5-21, B5-22, and B5-23 may have a tensile strength of 1.5 GPa or more after the shaping step. The tensile strength of each of the steel sheets B5-21, B5-22, and B5-23 may be the same as or different from the tensile strengths of the other steel sheets.

### [Effects]

When the blank B5-20 is heated for hot stamping, in the steel sheet B5-23 having the smallest sheet thickness tₘᵢₙ, iron is diffused from the base steel sheet B5-23a into the coating layer B5-23b to form a diffusion layer. The diffusion layer increases in thickness as the heating time of the blank B5-20 increases, and the corrosion resistance or weldability of the steel sheet B5-23 owing to the coating layer B5-23b may deteriorate. In order to ensure the corrosion resistance and the weldability of the steel sheet B5-23, the thickness of the diffusion layer is preferably kept to a predetermined value or less. For example, when the steel sheet B5-23 is a heavy-coating steel sheet having a base weight of the coating layer B5-23b: approximately 50 to 80 g/m², the thickness of the diffusion layer is preferably 15 µm or less. Furthermore, when the steel sheet B5-23 is a light-coating steel sheet having a base weight of the coating layer B5-23b: approximately 40 to 50 g/m², for example, the thickness of the diffusion layer is preferably 10 µm or less. In view of this, with the blank B5-20 according to this embodiment, the emissivity of the surfaces B5-216 and B5-226 of the steel sheets B5-21 and B5-22 that are located on the outer sides of the overlap part B5-241 having the largest sheet thickness tₘₐₓ is higher than the emissivity of at least one of the other surfaces of the steel sheets B5-21, B5-22, and B5-23. That is, the surfaces B5-216 and B5-217 of steel sheets B5-21 and B5-22 on both outer sides of the overlap part B5-241 are subjected to a treatment for increasing the emissivity. In this way, when the blank B5-20 is heated for hot stamping, the heating rate of the overlap part B5-241 can be increased, and the heating time of the overlap part B5-241 can be reduced. Therefore, heating of the blank B5-20 can be ended before alloying of the coating layer B5-23b of the thinnest steel sheet B5-23, which is more quickly heated than the other steel sheets, excessively proceeds and the diffusion layer grows over the predetermined thickness. As a result, the strength of the overlap part B5-241 having the largest sheet thickness tₘₐₓ can be ensured in the hot stamping, and the corrosion resistance (rust resistance) of the steel sheet B5-23 having the smallest sheet thickness tₘᵢₙ can be ensured. In addition, by keeping the thickness of the diffusion layer small, the weldability of the steel sheet B5-23 is likely to be ensured.

With the blank B5-20 according to this embodiment, as described above, the heating rate of the overlap part B5-241 having the largest sheet thickness tₘₐₓ can be increased. Therefore, the whole of the blank B5-20 can be heated to a temperature required for hot stamping before the alloying of the coating layer B5-23b of the thinnest steel sheet B5-23 excessively proceeds, and a process window of the heating condition in the production of the structural member B5-10 can be ensured. Therefore, the structural member B5-10 that combines the strength of the overlap part B5-241 having the largest sheet thickness tₘₐₓ and the rust resistance function at the position of the steel sheet B5-23 having the smallest sheet thickness tₘᵢₙ can be produced. In addition, by increasing the heating rate of the overlap part B5-241, the heating time of the blank B5-20 can be reduced, and therefore, the productivity of the structural member B5-10 can be improved. In addition, since the heating time of the blank B5-20 is reduced, the energy consumption in the production of the structural member B5-10 can be reduced, and the emissions of the greenhouse effect gas during heating can be reduced.

In this embodiment, all of the steel sheets B5-21, B5-22, and B5-23 included in the blank B5-20 may be coated steel sheets. In that case, when shaping the blank B5-20 into the structural member B5-10 by hot stamping, generation of oxide scales can be reduced. Therefore, after the hot stamping, the structural member B5-10 does not need to be subjected to any treatment for removing oxide scales, such as shot blasting. Therefore, the productivity of the structural member B5-10 can be improved.

When the coating layers B5-21b, B5-22b, and B5-23b of the steel sheets B5-21, B5-22, and B5-23 are aluminum-based coating layers, for example, a difference in heating rate is likely to occur between the overlap part B5-241 having the largest sheet thickness tₘₐₓ and the steel sheet B5-23 having the smallest sheet thickness tₘᵢₙ in the heating step. The aluminum-based coating layer is white in color and therefore tends to reflect thermal energy, which inhibits heating of the overlap part B5-241. However, with the blank B5-20 according to this embodiment, the surfaces B5-216 and B5-226 of the steel sheets B5-21 and B5-22 located on both outer sides of the overlap part B5-241 are subjected to a treatment for increasing the emissivity. Therefore, even if the steel sheets B5-21 and B5-22 forming the overlap part B5-241 are coated steel sheets having an aluminum-based coating layer, heating of the overlap part B5-241 in the heating step is promoted, and the heating time of the overlap part B5-241 can be reduced. Therefore, the corrosion resistance and the weldability of the thin steel sheet B5-23 can be ensured, and the productivity of the structural member B5-10 can be improved.

In this embodiment, in the heating step, the steel sheet B5-23 having the smallest sheet thickness tₘᵢₙ in the blank B5-20 first reaches a temperature in the austenite zone, and then the other parts reach the temperature in the austenite zone in ascending order of the sheet thickness. The overlap part B5-241 having the largest sheet thickness tₘₐₓ is the last part that reaches the temperature in the austenite zone. When the steel sheets B5-21, B5-22, and B5-23 included in the blank B5-20 have different sheet thicknesses as in this embodiment, if the smallest sheet thickness tₘᵢₙ and the largest sheet thickness tₘₐₓ are excessively different, the heating of the overlap part B5-241 having the sheet thickness tₘₐₓ is substantially delayed compared with the steel sheet B5-23 having the sheet thickness tₘᵢₙ, and the process window of the heating condition may be unable to be ensured. In view of this, the ratio of the largest sheet thickness tₘₐₓ to the smallest sheet thickness tₘᵢₙ: tₘₐₓ/tₘᵢₙ is preferably 3.2 or less. In this way, even if the steel sheets B5-21, B5-22, and B5-23 have different sheet thicknesses, the overlap part B5-241 can be heated enough for the phase transformation to austenite to complete, before alloying of the coating layer B5-23b of the thinnest steel sheet B5-23 proceeds, the diffusion layer becomes thick, and the corrosion resistance is lost. Therefore, a process window is likely to be ensured in production of the structural member B5-10.

In this embodiment, in order to increase the emissivity of the overlap part B5-241, among both surfaces of each of the steel sheets B5-21 and B5-22, the surface B5-216 of the steel sheet B5-21 opposite to the steel sheet B5-22 and the surface B5-226 of the steel sheet B5-22 opposite to the steel sheet B5-21 can be provided with the film B5-25. The emissivity of the film B5-25 (at a temperature of 25 °C and a wavelength of 8.0 µm) is 60% or more, for example. In this way, the overlap part B5-241 can be efficiently radiantly heated, and the heating rate of the overlap part B5-241 in the heating step is likely to be raised.

In this embodiment, the film B5-25 can contain carbon black, one or more oxides selected from among the group consisting of Zr oxide, Zn oxide, and Ti oxide, and 0 to 0.30 g/m² or less silica. The content X_{CB} (g/m²) of carbon black and the content X_{Oxide} (g/m²) of the oxide preferably satisfy Formula (1) described above. Formula (1) is a formula that defines a relationship between the increasing rate (%) of the heating rate ( °C/s), and the content X_{CB} of carbon black and the content X_{Oxide} of the oxide. Formula (1) shows that carbon black primarily serves as a heat absorbing material in the range up to 700 °C, and the oxide primarily serves as a heat absorbing material in the range of 700 °C or more. When the film B5-25 satisfies Formula (1), the emissivity of the surfaces B5-216 and B5-226 on both outer sides of the overlap part B5-241 provided with the film B5-25 at a temperature of 25 °C and a wavelength of 8.0 µm is likely to be 60% or more.

The carbon black and the oxide can be dispersed over the whole of a surface of the film B5-25 that is perpendicular to the sheet thickness direction of the steel sheet B5-21. Therefore, the emissivity of the surfaces B5-216 and B5-226 of the steel sheets B5-21 and B5-22 on both outer sides of the overlap part B5-241 is more likely to be uniform. Therefore, in the heating step, the overlap part B5-241, which is the thickest part, can be quickly and uniformly heated.

However, the configuration of the film B5-25 is not limited to this. The film B5-25 can be any film that is substantially black in color in order to increase the emissivity of the surfaces B5-216 and B5-226 on both outer sides of the overlap part B5-241 compared with the case where the surfaces B5-216 and B5-226 are not subjected to any treatment. For example, the film B5-25 may contain graphite, soot, or the like, instead of or in addition to carbon black. Alternatively, in order to increase the emissivity of the surfaces B5-216 and B5-226 on both outer sides of the overlap part B5-241, the film B5-25 may contain an acicular compound having a hexagonal crystal structure having an aspect ratio of 4 or more and 50 or less, for example. Although the compound having a hexagonal crystal structure is typically graphite (C), the compound may be lanthanum silicate, magnesium diboride, beryllium oxide (beryllia), zinc oxide, β-quartz, millerite (NiS), wurtzite (ZnS), or the like.

Although embodiments of the present disclosure have been described above, the present disclosure is not limited to the embodiments described above, and various modifications can be made without departing from the spirit of the present disclosure.

In the embodiment described above, the emissivity of both surfaces of the steel sheet B5-23 having the smallest sheet thickness tₘᵢₙ is lower than the emissivity of the surfaces B5-216 and B5-226 of the steel sheets B5-21 and B5-22 that are located on the outer sides of the overlap part B5-241. That is, the steel sheet B5-23 is not provided with the film B5-25, unlike the overlap part B5-241. However, the emissivity of at least one surface of the steel sheet B5-23 having the smallest sheet thickness tₘᵢₙ may be substantially equal to the emissivity of the surfaces B5-216 and B5-226 on both outer sides of the overlap part B5-241. For example, one surface or both surfaces of the steel sheet B5-23 may be coated with a film B5-25 similar to the film on the overlap part B5-241. However, from the viewpoint of ensuring a process window, at least one surface of the steel sheet B5-23 is preferably not provided with the film B5-25 that is black in color. In other words, the emissivity of the surfaces B5-216 and B5-226 of the steel sheets B5-21 and B5-22 that are located on the outer sides of the overlap part B5-241 is preferably higher than the emissivity of at least one surface of the steel sheet B5-23 having the smallest sheet thickness tₘᵢₙ.

In the embodiment described above, the emissivity of the surfaces B5-217 and B5-227 of the steel sheets B5-21 and B5-22 that are located on the inner side of the overlap part B5-241 is lower than the emissivity of the surfaces B5-216 and B5-226 that are located on the outer sides of the overlap part B5-241. That is, the surfaces B5-217 and B5-227 of the steel sheets B5-21 and B5-22 that are located on the inner side of the overlap part B5-241 are not provided with the film B5-25. However, the surface B5-217 of the steel sheet B5-21 that is located on the inner side of the overlap part B5-241 may be coated with the film B5-25. Similarly, the surface B5-227 of the steel sheet B5-22 that is located on the inner side of the overlap part B5-241 may be coated with the film B5-25. However, from the viewpoint of uniformly heating the blank B5-20 for hot stamping, it is preferable that the surfaces B5-216 and B5-226 of the steel sheets B5-21 and B5-22 that are located on the outer sides of the overlap part B5-241 are coated with the film B5-25 that is substantially black in color, while the surfaces B5-217 and B5-227 that are located on the inner side of the overlap part B5-241 is not preferably coated with the film B5-25. When both surfaces B5-216 and B5-217 of the steel sheet B5-21 are coated with the film B5-25, heating of the part of the steel sheet B5-21 that is not overlaid on the steel sheet B5-22 may excessively proceed, the diffusion layer may become thick, and it may be difficult to ensure the corrosion resistance and the weldability of the steel sheet B5-21. Similarly, when both surfaces B5-226 and B5-227 of the steel sheet B5-22 are coated with the film B5-25, heating of the part of the steel sheet B5-22 that is not overlaid on the steel sheet B5-21 may excessively proceed, the diffusion layer may become thick, and the corrosion resistance and the weldability of the steel sheet B5-22 may deteriorate. Therefore, in order to more easily ensure high corrosion resistance and weldability, it is preferable that the surfaces B5-217 and B5-227 of the steel sheets B5-21 and B5-22 that are located on the inner side of the overlap part B5-241 are not provided with the film B5-25, while the surfaces B5-216 and B5-226 located on the outer sides of the overlap part B5-241 are provided with the film B5-25.

In the embodiment described above, due to the presence of the film B5-25 that is substantially black in color, the emissivity of the surfaces B5-216 and B5-226 on both outer sides of the overlap part B5-241 having the largest sheet thickness tₘₐₓ is higher than the emissivity of one or more of the other surfaces of the steel sheets B5-21, B5-22, and B5-23. However, the means for increasing the emissivity of a selected part of the blank B5-20 is not limited to the film B5-25. For example, the emissivity of a selected part may be increased to be higher than the emissivity of the other parts by increasing the surface roughness of the selected part to be higher than the surface roughness of the other parts.

In the embodiment described above, each of the steel sheets B5-21, B5-22, and B5-23 included in the blank B5-20 may be single-layer or multilayer. That is, each of the steel sheets B5-21, B5-22, and B5-23 may be a single steel sheet, or a sheet material formed by multiple steel sheets overlaid on one another.

In the embodiment described above, end parts of the steel sheets B5-21 and B5-22 are lap-joined to each other to form the overlap part B5-241. Similarly, end parts of the steel sheets B5-21 and B5-23 are lap-joined to each other to form the overlap part B5-242. Furthermore, end parts of the steel sheets B5-22 and B5-23 are lap-joined to each other to form the overlap part B5-243. However, the blank B5-20 has only to include at least one overlap part. In other words, the steel sheet B5-23 does not necessarily need to be lap-joined to the steel sheets B5-21 and B5-22. The steel sheet B5-23 may be butt-joined to one or both of the steel sheets B5-21 and B5-22.

In the embodiment described above, the blank B5-20 includes three steel sheets B5-21, B5-22, and B5-23. However, the number of steel sheets included in the blank B5-20 is not limited to this. The blank B5-20 may be formed of two steel sheets or may include four or more steel sheets. The blank B5-20 having an annular shape in plan view typically includes three or more steel sheets. Among the steel sheets included in the blank B5-20, the steel sheets B5-21 and B5-22 that form the overlap part B5-241 having the largest sheet thickness tₘₐₓ have the surfaces B5-216 and B5-226, which are located on the outer sides of the overlap part B5-241, subjected to a treatment for increasing the emissivity. The other steel sheets may or may not be subjected to the treatment for increasing the emissivity. The blank B5-20 has only to include one or more steel sheets that have one surface or both surfaces that are not subjected to the treatment for increasing the emissivity.

With the blank B5-20 according to the embodiment described above, the other steel sheets B5-21 and B5-22 than the steel sheet B5-23 that forms the part having the smallest sheet thickness tₘᵢₙ form the overlap part B5-241 having the largest sheet thickness tₘₐₓ. However, the steel sheet B5-21 or B5-22 that forms the overlap part B5-241 may be the steel sheet having the smallest sheet thickness tₘᵢₙ in the blank B5-20.

In the embodiment described above, the blank B5-20 includes only one overlap part B5-241 having the largest sheet thickness tₘₐₓ. However, the blank B5-20 may include multiple overlap parts having the largest sheet thickness tₘₐₓ. In that case, both outer surfaces of all the overlap parts having the largest sheet thickness tₘₐₓ are preferably subjected to the treatment for increasing the emissivity.

With the blank B5-20 according to the embodiment described above, the multiple steel sheets B5-21, B5-22, and B5-23 have different sheet thicknesses. However, two or more of the steel sheets included in the blank B5-20 may have the same sheet thickness, or all the steel sheets may have the same sheet thickness. When all the steel sheets included in the blank B5-20 have the same sheet thickness, the part of each steel sheet that does not form an overlap part forms the part having the smallest sheet thickness tₘᵢₙ in the blank B5-20, and each overlap part has the largest sheet thickness tₘₐₓ. In this case, again, the emissivity of both outer surfaces of the overlap part having the largest sheet thickness tₘₐₓ is higher than the emissivity of at least one of the other surfaces. When all the steel sheets included in the blank B5-20 have the same sheet thickness, tₘₐₓ/tₘᵢₙ is 2.0.

In the embodiment described above, the press tooling B5-40 used for hot stamping of the blank B5-20 includes the punch B5-41 and the die B5-42. However, the configuration of the press tooling B5-40 is not limited to the example described in the embodiment described above. The press tooling B5-40 may further include a pad or a blank holder, for example.

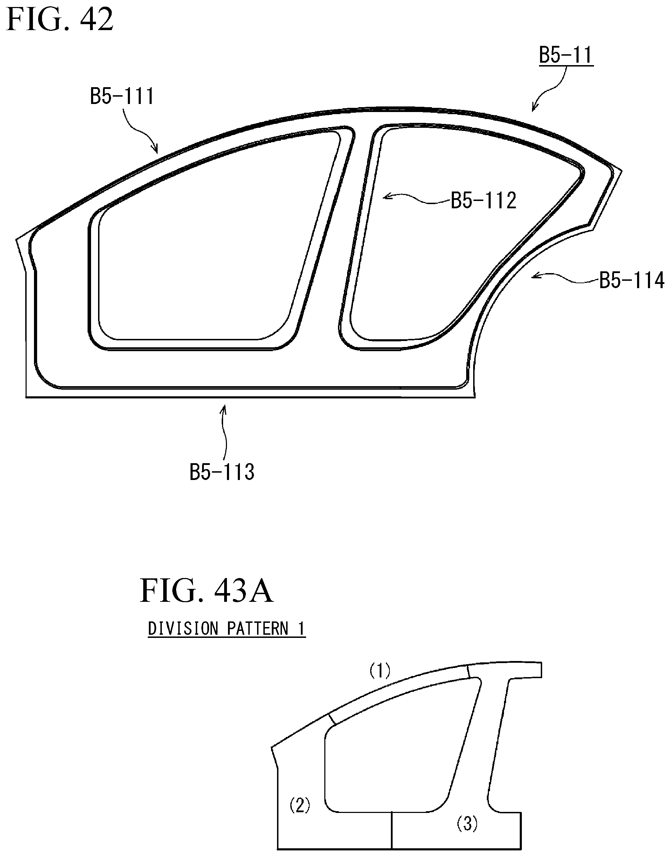

In the embodiments described above, the member main body 11 of the structural member B5-10 includes the front pillar B5-111, the center pillar B5-112, and the rocker B5-113. However, the member main body B5-11 may further include another component. For example, as shown in FIG. 42, the member main body B5-11 may further include a rear pillar B5-114. The structural member B5-10 according to the embodiments described above are door ring parts (single door ring parts) having a single ring shape. On the other hand, the structural member shown in FIG. 42 is a door ring part (double door ring part) having a double ring shape. When producing the double door ring part, the blank used as the starting material also has the double ring shape.

### (EXAMPLES)

In the following, the present disclosure will be described in more detail with reference to examples. However, the present disclosure is not limited to the examples described below.

### [First Example]

In order to check the effects of the present disclosure, using commercially available software (AUTOFORM R. 10 available from AUTOFORM), CAE analysis of the press forming (hot stamping) of structural members that were single door ring parts was performed for different types (types of starting materials) and sheet thicknesses of steel sheets included in the structural members and different division patterns of the structural members.

Table 34 shows the steel sheets used in this analysis.

**[Table 34]**

| Symbol | Type of starting material | Base material | Film specifications |
|---|---|---|---|
| A | Al-Si 1.5G HS | Steel sheet for 1.5 GPa class hot stamping | No film |
| A-1 | Al-Si 1.5G HS | Steel sheet for 1.5 GPa class hot stamping | Black film/one side |
| A-2 | Al-Si 1.5G HS | Steel sheet for 1.5 GPa class hot stamping | Black film/both sides |
| B | Al-Si 2.00 HS | Steel sheet for 2.0 GPa class hot stamping | No film |
| B-1 | Al-Si 2.0G HS | Steel sheet for 2.0 GPa class hot stamping | Black film/one side |
| B-2 | Al-Si 2.0G HS | Steel sheet for 2.0 GPa class hot stamping | Black film/both sides |
| C | Al-Si 2.5G HS | Steel sheet for 2.5 GPa class hot stamping | No film |
| C-1 | Al-Si 2.5G HS | Steel sheet for 2.5 GPa class hot stamping | Black film/one side |
| C-2 | Al-Si 2.5G HS | Steel sheet for 2.5 GPa class hot stamping | Black film/both sides |
| D | Al-Si 1.0G HS | Steel sheet for 1.0 GPa class hot stamping | No film |
| D-1 | Al-Si 1.0G HS | Steel sheet for 1.0 GPa class hot stamping | Black film/one side |
| D-2 | Al-Si 1.0G HS | Steel sheet for 1.0 GPa class hot stamping | Black film/both sides |
| E | Al-Si 0.5G HS | Steel sheet for 0.5 GPa class hot stamping | No film |
| E-1 | Al-Si 0.5G HS | Steel sheet for 0.5 GPa class hot stamping | Black film/one side |
| E-2 | Al-Si 0.5G HS | Steel sheet for 0.5 GPa class hot stamping | Black film/both sides |

In Table 34, the "type of starting material" shows type of coating, tensile strength, and use (hot stamping) in this order. Concerning the film specifications, "black film" is a film that contains carbon black and metal oxide and is black in color. "Black film/one side" means that the whole of one surface of the steel sheet is coated with a black film. "Black film/both sides" means that the whole of both surfaces of the steel sheet is coated with a black film.

FIGS. 43A to 43G show division patterns of the structural member. FIGS. 43A to 43G show the number of steel sheets (starting materials) included in the structural members that are single door ring parts and the positions of the junctures between the steel sheets in the structural members. In FIGS. 43A to 43G, each steel sheet is denoted by a numeral in parentheses.

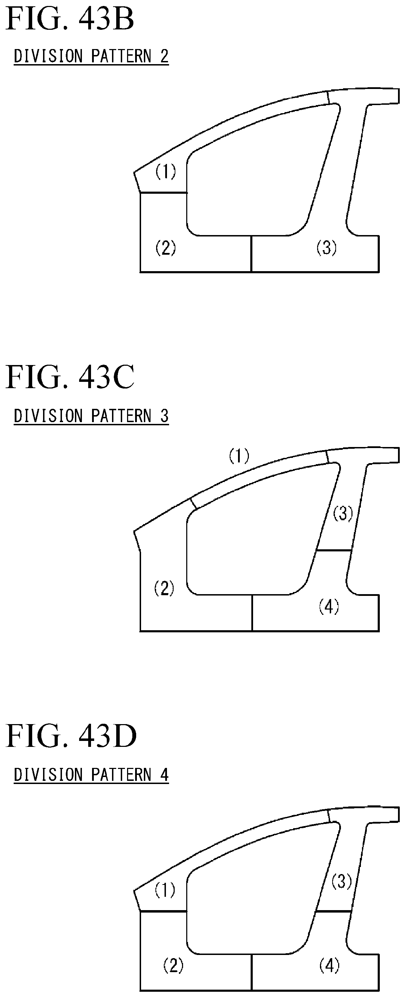

Table 35 shows analysis conditions and results for division patterns 1 and 2 shown in FIGS. 43A and 43B. In FIGS. 43A and 43B, the structural member is formed of three starting materials (1) to (3). The starting materials (1) to (3) are each lap-joined to adjacent starting materials.

**[Table 35]**

| Symbol | Division pattern | Starting material (1) | | Starting material (2) | | Starting material (3) | | Smallest sheet thickness tₘᵢₙ, mm | Largest sheet thickness tₘₐₓ, mm | Time required to reach 910 °C, s | Heating completion time, s | PW, s |
|---|---|---|---|---|---|---|---|---|---|---|---|---|
| | | Type of starting material | Sheet thickness, mm | Type of starting material | Sheet thickness, mm | Type of starting material | Sheet thickness, mm | | | | | |
| Example 1 | 1 | B-1 | 1.4 | D-1 | 1.4 | B-1 | 1.2 | 1.2 | 2.8 | 128.5 | 269.0 | 104.5 |
| Example 2 | 1 | B | 1.2 | D-1 | 1.3 | A-1 | 1.6 | 1.2 | 2.9 | 128.5 | 277.5 | 96.0 |
| Example 3 | 2 | A-1 | 1.6 | D-1 | 1.2 | A-1 | 1.8 | 1.2 | 3.4 | 128.5 | 327.0 | 46.5 |
| Comparative Example 1 | 1 | B | 1.4 | D | 1.4 | B | 1.2 | 1.2 | 2.8 | 149.5 | 349.5 | 45.0 |
| Comparative Example 2 | 2 | A | 1.6 | D | 1.2 | A | 1.8 | 1.2 | 3.4 | 149.5 | 424.5 | -30.0 |

In Table 35, "time required to reach 910 °C" means the time required for the starting material having the smallest sheet thickness tₘᵢₙ among the starting materials included in the blank to reach 910 °C (A_{c3} point or higher) after the start of heating of the blank. "Heating completion time" means the time required for a part that is the slowest to rise in temperature in the blank to reach 910 °C so that hot stamping can be performed after the start of heating of the blank. "Process window (PW)" means a value obtained by subtracting the heating completion time from the sum of the allowable heating time (245 seconds) after the starting material having the smallest sheet thickness tₘᵢₙ reaches 910 °C and the time required to reach 910 °C. The greater this value, the wider the process window of the heating condition in hot stamping of the structural member.

With reference to Table 35 and FIG. 43A, in Example 1, the starting material (1) and the starting material (2) formed an overlap part having the largest sheet thickness tₘₐₓ = 2.8 mm, and the surface of each of the starting materials (1) and (2) that was located on the outer side of the overlap part was provided with a black film. On the other hand, the surface of each of the starting materials (1) and (2) that was located on the inner side of the overlap part was not provided with the black film. Furthermore, in Example 1, the starting material (3) had the smallest sheet thickness tₘᵢₙ = 1.2 mm, and only one surface of the starting material (3) was provided with the black film. In Comparative Example 1, in which the combination of the type of the starting material and the sheet thickness was the same as in Example 1, not all of the starting materials (1) to (3) were provided with the black film. In Example 1, since both outer sides of the overlap part, which was the thickest part, were provided with the black film, heating of the overlap part was promoted, and the heating completion time of the blank was substantially reduced compared with Comparative Example 1. In Example 1, even though the thinnest starting material (3) was provided with the black film and therefore the time required to reach 910 °C was shorter than in Comparative Example 1, the process window was enlarged by almost 60 seconds compared with Comparative Example 1.

With reference to Table 35 and FIG. 43B, in Example 3, the starting material (1) and the starting material (3) formed an overlap part having the largest sheet thickness tₘₐₓ = 3.4 mm, and the surface of each of the starting materials (1) and (3) that was located on the outer side of the overlap part was provided with a black film. On the other hand, the surface of each of the starting materials (1) and (3) that was located on the inner side of the overlap part was not provided with the black film. Furthermore, in Example 3, the starting material (2) had the smallest sheet thickness tₘᵢₙ = 1.2 mm, and only one surface of the starting material (2) was provided with the black film. In Comparative Example 2, in which the combination of the type of the starting material and the sheet thickness was the same as in Example 3, any of the starting materials (1) to (3) was not provided with the black film. In Example 3, since both outer sides of the overlap part, which was the thickest part, were provided with the black film, heating of the overlap part was promoted, and the heating completion time of the blank was substantially reduced compared with Comparative Example 2. In Example 3, even though the thinnest starting material (2) was provided with the black film and therefore the time required to reach 910 °C was shorter than in Comparative Example 2, the process window was enlarged by 70 seconds or more compared with Comparative Example 2. In Comparative Example 2, the process window of the heating condition was lost (negative).

In Example 2, the starting material (2) and the starting material (3) formed an overlap part having the largest sheet thickness tₘₐₓ = 2.9 mm, and the surface of each of the starting materials (2) and (3) that was located on the outer side of the overlap part was provided with a black film. On the other hand, the surface of each of the starting materials (2) and (3) that was located on the inner side of the overlap part was not provided with the black film. Furthermore, in Example 2, the starting material (1) had the smallest sheet thickness tₘᵢₙ = 1.2 mm, and only one surface of the starting material (1) was provided with the black film. In Example 2, again, it was ascertained that a sufficient process window was ensured.

Table 36 shows analysis conditions and results for division patterns 3 and 4 shown in FIGS. 43C and 43D. In FIGS. 43C and 43D, the structural member is formed of four starting materials (1) to (4). The starting materials (1) to (4) are each lap-joined to adjacent starting materials.

**[Table 36]**

| Symbol | Division pattern | Starting material (1) | | Starting material (2) | | Starting material (3) | | Starting material (4) | | Smallest sheet thickness tₘᵢₙ, mm | Largest sheet thickness tₘₐₓ, mm | Time req uired to reach 910 °C, s | Heating completion time, s | PW, s |
|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | | | | | |
| Example 4 | 3 | C-1 | 2.0 | A-1 | 1.6 | A-1 | 1.6 | A | 1.4 | 1.4 | 3.6 | 174.5 | 346.0 | 73.5 |
| Example 5 | 4 | B-1 | 1.4 | B-1 | 1.4 | B-1 | 1.6 | C-2 | 1.2 | 1.2 | 3.0 | 115.0 | 288.0 | 72.0 |
| Example 6 | 4 | B-1 | 1.6 | A | 1.6 | A-1 | 1.8 | A-1 | 1.4 | 1.4 | 3.4 | 150.0 | 327.0 | 68.0 |
| Example 7 | 3 | B-1 | 1.6 | D | 1.4 | B-1 | 2.0 | D-1 | 1.6 | 1.4 | 3.6 | 174.5 | 346.0 | 73.5 |
| Example 8 | 4 | A-1 | 2.0 | C-1 | 1.6 | B-1 | 2.0 | A | 1.4 | 1.4 | 4.0 | 174.5 | 384.5 | 35.0 |
| Example 9 | 4 | A-1 | 1.2 | B | 1.4 | B-1 | 1.4 | D-1 | 1.2 | 1.2 | 2.6 | 128.5 | 250.0 | 123.5 |
| Example 10 | 4 | A | 1.6 | A-1 | 1.6 | B-1 | 2.0 | A-1 | 1.6 | 1.6 | 3.6 | 171.5 | 346.0 | 70.5 |
| Comparative Example 3 | 3 | C | 1.6 | A | 1.6 | B | 2.0 | A | 1.6 | 1.6 | 3.6 | 199.5 | 449.5 | -5.0 |
| Comparative Example 4 | 4 | A | 2.0 | C | 1.6 | B | 2.0 | A | 1.4 | 1.4 | 4.0 | 174.5 | 499.5 | -80.0 |
| Comparative Example 5 | 4 | B | 1.6 | A | 1.6 | A | 1.8 | A | 1.4 | 1.4 | 3.4 | 174.5 | 424.5 | -5.0 |
| Comparative Example 6 | 3 | B | 1.6 | D | 1.4 | B | 2.0 | D | 1.6 | 1.4 | 3.6 | 174.5 | 449.5 | -30.0 |
| Comparative Example 7 | 4 | A | 1.2 | B | 1.4 | B | 1.4 | D-2 | 1.2 | 1.2 | 2.6 | 115.0 | 324.5 | 35.5 |

In Examples 4 to 10 shown in Table 36, as in Examples 1 to 3 (Table 35), at least both outer surfaces of the overlap part having the largest sheet thickness tₘₐₓ were provided with the black film. Therefore, in Examples 4 to 10, again, a sufficient process window of the heating condition was able to be ensured. As can be seen, the process window in each example was enlarged compared with a corresponding comparative example.

For example, in Example 8, the starting material (1) and the starting material (3) formed an overlap part having the largest sheet thickness tₘₐₓ = 4.0 mm, and the surface of each of the starting materials (1) and (3) that was located on the outer side of the overlap part was provided with a black film (Table 36 and FIG. 43D). On the other hand, in Comparative Example 4, in which the combination of the type of the starting material and the sheet thickness was the same as in Example 8, not all of the starting materials, including the overlap part, were provided with the black film. In Example 8, heating of the overlap part was promoted, and the heating completion time of the blank was substantially reduced compared with Comparative Example 4. In Example 8, the process window was enlarged by 100 seconds or more compared with Comparative Example 4. In Comparative Example 4, the process window of the heating condition was lost (negative).

For example, in Example 9, the starting materials (1) and (3) and the starting materials (3) and (4) each formed an overlap part having the largest sheet thickness tₘₐₓ = 2.6 mm, and the surface of each of the starting materials (1), (3), and (4) that was located on the outer side of the overlap part was provided with a black film (Table 3 and FIG. 6D). On the other hand, in Comparative Example 7, in which the combination of the type of the starting material and the sheet thickness was the same as in Example 9, the starting materials (1) and (3) that formed an overlap part were not provided with the black film. In Example 9, heating of the overlap part was promoted, and the heating completion time of the blank was substantially reduced compared with Comparative Example 7. In Example 9, the process window was enlarged by 80 seconds or more compared with Comparative Example 7. In Comparative Example 7, both surfaces of the thinnest starting material (4) were provided with the black film, and the time required to reach 910 °C was a little more than 10 seconds shorter than in Example 9. However, in Example 9, the heating completion time of the blank was reduced by 70 seconds or more compared with Comparative Example 7, and therefore, it can be said that the process window was enlarged compared with Comparative Example 7 even if the difference in time required to reach 910 °C was taken into account.

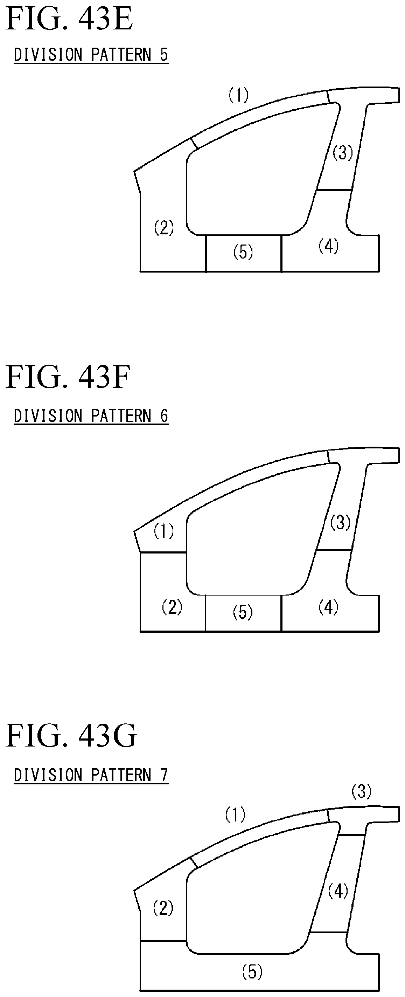

Table 37 shows analysis conditions and results for division patterns 5 and 6 shown in FIGS. 43E and 43F. In FIGS. 43E and 43F, the structural member is formed of five starting materials (1) to (5). The starting materials (1) to (5) are each lap-joined to adjacent starting materials.

**[Table 37]**

| Symbol | Division pattern | Starting material (1) | | Starting material (2) | | Starting material (3) | | Starting material (4) | | Starting material (5) | | Smallest sheet thickness tₘᵢₙ, mm | Largest sheet thickness tₘₐₓ, mm | Time required to reach 910 °C, s | Heating completion time, s | PW, s |
|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | | | |
| Example 11 | 5 | A-1 | 1.2 | A | 1.4 | C | 1.2 | A-1 | 1.8 | A-1 | 1.6 | 1.2 | 3.4 | 149.5 | 327.0 | 67.5 |
| Example 12 | 5 | A-2 | 1.4 | B | 1.2 | C-1 | 1.6 | D | 1.2 | B-2 | 1.4 | 1.2 | 3.0 | 134.0 | 288.0 | 91.0 |
| Example 13 | 6 | A-1 | 1.6 | C-1 | 1.6 | A | 1.2 | B-1 | 1.8 | D | 1.2 | 1.2 | 3.2 | 149.5 | 307.5 | 87.0 |
| Example 14 | 5 | C-2 | 1.6 | B-1 | 1.6 | B | 1.4 | A-1 | 1.2 | A | 1.2 | 1.2 | 3.2 | 128.5 | 307.5 | 66.0 |
| Example 15 | 6 | B-1 | 1.2 | B | 1.2 | A-1 | 1.8 | D-1 | 1.2 | B | 1.2 | 1.2 | 3.0 | 128.5 | 288.0 | 85.5 |
| Example 16 | 5 | B-1 | 1.4 | D | 1.2 | B-1 | 1.6 | E-1 | 1.0 | A-1 | 1.2 | 1.0 | 3.0 | 107.0 | 288.0 | 64.0 |
| Comparative Example 8 | 5 | A | 1.4 | A | 1.2 | C | 1.8 | A | 1.4 | A | 1.4 | 1.2 | 3.2 | 149.5 | 399.5 | -5.0 |
| Comparative Example 9 | 6 | A | 1.6 | C | 1.6 | A | 1.2 | B | 1.8 | D | 1.2 | 1.2 | 3.2 | 149.5 | 399.5 | -5.0 |
| Comparative Example 10 | 5 | C | 1.6 | B | 1.6 | B | 1.4 | A | 1.2 | A | 1.2 | 1.2 | 3.2 | 149.5 | 399.5 | -5.0 |
| Comparative Example 11 | 6 | B | 1.2 | B | 1.2 | A | 1.8 | D | 1.2 | B | 1.2 | 1.2 | 3.0 | 149.5 | 374.5 | 20.0 |

In Examples 11 to 16 shown in Table 37, as in Examples 1 to 10 (Tables 35 and 36), at least both outer surfaces of the overlap part having the largest sheet thickness tₘₐₓ were provided with the black film. Therefore, in Examples 11 to 16, again, a sufficient process window of the heating condition was able to be ensured. As can be seen, the process window in each example was enlarged compared with a corresponding comparative example.

For example, in Example 13, the starting material (1) and the starting material (2) formed an overlap part having the largest sheet thickness tₘₐₓ = 3.2 mm, and the surface of each of the starting materials (1) and (2) that was located on the outer side of the overlap part was provided with a black film (Table 37 and FIG. 43F). On the other hand, in Comparative Example 9, in which the combination of the type of the starting material and the sheet thickness was the same as in Example 13, any of the starting materials, including the overlap part, was not provided with the black film. In Example 13, heating of the overlap part was promoted, and the heating completion time of the blank was substantially reduced compared with Comparative Example 9. In Example 13, the process window was enlarged by 90 seconds or more compared with Comparative Example 9. In Comparative Example 9, the process window of the heating condition was lost (negative).

For example, in Example 15, the starting material (1) and the starting material (3) formed an overlap part having the largest sheet thickness tₘₐₓ = 3.0 mm, and the surface of each of the starting materials (1) and (3) that was located on the outer side of the overlap part was provided with a black film (Table 37 and FIG. 43F). Furthermore, in Example 15, the starting material (3) and the starting material (4) formed an overlap part having the largest sheet thickness tₘₐₓ = 3.0 mm, and the surface of each of the starting materials (3) and (4) that was located on the outer side of the overlap part was provided with a black film. On the other hand, in Comparative Example 11, in which the combination of the type of the starting material and the sheet thickness was the same as in Example 15, not all of the starting materials, including the overlap part, were provided with the black film. In Example 15, heating of the overlap part was promoted, and the heating completion time of the blank was substantially reduced compared with Comparative Example 11. In Example 15, the process window was enlarged by 60 seconds or more compared with Comparative Example 11.

### [Second Example]

The same analysis as in the first example was performed of the press forming (hot stamping) of structural members that were double door ring parts for different types and sheet thicknesses of starting materials included in the structural members and different division patterns of the structural members.

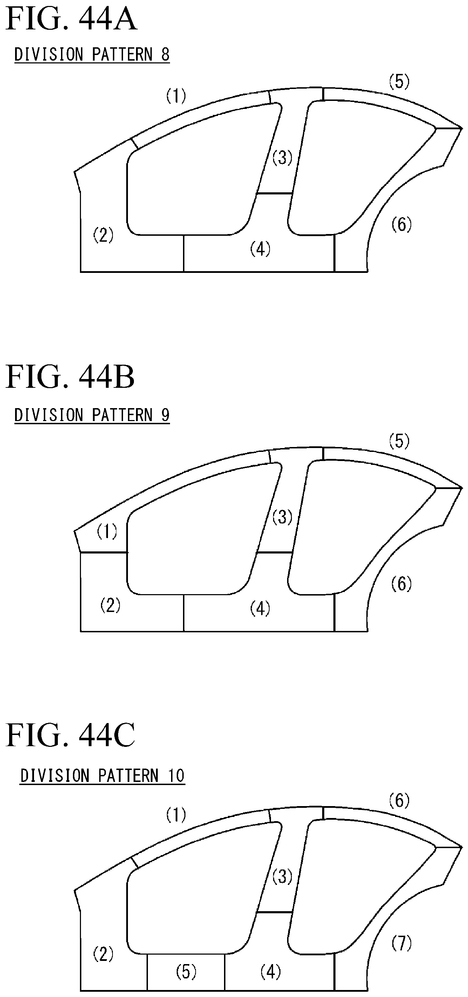

The steel sheets as the starting materials were selected from those shown in Table 34, as in the first example. The division patterns of the structural members are shown in FIGS. 44A to 44D. FIGS. 44A to 44D show the number of steel sheets (starting materials) included in the structural members that are double door ring parts and the positions of the junctures between the steel sheets in the structural members. In FIGS. 44A to 44D, each steel sheet as the starting material is denoted by a numeral in parentheses.

Table 38 shows analysis conditions and results for division patterns 8 and 9 shown in FIGS. 44A and 44B. In FIGS. 44A and 44B, the structural member is formed of six starting materials (1) to (6). The starting materials (1) to (6) are each lap-joined to adjacent starting materials.

**[Table 38]**

| Symbol | Division pattern | Starting material (1) | | Starting material (2) | | Starting material (3) | | Starting material (4) | | Starting material (5) | | Starting material (6) | | Smallest sheet thickness tₘᵢₙ, mm | Largest sheet thickness tₘᵢₙ, mm | Time required to reach 910 °C, s | Heating completion time, s | PW, s |
|---|---|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | | | |
| Example 17 | 8 | C-1 | 1.6 | A | 1.4 | A-1 | 1.8 | D-1 | 1.4 | B-1 | 1.0 | D-1 | 1.2 | 1.0 | 3.4 | 107.0 | 327.0 | 25.0 |
| Example 18 | 8 | A-1 | 1.6 | B | 1.3 | B-2 | 1.8 | A-1 | 1.4 | A | 1.2 | A | 1.0 | 1.0 | 3.4 | 124.5 | 327.0 | 42.5 |
| Example 19 | 9 | B-2 | 1.6 | A | 1.4 | C-1 | 1.8 | B-1 | 1.4 | B-2 | 1.0 | A-2 | 1.0 | 1.0 | 3.4 | 95.5 | 327.0 | 13.5 |
| Comparative Example 12 | 8 | C | 1.6 | A | 1.4 | A | 1.8 | D | 1.4 | B | 1.0 | D | 1.2 | 1.0 | 3.4 | 124.5 | 424.5 | -55.0 |
| Comparative Example 13 | 9 | B | 1.6 | A | 1.4 | C | 1.8 | B | 1.4 | B | 1.0 | A | 1.0 | 1.0 | 3.4 | 124.5 | 424.5 | -55.0 |

With reference to Table 38, in Examples 17 to 19, the starting materials (3) and (4) formed an overlap part having the largest sheet thickness tₘₐₓ = 3.4 mm, and the surfaces of the starting materials (3) and (4) that were located on the outer sides of the overlap part were provided with a black film. On the other hand, in Comparative Examples 12 and 13, not all of the starting materials (1) and (6), including the overlap part, were provided with the black film.

As can be seen from Table 38, in Examples 17 to 19, heating of the overlap part having the largest sheet thickness tₘₐₓ was promoted, and the heating completion time of the blank was substantially reduced compared with Comparative Examples 12 and 13. As a result, in Examples 17 to 19, the process window of the heating condition was significantly enlarged compared with Comparative Examples 12 and 13.

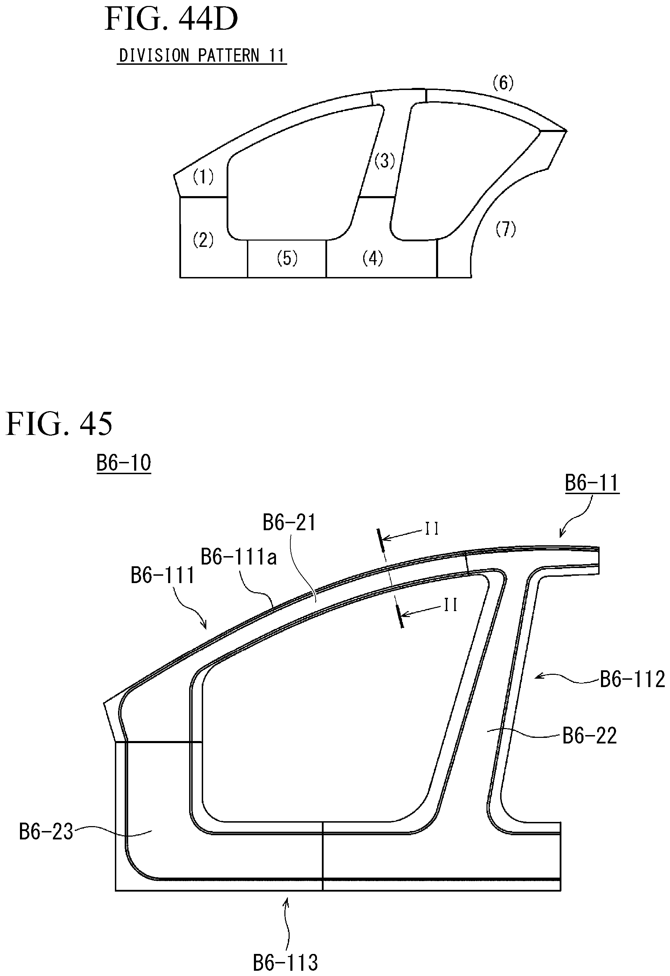

Table 39 shows analysis conditions and results for division patterns 10 and 11 shown in FIGS. 44C and 44D. In FIGS. 44C and 44D, the structural member is formed of seven starting materials (1) to (7). The starting materials (1) to (7) are each lap-joined to adjacent starting materials.

**[Table 39]**

| Symbol | Division pattern | Starting material (1) | | Starting material (2) | | Starting material (3) | | Starting material (4) | | Starting material (5) | | Starting material (6) | | Starting material (7) | | Smallest sheet thickness tₘᵢₙ, mm | Largest sheet thickness tₘₐₓ, mm | Time required to reach 910 °C, s | Heating completion time, s | PW, s |
|---|---|---|---|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | | | |
| Example 20 | 10 | C-1 | 1.6 | A | 1.4 | A-1 | 1.8 | D-2 | 1.2 | D-1 | 1.4 | B-1 | 1.2 | D-2 | 1.0 | 1.0 | 3.4 | 95.5 | 327.0 | 13.5 |
| Example 21 | 10 | A-1 | 1.6 | A | 1.4 | B-1 | 1.8 | A-1 | 1.2 | B-1 | 1.2 | A-1 | 1.2 | A-1 | 1.2 | 1.2 | 3.4 | 128.5 | 327.0 | 46.5 |
| Example 22 | 11 | B-1 | 1.6 | B-1 | 1.3 | C-1 | 1.8 | E-1 | 1.2 | A-2 | 1.2 | B-2 | 1.2 | A-2 | 1.0 | 1.0 | 3.4 | 95.5 | 327.0 | 13.5 |
| Comparative Example 14 | 10 | C | 1.6 | A | 1.4 | A | 1.8 | D | 1.2 | D | 1.4 | B | 1.2 | D | 1.2 | 1.2 | 3.4 | 124.5 | 424.5 | - 55.0 |
| Comparative Example 15 | 11 | B | 1.6 | A | 1.4 | C | 1.8 | E | 1.2 | A | 1.2 | B | 1.2 | A | 1.0 | 1.0 | 3.4 | 124.5 | 424.5 | -55.0 |

With reference to Table 39, in Examples 20 to 22, the starting materials (1) and (3) formed an overlap part having the largest sheet thickness tₘₐₓ = 3.4 mm, and the surfaces of the starting materials (1) and (3) that were located on the outer sides of the overlap part were provided with a black film. On the other hand, in Comparative Examples 14 and 15, not all of the starting materials (1) and (7), including the overlap part, were provided with the black film.

As can be seen from Table 39, in Examples 20 to 22, heating of the overlap part having the largest sheet thickness tₘₐₓ was promoted, and the heating completion time of the blank was substantially reduced compared with Comparative Examples 14 and 15. As a result, in Examples 20 to 22, the process window of the heating condition was significantly enlarged compared with Comparative Examples 14 and 15.

### [Third Example]

In order to check the effect of the difference between the largest sheet thickness tₘₐₓ and the smallest sheet thickness tₘᵢₙ on the press forming (hot stamping) of structural members that are single door ring parts, the same analysis as in the first example was performed for different values of tₘₐₓ/tₘᵢₙ. Table 40 shows analysis conditions and results.

**[Table 40]**

| Symbol | Division pattern | Starting material (1) | | Starting material (2) | | Starting material (3) | | Starting material (4) | | Starting material (5) | | Smallest sheet thickness tₘᵢₙ, mm | Largest sheet thickness tₘₐₓ, mm | Sheet thickness ratio tₘₐₓ/tₘᵢₙ | Time required to reach 910 °C, s | Ileating completion time, s | PW, s |
|---|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | | | | |
| Test Example 1 | 7-Overlap | A-1 | 1.6 | A-1 | 1.4 | C-1 | 1.4 | A-1 | 1.2 | A | 1.4 | 1.2 | 3.0 | 2.5 | 128.5 | 288.0 | 85.5 |
| Test Example 2 | 5-Overlap | C-1 | 1.2 | B | 1.6 | B-1 | 2.6 | A-1 | 1.2 | A | 1.6 | 1.2 | 3.8 | 3.2 | 128.5 | 365.0 | 8.3 |
| Test Example 3 | 7-Overlap | A-1 | 1.0 | A | 1.4 | A-1 | 3.3 | A | 1.0 | A | 1.4 | 1.0 | 4.3 | 4.3 | 124.5 | 413.4 | -43.9 |
| Reference example | 5-Overlap | C | 1.4 | A | 1.4 | A | 1.4 | D | 1.4 | B | 1.4 | 1.4 | 2.8 | 2.0 | 174.5 | 305.0 | 70.0 |

The division pattern in Test Examples 1 and 3 was the division pattern 7 shown in FIG. 43G. The division pattern in Test Example 2 and the reference example was the division pattern 5 shown in FIG. 43E. In Test Examples 1 to 3 and the reference example, each starting material formed an overlap part with another starting material at the juncture thereof. In any of Test Examples 1 to 3, both outer surfaces of the overlap part having the largest sheet thickness tₘₐₓ were provided with a black film. Furthermore, in each of Test Examples 1 to 3, each of the starting materials (1) to (5) had a sheet thickness different from the sheet thickness of one or more other starting materials. On the other hand, in the reference example, all the starting materials (1) to (5) had the same sheet thickness. Furthermore, in the reference example, not all of the starting materials (1) to (5), including the overlap part, were provided with the black film.

In the reference example, since there was no difference in sheet thickness between the starting materials (1) to (5), the ratio of the largest sheet thickness tₘₐₓ (the sheet thickness of the overlap part) to the smallest sheet thickness tₘᵢₙ (the sheet thickness of the starting materials (1) to (5)): tₘₐₓ/tₘᵢₙ was 2.0. In the reference example, since the difference (tₘₐₓ/tₘᵢₙ) between the largest sheet thickness tₘₐₓ and the smallest sheet thickness tₘᵢₙ was not large, a slight process window of the heating condition was able to be ensured, even if the emissivity of both outer surfaces of the overlap part was not increased. On the other hand, when the starting materials (1) to (5) had different sheet thicknesses, the difference (tₘₐₓ/tₘᵢₙ) between the largest sheet thickness tₘₐₓ and the smallest sheet thickness tₘᵢₙ was more than 2.0. In this case, the effect of increasing the emissivity of both outer surfaces of the overlap part (by providing the black film) was likely to markedly manifest itself.

As can be seen from Table 40, when both outer surfaces of the overlap part having the largest sheet thickness tₘₐₓ were provided with the black film, even if tₘₐₓ/tₘᵢₙ was more than 2.0, the heating completion time was less likely to be long, and a process window was able to be ensured (Test Examples 1 and 2). In Test Example 2, despite the relatively large tₘₐₓ/tₘᵢₙ of 3.2, a process window was able to be ensured. On the other hand, in Test Example 3 in which tₘₐₓ/tₘᵢₙ was more than 4.0, the process window was negative.

According to the analysis results, it can be said that when there is a difference in sheet thickness between the starting materials, it is preferable that tₘₐₓ/tₘᵢₙ ≤ 3.2. Although tₘₐₓ/tₘᵢₙ > 2.0 when there is a difference in sheet thickness between the starting materials, it is also possible that tₘₐₓ/tₘᵢₙ ≥ 2.5.

For Test Examples 1 to 3, the productivity of the structural member and the emissions ratio of greenhouse effect gas were evaluated. In addition, for Test Examples 1 to 3, the rust resistance performance of the structural member was evaluated. Table 41 shows evaluation results.

**[Table 41]**

| Symbol | Division pattern | Productivity, items/min | Emissions ratio of greenhouse effect gas during production | Evaluation of rust resistance performance |
|---|---|---|---|---|
| Test Example 1 | 7-Overlap | 4.17 | 82% | ○ |
| Test Example 2 | 5-Overlap | 3.29 | 94% | ○ |
| Test Example 3 | 7-Overlap | 2.90 | 100% | × |

As shown in Table 41, in Test Examples 1 and 2, the productivity of the structural member was improved compared with Test Example 3, since the heating completion time of the blank was reduced compared with Test Example 3. Furthermore, in Test Examples 1 and 2, the heating completion time of the blank was reduced compared with Test Example 3, and the energy consumption required for production of the structural member was reduced, so that the emissions ratio of the greenhouse effect gas during production was also reduced. "Productivity" in Table 41 means the number of blanks (structural members) that can be heat-treated in a heating furnace in one minute. "Emissions ratio of greenhouse effect gas" means the ratio of emissions of greenhouse effect gas with respect to the Test Example 3. The emissions of greenhouse effect gas in the heating step was determined by multiplying the greenhouse effect gas emissions per kWh of electricity of Japan's average power in 2018 (LCA database, National Institute of Advanced Industrial Science and Technology, IDEAv3.2) by the power consumption per structural member allocated on the assumption that the power consumption per hour of the multi-stage electric heating furnace for hot stamping blank heating was 450 kWh, the furnace temperature was 920 °C, the operating time per day was 15 hours, the heating and waiting time for the heating furnace was 3 hours, and the members were produced with the productivity described in Table 41. The emissions of greenhouse effect gas in the other steps (other than the heating step) in production of the structural member was calculated in the method described in a published literature concerning LCA calculation for automobile parts (Masahiro Kubo and two others, "Evaluation of the Life Cycle Greenhouse Gas (GHG) Emissions of a Lightweight Steel Body and Part", JSAE Annual Congress (Spring) Proceedings, Society of Automotive Engineers of Japan, Inc., 2022).

In Test Examples 1 and 2, the heating completion time of the blank was reduced compared with Test Example 3. This means that alloying of the coating layer of the thinnest starting material did not excessively proceed in heating of the blank, and the deterioration of the rust resistance performance (corrosion resistance) of the starting material was reduced. In Test Examples 1 and 2, higher rust resistance performance than in Test Example 3 was able to be maintained. The rust resistance performance was evaluated by cutting a corrosion evaluation test specimen (evaluation sample) from each of the overlap part and other parts of a hot-stamped structural member and performing the combined cyclic corrosion test (CCT) on the samples under cycle conditions close to the actual environment defined in the accelerated corrosion test (VDA233-102) of German Association of the Automotive Industry (VDA). In Table 41, ○ is shown when the rust resistance performance of all the evaluation samples taken from the multiple parts of the structural member had no problem and was evaluated to be good, and × is shown when any one of the evaluation samples was evaluated to be poor in rust resistance.

The evaluation of Test Example 3 is low in comparison with Test Examples 1 and 2. However, as described above in the first to third examples, by increasing the emissivity of both outer surfaces of the overlap part having the largest sheet thickness tₘₐₓ, heating of the overlap part can be promoted, and the heating completion time can be reduced. In Test Example 3, the emissivity of both outer surfaces of the overlap part having the largest sheet thickness tₘₐₓ are also increased, and therefore, it is estimated that the heating completion time of the blank is reduced, and the productivity, the emissions ratio of greenhouse effect gas, and the rust resistance performance are improved compared with the case where the combination of the type of the starting material and the sheet thickness is the same as in Test Example 3, and both outer surfaces of the overlap part are not subjected to a treatment for increasing the emissivity, for example.

### <<Elemental Technology B6>>

The Element Technology B6 is a structural member, including:
a member main body that is formed of multiple steel sheets joined to each other and has an annular shape in plan view,
in which the multiple steel sheets include a first steel sheet, a second steel sheet, and a third steel sheet,
an end part of the first steel sheet is overlaid on and joined to an end part of the second steel sheet, thereby forming an overlap part having the largest sheet thickness in the member main body with the end part of the second steel sheet,
at least one of the first steel sheet and the second steel sheet, and the third steel sheet are each a coated steel sheet having an aluminum-based coating layer on both surfaces of a base steel sheet, and
a thickness of the aluminum-based coating layer of at least one of the first steel sheet and the second steel sheet is less than a thickness of the aluminum-based coating layer of the third steel sheet.

An object of the Element Technology B6 is to provide a blank for hot stamping from which a structural member that combines a strength of an overlap part having a largest sheet thickness and a rust resistance function of each steel sheet can be produced.

A blank for hot stamping according to an embodiment includes multiple steel sheets. The multiple steel sheets are disposed to form an annular shape in plan view of the blank and joined to each other. The multiple steel sheets include a first steel sheet, a second steel sheet, and a third steel sheet. An end part of the first steel sheet is overlaid on and joined to an end part of the second steel sheet, thereby forming an overlap part with the end part of the second steel sheet. The overlap part has the largest sheet thickness in the blank. At least one of the first steel sheet and the second steel sheet, and the third steel sheet are each a coated steel sheet. The coated steel sheet has a base steel sheet and an aluminum-based coating layer that covers both surfaces of the base steel sheet. A deposition amount (g/m²) of the aluminum-based coating layer on both surfaces of the base steel sheet of at least one of the first steel sheet and the second steel sheet is 60 or less and is less than a deposition amount (g/m²) of the aluminum-based coating layer on both surfaces of the base steel sheet of the third steel sheet (a first configuration).

The blank according to the first configuration includes the first steel sheet, the second steel sheet, and the third steel sheet. An end part of the first steel sheet and an end part of the second steel sheet form an overlap part having the largest sheet thickness in the blank. The deposition amount of the aluminum-based coating layer of at least one of the first steel sheet and the second steel sheet is less than the deposition amount of the aluminum-based coating layer of the third steel sheet. The deposition amount of the aluminum-based coating layer of at least one of the first steel sheet and the second steel sheet is 60 g/m² or less. Since the first steel sheet and/or the second steel sheet are relatively thin-coated steel sheets in this way, when the blank is heated for hot stamping, alloying of the aluminum-based coating layer of the first steel sheet and/or the second steel sheet quickly proceeds, and both surfaces of the first steel sheet and/or the second steel sheet quickly change color from white silver to black or a color close to black. Therefore, the emissivity of the overlap part formed by the first steel sheet and the second steel sheet increases during heating of the blank. As a result, the overlap part can be more quickly heated to a temperature in the austenite zone, so that the heating time of the overlap part can be reduced. Therefore, heating of the blank required for hot stamping can be completed before alloying of the aluminum-based coating layer of each steel sheet excessively proceeds and the diffusion layer becomes thick. As a result, the strength of the overlap part can be ensured by hot stamping, and the corrosion resistance (rust resistance) of each steel sheet can be ensured.

As described above, with the blank according to the first configuration, a structural member that combines the strength of the overlap part having the largest sheet thickness and the rust resistance function of each steel sheet can be produced. That is, with the blank, the heating rate of the overlap part having the largest sheet thickness can be increased, and a process window of the heating condition in production of the structural member is more likely to be ensured. In addition, by increasing the heating rate of the overlap part, the heating time of the blank for hot stamping can be reduced, and therefore, the productivity of the structural member can be improved. Furthermore, since the heating time of the blank is reduced, the energy consumption of the production of the structural member is reduced, and the emissions of greenhouse effect gas when heating the blank for hot stamping can be reduced.

With the blank according to the first configuration, the deposition amount of the aluminum-based coating layer of the third steel sheet is more than the deposition amount of the aluminum-based coating layer of at least one of the first steel sheet and the second steel sheet forming the overlap part. That is, the third steel sheet has higher rust resistance performance than the first steel sheet and/or the second steel sheet. Therefore, in the structural member produced from the blank, the rust resistance performance can be partially increased. For example, by arranging the third steel sheet in a part of the structural member that required relatively high rust resistance performance, required rust resistance performance of the structural member as a whole can be ensured.

In the blank according to the first configuration, the multiple steel sheets may include two or more steel sheets having different sheet thicknesses. In this case, provided that a sheet thickness of the overlap part is tₘₐₓ, and a sheet thickness of a steel sheet having a smallest sheet thickness among the multiple steel sheets is tₘᵢₙ, it is preferable that tₘₐₓ/tₘᵢₙ ≤ 3.0 (a second configuration).

When the blank includes two or more steel sheets having different sheet thicknesses, the difference in sheet thickness between the overlap part and the non-overlap part is more significant compared with the case where all the steel sheets included in the blank have the same sheet thickness. That is, the difference in sheet thickness between the overlap part having the largest sheet thickness in the blank and the steel sheet having the smallest sheet thickness is more significant. When the difference in sheet thickness is too large, when the structural member is produced from the blank by hot stamping, the overlap part is more slowly heated than the steel sheet having the smallest sheet thickness, and it is likely to be difficult to ensure a process window of the heating condition. In view of this, according to the second configuration, the ratio between the sheet thickness tₘₐₓ of the overlap part and the smallest sheet thickness tₘᵢₙ: tₘₐₓ/tₘᵢₙ is set to 3.0 or less. As a result, heating of the overlap part, which is the thickest part, is likely to be ended before alloying of the coating layer of the thinnest steel sheet excessively proceeds, and the process window of the heating condition is more likely to be ensured.

In the blank according to the first configuration, the multiple steel sheets may include two or more steel sheets having different sheet thicknesses. Provided that a sheet thickness of the overlap part is tₘₐₓ, and a sheet thickness of a steel sheet having a smallest sheet thickness among the multiple steel sheets is tₘᵢₙ, it is possible that tₘₐₓ/tₘᵢₙ ≤ 4.0. In this case, a surface of at least one of the first steel sheet and the second steel sheet that is located on an outer side of the overlap part is preferably coated with a film that is black in color (a third configuration).

According to the third configuration, in at least one of the first steel sheet and the second steel sheet forming the overlap part, the surface located on the outer side of the overlap part is provided with a film that is black in color. In this way, the emissivity of the overlap part can be increased in advance, and heating of the overlap part can be accelerated when the blank is heated for hot stamping. Therefore, even when the difference in sheet thickness between the overlap part having the largest sheet thickness in the blank and the steel sheet having the smallest sheet thickness is more significant, the process window of the heating condition is more likely to be ensured. For example, even if the ratio between the sheet thickness tₘₐₓ of the overlap part and the smallest sheet thickness tₘᵢₙ: tₘₐₓ/tₘᵢₙ is increased to 4.0, the process window is likely to be ensured.

A production method for a structural member according to an embodiment includes a step of preparing the blank according to any one of the first to third configurations, a step of heating the multiple steel sheets included in the blank to an austenite transformation completion temperature or higher, and a step of shaping and quenching the heated blank into a structural member having an annular shape in plan view with press tooling (a fourth configuration).

A structural member according to an embodiment includes a member main body. The member main body is formed of multiple steel sheets joined to each other. The member main body has an annular shape in plan view. The multiple steel sheets include a first steel sheet, a second steel sheet, and a third steel sheet. An end part of the first steel sheet is overlaid on and joined to an end part of the second steel sheet, thereby forming an overlap part in the member main body with the end part of the second steel sheet. The overlap part has the largest sheet thickness in the member main body. At least one of the first steel sheet and the second steel sheet, and the third steel sheet are each a coated steel sheet having an aluminum-based coating layer on both surfaces of a base steel sheet. A thickness of the aluminum-based coating layer of at least one of the first steel sheet and the second steel sheet is less than a thickness of the aluminum-based coating layer of the third steel sheet (a fifth configuration).

Concerning the structural member according to the fifth configuration, in the overlap part, provided that a maximum value of a Vickers hardness of a steel sheet among the first steel sheet and the second steel sheet that is located on a front surface side of the member main body is HVₘₐₓ, and a minimum value of the Vickers hardness is HVₘᵢₙ, HVₘₐₓ-HVₘᵢₙ may be 30% or less of HVₘₐₓ (a sixth configuration).

In the structural member according to the fifth or sixth configuration, the member main body may include a curved part. For example, the curved part is convexly curved outward of the member main body in plan view of the structural member. At least one of the first steel sheet and the second steel sheet may be located in the curved part (a seventh configuration).

The structural member according to any one of the fifth to seventh configurations may be a door ring part of an automobile. In this case, the member main body may include a front pillar, a center pillar, and a rocker that connects the front pillar and the center pillar to each other (an eighth configuration).

In the following, embodiments of the present disclosure will be described with reference to the drawings. In the drawings, the same or corresponding components are denoted by the same reference numerals, and redundant descriptions will be omitted.

### <First Embodiment>

### [Structural Member]

FIG. 45 is a diagram (plan view) showing a structural member B6-10 according to a first embodiment placed on a horizontal surface viewed from above. The structural member B6-10 is used for a body of an automobile, for example. The structural member B6-10 is typically a door ring part of an automobile. This embodiment will be described with reference to an example in which the structural member B6-10 is a door ring part.

The structural member B6-10 is a hot-stamped member. That is, the structural member B6-10 is produced by performing hot stamping (hot press working) on a blank formed of multiple steel sheets. The structural member B6-10 includes a member main body B6-11. The member main body B6-11 has an annular shape in plan view of the structural member B6-10. The member main body B6-11 includes a front pillar B6-111, a center pillar B6-112, and a rocker B6-113.

When the structural member B6-10 is assembled to the body of the automobile, the center pillar B6-112 is disposed rearward of the front pillar B6-111. The center pillar B6-112 generally extends in the up-and-down direction of the body. The front pillar B6-111 extends toward the center pillar B6-112. The front pillar B6-111 includes a curved part B6-111a. The curved part B6-111a is a part that is convexly curved outward of the member main body B6-11 in plan view of the structural member B6-10. In the example in FIG. 45, the curved part B6-111a is located in an upper part (an upper front pillar part) of the front pillar B6-111. When the structural member B6-10 is assembled to the body of the automobile, the rocker B6-113 is disposed below the front pillar B6-111 and the center pillar B6-112. The rocker B6-113 connects the front pillar B6-111 and the center pillar B6-112 to each other.

In this embodiment, the member main body B6-11 is formed of multiple steel sheets B6-21, B6-22, and B6-23 joined to each other. In the example in FIG. 45, the front pillar B6-111 is mainly formed by the steel sheets B6-21 and B6-23. The steel sheet B6-21 is located in the curved part B6-111a of the front pillar B6-111. That is, at least a part of the steel sheet B6-21 forms a part or the whole of the curved part B6-111a. The center pillar B6-112 is mainly formed of the steel sheet B6-22. The rocker B6-113 is formed of the steel sheets B6-22 and B6-23.

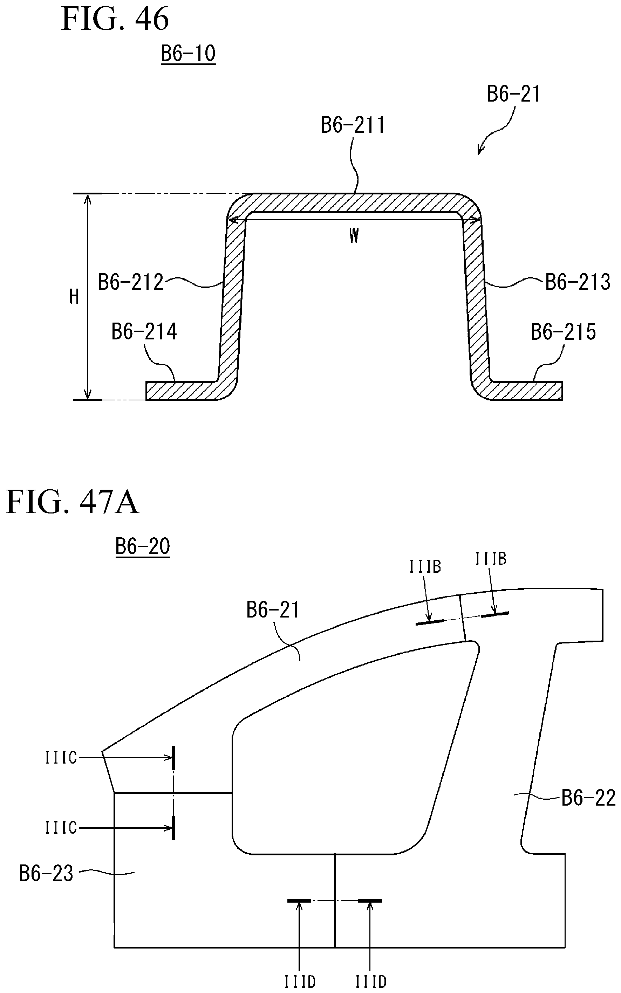

FIG. 46 is a cross-sectional view taken along line II-II in FIG. 45. FIG. 46 shows a cross section of the structural member B6-10 taken at the position of the steel sheet B6-21 along the sheet thickness direction thereof. As shown in FIG. 46, the steel sheet B6-21 has an open cross section. The steel sheet B6-21 has a generally hat-like shape in cross-sectional view of the structural member B6-10, for example. More specifically, the steel sheet B6-21 includes a top plate B6-211, vertical walls B6-212 and B6-213, and flanges B6-214 and B6-215. The vertical wall B6-212 is disposed on the opposite side of the top plate B6-211 to the vertical wall B6-213. In the cross-sectional view of the structural member B6-10, one ends of the vertical walls B6-212 and B6-213 are connected to the top plate B6-211. In the cross-sectional view of the structural member B6-10, the other ends of the vertical walls B6-212 and B6-213 are connected to the flanges B6-214 and B6-215, respectively. The flanges B6-214 and B6-215 project outward from the vertical walls B6-212 and B6-213 of the structural member B6-10, respectively.

In the structural member B6-10, a width W of the steel sheet B6-21, that is, the part of the structural member B6-10 that is located in the upper part of the front pillar B6-111 (FIG. 45), may be 15 mm or more and 300 mm or less. A height H of the steel sheet B6-21, that is, the part of the structural member B6-10 that is located in the upper part of the front pillar B6-111, may be 10 mm or more and 150 mm or less. The width W is the distance from the R-end on the vertical wall B6-212 side of the corner part between the top plate B6-211 and the vertical wall B6-212 to the R-end on the vertical wall B6-213 side of the corner part between the top plate B6-211 and the vertical wall B6-213, in the cross section of the structural member B6-10. The height H is the distance from the top plate B6-211 to the flange B6-214 or B6-215 in the sheet thickness direction of the top plate B6-211.

Although not shown, the other steel sheets B6-22 and B6-23 have an open cross section, as with the steel sheet B6-21. The steel sheets B6-22 and B6-23 can also have a generally hat-like shape in cross-sectional view of the structural member B6-10. The width of a part of the steel sheet B6-22 that corresponds to the center pillar B6-112 (FIG. 45) may be 15 mm or more and 300 mm or less. The height of the part of the steel sheet B6-22 that corresponds to the center pillar B6-112 may be 10 mm or more and 150 mm or less. The width of a part of the steel sheet B6-23 that corresponds to a lower part of the front pillar B6-111 (FIG. 45) is 30 mm or more and 750 mm or less, for example. The height of the part of the steel sheet B6-23 that corresponds to the lower part of the front pillar B6-111 may be 25 mm or more and 150 mm or less. The width of a part of the steel sheet B6-23 that corresponds to the rocker B6-113 (FIG. 39) is 30 mm or more and 300 mm or less, for example. The height of the part of the steel sheet B6-23 that corresponds to the rocker B6-113 may be 25 mm or more and 150 mm or less.

The size of the structural member B6-10 having an annular shape in plan view is 1.0 m or more, for example. The size of the structural member B6-10 may be 4.0 m or less, for example. The size of the structural member B6-10 means the length of the line segment connecting two points that are the most distant from each other among any two points on the outer circumference of the structural member B6-10 when the structural member B6-10 placed on a horizontal surface is viewed in the vertical direction.

### [Production Method for Structural Member]

In the following, a production method for the structural member B6-10 will be described with reference to FIGS. 47A to 47G. The production method for the structural member B6-10 according to this embodiment includes a step of preparing a blank B6-20, a step of heating the blank B6-20, and a step of shaping the heated blank B6-20 into the structural member B6-10.

### (Preparation Step)

As shown in FIG. 47A, in the preparation step, a blank B6-20 having the expanded shape of the structural member B6-10 is prepared. The blank B6-20 includes multiple steel sheets B6-21, B6-22, and B6-23. The steel sheets B6-21, B6-22, and B6-23 are disposed to form an annular shape in plan view of the blank B6-20 and joined to each other.

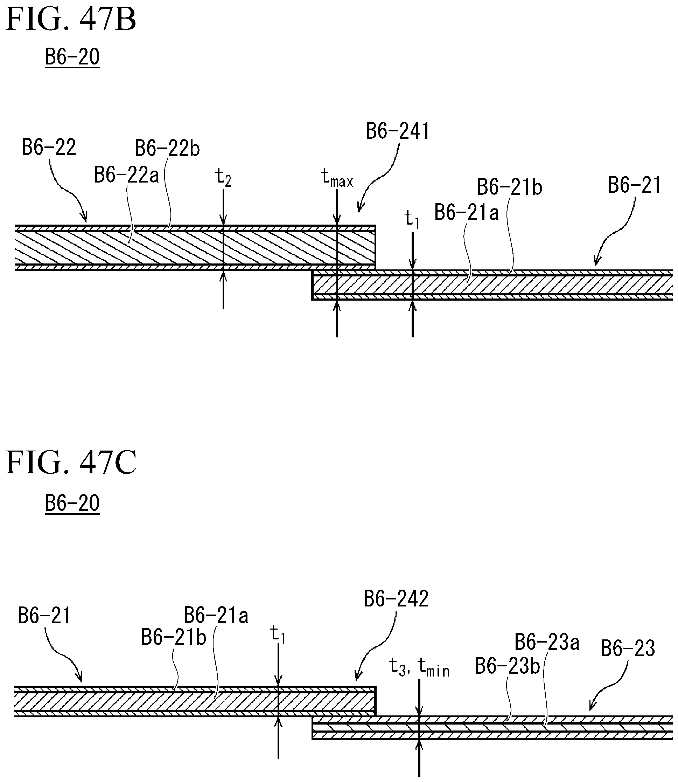

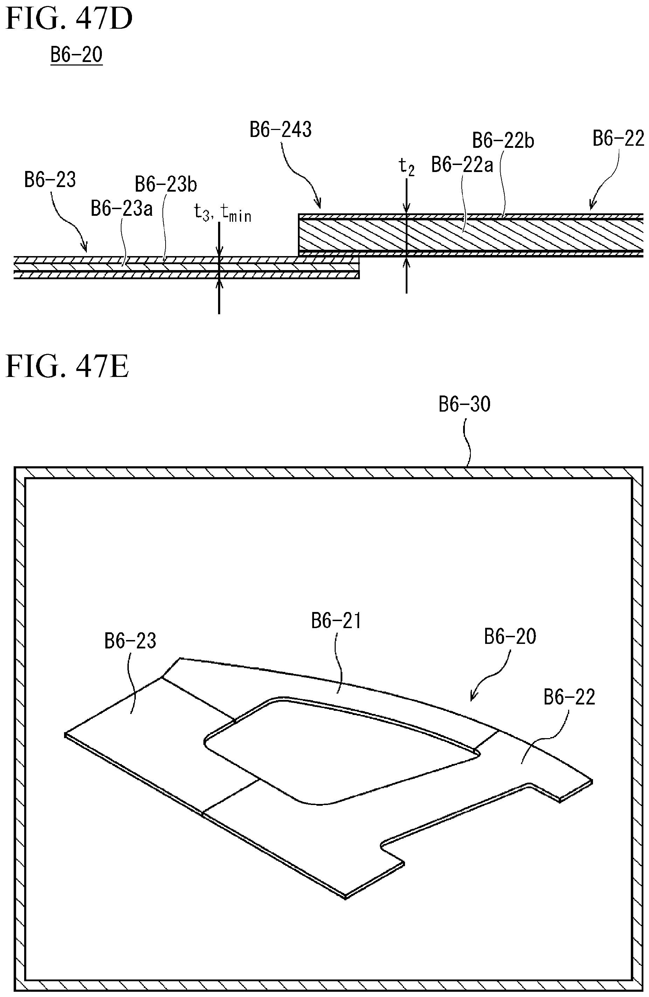

FIGS. 47B, 47C and 47D are cross-sectional views of the blank B6-20, showing junctures between the steel sheets B6-21, B6-22, and B6-23. FIGS. 47B, 47C, and 47D are cross-sectional views taken along lines IIIB-IIIB, IIIC-IIIC, and IIID-IIID in FIG. 47A, respectively. With reference to FIGS. 47B and 47C, the steel sheet B6-21 is overlaid on each of the steel sheets B6-22 and B6-23 and joined thereto. That is, an end part of the steel sheet B6-21 is overlaid on an end part of the steel sheet B6-22 and joined thereto, thereby forming an overlap part B6-241 with the end part of the steel sheet B6-22. Similarly, another end part of the steel sheet B6-21 is overlaid on an end part of the steel sheet B6-23 and joined thereto, thereby forming an overlap part B6-242 with the end part of the steel sheet B6-23. With reference to FIG. 47D, the steel sheet B6-22 is lap-joined not only to the steel sheet B6-21 but also to the steel sheet B6-23. An end part of the steel sheet B6-22 is overlaid on an end part of the steel sheet B6-23 and joined thereto, thereby forming an overlap part B6-243 with the end part of the steel sheet B6-23. The steel sheets B6-21, B6-22, and B6-23 are joined by spot welding or laser welding, for example.

With reference to FIGS. 47B to 47D, the steel sheet B6-21 has a sheet thickness t₁. The steel sheet B6-22 has a sheet thickness t₂. The steel sheet B6-23 has a sheet thickness t₃. In the example of this embodiment, the sheet thickness t₁ of the steel sheet B6-21 and the sheet thickness t₂ of the steel sheet B6-22 are larger than the sheet thickness t₃ of the steel sheet B6-23. Therefore, the overlap part B6-241 between the steel sheets B6-21 and B6-22 has the largest sheet thickness tₘₐₓ in the blank B6-20. The sheet thickness tₘₐₓ of the overlap part B6-241 is larger than the sheet thickness of the overlap part B6-242 between the steel sheets B6-21 and B6-23 and the sheet thickness of the overlap part B6-243 between the steel sheets B6-22 and B6-23. The sheet thickness t₃ of the steel sheet B6-23 is the smallest sheet thickness tₘᵢₙ among the multiple steel sheets B6-21, B6-22, and B6-23 included in the blank B6-20.

When the multiple steel sheets B6-21, B6-22, and B6-23 have different sheet thicknesses t₁, t₂, and t₃ as in this embodiment, the ratio between the largest sheet thickness tₘₐₓ and the smallest sheet thickness tₘᵢₙ in the blank B6-20: tₘₐₓ/tₘᵢₙ is more than 2.0. In this case, the largest sheet thickness tₘₐₓ and the smallest sheet thickness tₘᵢₙ satisfy a relation that tₘₐₓ/tₘᵢₙ ≤ 3.0, for example. The largest sheet thickness tₘₐₓ and the smallest sheet thickness tₘᵢₙ may satisfy a relation that tₘₐₓ/tₘᵢₙ ≥ 2.5. The largest sheet thickness tₘₐₓ is 4.2 mm or less, for example. The sheet thickness tₘₐₓ may be 1.6 mm or more.

Each of the steel sheets B6-21, B6-22, and B6-23 is a coated steel sheet, more specifically, an aluminum-coated steel sheet. The steel sheet B6-21 has a base steel sheet B6-21a and an aluminum-based coating layer B6-21b. The steel sheet B6-22 has a base steel sheet B6-22a and an aluminum-based coating layer B6-22b. The steel sheet B6-23 has a base steel sheet B6-23a and an aluminum-based coating layer B6-23b. The sheet thickness t₁ of the steel sheet B6-21 is the total sheet thickness of the base steel sheet B6-21a and the aluminum-based coating layer B6-21b and is a mean sheet thickness of the steel sheet B6-21. The sheet thickness t₂ of the steel sheet B6-22 is the total sheet thickness of the base steel sheet B6-22a and the aluminum-based coating layer B6-22b and is a mean sheet thickness of the steel sheet B6-22. The sheet thickness t₃ of the steel sheet B6-23 is the total sheet thickness of the base steel sheet B6-23a and the aluminum-based coating layer B6-23b and is a mean sheet thickness of the steel sheet B6-23.

In the steel sheet B6-21, the aluminum-based coating layer B6-21b covers both surfaces of the base steel sheet B6-21a. The aluminum-based coating layer B6-21b is provided over the whole or substantially the whole of both surfaces of the base steel sheet B6-21a. Similarly, in the steel sheet B6-22, the aluminum-based coating layer B6-22b covers both surfaces of the base steel sheet B6-22a. The aluminum-based coating layer B6-22b is provided over the whole or substantially the whole of both surfaces of the base steel sheet B6-22a. Furthermore, in the steel sheet B6-23, the aluminum-based coating layer B6-23b covers both surfaces of the base steel sheet B6-23a. The aluminum-based coating layer B6-23b is provided over the whole or substantially the whole of both surfaces of the base steel sheet B6-23a.

The chemical composition of the aluminum-based coating layers B6-21b, B6-22b, and B6-23b is not particularly limited. As the aluminum-based coating layers B6-21b, B6-22b, and B6-23b, a well-known aluminum-based coating layer (a coating layer primarily containing aluminum) can be used. Although this is not intended to be limited, the aluminum-based coating layers B6-21b, B6-22b, and B6-23b are Al-Si-based coating layers, for example. Each of the aluminum-based coating layers B6-21b, B6-22b, and B6-23b may be the same or different from the aluminum-based coating layers of the other steel sheets.

With reference to FIG. 47B, the steel sheets B6-21 and B6-22 form the overlap part B6-241 having the largest sheet thickness tₘₐₓ in the blank B6-20. A deposition amount W1 (g/m²) of the aluminum-based coating layer B6-21b of the steel sheet B6-21 is less than a deposition amount W3 (g/m²) of the aluminum-based coating layer B6-23b of the steel sheet B6-23 (FIGS. 47C and 47D). Furthermore, a deposition amount W2 (g/m²) of the aluminum-based coating layer B6-22b of the steel sheet B6-22 is also less than the deposition amount W3 of the aluminum-based coating layer B6-23b of the steel sheet B6-23.

In the steel sheet B6-21, the deposition amount W1 is the deposition amount of the aluminum-based coating layer B6-21b on both surfaces of the base steel sheet B6-21a, and a mean deposition amount on both surfaces of the base steel sheet B6-21a. Typically, the deposition amount (g/m²) of the aluminum-based coating layer B6-21b on one surface of the base steel sheet B6-21a is substantially equal to the deposition amount (g/m²) of the aluminum-based coating layer B6-21b on the other surface of the base steel sheet B6-21a. However, the deposition amount of the aluminum-based coating layer B6-21b may vary between the front and back surfaces of the base steel sheet B6-21a due to the production conditions, for example. The deposition amount of the aluminum-based coating layer B6-21b may be different between one surface and the other surface of the base steel sheet B6-21a. Similarly, in the steel sheet B6-22, the deposition amount W2 is the deposition amount of the aluminum-based coating layer B6-22b on both surfaces of the base steel sheet B6-22a, and a mean deposition amount on both surfaces of the base steel sheet B6-22a. Typically, the deposition amount (g/m²) of the aluminum-based coating layer B6-22b on one surface of the base steel sheet B6-22a is substantially equal to the deposition amount (g/m²) of the aluminum-based coating layer B6-22b on the other surface of the base steel sheet B6-22a. However, the deposition amount of the aluminum-based coating layer B6-22b may vary between the front and back surfaces of the base steel sheet B6-22a due to the production conditions, for example. The deposition amount of the aluminum-based coating layer B6-22b may be different between one surface and the other surface of the base steel sheet B6-22a. In the steel sheet B6-23, the deposition amount W3 is the deposition amount of the aluminum-based coating layer B6-23b on both surfaces of the base steel sheet B6-23a, and a mean deposition amount on both surfaces of the base steel sheet B6-23a. Typically, the deposition amount (g/m²) of the aluminum-based coating layer B6-23b on one surface of the base steel sheet B6-23a is substantially equal to the deposition amount (g/m²) of the aluminum-based coating layer B6-23b on the other surface of the base steel sheet B6-23a. However, the deposition amount of the aluminum-based coating layer B6-23b may vary between the front and back surfaces of the base steel sheet B6-23a due to the production conditions, for example. The deposition amount of the aluminum-based coating layer B6-23b may be different between one surface and the other surface of the base steel sheet B6-23a.

The deposition amount W1 of the aluminum-based coating layer B6-21b of the steel sheet B6-21 and the deposition amount W2 of the aluminum-based coating layer B6-22b of the steel sheet B6-22 are each 60g/m² or less, and preferably 50 g/m² or less. The deposition amounts W1 and W2 are each 10 g/m² or more, for example, and preferably 20 g/m² or more. The deposition amount W3 of the aluminum-based coating layer B6-23b of the steel sheet B6-23 is 20 g/m² or more and 120 g/m² or less, for example. W3 is preferably 30 g/m² or more, and more preferably 35 g/m² or more. However, the deposition amount W3 is more than the deposition amounts W1 and W2. The deposition amount W3 is preferably 115 g/m² or less, and more preferably 100 g/m² or less. The difference between the deposition amount W1 of the aluminum-based coating layer B6-21b of the steel sheet B6-21 and the deposition amount W3 of the aluminum-based coating layer B6-23b of the steel sheet B6-23: W3-W1 is 20 (g/m²) or more, for example. W3-W1 may be 80 (g/m²) or less. Similarly, the difference between the deposition amount W2 of the aluminum-based coating layer B6-22b of the steel sheet B6-22 and the deposition amount W3 of the aluminum-based coating layer B6-23b of the steel sheet B6-23: W3-W2 is 20 (g/m²) or more, for example. W3-W2 may be 80 (g/m²) or less.

Although the method of forming the aluminum-based coating layers B6-21b, B6-22b, and B6-23b on the base steel sheets B6-21a, B6-22a, and B6-23a, respectively, is not particularly limited, a common hot dipping process is used, for example. Specifically, the aluminum-coated steel sheet B6-21 having an adjusted deposition amount W1 of the aluminum-based coating layer B6-21b can be obtained by immersing the base steel sheet B6-21a in a molten aluminum coating bath and then performing gas wiping with nitrogen or atmosphere, for example. Similarly, the aluminum-coated steel sheet B6-22 having an adjusted deposition amount W2 of the aluminum-based coating layer B6-22b can be obtained by immersing the base steel sheet B6-22a in a molten aluminum coating bath and then performing gas wiping with nitrogen or atmosphere, for example. Furthermore, the aluminum-coated steel sheet B6-23 having an adjusted deposition amount W3 of the aluminum-based coating layer B6-23b can be obtained by immersing the base steel sheet B6-23a in a molten aluminum coating bath and then performing gas wiping with nitrogen or atmosphere, for example. When the aluminum-based coating layer is formed in the hot dipping process, an Al-Fe-based alloy layer is formed at the interface between the base steel sheet and the aluminum-based coating layer, as a result of the elution of Fe in the hot dipping process.

The method of measuring the deposition amounts W1, W2, and W3 of the aluminum-based coating layers B6-21b, B6-22b, and B6-23b may be the sodium hydroxide- hexamethylenetetramine and hydrochloric acid peel weigh measuring method described in JIS G 3314: 2019, for example. Specifically, according to JIS G 3314: 2019, five or more test specimens having a predetermined surface area S (mm²) (such as 50 mm × 50 mm) are taken from each of the steel sheets B6-21, B6-22, and B6-22 of the blank B6-20, and the weight w1 (g) of each test specimen is measured. Then, each test specimen is immersed in a sodium hydroxide solution, and after it is ascertained that the gasification due to the dissolution of the coating ends, the test specimen is removed from the sodium hydroxide solution and rinsed with water. Then, each test specimen still wet after the rinsing is immersed in a hydrochloric acid solution added with hexamethylenetetramine until the gasification due to the dissolution of the coating ends. Each test specimen removed from the hexamethylenetetramine-hydrochloric acid solution is rinsed with water and dried immediately, and the weight w2 (g) of the test specimen is measured again. The deposition amount W (g/m²) of the aluminum-based coating layer of each test specimen can be determined according to {(w1-w2)/S} × 10⁶. A mean value of the deposition amounts W of the five or more test specimens taken from each steel sheet is regarded as the deposition amount of the aluminum-based coating layer of the steel sheet.

However, when the test specimens taken from each of the steel sheets B6-21, B6-22, and B6-22 are small in size, the cross section of each of the aluminum-based coating layers B6-21b, B6-22b, and B6-23b may be observed with an optical microscope (area: 100 µm × 100 µm), the thickness (µm) of the coating layer may be measured in three visual fields, and a mean value of the thicknesses measured in the three visual fields may be multiplied by three and converted to the deposition amount. In this case, for each of the steel sheets B6-21, B6-22, and B6-22, the deposition amount is calculated for each surface of the base steel sheet, and a mean value of the calculated deposition amounts (mean value for both surfaces) is regarded as the deposition amount of the aluminum-based coating layer. When there is an Al-Fe-based alloy layer at the interface between the base steel sheet and the aluminum-based coating layer, the thickness of the aluminum-based coating layer includes the thickness of the Al-Fe-based alloy layer. The thicknesses of the aluminum-based coating layers B6-21b and B6-22b of the steel sheets B6-21 and B6-22 that form the overlap part B6-241 having the largest thickness are smaller than the thickness of the aluminum-based coating layer B6-23b of the other steel sheet B6-23. The thickness of the aluminum-based coating layer B6-21b of the steel sheet B6-21 may be equal to or different from the thickness of the aluminum-based coating layer B6-22b of the steel sheet B6-22.

### (Heating Step)

The prepared blank B6-20 is shaped into the structural member B6-10 (FIGS. 45 and 46) through hot stamping (hot press working). For the hot stamping, the blank B6-20 is subjected to the heating step. With reference to FIG. 47E, in the heating step, the blank B6-20 is heated in a heating furnace B6-30, for example. The multiple steel sheets B6-21, B6-22, and B6-23 included in the blank B6-20 are heated to an austenite transformation completion temperature (A_{c3} point) or higher. The steel sheets B6-21, B6-22, and B6-23 are heated to 900 °C or more, for example. In this way, the whole or substantially the whole of the microstructure of the steel sheets B6-21, B6-22, and B6-23 is transformed into the austenite phase.

### (Shaping Step)

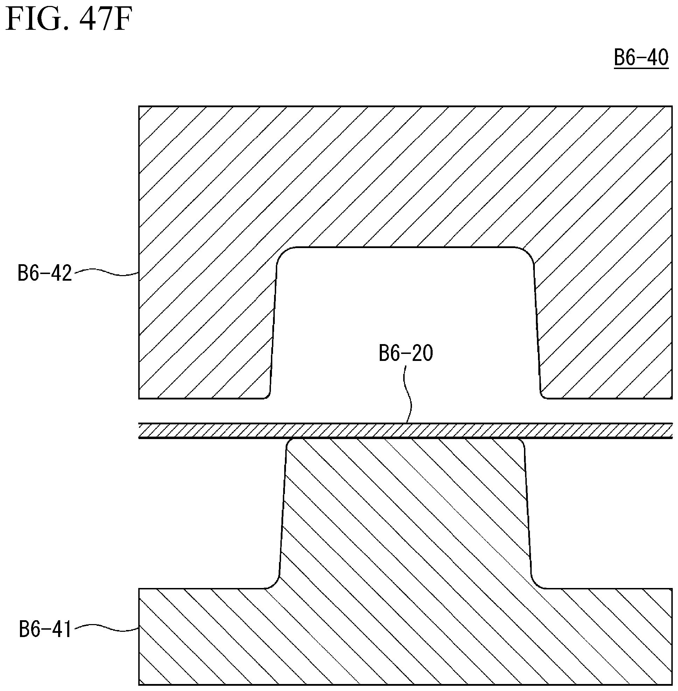

With reference to FIG. 47F, in the shaping step, using press tooling B6-40, the heated blank B6-20 is shaped into the structural member B6-10 having an annular shape in plan view (FIGS. 45 and 46) and quenched. The blank B6-20 heated in the heating step is removed from the heating furnace B6-30 (FIG. 47E) and conveyed to the press tooling B6-40. The press tooling B6-40 is attached to a well-known pressing device. The press tooling B6-40 includes a punch B6-41 and a die B6-42, for example. The blank B6-20 is placed between the punch B6-41 and the die B6-42.

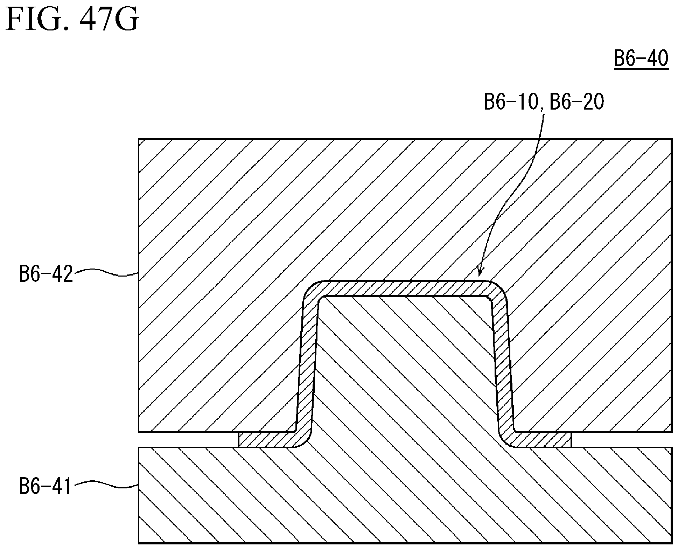

With reference to FIG. 47G, after the blank B6-20 is placed between the punch B6-41 and the die B6-42, the die B6-42 comes relatively closer to the punch B6-41. The blank B6-20 is sandwiched (pressed) between the punch B6-41 and the die B6-42 and formed into a shape conforming to the shaping surfaces of the punch B6-41 and the die B6-42. The blank B6-20 is kept sandwiched between the punch B6-41 and the die B6-42. The blank B6-20 is made to dissipate heat (rapid cooling) in the press tooling B6-40, and thereby the microstructure thereof is transformed into martensite. In this way, the structural member B6-10 can be produced from the blank B6-20.

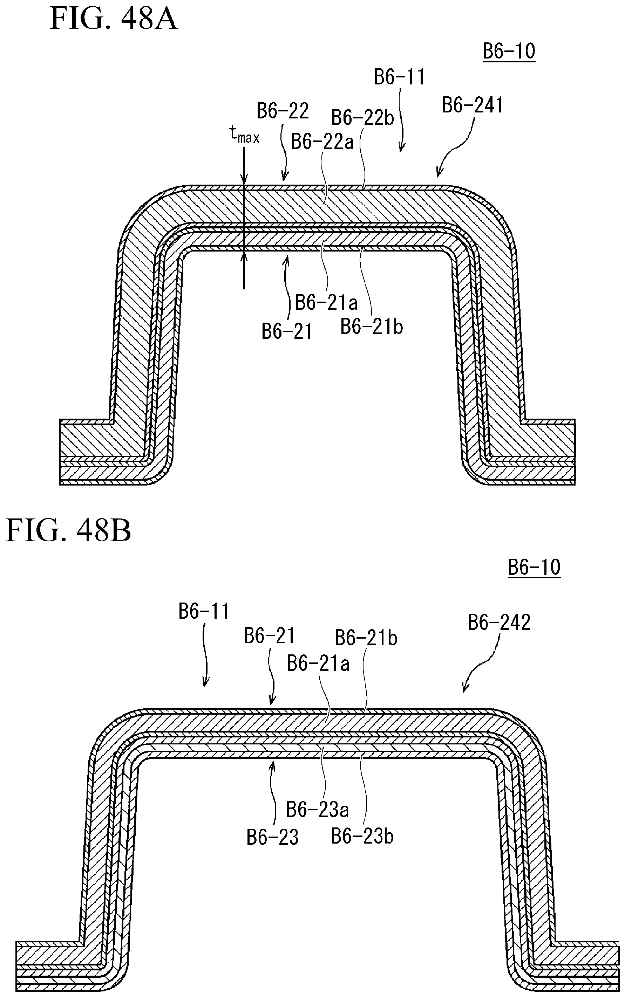

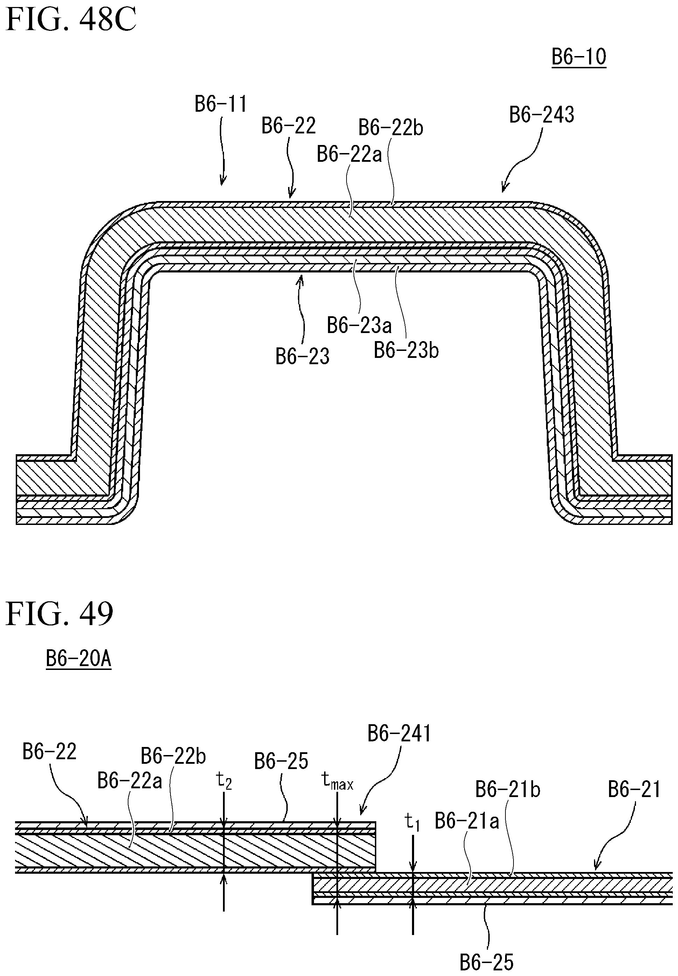

FIGS. 48A to 48C are cross-sectional views of the structural member B6-10 after hot stamping. FIG. 48A shows a cross section of the structural member B6-10 at the position of the overlap part B6-241 having the largest sheet thickness tₘₐₓ. FIGS.48B and 48C show cross sections of the structural member B6-10 at the positions of the other overlap parts B6-242 and B6-243.

With reference to FIG. 48A, also in the structural member B6-10 after the hot stamping, the steel sheet B6-21 is a coated steel sheet having the aluminum-based coating layers B6-21b on both surfaces of the base steel sheet B6-21a. Similarly, the steel sheet B6-22 is also a coated steel sheet having the aluminum-based coating layers B6-22b on both surfaces of the base steel sheet B6-22a. With reference to FIGS. 48B and 48C, in the structural member B6-10 after the hot stamping, the steel sheet B6-23 is a coated steel sheet having the aluminum-based coating layers B6-23b on both surfaces of the base steel sheet B6-23a. However, the aluminum-based coating layers B6-21b, B6-22b, and B6-23b in the structural member B6-10 are more alloyed with iron through the heating step than those in the blank B6-20 (FIGS. 47B to 47D).

With reference to FIGS. 48A to 48C, thicknesses K1 and K2 of the aluminum-based coating layers B6-21b and B6-22b of the steel sheets B6-21 and B6-22 that form the overlap part B6-241 having the largest thickness are each smaller than a thickness K3 of the aluminum-based coating layers B6-21b and B6-22b of the other steel sheet B6-23. In the steel sheet B6-21, the thickness K1 is a mean thickness of the aluminum-based coating layer B6-21b on both surfaces of the base steel sheet B6-21a. In the steel sheet B6-22, the thickness K2 is a mean thickness of the aluminum-based coating layer B6-22b on both surfaces of the base steel sheet B6-22a. In the steel sheet B6-23, the thickness K3 is a mean thickness of the aluminum-based coating layer B6-23b on both surfaces of the base steel sheet B6-23a. The difference between the thickness K1 of the aluminum-based coating layer B6-21b of the steel sheet B6-21 and the thickness K3 of the aluminum-based coating layer B6-23b of the steel sheet B6-23: K3-K1 is 7 (µm) or more, for example. K3-K1 may be 33 (µm) or less. Similarly, the difference between the thickness K2 of the aluminum-based coating layer B6-22b of the steel sheet B6-22 and the thickness K3 of the aluminum-based coating layer B6-23b of the steel sheet B6-23: K3-K2 is 7 (µm) or more, for example. K3-K2 may be 33 (µm) or less. The thickness K1 of the aluminum-based coating layer B6-21b of the steel sheet B6-21 may be equal to or different from the thickness K2 of the aluminum-based coating layer B6-22b of the steel sheet B6-22.

The thicknesses K1, K2, and K3 of the aluminum-based coating layers B6-21b, B6-22b, and B6-23b of the structural member B6-10 can be measured as follows. That is, an automobile body part is disassembled to obtain the annular structural member B6-10, and an analysis specimen is obtained from the structural member B6-10 by laser cutting, for example. For example, an analysis specimen is obtained from each of the multiple steel sheets included in the structural member B6-10. The analysis specimen is taken from a center part or a vicinity thereof of the top plate of each of the steel sheets having an open cross section. For the test specimen taken from each of the multiple steel sheets, the cut surface of the aluminum-based coating layer is etched with nital and then observed with an optical microscope (area: 100 µm × 100 µm), the thickness of the coating layer is measured in three visual fields, and a mean value of the thicknesses of the coating layer measured in the three visual fields can be regarded as the coating thickness. In the outermost layer of the structural member B6-10, there is often an electrodeposition film or the like, for example. In such a case, the coating layer that exists under the electrodeposition film layer and on the base steel sheet is observed.

With reference to FIG. 48A, in the structural member B6-10, the overlap part B6-241 having the largest sheet thickness tₘₐₓ is the juncture between the adjacent two steel sheets B6-21 and B6-22. Provided that a maximum value and a minimum value of the Vickers hardness of the steel sheet on the front surface side of the member main body B6-11 among the steel sheets B6-21 and B6-22 forming the overlap part B6-241 are HVₘₐₓ and HVₘᵢₙ, respectively, HVₘₐₓ-HVₘᵢₙ is 30% or less of HVₘₐₓ. In the production method according to this embodiment, after the steel sheets B6-21 and B6-22 having a relatively thinner coating are joined to each other to form the overlap part B6-241, the steel sheets B6-21 and B6-22 are subjected to hot stamping. In the overlap part B6-241 after the hot stamping, the maximum value HVₘₐₓ and the minimum value HVₘᵢₙ of the Vickers hardness of at least the steel sheet disposed on the front surface side of the member main body B6-11 among the steel sheets B6-21 and B6-22 satisfy a relation that HVₘₐₓ-HVₘᵢₙ ≤ HVₘₐₓ × 30%. In this embodiment, the steel sheet B6-22, not the steel sheet B6-21, is disposed on the front surface side (outer side) of the member main body B6-11. However, the steel sheet B6-21, rather than the steel sheet B6-22, may be disposed on the front surface side (outer side) of the member main body B6-11.

The maximum value HVₘₐₓ and the minimum value HVₘᵢₙ of the Vickers hardness of the overlap part B6-241 can be measured as follows. First, a test specimen is taken from the structural member B6-10 by laser cutting, the test specimen including a cut surface of the steel sheet located on the front surface side of the member main body B6-11 among the steel sheets B6-21 and B6-22 forming the overlap part B6-241. According to JIS Z 2244: 2020, the cut surface of the steel sheet (base steel sheet) is adjusted as a test surface, and the Vickers hardness test is performed for thirty arbitrary points in the test surface that are distant from each other by the total sheet thickness of the overlap part B6-241 or more under conditions that the test force is 10 kgf (98.07 N) and the retention time of the test force is 10 s. Among the thirty Vickers hardnesses (HV) obtained in this way, the maximum Vickers hardness can be used as HVₘₐₓ, and the minimum Vickers hardness can be used as HVₘᵢₙ.

With reference to FIG. 48B, in the structural member B6-10, the overlap part B6-242 is the juncture between the adjacent two steel sheets B6-21 and B6-23. With reference to FIG. 48C, the overlap part B6-243 is the juncture between the adjacent two steel sheets B6-22 and B6-23. As with the overlap part B6-241 having the largest thickness, provided that in each of the overlap parts B6-242 and B6-243, the maximum value and the minimum value of the Vickers hardness are HVₘₐₓ and HVₘᵢₙ, respectively, HVₘₐₓ-HVₘᵢₙ is 30% or less of HVₘₐₓ, for example. In the production method according to this embodiment, after the overlap part B6-242 is formed, the steel sheets B6-21 and B6-23 are subjected to hot stamping, and after the overlap part B6-243 is formed, the steel sheets B6-22 and B6-23 are subjected to hot stamping. In the overlap parts B6-242 and B6-243 after the hot stamping, the maximum value HVₘₐₓ and the minimum value HVₘᵢₙ of the Vickers hardness satisfy a relation that HVₘₐₓ-HVₘᵢₙ ≤ HVₘₐₓ × 30%.

The maximum value HVₘₐₓ and the minimum value Hvₘᵢₙ of the Vickers hardness of the overlap part B6-242 are measured on the steel sheet located on the front surface side of the member main body B6-11 among the steel sheets B6-21 and B6-23 in the overlap part B6-242. The maximum value HVₘₐₓ and the minimum value HVₘᵢₙ of the Vickers hardness of the overlap part B6-243 are measured on the steel sheet located on the front surface side of the member main body B6-11 among the steel sheets B6-22 and B6-23 in the overlap part B6-243. The maximum value HVₘₐₓ and the minimum value HVₘᵢₙ of the Vickers hardness of the overlap parts B6-242 and B6-243 can be measured in the same manner as the overlap part B6-241.

After the shaping step (hot stamping), the steel sheets B6-21, B6-22, and B6-23 can have a tensile strength of 0.5 GPa or more, for example, and preferably have a tensile strength of 1.0 GPa or more. At least one of the steel sheets B6-21, B6-22, and B6-23 may have a tensile strength of 1.5 GPa or more after the shaping step. The tensile strength of each of the steel sheets B6-21, B6-22, and B6-23 may be the same as or different from the tensile strengths of the other steel sheets.

### [Effects]

When the blank B6-20 is heated for hot stamping, in the steel sheets B6-21, B6-22, and B6-23, iron is diffused from the base steel sheets B6-21a, B6-22a, and B6-23a into the aluminum-based coating layers B6-21b, B6-22b, and B6-23b to form a diffusion layer. The diffusion layer increases in thickness as the heating time of the blank B6-20 increases, and the corrosion resistance or weldability owing to the aluminum-based coating layers B6-21b, B6-22b, and B6-23b of the steel sheets B6-21, B6-22 and B6-23 may deteriorate. In order to ensure the corrosion resistance and the weldability of the steel sheets B6-21, B6-22, and B6-23, the thickness of the diffusion layer is preferably kept to a predetermined value or less. For example, when the steel sheets B6-21, B6-22, and B6-23 are heavy-coating aluminum-coated steel sheets having a base weight: approximately 50 to 80 g/m², the thickness of the diffusion layer is preferably 15 µm or less. Furthermore, when the steel sheets B6-21, B6-22, and B6-23 are light-coating aluminum-coated steel sheets having a base weight: approximately 40 to 50 g/m², for example, the thickness of the diffusion layer is preferably 10 µm or less. With the blank B6-20 according to this embodiment, the deposition amounts W1 and W2 of the aluminum-based coating layers B6-21b and B6-22b on the base steel sheets B6-21a and B6-22a of the steel sheets B6-21 and B6-22 forming the overlap part B6-241 having the largest sheet thickness tₘₐₓ are less than the deposition amount W3 of the aluminum-based coating layer B6-23b on the base steel sheet B6-21a of the other steel sheet B6-23. The deposition amounts W1 and W2 are 60 g/m² or less. As a result, when the blank B6-20 is heated for hot stamping, the heating rate of the overlap part B6-241 can be increased, and the heating time of the overlap part B6-241 can be reduced. Specifically, since the aluminum-based coating layers B6-21b and B6-22b in the surface layers of the steel sheets B6-21 and B6-22 are as thin as 60 g/m² or less in terms of deposition amount, when the blank B6-20 is heated, alloying of the aluminum-based coating layers B6-21b and B6-22b with iron contained in the base steel sheets B6-21a and B6-22a quickly proceeds to the surfaces of the steel sheets B6-21 and B6-22, and both surfaces of the steel sheets B6-21 and B6-22 including the overlap part B6-241 relatively quickly change color to black or a color close to black. Therefore, the heating of the overlap part B6-241 can be accelerated, and the heating time of the overlap part B6-241 can be reduced. Therefore, the heating of the blank B6-20 can be ended before the alloying of the aluminum-based coating layers B6-21b, B6-22b, and B6-23b of the steel sheets B6-21, B6-22, and B6-23 excessively proceed, and the diffusion layer grows over the predetermined thickness. As a result, the strength of the overlap part B6-241 having the largest sheet thickness tₘₐₓ can be ensured by the hot stamping, and the corrosion resistance (rust resistance) of the steel sheets B6-21, B6-22, and B6-23 can be ensured. In addition, by keeping the thickness of the diffusion layer small, the weldability of the steel sheets B6-21, B6-22, and B6-23 is likely to be ensured.

With the blank B6-20 according to this embodiment, as described above, the heating rate of the overlap part B6-241 having the largest sheet thickness tₘₐₓ can be increased. Therefore, the whole of the blank B6-20 can be heated to a temperature required for hot stamping before the alloying of the aluminum-based coating layers B6-21b, B6-22b, and B6-23b of the steel sheets B6-21, B6-22, and B6-23 excessively proceeds, and a process window of the heating condition in the production of the structural member B6-10 can be ensured. Therefore, the structural member B6-10 that combines the strength of the overlap part B6-241 having the largest sheet thickness tₘₐₓ and the rust resistance function of the steel sheets B6-21, B6-22, and B6-23 can be produced. In addition, by increasing the heating rate of the overlap part B6-241, the heating time of the blank B6-20 can be reduced, and therefore, the productivity of the structural member B6-10 can be improved. In addition, since the heating time of the blank B6-20 is reduced, the energy consumption in the production of the structural member B6-10 can be reduced, and the emissions of the greenhouse effect gas during heating can be reduced.

In this embodiment, the deposition amount W3 of the aluminum-based coating layer B6-23b in the steel sheet B6-23 is more than the deposition amounts in the steel sheets B6-21 and B6-22 forming the thickest overlap part B6-241. That is, the steel sheet B6-23 has a higher rust resistance performance than the steel sheets B6-21 and B6-22. The steel sheet B6-23 is typically disposed in a part of the structural member B6-10 that requires a relatively high rust resistance performance. In this way, the rust resistance performance required for the annular structural member B6-10 can be ensured.

In this embodiment, the deposition amounts W1 and W2 of the aluminum-based coating layers B6-21b and B6-22b of the steel sheets B6-21 and B6-22 may be the same or different. However, from the viewpoint of uniformly heating the blank B6-20, the deposition amount W1 of the aluminum-based coating layer B6-21b of the steel sheet B6-21 is preferably substantially equal to the deposition amount W2 of the aluminum-based coating layer B6-22b of the steel sheet B6-22.

In this embodiment, in the heating step, the steel sheet B6-23 having the smallest sheet thickness tₘᵢₙ in the blank B6-20 first reaches a temperature in the austenite zone, and then the other parts reach the temperature in the austenite zone in ascending order of the sheet thickness. The overlap part B6-241 having the largest sheet thickness tₘₐₓ is the last part that reaches the temperature in the austenite zone. When the steel sheets B6-21, B6-22, and B6-23 included in the blank B6-20 have different sheet thicknesses as in this embodiment, if the smallest sheet thickness tₘᵢₙ and the largest sheet thickness tₘₐₓ are excessively different, the heating of the overlap part B6-241 having the largest sheet thickness tₘₐₓ is substantially delayed compared with the steel sheet B6-23 having the sheet thickness tₘᵢₙ, and the process window of the heating condition may be unable to be ensured. In view of this, the ratio of the largest sheet thickness tₘₐₓ to the smallest sheet thickness tₘᵢₙ: tₘₐₓ/tₘᵢₙ is preferably 3.0 or less. In this way, even if the steel sheets B6-21, B6-22, and B6-23 have different sheet thicknesses, the overlap part B6-241 can be heated enough for the phase transformation to austenite to complete, before alloying of the aluminum-based coating layer B6-23b of the thinnest steel sheet B6-23 proceeds and the corrosion resistance thereof is lost. Therefore, a process window is likely to be ensured in production of the structural member B6-10.

### <Second Embodiment>

FIG. 49 is a cross-sectional view of a blank B6-20A according to a second embodiment. FIG. 49 shows an overlap part B6-241 formed by steel sheets B6-21 and B6-22. The blank B6-20A according to this embodiment differs from the blank B6-20 according to the first embodiment in that the overlap part B6-241 having the largest sheet thickness tₘₐₓ is provided with a film B6-25.

The surface of each of the steel sheets B6-21 and B6-22 that is located on the outer side of the overlap part B6-241 is coated with the film B6-25. With the steel sheet B6-21, the whole of the surface opposite to the other steel sheet B6-22 is coated with the film B6-25. With the steel sheet B6-22, the whole of the surface opposite to the other steel sheet B6-21 is coated with the film B6-25. That is, the surfaces of the steel sheets B6-21 and B6-22 that form the front and back surfaces of the overlap part B6-241 are each coated with the film B6-25.

The film B6-25 is a film that is substantially black in color. For example, when the lightness L^{*} value of the surface of the film B6-25 (CIE 1976 lightness index L^{*} defined in JIS Z8781-4: 2013) is 60 or less, the film B6-25 can be determined to be black in color. The film B6-25 may be a surface-treated carbon-based film (a film containing carbon (C)).

As the film B6-25, for example, a surface-treated film described in International Application Publication No. WO2022/215229 can be used. Specifically, the film B6-25 may contain carbon black, for example. The film B6-25 may further contain a metal oxide. The metal oxide is one or more oxides selected from among the group consisting of Zr oxide, Zn oxide, and Ti oxide, for example. The film B6-25 may contain silica.

The film B6-25 may contain graphite, soot, or the like, instead of or in addition to carbon black. Alternatively, in order to increase the emissivity of the steel sheet B6-21, the film B6-25 may contain an acicular compound having a hexagonal crystal structure having an aspect ratio of 4 or more and 50 or less, for example. The compound having a hexagonal crystal structure is typically graphite (C). However, the compound may be lanthanum silicate, magnesium diboride, beryllium oxide (beryllia), zinc oxide, β-quartz, millerite (NiS), wurtzite (ZnS), or the like.

The thickness of the film B6-25 is 0.5 µm or more and 5.0 µm or less, for example. The thickness of the film B6-25 is preferably 1.0 µm or more and 3.0 µm or less. The thickness of the film B6-25 is small enough to be negligible compared with the sheet thickness of each of the steel sheets B6-21, B6-22, and B6-23. Therefore, the measured sheet thickness including the thickness of the film B6-25 can be treated as the sheet thickness tₘₐₓ of the overlap part B6-241.

In this embodiment, since the surface of each of the steel sheets B6-21 and B6-22 that is located on the outer side of the overlap part B6-241 is provided with the film B6-25 that is substantially black in color, the emissivity of both outer surfaces of the overlap part B6-241 can be increased. For example, in each of the steel sheets B6-21 and B6-22, the surface coated with the film B6-25 has an emissivity of 60% or more at a measurement temperature of 25 °C and a wavelength of 8.0 µm. As a result of being provided with the film B6-25, the surfaces of the steel sheets B6-21 and B6-22 that are located on the outer side of the overlap part B6-241 have an emissivity of more than 5%, preferably more than 10%, or more preferably more than 20% than the emissivity of the other steel sheet that is not provided with the film B6-25 at a temperature of 25 °C and a wavelength of 8.0 µm, for example. By increasing the emissivity of the overlap part B6-241 in advance in this way, the heating of the overlap part B6-241 can be accelerated when the blank B6-20A is heated for hot stamping. Therefore, even when the overlap part B6-241 having the largest sheet thickness tₘₐₓ and the steel sheet B6-23 having the smallest sheet thickness tₘᵢₙ (FIGS. 40C and 40D) in the blank B6-20A have more significantly different sheet thicknesses, a process window of the heating condition is likely to be ensured.

With the blank B6-20 according to this embodiment, the ratio between the largest sheet thickness tₘₐₓ and the smallest sheet thickness tₘᵢₙ: tₘₐₓ/tₘᵢₙ is 2.5 or more, for example. tₘₐₓ/tₘᵢₙ may be more than 3.0. In this embodiment, since the emissivity of the overlap part B6-241 is increased in advance by the film B6-25 that is substantially black in color, the heating of the overlap part B6-241 is more accelerated when the blank B6-20A is heated for hot stamping. Therefore, even when tₘₐₓ/tₘᵢₙ is high, for example, even when tₘₐₓ/tₘᵢₙ is more than 3.0, the heating of the overlap part B6-241, which is the thickest, is likely to be ended before alloying of the aluminum-based coating layer B6-23b of the thinnest steel sheet B6-23 (FIGS. 47C and 47D) excessively proceeds, and a process window of the heating condition can be ensured. From the viewpoint of ensuring a process window of the heating condition with higher reliability, the largest sheet thickness tₘₐₓ and the smallest sheet thickness tₘᵢₙ of the blank B6-20A preferably satisfy a relation that tₘₐₓ/tₘᵢₙ ≤ 4.0.

In the example in FIG. 49, the surface of each of the steel sheets B6-21 and B6-22 that is located on the outer side of the overlap part B6-241 is coated with the film B6-25 that is substantially black in color. However, it is also possible that the surface of one of the steel sheets B6-21 and B6-22 that is located on the outer side of the overlap part B6-241 is coated with the film B6-25, and the surface of the other of the steel sheets B6-21 and B6-22 that is located on the outer side of the overlap part B6-241 is not coated with the film B6-25. Furthermore, in the example shown in FIG. 49, the surface of each of the steel sheets B6-21 and B6-22 that is located on the inner side of the overlap part B6-241 is not coated with the film B6-25 that is substantially black in color. However, the surface of each of the steel sheets B6-21 and B6-22 that is located on the inner side of the overlap part B6-241 may also be coated with the film B6-25. However, from the viewpoint of making heating of the blank B6-20A uniform for hot stamping, it is preferable that the surface of each of the steel sheets B6-21 and B6-22 that is located on the outer side of the overlap part B6-241 is coated with the film B6-25, and the surface located on the inner side of the overlap part B6-241 is not coated with the film B6-25.

Although embodiments of the present disclosure have been described above, the present disclosure is not limited to the embodiments described above, and various modifications can be made without departing from the spirit of the present disclosure.

With the blanks B6-20 and B6-20A according to the embodiments described above, in both the steel sheets B6-21 and B6-22 forming the overlap part B6-241 having the largest sheet thickness tₘₐₓ, the deposition amounts W1 and W2 of the aluminum-based coating layers B6-21b and B6-22b are 60 g/m² or less and are less than the deposition amount W3 of the aluminum-based coating layer B6-23b of the other steel sheet B6-23. However, in the blanks B6-20 and B6-20A, the deposition amount of the aluminum-based coating layer of only at least one of the steel sheets B6-21 and B6-22 has to be 60 g/m² or less and less than the deposition amount W3 of the aluminum-based coating layer B6-23b of the other steel sheet B6-23. For example, when the deposition amount W1 of the aluminum-based coating layer B6-21b of the steel sheet B6-21 is 60 g/m² or less, the deposition amount W2 of the aluminum-based coating layer B6-22b of the steel sheet B6-22 may be more than 60 g/m². In that case, the deposition amount W2 may be equal to or more than the deposition amount W3 of the aluminum-based coating layer B6-23b of the steel sheet B6-23. Similarly, when the deposition amount W2 of the aluminum-based coating layer B6-22b of the steel sheet B6-22 is 60 g/m² or less, the deposition amount W1 of the aluminum-based coating layer B6-21b of the steel sheet B6-21 may be more than 60 g/m². In that case, the deposition amount W1 may be equal to or more than the deposition amount W3 of the aluminum-based coating layer B6-23b of the steel sheet B6-23.

With the structural members B6-10 and B6-10A according to the embodiments described above, in both the steel sheets B6-21 and B6-22 forming the overlap part B6-241 having the largest sheet thickness tₘₐₓ, the thicknesses K1 and K2 of the aluminum-based coating layers B6-21b and B6-22b are less than the thickness K3 of the aluminum-based coating layers B6-21b and B6-22b of the other steel sheet B6-23. However, in the structural members B6-10 and B6-10A, the thickness of the aluminum-based coating layer of only at least one of the steel sheets B6-21 and B6-22 has to be less than the thickness K3 of the aluminum-based coating layer B6-23b of the other steel sheet B6-23. For example, when the thickness K1 of the aluminum-based coating layer B6-21b of the steel sheet B6-21 is less than the thickness K3 of the aluminum-based coating layer B6-23b of the steel sheet B6-23, the thickness K2 of the aluminum-based coating layer B6-22b of the steel sheet B6-22 may be equal to or more than the thickness K3 of the aluminum-based coating layer B6-23b of the steel sheet B6-23. Similarly, when the thickness K2 of the aluminum-based coating layer B6-22b of the steel sheet B6-22 is less than the thickness K3 of the aluminum-based coating layer B6-23b of the steel sheet B6-23, the thickness K1 of the aluminum-based coating layer B6-21b of the steel sheet B6-21 may be equal to or more than the thickness K3 of the aluminum-based coating layer B6-23b of the steel sheet B6-23.

In the embodiments described above, both the steel sheets B6-21 and B6-22 forming the overlap part B6-241 having the largest sheet thickness tₘₐₓ are aluminum-coated steel sheets. That is, the steel sheets B6-21 and B6-22 have the base steel sheets B6-21a and B6-22a and the aluminum-based coating layers B6-21b and B6-22b, respectively. However, only at least one of the steel sheets B6-21 and B6-22 has to be a coated steel sheet having a base steel sheet and an aluminum-based coating layer. In other words, any one of the steel sheets B6-21 and B6-22 need not be an aluminum-coated steel sheet. When one of the steel sheets B6-21 and B6-22 is an aluminum-coated steel sheet, the other of the steel sheets B6-21 and B6-22 may be a zinc-coated steel sheet, for example.

With the blanks B6-20 and B6-20A according to the embodiments described above, end parts of the steel sheets B6-21 and B6-22 are lap-joined to form the overlap part B6-241. Similarly, end parts of the steel sheets B6-21 and B6-23 are lap-joined to form the overlap part B6-242. Furthermore, end parts of the steel sheets B6-22 and B6-23 are lap-joined to form the overlap part B6-243. However, the blanks B6-20 and B6-20A have only to include at least one overlap part. That is, the steel sheet B6-23 need not be lap-joined to the steel sheets B6-21 and B6-22. The steel sheet B6-23 may be butt-joined to one or both of the steel sheets B6-21 and B6-22.

In the embodiments described above, the steel sheets B6-21, B6-22, and B6-23 included in the blank B6-20 or the blank B6-20A may be single-layer or multilayer. That is, each of the steel sheets B6-21, B6-22, and B6-23 may be a single steel sheet, or a sheet material formed by multiple steel sheets overlaid on one another.

In the embodiments described above, the blanks B6-20 and B6-20A each include three steel sheets B6-21, B6-22, and B6-23. However, the number of steel sheets included in the blanks B6-20 and B6-20A is not limited to this. The blank B6-20 or B6-20A may include four or more steel sheets. When the blank B6-20 or B6-20A includes four or more steel sheets, the steel sheets other than the steel sheets B6-21, B6-22, and B6-23 may be aluminum-coated steel sheets, other coated steel sheets or steel sheets with no coating layers (bare materials). When the steel sheets other than the steel sheets B6-21, B6-22, and B6-23 are coated steel sheets, the deposition amount of the coating layer in the steel sheets may be equal to or different from any of the deposition amounts W1, W2, and W3 of the aluminum-based coating layers B6-21b, B6-22b, and B6-23b of the steel sheets B6-21, B6-22, and B6-23.

With the blanks B6-20 and B6-20A according to the embodiments described above, the steel sheet B6-23 that does not form the overlap part B6-241 having the largest sheet thickness tₘₐₓ has the smallest sheet thickness tₘᵢₙ. However, one or both of the steel sheets B6-21 and B6-22 that form the overlap part B6-241 having the largest sheet thickness tₘₐₓ may be steel sheets that have the smallest sheet thickness tₘᵢₙ in the annular blanks B6-20 and B6-20A. Alternatively, when the blank B6-20 or B6-20A includes four or more steel sheets, a steel sheet other than the steel sheets B6-21, B6-22, and B6-23 may have the smallest sheet thickness tₘᵢₙ.

In the embodiments described above, the blanks B6-20 and B6-20A have only one overlap part B6-241 having the largest sheet thickness tₘₐₓ. However, the blank B6-20 or B6-20A may have multiple overlap parts having the largest sheet thickness tₘₐₓ. In that case, for all the overlap parts having the largest sheet thickness tₘₐₓ, the deposition amount of the aluminum-based coating layer of at least one of the two steel sheets forming the overlap part is preferably 60 g/m² or less.

With the blanks B6-20 and B6-20A according to the embodiments described above, the multiple steel sheets B6-21, B6-22, and B6-23 have different sheet thicknesses. However, among the three or more steel sheets included in each of the blanks B6-20 and B6-20A, two or more steel sheets may have the same sheet thickness, or all the steel sheets may have the same sheet thickness. When all the steel sheets included in the blanks B6-20 and B6-20A have the same sheet thickness, tₘₐₓ/tₘᵢₙ is 2.0.

In the embodiments described above, the press tooling B6-40 used for hot stamping of the blank B6-20 includes the punch B6-41 and the die B6-42. However, the configuration of the press tooling B6-40 is not limited to the example described in the above embodiments. The press tooling B6-40 may further include a pad or a blank holder, for example.

In the embodiments described above, the member main body 11 of the structural member B6-10 includes the front pillar B6-111, the center pillar B6-112, and the rocker B6-113. However, the member main body B6-11 may further include another component. For example, as shown in FIG. 42, the member main body B6-11 may further include a rear pillar B6-114. The rear pillar B6-114 may include a curved part 114a that is convexly curved outward of the member main body B6-11 in plan view of the structural member B6-10. In the example in FIG. 42, the curved part B6-114a is disposed in an upper part (upper rear pillar part) of the rear pillar B6-114. The structural members B6-10 according to the embodiments described above are door ring parts (single door ring parts) having a single ring shape. On the other hand, the structural member shown in FIG. 42 is a door ring part (double door ring part) having a double ring shape. When producing the double door ring part, the blank used as the starting material also has the double ring shape.

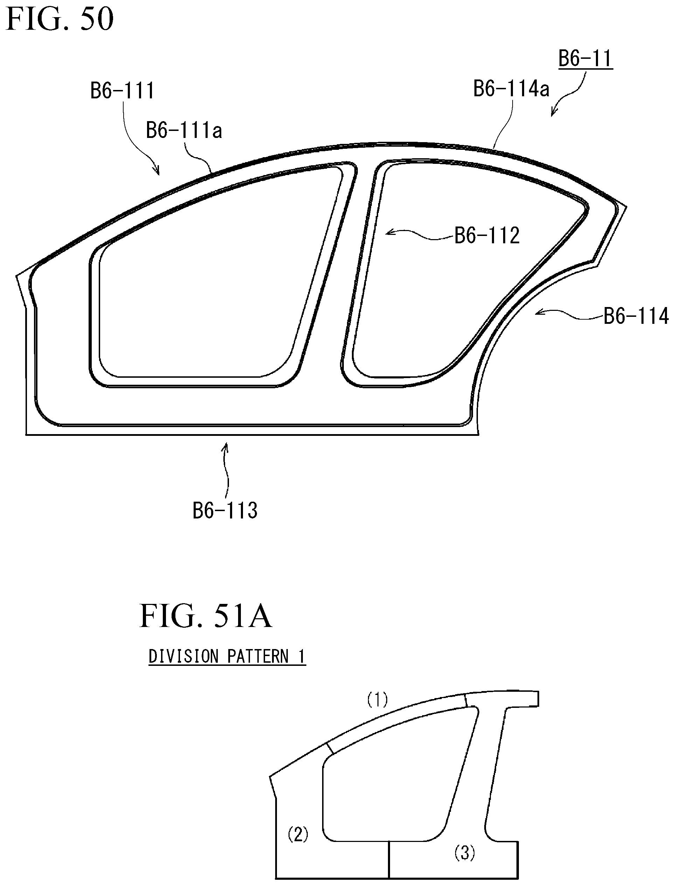

In the structural member B6-10 according to the first embodiment described above, the steel sheet B6-21 having a relatively small deposition amount of the aluminum-based coating layer B6-21b is arranged in the curved part B6-111a of the front pillar B6-111. However, the steel sheet B6-22 that forms the overlap part B6-241 with the steel sheet B6-21 may be arranged in the curved part B6-111a. In the case of the structural member shown in FIG. 50, at least one of the steel sheets B6-21 and B6-22 may be arranged in the curved part B6-114a of the rear pillar B6-114. In the door ring part, the curved parts 111a and 114a are parts that are required to have relatively low rust resistance performance. The thin-coated steel sheets B6-21 and/or B6-22 are inferior in rust resistance performance to the thick-coated steel sheet and therefore are preferably arranged in the curved part B6-111a or B6-114a that is not required to have high rust resistance performance. However, the positions of the steel sheets B6-21 and B6-22 are not limited to this. The steel sheets B6-21 and B6-22 may be arranged in a lower part (lower front pillar part) of the front pillar B6-111, a lower part (lower front pillar part) of the rear pillar B6-114, or the center pillar B6-112.

### (EXAMPLES)

In the following, the present disclosure will be described in more detail with reference to examples. However, the present disclosure is not limited to the examples described below.

### [First Example]

In order to check the effects of the present disclosure, using commercially available software (AUTOFORM R. 10 available from AUTOFORM), CAE analysis of the press forming (hot stamping) of structural members that were single door ring parts was performed for different types (types of starting materials) and sheet thicknesses of steel sheets included in the structural members and different division patterns of the structural members.

Table 42 shows the steel sheets used in this analysis.

**[Table 42]**

| Symbol | Type of starting material | Base material | Plating amount on one side, g/m² |
|---|---|---|---|
| A120 | Al-Si 1.5G HS | Steel sheet for 1.5 GPa class hot stamping | 120 |
| A80 | Al-Si 1.5G HS | Steel sheet for 1.5 GPa class hot stamping | 80 |
| A80-1 | Black film (one side) Al-Si 1.5G HS | Steel sheet for 1.5 GPa class hot stamping | 80 |
| A60 | Al-Si 1.5G HS | Steel sheet for 1.5 GPa class hot stamping | 60 |
| A50 | Al-Si 1.5G HS | Steel sheet for 1.5 GPa class hot stamping | 50 |
| A40 | Al-Si 1.5G HS | Steel sheet for 1.5 GPa class hot stamping | 40 |
| A40-1 | Black film (one side) Al-Si 1.5G HS | Steel sheet for 1.5 GPa class hot stamping | 40 |
| A60-G | GA 1.5G HS | Steel sheet for 1.5 GPa class hot stamping | 60 |
| B120 | Al-Si 2.0G HS | Steel sheet for 2.0 GPa class hot stamping | 120 |
| B80 | Al-Si 2.0G HS | Steel sheet for 2.0 GPa class hot stamping | 80 |
| B60 | Al-Si 2.0G HS | Steel sheet for 2.0 GPa class hot stamping | 60 |
| B40 | Al-Si 2.0G HS | Steel sheet for 2.0 GPa class hot stamping | 40 |
| B40-1 | Black film (one side) Al-Si 2.0G HS | Steel sheet for 2.0 GPa class hot stamping | 40 |
| B60-G | GA 2.0G HS | Steel sheet for 2.0 GPa class hot stamping | 60 |
| C80 | Al-Si 2.5G HS | Steel sheet for 2.5 GPa class hot stamping | 80 |
| C40 | Al-Si 2.5G HS | Steel sheet for 2.5 GPa class hot stamping | 40 |
| C40-1 | Black film (one side) Al-Si 2.5G HS | Steel sheet for 2.5 GPa class hot stamping | 40 |
| D80 | Al-Si 1.0G HS | Steel sheet for 1.0 GPa class hot stamping | 80 |
| D80-2 | Black film (both sides) Al-Si 1.0G HS | Steel sheet for 1.0 GPa class hot stamping | 80 |
| D40 | Al-Si 1.0G HS | Steel sheet for 1.0 GPa class hot stamping | 40 |
| D40-1 | Black film (one side) Al-Si 1.0G HS | Steel sheet for 1.0 GPa class hot stamping | 40 |
| E80 | Al-Si 0.5G HS | Steel sheet for 0.5 GPa class hot stamping | 80 |
| E40 | Al-Si 0.5G HS | Steel sheet for 0.5 GPa class hot stamping | 40 |
| E40-1 | Black film (one side) Al-Si 0.5G HS | Steel sheet for 0.5 GPa class hot stamping | 40 |

In Table 42, the "type of starting material" shows type of coating, tensile strength, and use (hot stamping) in this order. However, for cases where a black film containing carbon (C) is provided on a coating layer, a term "black film (one side)" or "black film (both sides)" is shown before type of starting material. The "black film (one side)" means that the whole of one surface of the coated steel sheet is coated with a black film. The "black film (both sides)" means that the whole of both surfaces of the coated steel sheet is coated with a black film. Although Table 42 shows values of the deposition amount of the coating layer per side, the deposition amount of the coating layer is the same on both surfaces of the starting material in this analysis.

FIGS. 51A to 51G show division patterns of the structural member. FIGS. 51A to 51G show the number of steel sheets (starting materials) included in the structural members that are single door ring parts and the positions of the junctures between the steel sheets in the structural members. In FIGS. 51A to 51G, each steel sheet is denoted by a numeral in parentheses.

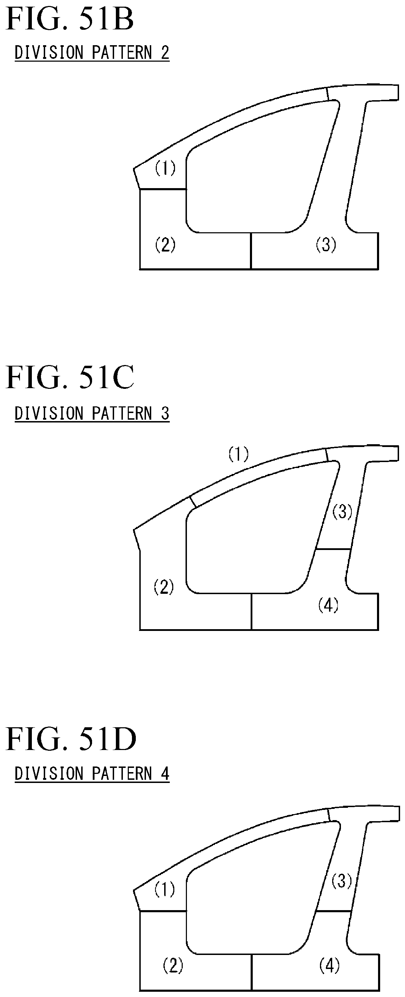

Table 43 shows analysis conditions and results for division patterns 1 and 2 shown in FIGS. 51A and 51B. In FIGS. 51A and 51B, the structural member is formed of three starting materials (1) to (3). The starting materials (1) to (3) are each lap-joined to adjacent starting materials.

**[Table 43]**

| Symbol | Division pattern | Starting material (1) | | Starting material (2) | | Starting material (3) | | Smallest sheet thickness tₘᵢₙ, mm | Largest sheet thickness tₘₐₓ, mm | Time required to reach 910 °C, s | Heating completion time, s | PW, s |
|---|---|---|---|---|---|---|---|---|---|---|---|---|
| | | Type of starting material | Sheet thickness, mm | Type of starting material | Sheet thickness, mm | Type of starting material | Sheet thickness, mm | | | | | |
| Example 1 | 1 | B40 | 1.4 | D40 | 1.4 | B80 | 1.2 | 1.2 | 2.8 | 149.5 | 301.5 | 93.0 |
| Example 2 | 1 | B80 | 1.2 | D40 | 1.3 | A40 | 1.6 | 1.2 | 2.9 | 149.5 | 312.3 | 82.2 |
| Example 3 | 2 | A40 | 1.6 | D80 | 1.2 | A40 | 1.8 | 1.2 | 3.4 | 149.5 | 366.0 | 28.5 |
| Comparative Example 1 | 1 | B80 | 1.4 | D80 | 1.4 | B80 | 1.2 | 1.2 | 2.8 | 149.5 | 349.5 | 45.0 |
| Comparative Example 2 | 2 | A80 | 1.6 | D80 | 1.2 | A80 | 1.8 | 1.2 | 3.4 | 149.5 | 424.5 | -30.0 |

In Table 43, "time required to reach 910 °C" means the time required for the starting material having the smallest sheet thickness tₘᵢₙ among the starting materials included in the blank to reach 910 °C (A_{c3} point or higher) after the start of heating of the blank. "Heating completion time" means the time required for a part that is the slowest to rise in temperature in the blank to reach 910 °C so that hot stamping can be performed after the start of heating of the blank. "Process window (PW)" means a value obtained by subtracting the heating completion time from the sum of the allowable heating time (245 seconds) after the starting material having the smallest sheet thickness tₘᵢₙ reaches 910 °C and the time required to reach 910 °C. The greater this value, the wider the process window of the heating condition in hot stamping of the structural member.

With reference to Table 43 and FIG. 51A, in Example 1, the starting material (1) and the starting material (2) form an overlap part having the largest sheet thickness tₘₐₓ = 2.8 mm. In Example 1, the deposition amount of the aluminum-based coating layer of both the starting materials (1) and (2) was 40 g/m² and was less than the deposition amount of the aluminum-based coating layer of the other starting material (3). In Comparative Example 1, in which the combination of the type of the starting material and the sheet thickness was the same as in Example 1, the deposition amount of the aluminum-based coating layer was the same, 80 g/m², for the starting materials (1) to (3). In Example 1, the overlap part, which was the thickest part, was a thin-plated part, so that heating of the overlap part was promoted, and the heating completion time of the blank was substantially reduced compared with Comparative Example 1. As a result, in Example 1, the process window was enlarged by almost 50 seconds compared with Comparative Example 1.

With reference to Table 43 and FIG. 51B, in Example 3, the starting material (1) and the starting material (3) form an overlap part having the largest sheet thickness tₘₐₓ = 3.4 mm. In Example 3, the deposition amount of the aluminum-based coating layer of both the starting materials (1) and (3) was 40 g/m² and was less than the deposition amount of the aluminum-based coating layer of the other starting material (2). In Comparative Example 2, in which the combination of the type of the starting material and the sheet thickness was the same as in Example 3, the deposition amount of the aluminum-based coating layer was the same, 80 g/m², for the starting materials (1) to (3). In Example 3, the overlap part, which was the thickest part, was a thin-plated part, so that heating of the overlap part was promoted, and the heating completion time of the blank was substantially reduced compared with Comparative Example 2. As a result, in Example 3, the process window was enlarged by 50 seconds or more compared with Comparative Example 2.

In Example 2, the starting material (2) and the starting material (3) form an overlap part having the largest sheet thickness tₘₐₓ = 2.9 mm. In Example 2, the deposition amount of the aluminum-based coating layer of both the starting materials (2) and (3) was 40 g/m² and was less than the deposition amount of the aluminum-based coating layer of the other starting material (1). In Example 2, again, it was ascertained that a sufficient process window was ensured.

Table 44 shows analysis conditions and results for division patterns 3 and 4 shown in FIGS. 51C and 51D. In FIGS. 51C and 51D, the structural member is formed of four starting materials (1) to (4). The starting materials (1) to (4) are each lap-joined to adjacent starting materials.

**[Table 44]**

| Symbol | Division pattern | Starting material (1) | | Starting material (2) | | Starting material (3) | | Starting material (4) | | Smallest sheet thickness tₘᵢₙ, mm | Largest sheet thickness tₘₐₓ, mm | Time required to reach 910 °C, s | Heating completion time, s | PW, s |
|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | | | | | |
| Example 4 | 3 | C40 | 2.0 | A40 | 1.6 | A40 | 1.6 | A80 | 1.4 | 1.4 | 3.6 | 174.5 | 387.5 | 32.0 |
| Example 5 | 4 | B40 | 1.4 | B80 | 1.4 | B40 | 1.6 | C40-1 | 1.2 | 1.2 | 3.0 | 94.5 | 323.0 | 16.5 |
| Example 6 | 4 | B40 | 1.6 | A80 | 1.6 | A40 | 1.8 | A40 | 1.4 | 1.4 | 3.4 | 150.5 | 366.0 | 29.5 |
| Example 7 | 3 | B40 | 1.6 | D80 | 1.4 | B40 | 2.0 | D40 | 1.6 | 1.4 | 3.6 | 174.5 | 387.5 | 32.0 |
| Example 8 | 4 | A40 | 1.8 | C40 | 1.6 | B40 | 2.0 | A80 | 1.4 | 1.4 | 3.8 | 174.5 | 409.0 | 10.5 |
| Example 9 | 4 | A40 | 1.2 | B80 | 1.4 | B40 | 1.4 | D40 | 1.2 | 1.2 | 2.6 | 129.0 | 279.5 | 94.5 |
| Example 10 | 3 | C40 | 1.6 | A80 | 1.2 | C40 | 2.0 | E40 | 1.6 | 1.2 | 3.6 | 149.5 | 387.5 | 7.0 |
| Example 11 | 4 | A80 | 1.6 | A60-G | 1.6 | B40 | 2.0 | A40 | 1.6 | 1.6 | 3.6 | 171.5 | 387.5 | 29.0 |
| Comparative Example 3 | 3 | C80 | 1.6 | A80 | 1.6 | B80 | 2.0 | A80 | 1.6 | 1.6 | 3.6 | 199.5 | 449.5 | -5.0 |
| Comparative Example 4 | 4 | A80 | 1.8 | C80 | 1.6 | B80 | 2.0 | A80 | 1.4 | 1.4 | 3.8 | 174.5 | 474.5 | -55.0 |
| Comparative Example 5 | 4 | B80 | 1.6 | A80 | 1.6 | A80 | 1.8 | A80 | 1.4 | 1.4 | 3.4 | 174.5 | 424.5 | -5.0 |
| Comparative Example 6 | 3 | B80 | 1.6 | D80 | 1.4 | B80 | 2.0 | D80 | 1.6 | 1.4 | 3.6 | 174.5 | 449.5 | -30.0 |
| Comparative Example 7 | 4 | A80 | 1.2 | B80 | 1.4 | B80 | 1.4 | D80-2 | 1.2 | 1.2 | 2.6 | 115.0 | 324.5 | 35.5 |

In Examples 4 to 11 shown in Table 44, as in Examples 1 to 3 (Table 43), the deposition amount of the aluminum-based coating layer in the starting materials forming the overlap part having the largest sheet thickness tₘₐₓ was 40 g/m² and was less than the deposition amount in another starting material. Therefore, in Examples 4 to 11, again, a process window of the heating condition was able to be ensured. As can be seen, the process window in each example was enlarged compared with a corresponding comparative example.

For example, in Example 8, the starting material (1) and the starting material (3) form an overlap part having the largest sheet thickness tₘₐₓ = 3.8 mm. In Example 8, the deposition amount of the aluminum-based coating layer of each of the starting materials (1) and (3) was 40 g/m² and was less than the deposition amount of the aluminum-based coating layer of the starting material (4) (Table 44 and FIG. 51D). On the other hand, in Comparative Example 4, although the combination of the type of the starting material and the sheet thickness was the same as in Example 8, the deposition amount of the aluminum-based coating layer was the same, 80 g/m², for all the starting materials. In Example 8, heating the overlap part, which was a thin-plated part, was promoted, and the heating completion time of the blank was substantially reduced compared with Comparative Example 4. In Example 8, the process window was enlarged by 60 or more seconds compared with Comparative Example 4. In Comparative Example 4, the process window of the heating condition was lost (negative).

For example, in Example 9, the starting material (3) and the starting material (4) form an overlap part having the largest sheet thickness tₘₐₓ = 2.6 mm. In Example 9, the deposition amount of the aluminum-based coating layer of each of the starting materials (3) and (4) was 40 g/m² and was less than the deposition amount of the aluminum-based coating layer of the starting material (2) (Table 44 and FIG. 43D). On the other hand, in Comparative Example 7, although the combination of the type of the starting material and the sheet thickness was the same as in Example 9, the deposition amount of the aluminum-based coating layer was the same, 80 g/m², for all the starting materials. In Example 9, heating the overlap part, which was a thin-plated part, was promoted, and the heating completion time of the blank was substantially reduced compared with Comparative Example 7. In Example 9, the process window was enlarged by almost 60 seconds compared with Comparative Example 7. In Comparative Example 7, both surfaces of the thinnest starting material (4) were provided with a black film, and although the time required to reach 910 °C was a little more than 10 seconds earlier than in Example 9, the heating completion time of the blank was reduced by 45 seconds in Example 9 compared with Comparative Example 7. Therefore, it can be said that the process window was enlarged compared with Comparative Example 7 even if the difference in time required to reach 910 °C was taken into account.

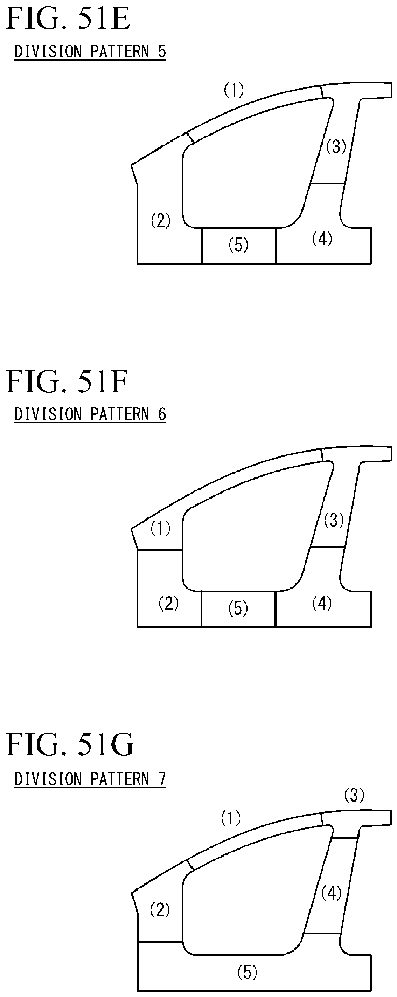

Table 45 shows analysis conditions and results for division patterns 5 and 6 shown in FIGS. 51E to 51G. In FIGS. 51E to 51G, the structural member is formed of five starting materials (1) to (5). The starting materials (1) to (5) are each lap-joined to adjacent starting materials.

**[Table 45]**

| Symbol | Division pattern | Starting material (1) | | Starting material (2) | | Starting material (3) | | Starting material (4) | | Starting material (5) | | Smallest sheet thickness tₘᵢₙ, mm | Largest sheet thickness tₘₐₓ, mm | Time required to reach 910 °C, s | Heating completion time, s | PW, s |
|---|---|---|---|---|---|---|---|---|---|---|---|---|---|---|---|---|
| | | Type of starting material | Sheet thickness, mm | Type of starti ng material | Sheet thickness, mm | Type of starting material | Sheet thickness, mm | Type of starting material | Sheet thickness, mm | Type of starting material | Sheet thickness, mm | | | | | |
| Example 12 | 5 | A40 | 1.2 | A80 | 1.4 | C80 | 1.2 | A40 | 1.8 | A40 | 1.6 | 1.2 | 3.4 | 149.5 | 366.0 | 28.5 |
| Example 13 | 5 | A40-1 | 1.4 | B80 | 1.2 | C40 | 1.6 | D80 | 1.2 | B40-1 | 1.4 | 1.2 | 3.0 | 110.0 | 323.0 | 32.0 |
| Example 14 | 6 | A40 | 1.6 | C40 | 1.6 | A80 | 1.2 | B40 | 1.8 | D80 | 1.2 | 1.2 | 3.2 | 149.5 | 344.5 | 50.0 |
| Example 15 | 5 | C40-1 | 1.6 | B40 | 1.6 | B80 | 1.4 | A40 | 1.2 | A120 | 1.2 | 1.2 | 3.2 | 131.5 | 344.5 | 32.0 |
| Example 16 | 6 | B40 | 1.2 | B80 | 1.2 | A40 | 1.8 | D40 | 1.2 | B80 | 1.2 | 1.2 | 3.0 | 129.0 | 323.0 | 51.0 |
| Example 17 | 5 | B60-G | 1.4 | D80 | 1.2 | B40 | 1.6 | E40 | 1.0 | A40 | 1.2 | 1.0 | 3.0 | 107.0 | 323.0 | 29.0 |
| Example 18 | 5 | A50 | 1.2 | B80 | 1.6 | B40 | 2.0 | A50 | 1.2 | A80 | 1.4 | 1.2 | 3.2 | 129.0 | 352.1 | 21.9 |
| Example 19 | 5 | A60 | 1.2 | B80 | 1.6 | B40 | 2.0 | A60 | 1.2 | A80 | 1.4 | 1.2 | 3.2 | 129.0 | 363.0 | 11.0 |
| Example 20 | 5 | A60 | 1.2 | B80 | 1.4 | B60 | 1.8 | A80 | 1.2 | A80 | 1.4 | 1.2 | 3.0 | 129.0 | 362.0 | 12.0 |
| Example 21 | 5 | A80-1 | 1.2 | B80 | 1.6 | B60 | 2.0 | A80-1 | 1.2 | A80 | 1.4 | 1.2 | 3.2 | 129.0 | 333.0 | 41.0 |
| Comparative Example 8 | 5 | A80 | 1.4 | A80 | 1.2 | C80 | 1.8 | A80 | 1.4 | A80 | 1.4 | 1.2 | 3.2 | 149.5 | 399.5 | -5.0 |
| Comparative Example 9 | 6 | A80 | 1.6 | C80 | 1.6 | A80 | 1.2 | B80 | 1.8 | D80 | 1.2 | 1.2 | 3.2 | 149.5 | 399.5 | -5.0 |
| Comparative Example 10 | 5 | C80 | 1.6 | B80 | 1.6 | B80 | 1.4 | A80 | 1.2 | A80 | 1.2 | 1.2 | 3.2 | 149.5 | 399.5 | -5.0 |
| Comparative Example 11 | 6 | B80 | 1.2 | B80 | 1.2 | A80 | 1.8 | D80 | 1.2 | B80 | 1.2 | 1.2 | 3.0 | 149.5 | 374.5 | 20.0 |

In Examples 12 to 21 shown in Table 45, the deposition amount of the aluminum-based coating layer in at least one of the two starting materials forming the overlap part having the largest sheet thickness tₘₐₓ was 60 g/m² or less and was less than the deposition amount in another starting material. In Examples 12 to 21, again, a sufficient process window of the heating condition was able to be ensured. As can be seen, the process window in each example was enlarged compared with a corresponding comparative example.

For example, in Example 14, the starting material (1) and the starting material (2) form an overlap part having the largest sheet thickness tₘₐₓ = 3.2 mm. In Example 14, the deposition amount of the aluminum-based coating layer of each of the starting materials (1) and (2) was 40 g/m² or less and was less than the deposition amount of the aluminum-based coating layer of the starting materials (3) and (5) (Table 45 and FIG. 51F). On the other hand, in Comparative Example 9, although the combination of the type of the starting material and the sheet thickness was the same as in Example 14, the deposition amount of the aluminum-based coating layer was the same, 80 g/m² or less, for all the starting materials. In Example 14, heating the overlap part, which was a thin-plated part, was promoted, and the heating completion time of the blank was substantially reduced compared with Comparative Example 9. In Example 14, the process window was enlarged by 50 or more seconds compared with Comparative Example 9. In Comparative Example 9, the process window of the heating condition was lost (negative).

For example, in Example 16, the starting material (1) and the starting material (3) form an overlap part having the largest sheet thickness tₘₐₓ = 3.0 mm. In Example 16, the deposition amount of the aluminum-based coating layer of each of the starting materials (1) and (3) was 40 g/m² and was less than the deposition amount of the aluminum-based coating layer of each of the starting materials (2) and (5) (Table 45 and FIG. 51F). In Example 16, in addition, the starting material (3) and the starting material (4) form an overlap part having the largest sheet thickness tₘₐₓ = 3.0 mm. In Example 16, the deposition amount of the aluminum-based coating layer of each of the starting materials (3) and (4) was 40 g/m² and was less than the deposition amount of the aluminum-based coating layer of each of the starting materials (2) and (5). On the other hand, in Comparative Example 11, although the combination of the type of the starting material and the sheet thickness was the same as in Example 16, the deposition amount of the aluminum-based coating layer was the same, 80 g/m², for all the starting materials. In Example 16, heating the overlap part, which was a thin-plated part, was promoted, and the heating completion time of the blank was substantially reduced compared with Comparative Example 11. In Example 16, the process window was enlarged by 30 or more seconds compared with Comparative Example 11.

In Example 19, the starting materials (1) and (3) and the starting materials (3) and (4) each form an overlap part having the largest sheet thickness tₘₐₓ = 3.2 mm. In Example 19, the deposition amount of the aluminum-based coating layer of the starting material (3) was 40 g/m², and the deposition amount of the aluminum-based coating layer of each of the starting materials (1) and (4) was 60 g/m². In Example 19, again, heating the overlap parts, which were thin-plated parts, was promoted, and the heating completion time of the blank was reduced compared with the comparative examples. In Example 18, the heating completion time of the blank was further reduced compared with Example 19. In Example 18, the deposition amount of the aluminum-based coating layer of each of the starting materials (1) and (4) that form an overlap part having the largest sheet thickness tₘₐₓ with the starting material (3) was 50 g/m².

In Example 20, the starting materials (1) and (3) and the starting materials (3) and (4) each form an overlap part having the largest sheet thickness tₘₐₓ = 3.0 mm. In Example 20, the deposition amount of the aluminum-based coating layer of the starting material (4) was 80 g/m², and the deposition amount of the aluminum-based coating layer of the starting materials (1) and (3) was 60 g/m². In Example 20, again, since at least one of the two starting materials forming the overlap part was a thin-plated part having a deposition amount of 60 g/m² or less, heating the overlap part was promoted, and the heating completion time of the blank was reduced compared with the comparative examples.

In Example 21, the starting materials (1) and (3) and the starting materials (3) and (4) each form an overlap part having the largest sheet thickness tₘₐₓ = 3.2 mm. In Example 21, the deposition amount of the aluminum-based coating layer of the starting materials (1) and (4) was 80 g/m², and the deposition amount of the aluminum-based coating layer of the starting material (3) was 60 g/m². In Example 21, again, since at least one of the two starting materials forming the overlap part was a thin-plated part having a deposition amount of 60 g/m² or less, heating the overlap part was promoted, and the heating completion time of the blank was reduced compared with the comparative examples. In Example 21, the starting materials (1) and (4) were provided with a black film to increase the emissivity of the overlap part in advance, the heating completion time of the blank was further reduced compared with Example 20.

### [Second Example]

The same analysis as in the first example was performed of the press forming (hot stamping) of structural members that were double door ring parts for different types and sheet thicknesses of starting materials included in the structural members and different division patterns of the structural members.

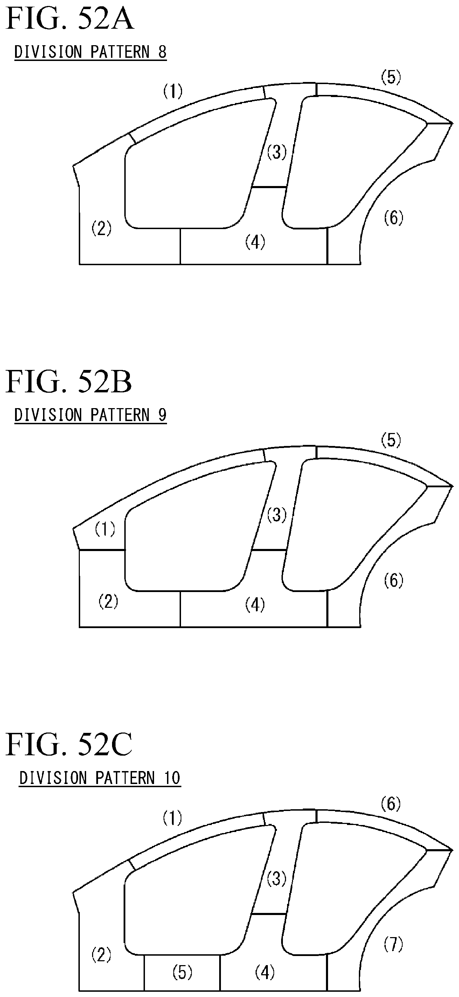

The steel sheets as the starting materials were selected from those shown in Table 42, as in the first embodiment. The division patterns of the structural members are shown in FIGS. 52A to 52D. FIGS. 52A to 52D show the number of steel sheets (starting materials) included in the structural members that are double door ring parts and the positions of the junctures between the steel sheets in the structural members. In FIGS. 52A to 52D, each steel sheet as the starting material is denoted by a numeral in parentheses.

Table 46 shows analysis conditions and results for division patterns 8 and 9 shown in FIGS. 52A and 52B. In FIGS. 52A and 52B, the structural member is formed of six starting materials (1) to (6). The starting materials (1) to (6) are each lap-joined to adjacent starting materials.

**[Table 46]**

| Symbol | Division pattern | Starting material (1) | | Starting material (2) | | Starting material (3) | | Starting material (4) | | Starting material (5) | | Starting material (6) | | Smallest sheet thickness tₘᵢₙ, mm | Largest sheet thickness tₘₐₓ, mm | Time required to reach 910 °C, s | Heating completion time, s | PW, s |
|---|---|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | | | |
| Example 22 | 8 | C40 | 1.4 | A80 | 1.4 | A40 | 1.8 | D40 | 1.4 | B40 | 1.0 | D40 | 1.2 | 1.0 | 3.2 | 107.0 | 344.5 | 7.5 |
| Example 23 | 8 | A40 | 1.6 | B80 | 1.3 | B40-1 | 1.8 | A40 | 1.4 | A80 | 1.2 | A80 | 1.0 | 1.0 | 3.4 | 124.5 | 306.0 | 63.5 |
| Example 24 | 9 | B40-1 | 1.4 | A80 | 1.4 | C40 | 1.6 | B40 | 1.4 | B40-1 | 1.0 | A40-1 | 1.0 | 1.0 | 3.0 | 95.5 | 323.0 | 17.5 |
| Comparative Example 12 | 8 | C80 | 1.4 | A80 | 1.4 | A80 | 1.8 | D80 | 1.4 | B80 | 1.0 | D80 | 1.2 | 1.0 | 3.2 | 124.5 | 399.5 | -30.0 |
| Comparative Example 13 | 9 | B80 | 1.4 | A80 | 1.4 | C80 | 1.6 | B80 | 1.4 | B80 | 1.0 | A80 | 1.0 | 1.0 | 3.0 | 124.5 | 374.5 | -5.0 |

With reference to Table 46, in Example 22, the starting materials (1) and (3) and the starting materials (3) and (4) each form an overlap part having the largest sheet thickness tₘₐₓ = 3.2 mm, and the deposition amount of the aluminum-based coating layer of each of the starting materials (1), (3), and (4) was less than the deposition amount of the aluminum-based coating layer of the starting material (2). In Example 23, the starting material (1) and the starting material (3) form an overlap part having the largest sheet thickness tₘₐₓ = 3.4 mm, and the deposition amount of the aluminum-based coating layer of each of the starting materials (1) and (3) was less than the deposition amount of the aluminum-based coating layer of the starting materials (2), (5), and (6). In Example 24, the starting materials (1) and (3) and the starting materials (3) and (4) each form an overlap part having the largest sheet thickness tₘₐₓ = 3.0 mm, and the deposition amount of the aluminum-based coating layer of each of the starting materials (1), (3), and (4) was less than the deposition amount of the aluminum-based coating layer of the starting material (2). In Examples 22 to 24, the deposition amount of the aluminum-based coating layer of the starting materials forming the overlap part, which was the thickest part, was 40 g/m². On the other hand, in Comparative Examples 12 and 13, the deposition amount of the aluminum-based coating layer was the same, 80 g/m², for all the starting materials.

As can be seen from Table 46, in Examples 22 to 24, since the overlap part having the largest sheet thickness tₘₐₓ was a thin-plated part, heating of the overlap part was promoted, and the heating completion time of the blank was substantially reduced compared with Comparative Examples 12 and 13. As a result, in Examples 22 to 24, the process window of the heating condition was significantly enlarged compared with Comparative Examples 12 and 13.

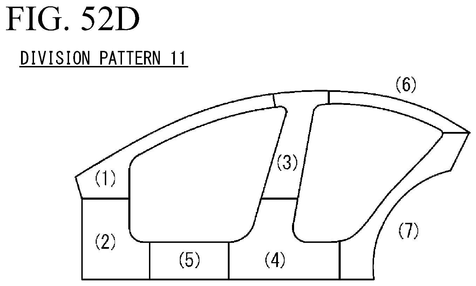

Table 47 shows analysis conditions and results for division patterns 10 and 11 shown in FIGS. 52C and 52D. In FIGS. 52C and 52D, the structural member is formed of seven starting materials (1) to (7). The starting materials (1) to (7) are each lap-joined to adjacent starting materials.

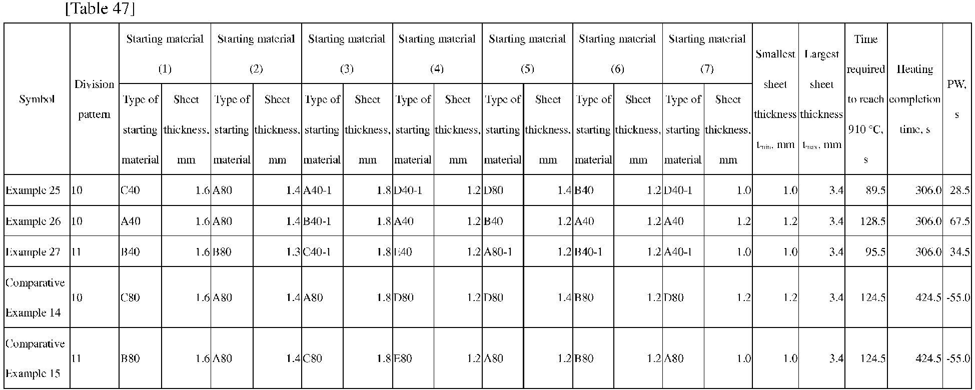

With reference to Table 47, in Examples 25 and 27, the starting material (1) and the starting material (3) form an overlap part having the largest sheet thickness tₘₐₓ = 3.4 mm, and the deposition amount of the aluminum-based coating layer of each of the starting materials (1) and (3) was less than the deposition amount of the aluminum-based coating layer of each of the starting materials (2) and (5). In Example 26, the starting material (1) and the starting material (3) form an overlap part having the largest sheet thickness tₘₐₓ = 3.4 mm, and the deposition amount of the aluminum-based coating layer of each of the starting materials (1) and (3) was less than the deposition amount of the aluminum-based coating layer of the starting material (2). In Examples 25 to 27, the deposition amount of the aluminum-based coating layer of the starting materials forming the overlap part, which was the thickest part, was 40 g/m². On the other hand, in Comparative Examples 14 and 15, the deposition amount of the aluminum-based coating layer was the same, 80 g/m², for all the starting materials.

As can be seen from Table 47, in Examples 25 to 27, since the overlap part having the largest sheet thickness tₘₐₓ was a thin-plated part, heating of the overlap part was promoted, and the heating completion time of the blank was substantially reduced compared with Comparative Examples 14 and 15. As a result, in Examples 25 to 27, the process window of the heating condition was significantly enlarged compared with Comparative Examples 14 and 15.

### [Third Example]

In order to check the effect of the difference between the largest sheet thickness tₘₐₓ and the smallest sheet thickness tₘᵢₙ on the press forming (hot stamping) of structural members that are single door ring parts, the same analysis as in the first example was performed for different values of tₘₐₓ/tₘᵢₙ. Table 48 shows analysis conditions and results.

**[Table 48]**

| Symbol | Division pattern | Starting material (1) | | Starting material (2) | | Starting material (3) | | Starting material (4) | | Starting material (5) | | Smallest sheet thickness tₘᵢₙ, mm | Largest sheet thickness tₘₐₓ, mm | Sheet thickness ratio tₘₐₓ/tmin | Time required to reach 910 °C, s | Heating completion time, s | PW, s |
|---|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | | | | |
| Test Example 1 | 7- overlap | A40 | 1.6 | A40 | 1.4 | C40 | 1.4 | A40 | 1.2 | A80 | 1.4 | 1.2 | 3.0 | 2.5 | 129.0 | 323.0 | 51.0 |
| Test Example 2 | 5- overlap | C40 | 1.2 | B80 | 1.6 | B40 | 2.2 | A40 | 1.2 | A80 | 1.6 | 1.2 | 3.4 | 2.8 | 129.0 | 366.0 | 8.0 |
| Test Example 3 | 7- overlap | C40-1 | 1.8 | B80 | 1.6 | B40-1 | 2.6 | A40 | 1.2 | A80 | 1.6 | 1.2 | 4.4 | 3.7 | 129.0 | 358.5 | 15.5 |
| Test Example 4 | 5- overlap | A40 | 1.0 | A80 | 1.4 | A40 | 2.6 | A40 | 1.0 | A80 | 1.4 | 1.0 | 3.6 | **3.6** | 124.5 | 387.5 | -18.0 |
| Test Example 5 | 7- overlap | A40-1 | 1.0 | A80 | 1.4 | A40-1 | 3.5 | A40-1 | 1.0 | A80 | 1.4 | 1.0 | 4.5 | **4.5** | 124.5 | 369.3 | 0.3 |
| Reference example | 5- overlap | C80 | 1.4 | A80 | 1.4 | A80 | 1.4 | D80 | 1.4 | B80 | 1.4 | 1.4 | 2.8 | 2.0 | 174.5 | 305.0 | 114.5 |
| Comparative Example 16 | 7- overlap | A80 | 1.6 | A80 | 1.4 | C80 | 1.6 | A80 | 1.2 | A80 | 1.4 | 1.2 | 3.2 | 2.7 | 149.5 | 399.5 | -5.0 |

The division pattern in Test Examples 1, 3, and 5 and Comparative Example 16 was the division pattern 7 shown in FIG. 51G. In Test Examples 1 and 3, the starting materials (1) and (3) form an overlap part having the largest sheet thickness tₘₐₓ. In Test Examples 1 and 3, the deposition amount of the aluminum-based coating layer of each of the starting materials (1) and (3) was 60 g/m² or less and was less than the deposition amount of the aluminum-based coating layer of at least one of the other starting materials. In Test Example 5, the starting materials (1) and (3) and the starting materials (3) and (4) each form an overlap part having the largest sheet thickness tₘₐₓ. In addition, in Test Example 5, the deposition amount of the aluminum-based coating layer of each of the starting materials (1), (3), and (4) was 60 g/m² or less and was less than the deposition amount of the aluminum-based coating layer of the other starting materials. In Test Example 3, the surfaces of the starting materials (1) and (3) that were located on the outer sides of the overlap part were coated with a black film. In Test Example 5, the surfaces of the starting materials (1), (3), and (4) that were located on the outer sides of the overlap part were coated with a black film. In Comparative Example 16, the deposition amount of the aluminum-based coating layer was the same, 80 g/m², for all the starting materials.

The division pattern in Test Examples 2 and 4 and the reference example was the division pattern 5 shown in FIG. 51E. In Test Examples 2 and 4, the starting materials (1) and (3) and the starting materials (3) and (4) each form an overlap part having the largest sheet thickness tₘₐₓ. In addition, in Test Examples 2 and 4, the deposition amount of the aluminum-based coating layer of each of the starting materials (1), (3), and (4) was 60 g/m² or less and was less than the deposition amount of the aluminum-based coating layer of the other starting materials. In the reference example, all the starting materials (1) to (5) had an equal sheet thickness and an equal deposition amount of the aluminum-based coating layer of 80 g/m².

In the reference example, there was no difference in sheet thickness between the starting materials (1) to (5), and the ratio of the largest sheet thickness tₘₐₓ (sheet thickness of the overlap part) to the smallest sheet thickness tₘᵢₙ (sheet thickness of the starting materials (1) to (5)): tₘₐₓ/tₘᵢₙ was 2.0. In the reference example, the difference (tₘₐₓ/tₘᵢₙ) between the largest sheet thickness tₘₐₓ and the smallest sheet thickness tₘᵢₙ was not large, so that even when the deposition amount of the aluminum-based coating layer in the overlap part was as high as 80 g/m², a process window of the heating condition was able to be ensured. On the other hand, when there was a difference in sheet thickness between the starting materials (1) to (5), the difference (tₘₐₓ/tₘᵢₙ) between the largest sheet thickness tₘₐₓ and the smallest sheet thickness tₘᵢₙ was more than 2.0. In this case, the effect of forming the overlap part as a thin-plated part was likely to markedly manifest itself.

As can be seen from Table 48, when the deposition amount of the aluminum-based coating layer of the starting materials forming the overlap part having the largest sheet thickness tₘₐₓ was 60 g/m² or less, even if tₘₐₓ/tₘᵢₙ was on the order of 3.0, the heating completion time was less likely to be long, and a process window was able to be ensured (Test Examples 1 and 2). Furthermore, when the outside of the overlap part having the largest sheet thickness tₘₐₓ was provided with a black film, even if tₘₐₓ/tₘᵢₙ was more than 3.0, the heating completion time was unlikely to be long, and a process window was able to be ensured (Test Example 3). However, even when each of the starting materials forming the overlap part having the largest sheet thickness tₘₐₓ was provided with a black film, it was difficult to ensure the process window, if tₘₐₓ/tₘᵢₙ was more than 4.0 (Test Example 5).

Under the conditions of this analysis, it can be said that when there is a difference in sheet thickness between the starting materials, it is preferable that tₘₐₓ/tₘᵢₙ ≤ 3.0. However, when the outside of the overlap part having the largest sheet thickness tₘₐₓ is provided with a black film, it is possible that tₘₐₓ/tₘᵢₙ ≤ 4.0.

For Test Examples 1 and 3 and Comparative Example 16, the productivity of the structural member and the emissions ratio of greenhouse effect gas were evaluated. Table 49 shows evaluation results.

**[Table 49]**

| Symbol | Division pattern | Productivity, items/min | Emissions ratio of greenhouse effect gas during production |
|---|---|---|---|
| Test Example 1 | 7- overlap | 3.71 | 82% |
| Test Example 3 | 7- overlap | 3.34 | 91% |
| Comparative Example 16 | 7- overlap | 3.00 | 100% |

As shown in Table 49, in Test Examples 1 and 3, the productivity of the structural member was improved compared with Comparative Example 16, since the heating completion time of the blank was reduced compared with Comparative Example 16 (Table 48). Furthermore, in Test Examples 1 and 3, the heating completion time of the blank was reduced compared with Comparative Example 16, and the energy consumption required for production of the structural member was reduced, so that the emissions ratio of the greenhouse effect gas during production was also reduced. "Productivity" in Table 49 means the number of blanks (structural members) that can be heat-treated in a heating furnace in one minute. "Emissions ratio of greenhouse effect gas" means the ratio of emissions of greenhouse effect gas with respect to Comparative Example 16. The emissions of greenhouse effect gas in the heating step was determined by multiplying the greenhouse effect gas emissions per kWh of electricity of Japan's average power in 2018 (LCA database, National Institute of Advanced Industrial Science and Technology, IDEAv3.2) by the power consumption per structural member allocated on the assumption that the power consumption per hour of the multi-stage electric heating furnace for hot stamping blank heating was 450 kWh, the furnace temperature was 920 °C, the operating time per day was 15 hours, the heating and waiting time for the heating furnace was 3 hours, and the members were produced with the productivity described in Table 49. The emissions of greenhouse effect gas in the other steps (other than the heating step) in production of the structural member was calculated in the method described in a published literature concerning LCA calculation for automobile parts (Masahiro Kubo and two others, "Evaluation of the Life Cycle Greenhouse Gas (GHG) Emissions of a Lightweight Steel Body and Part", JSAE Annual Congress (Spring) Proceedings, Society of Automotive Engineers of Japan, Inc., 2022).

### INDUSTRIAL APPLICABILITY

According to the present disclosure, it is possible to provide an automobile side module that can reduce LC-GHG per unit area.

### EXPLANATION OF REFERENCES

1 Automobile Body
100 Automobile Side Module
110 Main Body
111 B-pillar Upper Portion
112 B-pillar Lower Portion
113 A-pillar Portion
114 Front Roof Rail Portion
115 Front Side Sill Portion

## Claims

1. An automobile side module for reinforcing an automobile side outer panel,
wherein the automobile side module is a hot-stamped automobile side module comprising a steel sheet in which a plurality of steel sheets are integrated,
wherein when a minimum circumscribed rectangular area, as viewed in a vertical direction with respect to a reference plane, is defined as S (m²),
a total weight of components of the automobile side module having a weight of 0.200 kg or more is defined as W_{0.2} (kg), and
the total weight of the components having a minimum Vickers hardness of HV510 or more is defined as W₅₁₀,
then W_{0.2}/S is 7.7 or less, and W₅₁₀/W_{0.2} is larger than 0.10.

2. The automobile side module according to claim 1, comprising:
at least one of an Element Technology A1 and an Element Technology A2; and
at least one of an Element Technology B1, an Element Technology B2, an Element Technology B3a, an Element Technology B3b, an Element Technology B4, an Element Technology B5a, an Element Technology B5b, and an Element Technology B6,
wherein the Element Technology A1 is a hot-stamp formed body **characterized in that**
the hot-stamp formed body comprises, as a chemical composition, by mass%:
C: 0.15 to 0.50%;
Si: 0.0010% to 3.000%;
Mn: 0.30% to 3.00%;
Al: 0.0002% to 2.000%;
P: 0.100% or less;
S: 0.1000% or less;
N: 0.0100% or less;
Nb: 0% to 0.15%;
Ti: 0% to 0.15%;
V: 0% to 0.15%;
Mo: 0% to 1.0%;
Cr: 0% to 1.0%;
Cu: 0% to 1.0%;
Ni: 0% to 1.0%;
B: 0% to 0.0100%;
Ca: 0% to 0.010%;
REM: 0% to 0.30%;
and a remainder consisting of Fe and an impurity,
wherein the hot-stamp formed body has a metallographic structure containing, by area ratio, a total of 90% or more of martensite, bainite, and tempered martensite,
in a texture between a surface and a sheet thickness 1/4 position from the surface, a ratio between a pole density of an orientation group consisting of {001} <1-10> to {001} <-1-10> and a pole density of an orientation group consisting of {111} <1-10> to {111} <-1-12> is less than 1.8, and
in a texture between the sheet thickness 1/4 position from the surface and a sheet thickness 1/2 position from the surface, a ratio between a pole density of an orientation group consisting of {001} <1-10> to {001} <-1-10> and a pole density of an orientation group consisting of {111} <1-10> to {111} <-1-12> is less than 2.3,
wherein the Element Technology A2 is a hot-stamp formed body **characterized in that**
the hot-stamp formed body comprises, as a chemical composition, by mass%:
C: 0.15 to 0.50%;
Si: 0.0010% to 3.000%;
Mn: 0.30% to 3.00%;
Al: 0.0002% to 2.000%;
P: 0.100% or less;
S: 0.1000% or less;
N: 0.0100% or less;
Nb: 0% to 0.15%;
Ti: 0% to 0.15%;
V: 0% to 0.15%;
Mo: 0% to 1.0%;
Cr: 0% to 1.0%;
Cu: 0% to 1.0%;
Ni: 0% to 1.0%;
B: 0% to 0.0100%;
Ca: 0% to 0.010%;
REM: 0% to 0.30%; and
a remainder consisting of Fe and an impurity,
wherein the hot-stamp formed body has a metallic structure comprising, in terms of area ratio, a total of 10 to 30% of ferrite and granular bainite, and the remaining microstructure consisting of one or more of martensite, bainite, and tempered martensite,
in a texture between a surface and a sheet thickness 1/4 position from the surface, a ratio between a pole density of an orientation group consisting of {001 } <1-10> to {001} <-1-10> and a pole density of an orientation group consisting of {111} <1-10> to {111} <-1-12> is less than 1.8, and
in a texture between the sheet thickness 1/4 position from the surface and a sheet thickness 1/2 position from the surface, a ratio between a pole density of an orientation group consisting of {001} <1-10> to {001} <-1-10> and a pole density of an orientation group consisting of {111} <1-10> to {111} <-1-12> is less than 2.3,
wherein the Element Technology B1 is an overlapped hot-stamp formed body comprising:
a first Al-Fe-based alloy coated steel sheet having a sheet thickness of T1 (mm), and
a second Al-Fe-based alloy coated steel sheet that is overlapped and welded on the first Al-Fe-based alloy coated steel sheet, has a smaller area than the first Al-Fe-based alloy coated steel sheet, and has a sheet thickness of T2 (mm),
wherein the overlapped hot-stamp formed body satisfies the relationships of Expressions (7) to Expression (9), $25 \leq K 1 \leq 60$ $25 \leq K 2 \leq 60$ $0 \leq \left(D1-D2\right) \times {\left(K1/K2\right)}^{2} \leq 5.0$
here,
K1: an average value of a coating thickness of an Al-Fe-based alloy coated layer on the side in contact with the second Al-Fe-based alloy coated steel sheet and a coating thickness of an Al-Fe-based alloy coated layer on the side not in contact with the second Al-Fe-based alloy coated steel sheet at a non-overlapped part of the first Al-Fe-based alloy coated steel sheet
K2: a coating thickness of an Al-Fe-based alloy coated layer on the side not in contact with the first Al-Fe-based alloy coated steel sheet at an overlapped part of the second Al-Fe-based alloy coated steel sheet
D1: an average value of a thickness of a diffusion layer located to be in contact with a steel sheet base in the Al-Fe-based alloy coated layer on the side in contact with the second Al-Fe-based alloy coated steel sheet and a thickness of a diffusion layer located to be in contact with a steel sheet base in the Al-Fe-based alloy coated layer on the side not in contact with the second Al-Fe-based alloy coated steel sheet in the first Al-Fe-based alloy coated steel sheet
D2: a thickness of a diffusion layer located to be in contact with a steel sheet base in the Al-Fe-based alloy coated layer on the side not in contact with the first Al-Fe-based alloy coated steel sheet of the second Al-Fe-based alloy coated steel sheet
the units of the sheet thickness T1 and the sheet thickness T2 are mm, and the units of K1, K2, D1, and D2 are µm,
wherein the Element Technology B2 is a hot-stamp formed body comprising an aluminum-coated steel sheet for hot stamping,
wherein the hot-stamp formed body is a hot-stamp formed body comprising an aluminum-coated steel sheet for hot stamping,
wherein the aluminum-coated steel sheet for hot stamping comprises:
a base steel sheet;
an aluminum coating layer provided on at least one surface of the base steel sheet and having an Al content of 80 mass% or more; and
a surface treatment film provided on the aluminum coating layer,
wherein the surface treatment film comprises:
a compound A containing carbon; and
a compound B that is an oxide or a fluoride of a metal element M and has a rutile structure,
a carbon concentration of the compound A is 80 mass% or more, and
a concentration of the metal element M satisfies the following formula (1) and the following formula (2): $1 \leq {C}_{bM} \leq 40$ $1.5 \leq {C}_{bM} / {C}_{tM} \geq 10.0$
herein, when the surface treatment film has an average thickness H (µm),
C_{tM} in the formula (2) is a concentration (mass%) of the metal element M at a position of 0.05H from the surface of the surface treatment film, and
C_{bM} in the formula (1) and the formula (2) is a concentration (mass%) of the metal element M at a position of 0.95H from the surface of the surface treatment film,
wherein the Element Technology B3a is a structural member, comprising:
a member main body that is formed of multiple steel sheets joined to each other and has an annular shape in plan view, the multiple steel sheets including a first steel sheet having a smallest sheet thickness and a second steel sheet having a sheet thickness larger than the sheet thickness of the first steel sheet; and
a film that is provided on the first steel sheet and contains 0.001 g/m² or more of one or more oxides selected from among the group consisting of Zr oxide, Zn oxide, and Ti oxide,
wherein the Element Technology B3b is a structural member, comprising:
a member main body that is formed of multiple steel sheets joined to each other and has an annular shape in plan view, the multiple steel sheets including a first steel sheet having a smallest sheet thickness and a second steel sheet having a sheet thickness larger than the sheet thickness of the first steel sheet; and
a film that is provided on the first steel sheet and contains 0.500 g/m² or less carbon black,
wherein the Elemental Technology B4 is a structural member, comprising:
a member main body that is formed of multiple steel sheets joined to each other and has an annular shape in plan view, the multiple steel sheets including a first steel sheet having a smallest sheet thickness and a second steel sheet having a sheet thickness larger than the sheet thickness of the first steel sheet,
wherein the first steel sheet and the second steel sheet are each a coated steel sheet that has an aluminum-based coating layer on both surfaces of a base steel sheet, and
a thickness of the aluminum-based coating layer of the first steel sheet is smaller than a thickness of the aluminum-based coating layer of the second steel sheet,
wherein the Element Technology B5a is a structural member, comprising:
a member main body that is formed of multiple steel sheets joined to each other and has an annular shape in plan view, the multiple steel sheets including a first steel sheet and a second steel sheet having an end part that is overlaid on and joined to an end part of the first steel sheet to form an overlap part with the end part of the first steel sheet; and
a film that is provided on a surface of each of the first steel sheet and the second steel sheet that is located on an outer side of the overlap part and contains 0.001 g/m² or more of one or more oxides selected from among the group consisting of Zr oxide, Zn oxide, and Ti oxide,
wherein the Element Technology B5b is a structural member, comprising:
a member main body that is formed of multiple steel sheets joined to each other and has an annular shape in plan view, the multiple steel sheets including a first steel sheet and a second steel sheet having an end part that is overlaid on and joined to an end part of the first steel sheet to form an overlap part with the end part of the first steel sheet; and
a film that is provided on a surface of each of the first steel sheet and the second steel sheet that is located on an outer side of the overlap part and contains 0.500 g/m² or less carbon black,
wherein the Element Technology B6 is a structural member, comprising:
a member main body that is formed of multiple steel sheets joined to each other and has an annular shape in plan view,
wherein the multiple steel sheets include a first steel sheet, a second steel sheet, and a third steel sheet,
an end part of the first steel sheet is overlaid on and joined to an end part of the second steel sheet, thereby forming an overlap part having the largest sheet thickness in the member main body with the end part of the second steel sheet,
at least one of the first steel sheet and the second steel sheet, and the third steel sheet are each a coated steel sheet having an aluminum-based coating layer on both surfaces of a base steel sheet, and
a thickness of the aluminum-based coating layer of at least one of the first steel sheet and the second steel sheet is less than a thickness of the aluminum-based coating layer of the third steel sheet.

3. The automobile side module according to claim 2, comprising:
at least one of the Element Technology A1 and the Element Technology A2, and at least one of the Element Technology B1 and the Element Technology B2.

4. The automobile side module according to claim 2, comprising:
at least one of the Element Technology A1 and the Element Technology A2, and at least one of the Element Technology B3a, the Element Technology B3b, the Element Technology B4, the Element Technology B5a, the Element Technology B5b, and the Element Technology B6.

5. The automobile side module according to claim 2, comprising:
at least one of the Element Technology A1 and the Element Technology A2,
at least one of the Element Technology B1 and the Element Technology B2, and
at least one of the Element Technology B3a, the Element Technology B3b, the Element Technology B4, the Element Technology B5a, the Element Technology B5b, and the Element Technology B6.
